# EUROPEAN PATENT SPECIFICATION

(11) **EP 4 260 484 B1**
(45) Date of publication and mention of the grant of the patent: **26.08.2026**
(21) Application number: 21915913.4
(22) Date of filing: 29.12.2021
(51) Int. Cl.: H04B 7/02, H04L 1/00, H04L 25/02, H04W 24/08, H04B 7/022, H04B 7/06, H04W 24/10, H04B 7/0404

(54) **INTER-CELL BEAM MEASUREMENT AND REPORTING**
MESSUNG UND MELDUNG VON STRAHLUNGEN ZWISCHEN ZELLEN
MESURE ET RAPPORT DE FAISCEAUX INTERCELLULAIRE

(30) Priority: 29.12.2020 US 202063131682 P; 11.01.2021 US 202163136037 P; 25.01.2021 US 202163141215 P; 26.03.2021 US 202163166699 P; 13.04.2021 US 202163174351 P; 03.11.2021 US 202163275265 P; 08.11.2021 US 202163276850 P; 10.11.2021 US 202163277919 P; 16.11.2021 US 202163279926 P; 02.12.2021 US 202163285285 P; 27.12.2021 US 202117646104
(43) Date of publication of application: 18.10.2023
(60) Divisional application: 26191663.9 / 4 797 559
(73) Proprietor: Samsung Electronics Co., Ltd., Suwon-si, Gyeonggi-do 16677 (KR)
(72) Inventor: ZHU, Dalin, Mountain View, California 94043 (US); ONGGOSANUSI, Eko, Mountain View, California 94043 (US); FARAG, Emad N., Mountain View, California 94043 (US); RAHMAN, Md. Saifur, Mountain View, California 94043 (US)
(74) Representative: Gulde & Partner
(86) International application number: PCT/KR2021/095145
(87) International publication number: WO 2022/146116

(56) References cited:
- WO-A1-2020/143784
- WO-A1-2020/202394
- CN-A- 111 901 837
- US-A1- 2019 190 582
- US-A1- 2019 190 582
- US-A1- 2019 222 286
- US-A1- 2020 112 355
- US-A1- 2020 112 355
- US-A1- 2020 304 193
- SONY: "Considerations on inter-cell operation", vol. RAN WG1, no. e-Meeting; 20201026 - 20201128, 23 October 2020 (2020-10-23), XP051946636, Retrieved from the Internet <URL:https://ftp.3gpp.org/tsg_ran/WG1_RL1/TSGR1_103-e/Docs/R1-2008348.zip R1-2008348-Considerations on Multi-TRP inter-cell operation-v0.1 .doc> [retrieved on 20201023]
- OPPO: "Text Proposal for Beam Management", vol. RAN WG1, no. Vancouver, Canada; 20180122 - 20180126, 12 January 2018 (2018-01-12), XP051384361, Retrieved from the Internet <URL:http://www.3gpp.org/ftp/tsg%5Fran/WG1%5FRL1/TSGR1%5FAH/NR%5FAH%5F1801/Docs/> [retrieved on 20180112]
- SONY: "Considerations on inter-cell operation", 3GPP DRAFT; R1-2008348, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20201026 - 20201128, 23 October 2020 (2020-10-23), Mobile Competence Centre ; 650, route des Lucioles ; F-06921 Sophia-Antipolis Cedex ; France , XP051946636
- NOKIA, NOKIA SHANGHAI BELL: "Enhancements to enable inter-cell multi-TRP operations", 3GPP DRAFT; R1-2008905, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20201026 - 20201113, 23 October 2020 (2020-10-23), Mobile Competence Centre ; 650, route des Lucioles ; F-06921 Sophia-Antipolis Cedex ; France , XP051945420

## Description

### Technical Field

The present disclosure relates generally to wireless communication systems and, more specifically, the present disclosure relates to beam measurement and reporting in a wireless communication system.

### Background Art

5th generation (5G) or new radio (NR) mobile communications is recently gathering increased momentum with all the worldwide technical activities on the various candidate technologies from industry and academia. The candidate enablers for the 5G/NR mobile communications include massive antenna technologies, from legacy cellular frequency bands up to high frequencies, to provide beamforming gain and support increased capacity, new waveform (e.g., a new radio access technology (RAT)) to flexibly accommodate various services/applications with different requirements, new multiple access schemes to support massive connections, and so on.

US 2020/112355 Al discloses a method for a terminal reporting channel state information (CSI) in a wireless communication system to improve a reception performance of a reference signal of a terminal through Quasi-co-Location (QCL) assumption is known from US 2020/112355 Al.

### Disclosure of Invention

### Solution to Problem

The invention is defined by the appended claims. The description that follows is subjected to this limitation. Any disclosure lying outside the scope of said claims is only intended for illustrative as well as comparative purposes.

Before undertaking the DETAILED DESCRIPTION below, it may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system, or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for other certain words and phrases are provided throughout this patent document. Those of ordinary skill in the art should understand that in many if not most instances, such definitions apply to prior as well as future uses of such defined words and phrases.

### Brief Description of Drawings

For a more complete understanding of the present disclosure and its advantages, reference is now made to the following description taken in conjunction with the accompanying drawings, in which like reference numerals represent like parts:
FIGURE 1 illustrates an example of wireless network according to embodiments of the present disclosure;
FIGURE 2 illustrates an example of gNB according to embodiments of the present disclosure;
FIGURE 3 illustrates an example of UE according to embodiments of the present disclosure;
FIGURES 4 and 5 illustrate example of wireless transmit and receive paths according to this disclosure;
FIGURE 6A illustrate an example of wireless system beam according to embodiments of the present disclosure;
FIGURE 6B illustrate an example of multi-beam operation according to embodiments of the present disclosure;
FIGURE 7 illustrate an example of antenna structure according to embodiments of the present disclosure;
FIGURE 8 illustrates an example of beam measurement and reporting in an inter-cell system according to embodiments of the present disclosure;
FIGURE 9 illustrates an example of multi-TRP operation according to embodiments of the present disclosure;
FIGURE 10 illustrates an example of beam reporting format for the inter-cell operation according to embodiments of the present disclosure;
FIGURE 11 illustrates another example of beam reporting format for the inter-cell operation according to embodiments of the present disclosure;
FIGURE 12 illustrates yet another example of beam reporting format for the inter-cell operation according to embodiments of the present disclosure;
FIGURE 13 illustrates yet another example of beam reporting format for the inter-cell operation according to embodiments of the present disclosure;
FIGURE 14 illustrates yet another example of beam reporting format for the inter-cell operation according to embodiments of the present disclosure;
FIGURE 15 illustrates an example of CSI resource setting and CSI reporting setting for the inter-cell operation according to embodiments of the present disclosure;
FIGURE 16 illustrates another example of CSI resource setting and CSI reporting setting for the inter-cell operation according to embodiments of the present disclosure;
FIGURE 17A illustrates an example of various configurations of CSI-RS resource sets for a cell according to embodiments of the present disclosure;
FIGURE 17B illustrates an example of various configurations of CSI-RS resource sets for the inter-cell operation according to embodiments of the present disclosure;
FIGURE 18 illustrates a flowchart of a method for a network configured group based beam reporting procedure for the inter-TRP/inter-cell operation according to embodiments of the present disclosure;
FIGURE 19 illustrates an example of a beam reporting for the multi-TRP operation according to embodiments of the present disclosure;
FIGURE 20 illustrates a flowchart of a method for a network configured group based beam reporting procedure for the multi-TRP operation according to embodiments of the present disclosure;
FIGURE 21 illustrates an example of a non-group based beam reporting for the inter-TRP/inter-cell operation according to embodiments of the present disclosure;
FIGURE 22 illustrates a signaling flow between the UE and serving cell/gNB for a non-group based beam reporting according to embodiments of the present disclosure;
FIGURE 23 illustrates an example of a non-group based beam reporting according to embodiments of the present disclosure;
FIGURE 24 illustrates a signaling flow between the UE and serving cell/gNB for a non-group based beam reporting according to embodiments of the present disclosure;
FIGURE 25 illustrates an example of a two-stage beam reporting format for the inter-cell operation according to embodiments of the present disclosure;
FIGURE 26 illustrates a signaling flow between the UE and serving cell/gNB for a two-stage beam reporting for the inter-cell operation according to embodiments of the present disclosure;
FIGURE 27 illustrates a signaling flow between the UE and serving cell/gNB for a two-stage beam reporting for the inter-cell operation according to embodiments of the present disclosure;
FIGURE 28 illustrates an example of two-part beam report/two-part UCI format for the inter-cell operation according to embodiments of the present disclosure;
FIGURE 29 illustrates an example of non-serving cell (NSC) information indication according to embodiments of the present disclosure;
FIGURE 30 illustrates an example of NSC information indication via a bitmap according to embodiments of the present disclosure;
FIGURE 31 illustrates an example of two-part beam report/two-part UCI format for the inter-cell operation according to embodiments of the present disclosure;
FIGURE 32A illustrates an example of two-part beam report/two-part UCI format for the inter-cell operation according to embodiments of the present disclosure;
FIGURE 32B illustrates an example of two-part beam report/two-part UCI format for the inter-cell operation according to embodiments of the present disclosure;
FIGURE 32C illustrates an example of NSC information indication according to embodiments of the present disclosure;
FIGURE 32D illustrates an example of NSC information indication via a bitmap according to embodiments of the present disclosure;
FIGURE 32E illustrates an example of two-part beam report/two-part UCI format for the inter-cell operation according to embodiments of the present disclosure;
FIGURE 32F illustrates an example of NSC information indication according to embodiments of the present disclosure;
FIGURE 32G illustrates an example of NSC information indication via a bitmap according to embodiments of the present disclosure;
FIGURE 33 illustrates an example of two-part beam report/two-part UCI format for the inter-cell operation according to embodiments of the present disclosure;
FIGURE 34 illustrates an example of NSC information indication according to embodiments of the present disclosure;
FIGURE 35 illustrates an example of two-part beam report/two-part UCI format for the inter-cell operation according to embodiments of the present disclosure;
FIGURE 36 illustrates a flowchart of a method for UE reporting two-part beam report/two-part UCI for the inter-cell operation according to embodiments of the present disclosure;
FIGURE 37 illustrates an example of two-part UCI format according to embodiments of the present disclosure;
FIGURE 38A illustrates an example of two-part beam report/two-part UCI format for the inter-cell operation according to embodiments of the present disclosure;
FIGURE 38B illustrates an example of NSC information indication according to embodiments of the present disclosure;
FIGURE 38C illustrates an example of NSC information indication via a bitmap according to embodiments of the present disclosure;
FIGURE 38D illustrates an example of two-part beam report/two-part UCI format for the inter-cell operation according to embodiments of the present disclosure;
FIGURE 38E illustrates an example of NSC information indication according to embodiments of the present disclosure;
FIGURE 38F illustrates an example of NSC information indication via a bitmap according to embodiments of the present disclosure;
FIGURE 38G illustrates an example of two-part beam report/two-part UCI format for the inter-cell operation according to embodiments of the present disclosure;
FIGURE 38H illustrates an example of NSC information indication according to embodiments of the present disclosure;
FIGURE 38I illustrates an example of NSC information indication via a bitmap according to embodiments of the present disclosure;
FIGURE 39 illustrates an example of two-part UCI format according to embodiments of the present disclosure; and
FIGURE 40 illustrates another example of two-part UCI format according to embodiments of the present disclosure.

### Best Mode for Carrying out the Invention

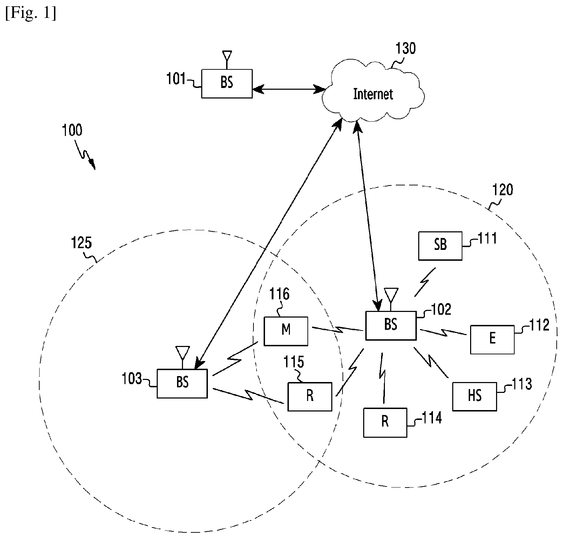

FIGURE 1 through FIGURE 40, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

The following documents are hereby incorporated by reference into the present disclosure as if fully set forth herein: 3GPP TS 38.211 v16.1.0, "NR; Physical channels and modulation"; 3GPP TS 38.212 v16.1.0, "NR; Multiplexing and Channel coding"; 3GPP TS 38.213 v16.1.0, "NR; Physical Layer Procedures for Control"; 3GPP TS 38.214 v16.1.0, "NR; Physical Layer Procedures for Data"; 3GPP TS 38.321 v16.1.0, "NR; Medium Access Control (MAC) protocol specification"; and 3GPP TS 38.331 v16.1.0, "NR; Radio Resource Control (RRC) Protocol Specification."

FIGURES 1-3 below describe various embodiments implemented in wireless communications systems and with the use of orthogonal frequency division multiplexing (OFDM) or orthogonal frequency division multiple access (OFDMA) communication techniques. The descriptions of FIGURES 1-3 are not meant to imply physical or architectural limitations to the manner in which different embodiments may be implemented. Different embodiments of the present disclosure may be implemented in any suitably-arranged communications system.

FIGURE 1 illustrates an example wireless network according to embodiments of the present disclosure. The embodiment of the wireless network shown in FIGURE 1 is for illustration only. Other embodiments of the wireless network 100 could be used without departing from the scope of this disclosure.

As shown in FIGURE 1, the wireless network includes a gNB 101 (e.g., base station, BS), a gNB 102, and a gNB 103. The gNB 101 communicates with the gNB 102 and the gNB 103. The gNB 101 also communicates with at least one network 130, such as the Internet, a proprietary Internet Protocol (IP) network, or other data network.

The gNB 102 provides wireless broadband access to the network 130 for a first plurality of user equipments (UEs) within a coverage area 120 of the gNB 102. The first plurality of UEs includes a UE 111, which may be located in a small business; a UE 112, which may be located in an enterprise (E); a UE 113, which may be located in a WiFi hotspot (HS); a UE 114, which may be located in a first residence (R); a UE 115, which may be located in a second residence (R); and a UE 116, which may be a mobile device (M), such as a cell phone, a wireless laptop, a wireless PDA, or the like. The gNB 103 provides wireless broadband access to the network 130 for a second plurality of UEs within a coverage area 125 of the gNB 103. The second plurality of UEs includes the UE 115 and the UE 116. In some embodiments, one or more of the gNBs 101-103 may communicate with each other and with the UEs 111-116 using 5G/NR, long term evolution (LTE), long term evolution-advanced (LTE-A), WiMAX, WiFi, or other wireless communication techniques.

Depending on the network type, the term "base station" or "BS" can refer to any component (or collection of components) configured to provide wireless access to a network, such as transmit point (TP), transmit-receive point (TRP), an enhanced base station (eNodeB or eNB), a 5G/NR base station (gNB), a macrocell, a femtocell, a WiFi access point (AP), or other wirelessly enabled devices. Base stations may provide wireless access in accordance with one or more wireless communication protocols, e.g., 5G/NR 3GPP NR, long term evolution (LTE), LTE advanced (LTE-A), high speed packet access (HSPA), Wi-Fi 802.11a/b/g/n/ac, etc. For the sake of convenience, the terms "BS" and "TRP" are used interchangeably in this patent document to refer to network infrastructure components that provide wireless access to remote terminals. Also, depending on the network type, the term "user equipment" or "UE" can refer to any component such as "mobile station," "subscriber station," "remote terminal," "wireless terminal," "receive point," or "user device." For the sake of convenience, the terms "user equipment" and "UE" are used in this patent document to refer to remote wireless equipment that wirelessly accesses a BS, whether the UE is a mobile device (such as a mobile telephone or smartphone) or is normally considered a stationary device (such as a desktop computer or vending machine).

Dotted lines show the approximate extents of the coverage areas 120 and 125, which are shown as approximately circular for the purposes of illustration and explanation only. It should be clearly understood that the coverage areas associated with gNBs, such as the coverage areas 120 and 125, may have other shapes, including irregular shapes, depending upon the configuration of the gNBs and variations in the radio environment associated with natural and man-made obstructions.

As described in more detail below, one or more of the UEs 111-116 include circuitry, programing, or a combination thereof, for a beam reporting operation of inter-TRP in a wireless communication system. In certain embodiments, and one or more of the gNBs 101-103 includes circuitry, programing, or a combination thereof, for a beam reporting operation of inter-TRP in a wireless communication system.

Although FIGURE 1 illustrates one example of a wireless network, various changes may be made to FIGURE 1. For example, the wireless network could include any number of gNBs and any number of UEs in any suitable arrangement. Also, the gNB 101 could communicate directly with any number of UEs and provide those UEs with wireless broadband access to the network 130. Similarly, each gNB 102-103 could communicate directly with the network 130 and provide UEs with direct wireless broadband access to the network 130. Further, the gNBs 101, 102, and/or 103 could provide access to other or additional external networks, such as external telephone networks or other types of data networks.

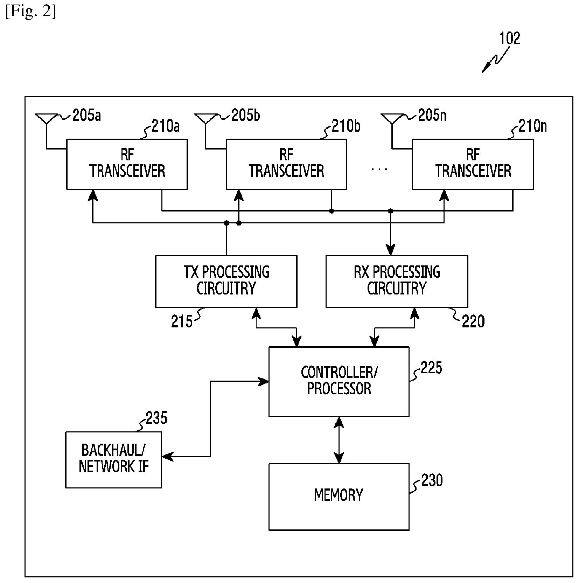

FIGURE 2 illustrates an example gNB 102 according to embodiments of the present disclosure. The embodiment of the gNB 102 illustrated in FIGURE 2 is for illustration only, and the gNBs 101 and 103 of FIGURE 1 could have the same or similar configuration. However, gNBs come in a wide variety of configurations, and FIGURE 2 does not limit the scope of this disclosure to any particular implementation of a gNB.

As shown in FIGURE 2, the gNB 102 includes multiple antennas 205a-205n, multiple RF transceivers 210a-210n, transmit (TX) processing circuitry 215, and receive (RX) processing circuitry 220. The gNB 102 also includes a controller/processor 225, a memory 230, and a backhaul or network interface 235.

The RF transceivers 210a-210n receive, from the antennas 205a-205n, incoming RF signals, such as signals transmitted by UEs in the network 100. The RF transceivers 210a-210n down-convert the incoming RF signals to generate IF or baseband signals. The IF or baseband signals are sent to the RX processing circuitry 220, which generates processed baseband signals by filtering, decoding, and/or digitizing the baseband or IF signals. The RX processing circuitry 220 transmits the processed baseband signals to the controller/processor 225 for further processing.

The TX processing circuitry 215 receives analog or digital data (such as voice data, web data, e-mail, or interactive video game data) from the controller/processor 225. The TX processing circuitry 215 encodes, multiplexes, and/or digitizes the outgoing baseband data to generate processed baseband or IF signals. The RF transceivers 210a-210n receive the outgoing processed baseband or IF signals from the TX processing circuitry 215 and up-converts the baseband or IF signals to RF signals that are transmitted via the antennas 205a-205n.

The controller/processor 225 can include one or more processors or other processing devices that control the overall operation of the gNB 102. For example, the controller/processor 225 could control the reception of forward channel signals and the transmission of reverse channel signals by the RF transceivers 210a-210n, the RX processing circuitry 220, and the TX processing circuitry 215 in accordance with well-known principles. The controller/processor 225 could support additional functions as well, such as more advanced wireless communication functions. For instance, the controller/processor 225 could support beam forming or directional routing operations in which outgoing/incoming signals from/to multiple antennas 205a-205n are weighted differently to effectively steer the outgoing signals in a desired direction. Any of a wide variety of other functions could be supported in the gNB 102 by the controller/processor 225.

The controller/processor 225 is also capable of executing programs and other processes resident in the memory 230, such as an OS. The controller/processor 225 can move data into or out of the memory 230 as required by an executing process.

The controller/processor 225 is also coupled to the backhaul or network interface 235. The backhaul or network interface 235 allows the gNB 102 to communicate with other devices or systems over a backhaul connection or over a network. The interface 235 could support communications over any suitable wired or wireless connection(s). For example, when the gNB 102 is implemented as part of a cellular communication system (such as one supporting 5G/NR, LTE, or LTE-A), the interface 235 could allow the gNB 102 to communicate with other gNBs over a wired or wireless backhaul connection. When the gNB 102 is implemented as an access point, the interface 235 could allow the gNB 102 to communicate over a wired or wireless local area network or over a wired or wireless connection to a larger network (such as the Internet). The interface 235 includes any suitable structure supporting communications over a wired or wireless connection, such as an Ethernet or RF transceiver.

The memory 230 is coupled to the controller/processor 225. Part of the memory 230 could include a RAM, and another part of the memory 230 could include a Flash memory or other ROM.

Although FIGURE 2 illustrates one example of gNB 102, various changes may be made to FIGURE 2. For example, the gNB 102 could include any number of each component shown in FIGURE 2. As a particular example, an access point could include a number of interfaces 235, and the controller/processor 225 could support routing functions to route data between different network addresses. As another particular example, while shown as including a single instance of TX processing circuitry 215 and a single instance of RX processing circuitry 220, the gNB 102 could include multiple instances of each (such as one per RF transceiver). Also, various components in FIGURE 2 could be combined, further subdivided, or omitted and additional components could be added according to particular needs.

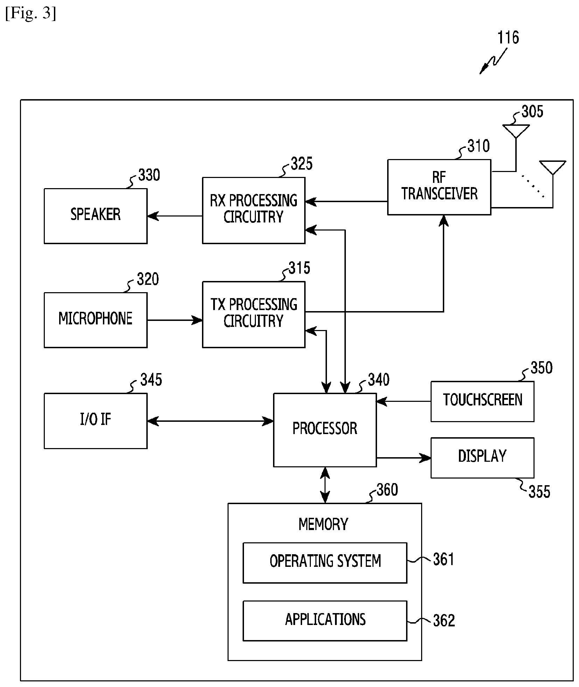

FIGURE 3 illustrates an example UE 116 according to embodiments of the present disclosure. The embodiment of the UE 116 illustrated in FIGURE 3 is for illustration only, and the UEs 111-115 of FIGURE 1 could have the same or similar configuration. However, UEs come in a wide variety of configurations, and FIGURE 3 does not limit the scope of this disclosure to any particular implementation of a UE.

As shown in FIGURE 3, the UE 116 includes an antenna 305, a radio frequency (RF) transceiver 310, TX processing circuitry 315, a microphone 320, and receive (RX) processing circuitry 325. The UE 116 also includes a speaker 330, a processor 340, an input/output (I/O) interface (IF) 345, a touchscreen 350, a display 355, and a memory 360. The memory 360 includes an operating system (OS) 361 and one or more applications 362.

The RF transceiver 310 receives, from the antenna 305, an incoming RF signal transmitted by a gNB of the network 100. The RF transceiver 310 down-converts the incoming RF signal to generate an intermediate frequency (IF) or baseband signal. The IF or baseband signal is sent to the RX processing circuitry 325, which generates a processed baseband signal by filtering, decoding, and/or digitizing the baseband or IF signal. The RX processing circuitry 325 transmits the processed baseband signal to the speaker 330 (such as for voice data) or to the processor 340 for further processing (such as for web browsing data).

The TX processing circuitry 315 receives analog or digital voice data from the microphone 320 or other outgoing baseband data (such as web data, e-mail, or interactive video game data) from the processor 340. The TX processing circuitry 315 encodes, multiplexes, and/or digitizes the outgoing baseband data to generate a processed baseband or IF signal. The RF transceiver 310 receives the outgoing processed baseband or IF signal from the TX processing circuitry 315 and up-converts the baseband or IF signal to an RF signal that is transmitted via the antenna 305.

The processor 340 can include one or more processors or other processing devices and execute the OS 361 stored in the memory 360 in order to control the overall operation of the UE 116. For example, the processor 340 could control the reception of forward channel signals and the transmission of reverse channel signals by the RF transceiver 310, the RX processing circuitry 325, and the TX processing circuitry 315 in accordance with well-known principles. In some embodiments, the processor 340 includes at least one microprocessor or microcontroller.

The processor 340 is also capable of executing other processes and programs resident in the memory 360, such as processes for a beam reporting operation of inter-TRP in a wireless communication system. The processor 340 can move data into or out of the memory 360 as required by an executing process. In some embodiments, the processor 340 is configured to execute the applications 362 based on the OS 361 or in response to signals received from gNBs or an operator. The processor 340 is also coupled to the I/O interface 345, which provides the UE 116 with the ability to connect to other devices, such as laptop computers and handheld computers. The I/O interface 345 is the communication path between these accessories and the processor 340.

The processor 340 is also coupled to the touchscreen 350 and the display 355. The operator of the UE 116 can use the touchscreen 350 to enter data into the UE 116. The display 355 may be a liquid crystal display, light emitting diode display, or other display capable of rendering text and/or at least limited graphics, such as from web sites.

The memory 360 is coupled to the processor 340. Part of the memory 360 could include a random access memory (RAM), and another part of the memory 360 could include a Flash memory or other read-only memory (ROM).

Although FIGURE 3 illustrates one example of UE 116, various changes may be made to FIGURE 3. For example, various components in FIGURE 3 could be combined, further subdivided, or omitted and additional components could be added according to particular needs. As a particular example, the processor 340 could be divided into multiple processors, such as one or more central processing units (CPUs) and one or more graphics processing units (GPUs). Also, while FIGURE 3 illustrates the UE 116 configured as a mobile telephone or smartphone, UEs could be configured to operate as other types of mobile or stationary devices.

To meet the demand for wireless data traffic having increased since deployment of 4G communication systems and to enable various vertical applications, 5G/NR communication systems have been developed and are currently being deployed. The 5G/NR communication system is considered to be implemented in higher frequency (mmWave) bands, e.g., 28 GHz or 60GHz bands, so as to accomplish higher data rates or in lower frequency bands, such as 6 GHz, to enable robust coverage and mobility support. To decrease propagation loss of the radio waves and increase the transmission distance, the beamforming, massive multiple-input multiple-output (MIMO), full dimensional MIMO (FD-MIMO), array antenna, an analog beam forming, large scale antenna techniques are discussed in 5G/NR communication systems.

In addition, in 5G/NR communication systems, development for system network improvement is under way based on advanced small cells, cloud radio access networks (RANs), ultra-dense networks, device-to-device (D2D) communication, wireless backhaul, moving network, cooperative communication, coordinated multi-points (CoMP), reception-end interference cancellation and the like.

The discussion of 5G systems and frequency bands associated therewith is for reference as certain embodiments of the present disclosure may be implemented in 5G systems. However, the present disclosure is not limited to 5G systems or the frequency bands associated therewith, and embodiments of the present disclosure may be utilized in connection with any frequency band. For example, aspects of the present disclosure may also be applied to deployment of 5G communication systems, 6G or even later releases which may use terahertz (THz) bands.

The discussion of 5G systems and frequency bands associated therewith is for reference as certain embodiments of the present disclosure may be implemented in 5G systems. However, the present disclosure is not limited to 5G systems or the frequency bands associated therewith, and embodiments of the present disclosure may be utilized in connection with any frequency band. For example, aspects of the present disclosure may also be applied to deployment of 5G communication systems, 6G or even later releases which may use terahertz (THz) bands.

A communication system includes a downlink (DL) that refers to transmissions from a base station or one or more transmission points to UEs and an uplink (UL) that refers to transmissions from UEs to a base station or to one or more reception points.

A time unit for DL signaling or for UL signaling on a cell is referred to as a slot and can include one or more symbols. A symbol can also serve as an additional time unit. A frequency (or bandwidth (BW)) unit is referred to as a resource block (RB). One RB includes a number of sub-carriers (SCs). For example, a slot can have duration of 0.5 milliseconds or 1 millisecond, include 14 symbols and an RB can include 12 SCs with inter-SC spacing of 15 KHz or 30 KHz, and so on.

DL signals include data signals conveying information content, control signals conveying DL control information (DCI), and reference signals (RS) that are also known as pilot signals. A gNB transmits data information or DCI through respective physical DL shared channels (PDSCHs) or physical DL control channels (PDCCHs). A PDSCH or a PDCCH can be transmitted over a variable number of slot symbols including one slot symbol. For brevity, a DCI format scheduling a PDSCH reception by a UE is referred to as a DL DCI format and a DCI format scheduling a physical uplink shared channel (PUSCH) transmission from a UE is referred to as an UL DCI format.

A gNB transmits one or more of multiple types of RS including channel state information RS (CSI-RS) and demodulation RS (DMRS). A CSI-RS is primarily intended for UEs to perform measurements and provide CSI to a gNB. For channel measurement, non-zero power CSI-RS (NZP CSI-RS) resources are used. For interference measurement reports (IMRs), CSI interference measurement (CSI-IM) resources associated with a zero power CSI-RS (ZP CSI-RS) configuration are used. A CSI process includes NZP CSI-RS and CSI-IM resources.

A UE can determine CSI-RS transmission parameters through DL control signaling or higher layer signaling, such as radio resource control (RRC) signaling, from a gNB. Transmission instances of a CSI-RS can be indicated by DL control signaling or be configured by higher layer signaling. A DM-RS is transmitted only in the BW of a respective PDCCH or PDSCH and a UE can use the DMRS to demodulate data or control information.

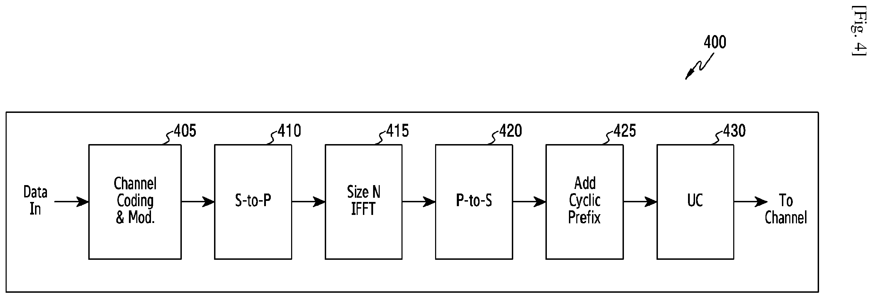

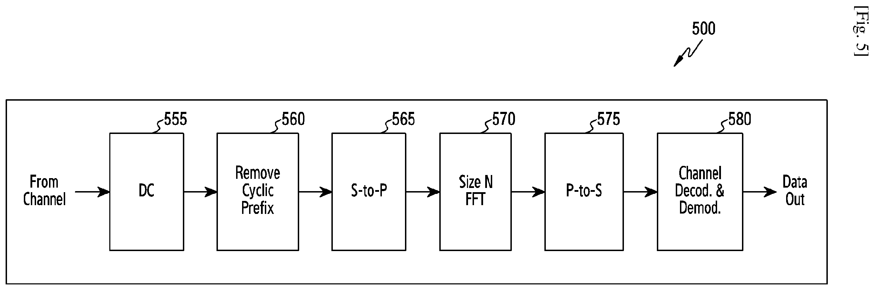

FIGURE 4 and FIGURE 5 illustrate example wireless transmit and receive paths according to this disclosure. In the following description, a transmit path 400 may be described as being implemented in a gNB (such as the gNB 102), while a receive path 500 may be described as being implemented in a UE (such as a UE 116). However, it may be understood that the receive path 500 can be implemented in a gNB and that the transmit path 400 can be implemented in a UE. In some embodiments, the receive path 500 is configured to support the codebook design and structure for systems having 2D antenna arrays as described in embodiments of the present disclosure.

The transmit path 400 as illustrated in FIGURE 4 includes a channel coding and modulation block 405, a serial-to-parallel (S-to-P) block 410, a size N inverse fast Fourier transform (IFFT) block 415, a parallel-to-serial (P-to-S) block 420, an add cyclic prefix block 425, and an up-converter (UC) 430. The receive path 500 as illustrated in FIGURE 5 includes a down-converter (DC) 555, a remove cyclic prefix block 560, a serial-to-parallel (S-to-P) block 565, a size N fast Fourier transform (FFT) block 570, a parallel-to-serial (P-to-S) block 575, and a channel decoding and demodulation block 580.

As illustrated in FIGURE 4, the channel coding and modulation block 405 receives a set of information bits, applies coding (such as a low-density parity check (LDPC) coding), and modulates the input bits (such as with quadrature phase shift keying (QPSK) or quadrature amplitude modulation (QAM)) to generate a sequence of frequency-domain modulation symbols.

The serial-to-parallel block 410 converts (such as de-multiplexes) the serial modulated symbols to parallel data in order to generate N parallel symbol streams, where N is the IFFT/FFT size used in the gNB 102 and the UE 116. The size N IFFT block 415 performs an IFFT operation on the N parallel symbol streams to generate time-domain output signals. The parallel-to-serial block 420 converts (such as multiplexes) the parallel time-domain output symbols from the size N IFFT block 415 in order to generate a serial time-domain signal. The add cyclic prefix block 425 inserts a cyclic prefix to the time-domain signal. The up-converter 430 modulates (such as up-converts) the output of the add cyclic prefix block 425 to an RF frequency for transmission via a wireless channel. The signal may also be filtered at baseband before conversion to the RF frequency.

A transmitted RF signal from the gNB 102 arrives at the UE 116 after passing through the wireless channel, and reverse operations to those at the gNB 102 are performed at the UE 116.

As illustrated in FIGURE 5, the down-converter 555 down-converts the received signal to a baseband frequency, and the remove cyclic prefix block 560 removes the cyclic prefix to generate a serial time-domain baseband signal. The serial-to-parallel block 565 converts the time-domain baseband signal to parallel time domain signals. The size N FFT block 570 performs an FFT algorithm to generate N parallel frequency-domain signals. The parallel-to-serial block 575 converts the parallel frequency-domain signals to a sequence of modulated data symbols. The channel decoding and demodulation block 580 demodulates and decodes the modulated symbols to recover the original input data stream.

Each of the gNBs 101-103 may implement a transmit path 400 as illustrated in FIGURE 4 that is analogous to transmitting in the downlink to UEs 111-116 and may implement a receive path 500 as illustrated in FIGURE 5 that is analogous to receiving in the uplink from UEs 111-116. Similarly, each of UEs 111-116 may implement the transmit path 400 for transmitting in the uplink to the gNBs 101-103 and may implement the receive path 500 for receiving in the downlink from the gNBs 101-103.

Each of the components in FIGURE 4 and FIGURE 5 can be implemented using only hardware or using a combination of hardware and software/firmware. As a particular example, at least some of the components in FIGURES 4 and FIGURE 5 may be implemented in software, while other components may be implemented by configurable hardware or a mixture of software and configurable hardware. For instance, the FFT block 570 and the IFFT block 515 may be implemented as configurable software algorithms, where the value of size N may be modified according to the implementation.

Furthermore, although described as using FFT and IFFT, this is by way of illustration only and may not be construed to limit the scope of this disclosure. Other types of transforms, such as discrete Fourier transform (DFT) and inverse discrete Fourier transform (IDFT) functions, can be used. It may be appreciated that the value of the variable N may be any integer number (such as 1, 2, 3, 4, or the like) for DFT and IDFT functions, while the value of the variable N may be any integer number that is a power of two (such as 1, 2, 4, 8, 16, or the like) for FFT and IFFT functions.

Although FIGURE 4 and FIGURE 5 illustrate examples of wireless transmit and receive paths, various changes may be made to FIGURE 4 and FIGURE 5. For example, various components in FIGURE 4 and FIGURE 5 can be combined, further subdivided, or omitted and additional components can be added according to particular needs. Also, FIGURE 4 and FIGURE 5 are meant to illustrate examples of the types of transmit and receive paths that can be used in a wireless network. Any other suitable architectures can be used to support wireless communications in a wireless network.

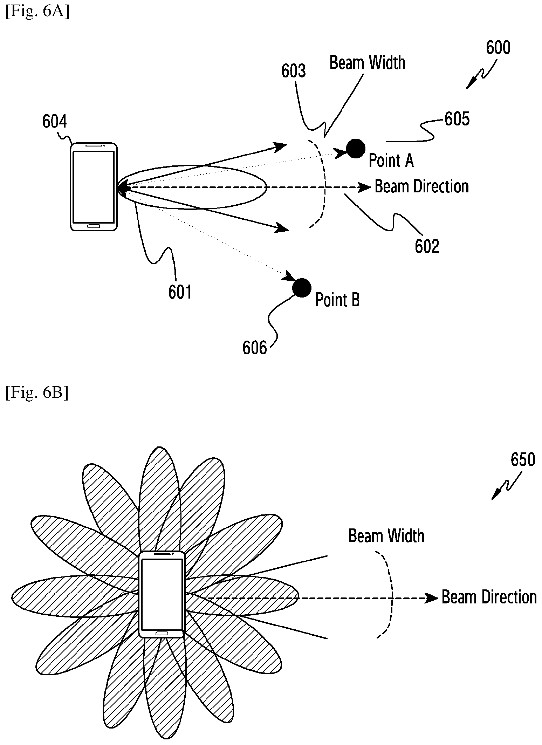

FIGURE 6A illustrate an example wireless system beam 600 according to embodiments of the present disclosure. An embodiment of the wireless system beam 600 shown in FIGURE 6A is for illustration only.

As illustrated in FIGURE 6A, in a wireless system a beam 601, for a device 604, can be characterized by a beam direction 602 and a beam width 603. For example, a device 604 with a transmitter transmits radio frequency (RF) energy in a beam direction and within a beam width. The device 604 with a receiver receives RF energy coming towards the device in a beam direction and within a beam width. As illustrated in FIGURE 6A, a device at point A 605 can receive from and transmit to the device 604 as Point A is within a beam width of a beam traveling in a beam direction and coming from the device 604.

As illustrated in FIGURE 6A, a device at point B 606 cannot receive from and transmit to the device 604 as Point B is outside a beam width of a beam traveling in a beam direction and coming from the device 604. While FIGURE 6A, for illustrative purposes, shows a beam in 2-dimensions (2D), it may be apparent to those skilled in the art, that a beam can be in 3-dimensions (3D), where the beam direction and beam width are defined in space.

FIGURE 6B illustrate an example multi-beam operation 650 according to embodiments of the present disclosure. An embodiment of the multi-beam operation 650 shown in FIGURE 6B is for illustration only.

In a wireless system, a device can transmit and/or receive on multiple beams. This is known as "multi-beam operation" and is illustrated in FIGURE 6B. While FIGURE 6B, for illustrative purposes, is in 2D, it may be apparent to those skilled in the art, that a beam can be 3D, where a beam can be transmitted to or received from any direction in space.

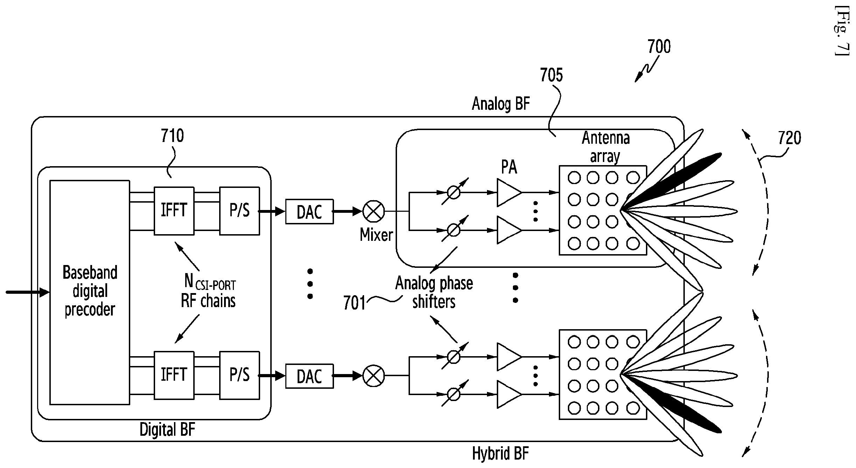

Rel.14 LTE and Rel.15 NR support up to 32 CSI-RS antenna ports which enable an eNB to be equipped with a large number of antenna elements (such as 64 or 128). In this case, a plurality of antenna elements is mapped onto one CSI-RS port. For mmWave bands, although the number of antenna elements can be larger for a given form factor, the number of CSI-RS ports -which can correspond to the number of digitally precoded ports - tends to be limited due to hardware constraints (such as the feasibility to install a large number of ADCs/DACs at mmWave frequencies) as illustrated in FIGURE 7.

FIGURE 7 illustrate an example antenna structure 700 according to embodiments of the present disclosure. An embodiment of the antenna structure 700 shown in FIGURE 7 is for illustration only.

In this case, one CSI-RS port is mapped onto a large number of antenna elements which can be controlled by a bank of analog phase shifters 701. One CSI-RS port can then correspond to one sub-array which produces a narrow analog beam through analog beamforming 705. This analog beam can be configured to sweep across a wider range of angles 720 by varying the phase shifter bank across symbols or subframes. The number of sub-arrays (equal to the number of RF chains) is the same as the number of CSI-RS ports *N_{CSI-PORT}.* A digital beamforming unit 710 performs a linear combination across *N_{CSI-PORT}* analog beams to further increase precoding gain. While analog beams are wideband (hence not frequency-selective), digital precoding can be varied across frequency sub-bands or resource blocks. Receiver operation can be conceived analogously.

Since the aforementioned system utilizes multiple analog beams for transmission and reception (wherein one or a small number of analog beams are selected out of a large number, for instance, after a training duration - to be performed from time to time), the term "multi-beam operation" is used to refer to the overall system aspect. This includes, for the purpose of illustration, indicating the assigned DL or UL transmit (TX) beam (also termed "beam indication"), measuring at least one reference signal for calculating and performing beam reporting (also termed "beam measurement" and "beam reporting", respectively), and receiving a DL or UL transmission via a selection of a corresponding receive (RX) beam.

The aforementioned system is also applicable to higher frequency bands such as >52.6GHz (also termed the FR4). In this case, the system can employ only analog beams. Due to the O2 absorption loss around 60GHz frequency (~10dB additional loss @100m distance), larger number of and sharper analog beams (hence larger number of radiators in the array) may be needed to compensate for the additional path loss.

In this present disclosure, a beam is determined by either of: (1) a TCI state, that establishes a quasi-colocation (QCL) relationship between a source reference signal (e.g., SSB and/or CSI-RS) and a target reference signal; or (2) a spatial relation information that establishes an association to a source reference signal, such as SSB or CSI-RS or SRS. In either case, the ID of the source reference signal identifies the beam.

The TCI state and/or the spatial relation reference RS can determine a spatial Rx filter for reception of downlink channels at the UE, or a spatial TX filter for transmission of uplink channels from the UE.

A current CSI reporting setting/configuration in the 3GPP 5G NR supports both non-group based and group based beam reporting strategies. In the group based beam reporting, the UE could report in a single reporting instance a group/pair of more than one resource indicators such as SSB resource indicators (SSBRIs) or CSI-RS resource indicators (CRIs) along with their corresponding/associated beam metrics such as L1-RSRPs/L1-SINRs, to their serving cell/gNB.

The current non-group based and group based beam reporting strategies, however, are not suited well for various deployment scenarios such as inter-cell mobility, inter/intra-cell multi-TRP and etc. (e.g., in this disclosure, these deployment scenarios are referred to as inter-cell or inter-TRP operation). Hence, there is a need to enhance both the non-group based and group based beam reporting strategies (or beam reporting in general) for the inter-TRP/inter-cell operation.

In the present disclosure, a reported resource indicator (RI) such as SSBRI/CRI and its corresponding/associated beam metric (BM) such as L1-RSRP/L1-SINR form a BM-RI pair {beam metric, resource indicator}, or a reported resource indicator such as SSBRI/CRI and its corresponding/associated beam metric such as L1-RSRP/L1-SINR form a beam quality.

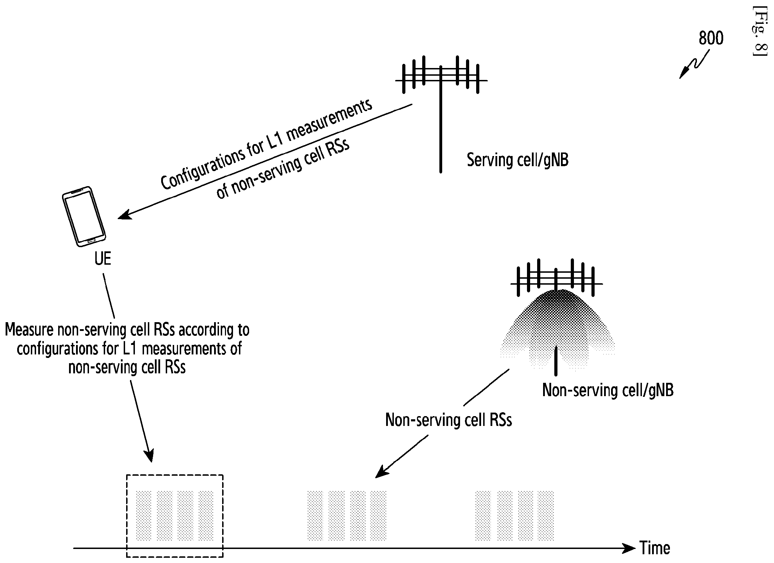

FIGURE 8 illustrates an example of beam measurement and reporting in an inter-system 800 according to embodiments of the present disclosure. An embodiment of the beam measurement and reporting in the inter-cell system 800 shown in FIGURE 8 is for illustration only.

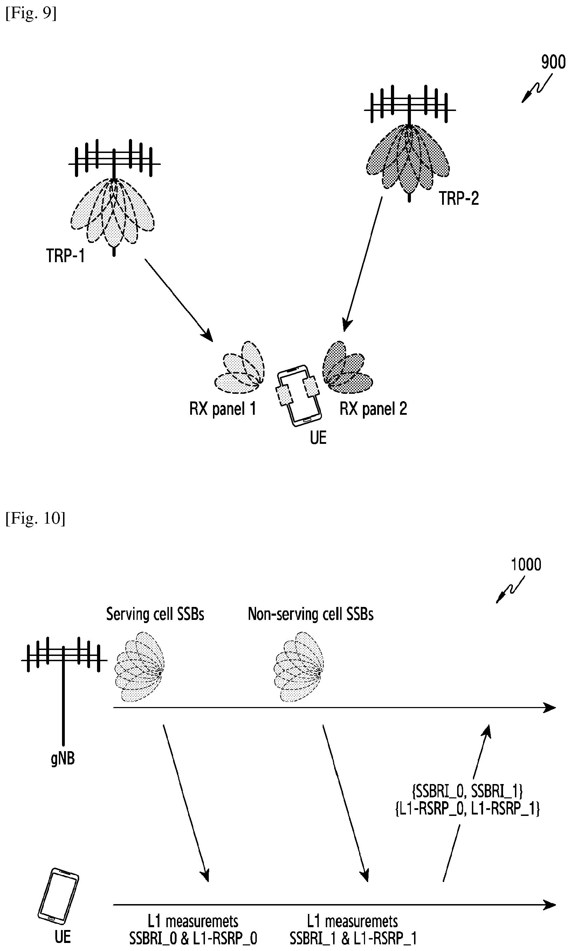

FIGURE 9 illustrates an example of multi-TRP operation 900 according to embodiments of the present disclosure. An embodiment of the multi-TRP operation 900 shown in FIGURE 9 is for illustration only.

As described above, the inter-cell/inter-TRP operation could include both the inter-cell mobility and multi-TRP operation. In FIGURE 8, a conceptual example of beam measurement and reporting for the inter-cell mobility is presented. To facilitate the inter-cell mobility, the UE could be configured/indicated by the serving cell to perform measurements on certain non-serving cell RSs, and report to the network the resource indicator(s) such as SSBRI(s)/CRI(s) for the non-serving cell(s) along with the corresponding beam metric(s) such as L1-RSRP(s) and/or L1-SINR(s).

As illustrated in FIGURE 9, a conceptual example of the multi-TRP operation is depicted. In the multi-TRP system, the UE could simultaneously receive multiple DL transmissions from multiple physically non-co-located TRPs, and the coordinating TRPs could be from the same cell (i.e., intra-cell multi-TRP: TRP-1 and TRP-2 could have the same PCI) or from different cells (i.e., inter-cell multi-TRP: TRP-1 and TRP-2 could have different PCIs). In this disclosure, a TRP can represent a collection of measurement antenna ports, measurement RS resources and/or control resource sets (CORESETs).

For example, a TRP could be associated with one or more of: (1) a plurality of CSI-RS resources; (2) a plurality of CRIs (CSI-RS resource indices/indicators); (3) a measurement RS resource set, for example, a CSI-RS resource set along with its indicator; (4) a plurality of CORESETs associated with a CORESETPoolIndex; and/or (5) a plurality of CORESETs associated with a TRP-specific index/indicator/identity.

In the present disclosure, the non-serving cell(s) or the non-serving cell TRP(s) could have/broadcast different physical cell IDs (PCIs) and/or other higher layer signaling index values from that of the serving cell or the serving cell TRP (i.e., the serving cell PCI). In one example, the serving cell or the serving cell TRP could be associated with the serving cell ID (SCI) and/or the serving cell PCI. That is, for the inter-cell operation considered in the present disclosure, different cells/TRPs could broadcast different PCIs and/or one or more cells/TRPs (referred to/defined as non-serving cells/TRPs in the present disclosure) could broadcast different PCIs from that of the serving cell/TRP (i.e., the serving cell PCI) and/or one or more cells/TRPs are not associated with valid SCI (e.g., provided by the higher layer parameter ServCellIndex). In the present disclosure, a non-serving cell PCI can also be referred to as an additional PCI, another PCI or a different PCI (with respect to the serving cell PCI).

In the present disclosure, a CSI resource set is equivalent to a CSI-RS resource set and vice versa, which could correspond to a SSB resource set provided by the higher layer parameter CSI-SSB-ResourceSet including one or more SSB resources/SSB indexes or a NZP CSI-RS resource set provided by the higher layer parameter nzp-CSI-RS-ResourceSet including one or more NZP CSI-RS resource configurations/NZP CSI-RS resource configuration indexes.

The present disclosure provides design aspects for beam reporting enhancements for inter-cell mobility and multi-TRP operation (i.e., the inter-cell or inter-TRP operation). For instance, for an inter-cell system including a serving cell and a non-serving cell, the UE could be configured by the network to report in a single reporting instance a pair of SSBRIs {SSBRI_0, SSBRI_1} and their corresponding/associated L1-RSRPs {L1-RSRP_0, L1-RSRP_1}, with SSBRI_0 corresponding to the serving cell while SSBRI_1 corresponding to the non-serving cell, and L1-RSRP_0 corresponding to/associated with SSBRI_0 while L1-RSRP_1 corresponding to/associated with SSBRI_1.

Or equivalently, the UE in this example reports in a single reporting instance two BM-RI pairs/beam qualities {L1-RSRP_0, SSBRI_0} for the serving cell and {L1-RSRP_1, SSBRI_1} for the non-serving cell. For another example of inter-cell operation, the UE could be configured by the network to report in N_rpt (>1) separate reporting instances at least N_rpt resource indicators such as SSBRIs/CRIs along with their corresponding/associated beam metrics such as L1-RSRPs/L1-SINRs for both the serving cell and the non-serving cell(s). In this case, the UE could indicate to the network the association between certain resource indicators (and therefore, their corresponding/associated beam metrics) for the serving cell and the non-serving cell(s).

In one embodiment, a report format of reporting one or more resource indicators/beam metrics associated with/for both the serving cell and the non-serving cell(s) in a single CSI reporting instance is provided.

In the present disclosure, the beam reporting designs/enhancements for the inter-TRP/inter-cell operation are first illustrated assuming fixed non-serving cell(s). Furthermore, in the present disclosure, a reported resource indicator (RI) such as SSBRI/CRI and its corresponding/associated beam metric (BM) such as L1-RSRP/L1-SINR form a BM-RI pair {beam metric, resource indicator} or a reported resource indicator such as SSBRI/CRI and its corresponding/associated beam metric such as L1-RSRP/L1-SINR form a beam quality.

FIGURE 10 illustrates an example of beam reporting format for the inter-cell operation 1000 according to embodiments of the present disclosure. An embodiment of the beam reporting format for the inter-cell operation 1000 shown in FIGURE 10 is for illustration only.

As illustrated in FIGURE 10, one design example of beam reporting for the inter-cell operation is presented. In this example, the inter-cell system comprises of one serving cell and one non-serving cell. In one example, the serving cell could be associated with the serving cell ID (SCI) and/or the serving cell PCI, and the non-serving cell could have a different PCI value from that of the serving cell.

As can be seen from FIGURE 10, the UE could be configured by the network to measure the SSBs from both the serving cell and the non-serving cell, and derive the corresponding beam measurements/metrics such as L1-RSRPs and/or L1-SINRs. In this example, the UE would report SSBRI_0 as the SSBRI for the serving cell, and SSBRI_1 as the SSBRI for the non-serving cell. Instead of separately reporting SSBRI_0 and SSBRI_1 in two reporting instances, the UE could group them as {SSBRI_0, SSBRI_1} and report them in one CSI reporting instance. The first entry in the group/pair of SSBRIs could correspond to the SSBRI for the serving cell, and the second entry could correspond to the SSBRI for the non-serving cell. Furthermore, the UE also reports in the same CSI reporting instance the L1-RSRPs, {L1-RSRP_0, L1-RSRP_1}, corresponding to/associated with the SSBRIs for the serving and non-serving cells, respectively. This is equivalent to reporting in a single reporting instance two BM-RI pairs (or two beam qualities) {L1-RSRP_0, SSBRI_0} for the serving cell and {L1-RSRP_1, SSBRI_1} for the non-serving cell.

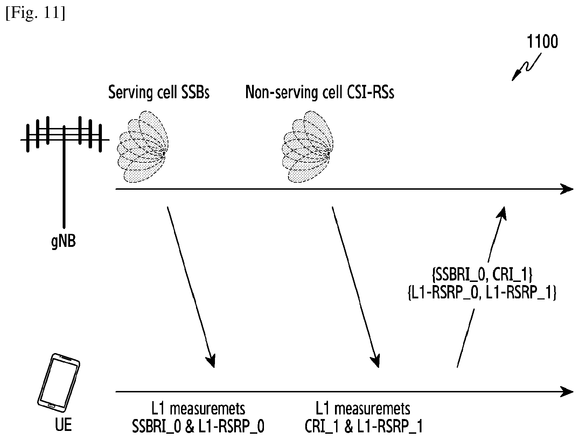

FIGURE 11 illustrates another example of beam reporting format for the inter-cell operation 1100 according to embodiments of the present disclosure. An embodiment of the beam reporting format for the inter-cell operation 1100 shown in FIGURE 11 is for illustration only.

Another example of beam reporting for the inter-cell operation is presented in FIGURE 11. As can be seen from FIGURE 11, the UE could report in a single reporting instance different types of resource indicators for both the serving and the non-serving cells. In this example, the UE would report in a single CSI reporting instance SSBRI_0 as the SSBRI for the serving cell and CRI_1 as the CRI for the non-serving cell together in a group/pair to the network along with their corresponding/associated L1-RSRPs, i.e., L1-RSRP_0 and L1-RSRP_1. Or equivalently, the UE would report in a single reporting instance two BM-RI pairs (or two beam qualities) {L1-RSRP_0, SSBRI_0} for the serving cell and {L1-RSRP_1, CRI_1} for the non-serving cell. In addition to the examples shown in FIGURE 10 and FIGURE 11, the UE could also report to the network in a single reporting instance other combinations of the resource indicator types, depending on the RS resource settings/configurations of the serving and the non-serving cells as illustrated in TABLE 1.

Furthermore, as shown in TABLE 1, the first (second) entry in the beam group/pair could correspond to either the resource indicator for the serving cell or that for the non-serving cell. This mapping relationship/correspondence may be known to both the network and the UE a priori. For example, the UE could be indicated/configured by the network the correspondence between the resource indicators in the beam group/pair (and therefore, the corresponding/associated beam metrics in the group/pair of beam metrics) and the serving/non-serving cell(s); this indication could be via higher layer (RRC) or/and MAC CE or/and DCI based signaling; this indication could be via a separate (dedicated) parameter or joint with another parameter.

**TABLE 1**

| RSs from serving cell | RSs from non-serving cell | Resource indicator for serving cell | Resource indicator for non-serving cell | Group/pair of resource inidcators to be reported |
|---|---|---|---|---|
| SSBs | SSBs | SSBRI_0 | SSBRI_1 | {SSBRI_0, SSBRI_1} or {SSBRI_1, SSBRI_0} |
| SSBs | CSI-RSs | SSBRI_0 | CRI_1 | {SSBRI_0, CRI_1} or {CRI_1, SSBRI_0} |
| CSI-RSs | SSBs | CRI_0 | SSBRI_1 | {CRI_0, CRI_1} or {CRI_1, CRI_0} |
| CSI-RSs | CSI-RSs | CRI_0 | CRI_1 | {CRI_0, SSBRI_1} or {SSBRI_1, CRI_0} |

A single non-serving cell is assumed in FIGURE 10, FIGURE 11, and TABLE 1. There could be more than one non-serving cells configured for beam measurement and reporting. Denote the number of non-serving cells configured for beam measurement and reporting by M_nsc, and 1≤M_nsc≤N_nsc, where N_nsc represents the total/maximum number of non-serving cells. The UE could be configured/indicated by the network the total/maximum number of non-serving cells N_nsc; this indication could be via higher layer (RRC) or/and MAC CE or/and DCI based signaling; this indication could be via a separate (dedicated) parameter or joint with another parameter.

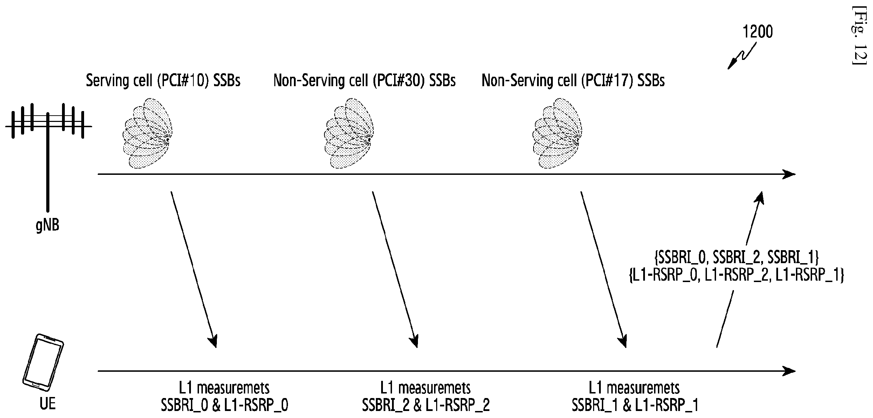

FIGURE 12 illustrates yet another example of beam reporting format for the inter-cell operation 1200 according to embodiments of the present disclosure. An embodiment of the beam reporting format for the inter-cell operation 1200 shown in FIGURE 12 is for illustration only.

As illustrated in FIGURE 12, a conceptual example of beam measurement and reporting for an inter-cell system comprising of two non-serving cells is presented. In this example, the resource indicators for the non-serving cells are ordered (within the group) following the non-serving cells' PCIs from low to high. As can be seen from FIGURE 12, the second entry in the beam group corresponds to the SSBRI (SSBRI_2) for the non-serving cell with PCI #17, while the third entry in the beam group corresponds to the SSBRI (SSBRI_1) for the non-serving cell with PCI #30. The mapping relationship/correspondence between the resource indicators in the beam group (e.g., those for the non-serving cells) and the PCIs (e.g., those for the non-serving cells) may be known to both the network and the UE sides a priori.

For instance, the UE could be indicated/configured by the network the mapping relationship/correspondence between the resource indicators in the beam group (and therefore, the corresponding/associated beam metrics in the group of beam metrics) and the PCIs; this indication could be via higher layer (RRC) or/and MAC CE or/and DCI based signaling; this indication could be via a separate (dedicated) parameter or joint with another parameter.

In addition to the PCIs, other cell-specific information/ID/index could be used for defining this association rule/mapping relationship as well. As indicated in FIGURE 12, the UE also reports in the same reporting instance the L1-RSRPs corresponding to/associated with the reported resource indicators, denoted by L1-RSRP_0, L1-RSRP_1 and L1-RSRP_2. The example shown in FIGURE 12 is equivalent to reporting in a single reporting instance three BM-RI pairs (or their beam qualities) {L1-RSRP_0, SSBRI_0} for the serving cell, {L1-RSRP_1, SSBRI_1} and {L1-RSRP_2, SSBRI_2} for the non-serving cells.

In the previous design examples, the UE would report in a single reporting instance a single group (i.e., N_bg = 1) of resource indicators (and therefore, a single group of beam metrics) for both the serving and non-serving cells. The UE could also report in a single reporting instance more than one groups (i.e., N_bg > 1) of resource indicators (and therefore, more than one groups of beam metrics) for both the serving and non-serving cells.

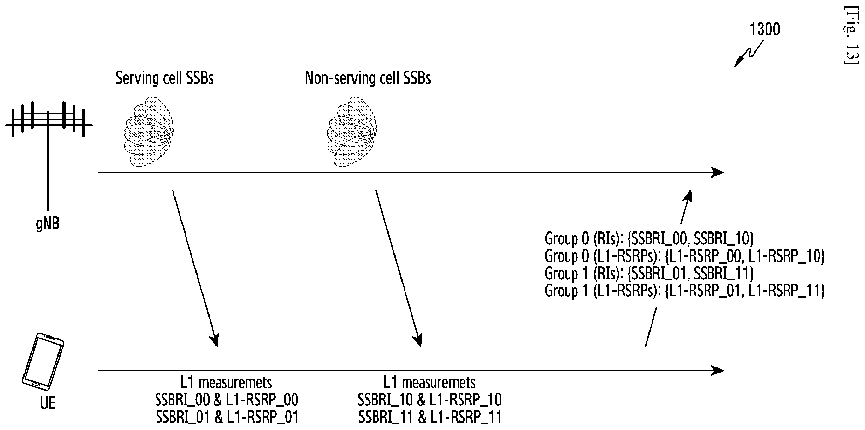

FIGURE 13 illustrates yet another example of beam reporting format for the inter-cell operation 1300 according to embodiments of the present disclosure. An embodiment of the beam reporting format for the inter-cell operation 1300 shown in FIGURE 13 is for illustration only.

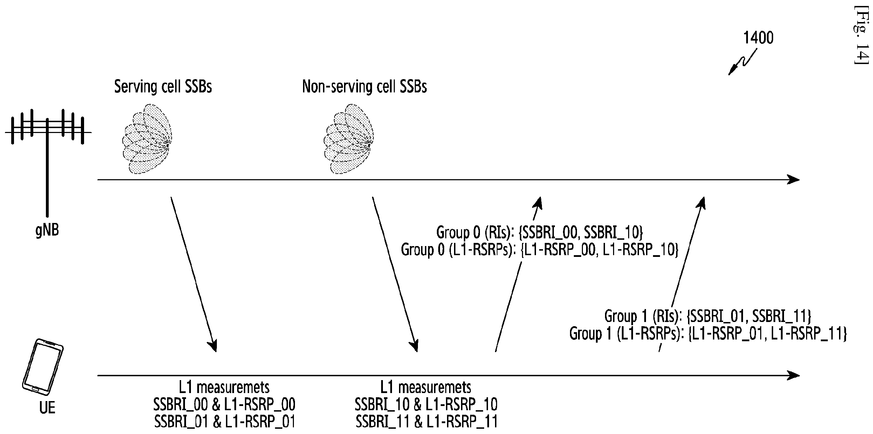

One conceptual example of reporting in a single reporting instance two groups of SSBRIs for both the serving and non-serving cells is given in FIGURE 13. In this example, SSBRI_00 in Group 0 and SSBRI_01 in Group 1 are the two SSBRIs for the serving cell, and they could correspond to the SSB beams from the serving cell with the largest and second largest received L1-RSRPs, denoted by L1-RSRP_00 and L1-RSRP_01. Similarly, SSBRI_10 in Group 0 and SSBRI_11 in Group 1 are the two SSBRIs for the non-serving cell, and they could correspond to the SSB beams from the non-serving cell with the largest and second largest received L1-RSRPs, denoted by L1-RSRP_10 and L1-RSRP_11. Another example of reporting two groups of SSBRIs (and therefore, their corresponding/associated L1-RSRPs) for both the serving and non-serving cells is given in FIGURE 14.

FIGURE 14 illustrates yet another example of beam reporting format for the inter-cell operation 1400 according to embodiments of the present disclosure. An embodiment of the beam reporting format for the inter-cell operation 1400 shown in FIGURE 14 is for illustration only.

The above discussed procedures are described as follows: the UE could report to the network in a single CSI reporting instance N_bg (N_bg ≥ 1) pairs/groups of beams/resource indicators (and therefore N_bg pairs/groups of beam metrics) with N_bmgp (N_bmgp ≥ 1) beams/resource indicators per pair/group of resource indicators (and therefore N_bmgp beam metrics per pair/group of beam metrics); different beams/resource indicators within a pair/group of beams/resource indicators (and therefore, the corresponding/associated different beam metrics within a pair/group of beam metrics) correspond to both the serving cell and the M_nsc non-serving cell(s). Or equivalently, the UE could report to the network in a single CSI reporting instance N_bg*N_bmgp (N_bg ≥ 1, N_bmgp ≥ 1) BM-RI pairs/beam qualities (including the resource indicators and their corresponding/associated beam metrics) for both the serving cell and the M_nsc non-serving cell(s).

Denote the number of resource indicators/beam metrics to be reported for the M_nsc non-serving cells by L_nsc (L_nsc<N_bg*N_bmgp). The UE could be configured/indicated by the network the number of resource indicators/beam metrics L_nsc to be reported for the M_nsc non-serving cells; this indication could be via higher layer (RRC) or/and MAC CE or/and DCI based signaling; this indication could be via a separate (dedicated) parameter or joint with another parameter. Here, 1≤L_nsc≤K_nsc, where K_nsc is the total/maximum number of resource indicators/beam metrics allowed to be reported for the non-serving cell(s), which could be higher layer configured/indicated to the UE by the network (e.g., via the higher layer parameter CSI-ReportConfig).

For example, the candidate values for K_nsc could be 4, 8, or 16. Under certain settings, the UE could be configured/indicated by the network a set of size M_nsc with each entry in the set corresponding to the number of BM-RI pairs/beam qualities (including the resource indicators and their corresponding/associated beam metrics) for a different non-serving cell from the M_nsc non-serving cells.

Alternatively, the UE could autonomously determine/select the number of resource indicators/beam metrics L_nsc (1≤L_nsc≤K_nsc) for the M_nsc non-serving cells and/or a set of size M_nsc with each entry in the set corresponding to the number of BM-RI pairs/beam qualities (including the resource indicators and their corresponding/associated beam metrics) for a different non-serving cell from the M_nsc non-serving cells. The UE could report to the network, e.g., along with the CSI/beam report(s), the value of L_nsc and/or the set indicating the number of resource indicators/beam metrics for each non-serving cell configured for beam measurement and reporting. In this case, the UE could still be higher layer configured/indicated by the network (e.g., via the higher layer parameter CSI-ReportConfig) the total/maximum number of resource indicators/beam metrics allowed to be reported for the non-serving cell(s) (i.e., K_nsc). For instance, the candidate values for K_nsc could be 4, 8, or 16.

The beam metrics considered in all of the above described schemes/design examples in this disclosure could correspond to L1 based beam metrics such as L1-RSRP/L1-SINR or L3 based beam metrics such as L3-RSRP/L3-SINR or a hybrid of L1 based beam metrics and L3 based beam metrics, though the L1 based beam metrics such as L1-RSRP/L1-SINR are used in the above described schemes/design examples for the illustrative purpose. Furthermore, the UE could be indicated/configured by the network to report in a single CSI reporting instance the BM-RI pairs/beam qualities including the resource indicators and their corresponding/associated beam metrics for both the serving cell and the non-serving cell(s); this indication could be via higher layer RRC (e.g., via the higher layer parameter CSI-ReportConfig) or/and MAC CE or/and DCI based signaling; this indication could be via a separate (dedicated) parameter or joint with another parameter.

In one embodiment, various CSI resource settings/configurations and CSI reporting settings/configurations for the inter-TRP/inter-cell operation are provided.

In the present disclosure, various means of configuring the CSI resource setting(s)/configuration(s) and the CSI reporting setting(s)/configuration(s) for the inter-TRP/inter-cell operation are presented. In the current 3GPP NR specifications, a UE can be configured with P≥1 CSI reporting settings (i.e., CSI-ReportConfigs), M≥1 CSI resource settings (i.e., CSI-ResourceConfigs), and one CSI measurement setting, where the CSI measurement setting includes L≥1 measurement links (i.e., MeasLinkConfigs).

One or more of the following configuration parameters are signaled via RRC for CSI acquisition. In one example, P, M, and L are indicated either implicitly or explicitly. In another example, in each CSI reporting setting, at least the following are included: (1) reported CSI parameter(s) such as RI, PMI, CQI; (2) CSI Type if reported such as Type I or Type II; (3) codebook configuration including codebook subset restriction; (4) time domain behavior such as P-CSI, SP-CSI, or A-CSI; (5) frequency granularity for CQI and PMI such as wideband, partial band, or sub-band; and/or (6) measurement restriction configurations such as RBs in frequency domain and slots in the time domain.

In another example, in each CSI resource setting, one or more of the followings are included: (1) a configuration of S≥1 CSI-RS resource set(s); (2) a configuration of Kₛ≥1 CSI-RS resources for each resource set s, including at least: mapping to REs, the number of antenna ports, time domain behavior, etc.; and/or (3) time domain behavior: aperiodic, periodic, or semi-persistent

In another example, in each of the L links in CSI measurement setting, one or more of the followings are included: (1) CSI reporting setting indication, resource setting indication, quality to be measured (either channel or interference); (2) one CSI reporting setting can be linked with one or multiple resource settings; and/or (3) multiple CSI reporting settings can be linked to one resource setting.

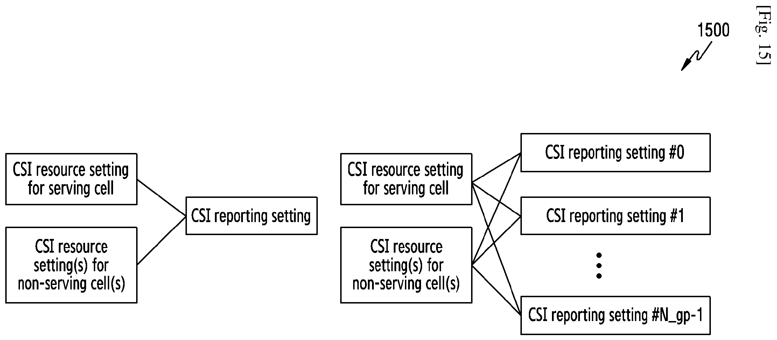

FIGURE 15 illustrates an example of CSI resource setting and CSI reporting setting for the inter-cell operation 1500 according to embodiments of the present disclosure. An embodiment of the CSI resource setting and the CSI reporting setting for the inter-cell operation 1500 shown in FIGURE 15 is for illustration only.

Based on the above discussions, two mapping examples of separate resource settings (one for serving cell and the other(s) for non-serving cell(s)) and reporting setting(s) are depicted. As shown on the left-hand-side (LHS) in FIGURE 15, the CSI resource setting for serving cell and the CSI resource setting(s) for non-serving cell(s) could be mapped to a single CSI reporting setting.

In the CSI reporting setting, the UE could be configured to report to the network in a single reporting instance a single pair/group of beams/resource indicators and therefore a single pair/group of beam metrics corresponding to the single pair of beams/resource indicators (FIGURE 10, FIGURE 11, and FIGURE 12) or N_bg (>1) pairs/groups of beams/resource indicators and therefore N_bg pairs/groups of beam metrics corresponding to the N_bg pairs/groups of beams/resource indicators (FIGURE 13 and FIGURE 14), depending on the network configuration(s). On the right-hand-side (RHS) in FIGURE 15, the CSI resource setting for serving cell and the CSI resource setting(s) for non-serving cell(s) are mapped to N_bg (>1) CSI reporting settings.

The mapping relationship in FIGURE 15 could be more suited for the design example shown in FIGURE 14, in which the UE would report N_bg groups/pairs of beams/resource indicators (and therefore, the corresponding N_bg groups/pairs of beam metrics) for the serving and non-serving cells to the network through N_bg separate reporting instances.

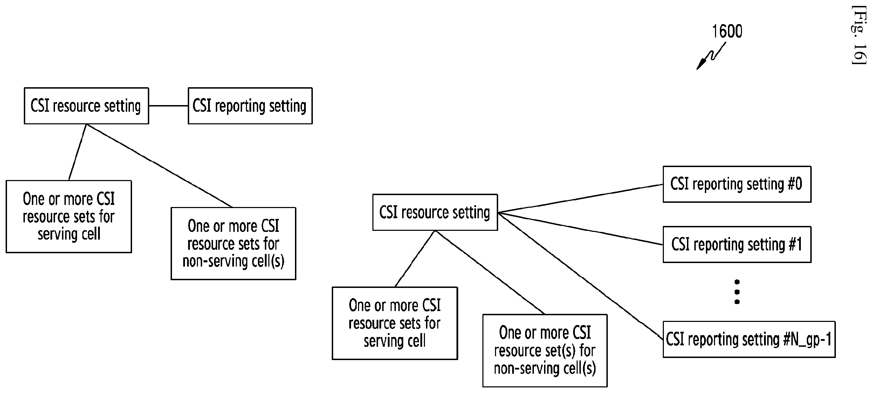

FIGURE 16 illustrates another example of CSI resource setting and CSI reporting setting for the inter-cell operation 1600 according to embodiments of the present disclosure. An embodiment of the CSI resource setting and the CSI reporting setting for the inter-cell operation 1600 shown in FIGURE 16 is for illustration only.

Another two mapping examples of a single resource setting and reporting setting(s) are presented in FIGURE 16. Similar to those shown in FIGURE 15, the design example shown on the LHS in FIGURE 16 could correspond to FIGURE 10, FIGURE 11, FIGURE 12, FIGURE 13, and FIGURE 14, while the design example shown on the RHS in FIGURE 16 could be more suited for FIGURE 14.

For the design examples shown in FIGURE 16, a single resource setting is configured, comprising of one or more CSI-RS resource sets for the serving cell and one or more CSI-RS resource set(s) for the non-serving cell(s).

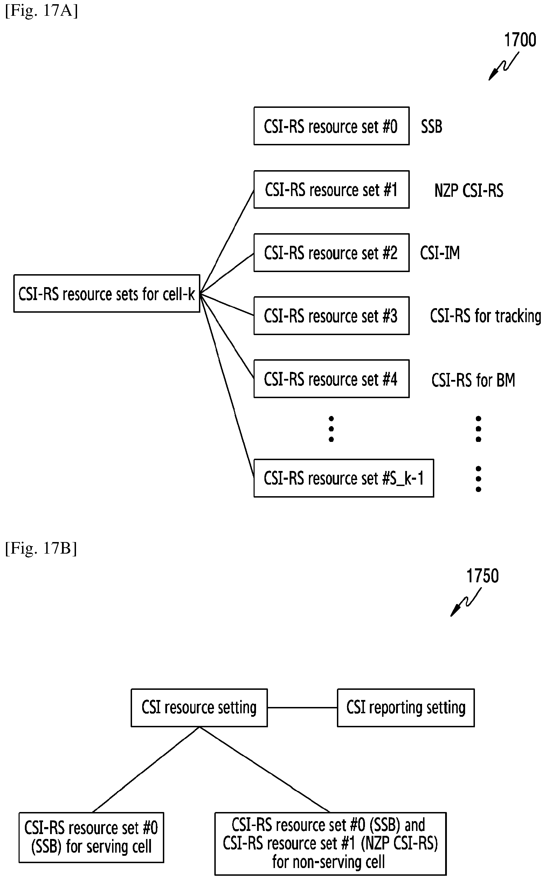

FIGURE 17A illustrates an example of various configurations of CSI-RS resource sets for a cell1700 according to embodiments of the present disclosure. An embodiment of the various configurations of the CSI-RS resource sets for the cell 1700 shown in FIGURE 17A is for illustration only.

In FIGURE 17A, a conceptual example characterizing various CSI-RS resource sets and their associations with a given cell is presented. As shown in FIGURE 17A, a cell (i.e., cell-k here) could be associated with more than one (i.e., S_k with S_k ≥ 1) CSI-RS resource sets, each corresponding to a different RS type. In this example, CSI-RS resource set #0 comprises of NZP CSI-RS resources, while CSI-RS resource set #2 comprises of CSI-RS resources for tracking. The associations shown in FIGURE 17A are regardless of whether the given cell is the serving cell or a non-serving cell.

FIGURE 17B illustrates an example of various configurations of CSI-RS resource sets for the inter-cell operation 1750 according to embodiments of the present disclosure. An embodiment of the various configurations of the CSI-RS resource sets for the inter-cell operation 1750 shown in FIGURE 17B is for illustration only.

Based on the associations depicted in FIGURE 17A, the design example shown on the LHS in FIGURE 16 is further elaborated in FIGURE 17B, in which a single CSI-RS resource set, CSI-RS resource set #0 (SSB), is configured for the serving cell, while two CSI-RS resource sets, CSI-RS resource set #0 (SSB) and CSI-RS resource set #1 (NZP CSI-RS), are configured for the non-serving cell.

The UE could be configured/indicated by the network to report in a single reporting instance one or more pairs/groups of beams/resource indicators for the serving and non-serving cells via higher-layer (e.g., RRC) signaling and/or MAC CE and/or L1 DL control (DCI transmitted on PDCCH). For instance, a higher layer RRC parameter, denoted by groupBasedBeamReportingInterTRP, could be incorporated in the higher layer parameter CSI-ReportConfig and used to turn on/off the group based beam reporting for the inter-TRP/inter-cell operation.

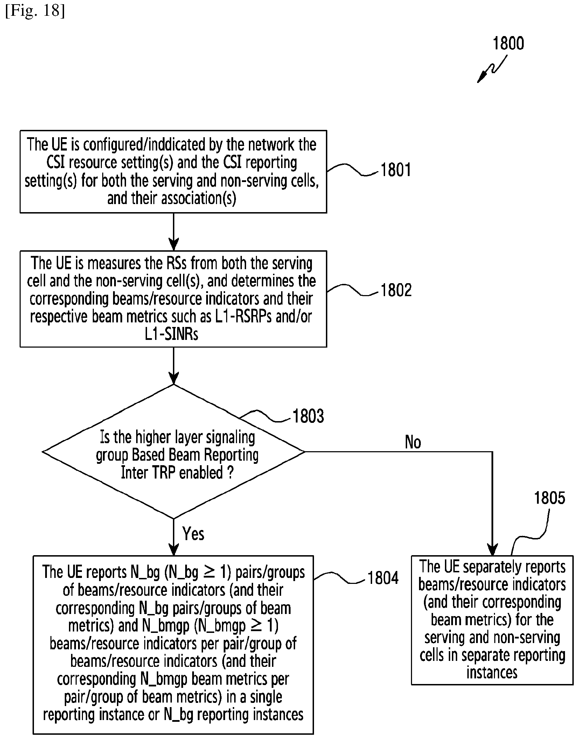

FIGURE 18 illustrates a flowchart of a method 1800 for a network configured group based beam reporting procedure for the inter-TRP/inter-cell operation according to embodiments of the present disclosure. For example, the method 1800 as may be performed by a UE (e.g., 111-116 as illustrated in FIGURE 1). An embodiment of the method 1800 shown in FIGURE 18 is for illustration only. One or more of the components illustrated in FIGURE 18 can be implemented in specialized circuitry configured to perform the noted functions or one or more of the components can be implemented by one or more processors executing instructions to perform the noted functions.

In FIGURE 18, an example of network configured group based beam reporting procedure for the inter-TRP/inter-cell operation is illustrated.

As illustrated in FIGURE 18, in 1801, the UE is configured/indicated by the network the CSI resource setting(s)/configuration(s) and CSI reporting setting(s)/configuration(s) for both the serving and non-serving cells, and their association rule(s)/mapping relationship(s). Examples of how the CSI resource setting(s)/configuration(s) for both the serving and non-serving cells would associate with the corresponding CSI reporting setting(s)/configuration(s) for the inter-TRP/inter-cell operation are presented in FIGURE 15 and FIGURE 16.

In 1802, based on the configured CSI resource setting(s)/configuration(s), the UE would measure the corresponding RSs from both the serving and non-serving cells. Here, the serving cell and non-serving cell RSs could correspond to SSBs, CSI-RSs, TRSs, PL-RSs, and etc. The UE would also compute the beam metric(s) such as L1-RSRPs and/or L1-SINRs based on the measurements of the RSs. The UE would then determine the beams/resource indicators to report for both the serving cell and the non-serving cell(s). For instance (see FIGURE 10), the UE would determine SSBRI_0 as the SSBRI for the serving cell as the corresponding L1-RSRP_0 is the highest among all the L1-RSRPs obtained on the serving cell's SSBs. The UE is not restricted from only grouping/pairing the beams/resource indicators that can be simultaneously received by the UE.

In 1803, the UE would check whether the groupBasedBeamReportingInterTRP is enabled, say, in the configured higher layer parameter CSI-ReportConfig. If it is on/enabled, the algorithm would proceed to 1804. Otherwise, the algorithm would proceed to 1805.

In 1804, the UE would report to the network in a single CSI reporting instance or N_bg separate CSI reporting instances N_bg (N_bg ≥ 1) pairs/groups of beams/resource indicators (and therefore N_bg pairs/groups of the corresponding/associated beam metrics) with N_bmgp (N_bmgp ≥ 1) beams/resource indicators per pair/group of beams/resource indicators (and therefore N_bmgp beam metrics per pair/group of beam metrics); different beams/resource indicators within a pair/group (and therefore, the corresponding/associated different beam metrics within a pair/group of beam metrics) correspond to both the serving cell and the non-serving cell(s). Or equivalently, the UE could report to the network in a single CSI reporting instance or N_bg separate CSI reporting instances N_bg*N_bmgp (N_bg ≥ 1, N_bmgp ≥ 1) BM-RI pairs/beam qualities (including the resource indicators and their corresponding/associated beam metrics) for both the serving cell and the non-serving cell(s).

In 1805, the UE would separately report the beams/resource indicators (and their corresponding beam metrics such as L1-RSRPs/L1-SINRs) determined in 1802 for both the serving and non-serving cells in separate reporting instances, which is also referred to as non-group based beam reporting.

The above described design approaches could be extended to the multi-TRP operation, in which the UE could simultaneously receive multiple DL transmissions from multiple physically non-co-located TRPs. Recall the example shown in FIGURE 9 that the coordinating TRPs in the multi-TRP system could have the same PCI (a.k.a. intra-cell multi-TRP) or different PCIs (a.k.a., inter-cell multi-TRP).

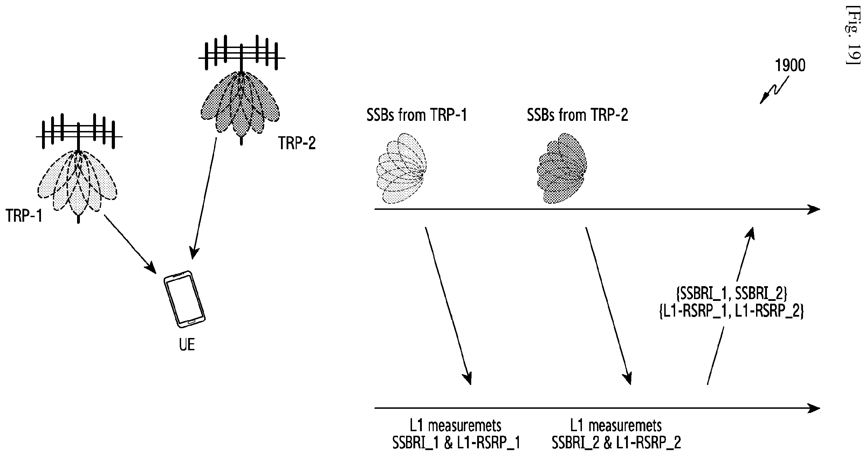

FIGURE 19 illustrates an example of a beam reporting for the multi-TRP operation 1900 according to embodiments of the present disclosure. An embodiment of the beam reporting for the multi-TRP operation 1900 shown in FIGURE 19 is for illustration only.

As illustrated in FIGURE 19, a design example of beam reporting for the multi-TRP operation is presented. In this example, the multi-TRP system comprises of two coordinating TRPs, TRP-1 and TRP-2. As can be seen from FIGURE 19, the UE could be configured by the network to measure the SSBs from both the TRPs, and derive the corresponding beam measurements/metrics such as L1-RSRPs and/or L1-SINRs. The UE would report SSBRI-1 as the SSBRI for TRP-1, and SSBRI-2 as the SSBRI for TRP-2. The UE would group them as {SSBRI-1, SSBRI-2} and report them along with their respective L1-RSRPs in one reporting instance. The first entry in the group/pair of SSBRIs could correspond to the SSBRI for TRP-1, and the second entry could correspond to the SSBRI for TRP-2. The mapping relationship/correspondence between the beams/resource indicators and the coordinating TRPs could be predefined, and known to both the UE and the network sides. For instance, the UE could be configured/indicated by the network the correspondence/association/mapping between the beams/resource indicators within the beam group/pair and the coordinating TRPs in the multi-TRP system.

The above discussed procedures are described as follows: the UE could report N_bg (N_bg ≥ 1) pairs/groups of beams/resource indicators (and their corresponding N_bg pairs/groups of beam metrics), and N_bmgp (N_bmgp ≥ 1) beams/resource indicators per pair/group of beams/resource indicators (and their corresponding N_bmgp beam metrics per pair/group of beam metrics) in a single reporting instance or N_bg separate reporting instances. Furthermore, different beams/resource indicators within a pair/group (and therefore, the corresponding/associated different beam metrics within a pair/group of beam metrics) correspond to different coordinating TRPs in a multi-TRP system.

The UE is not restricted from only reporting the beams/resource indicators within a pair/group that can be simultaneously received by the UE using either a single spatial filter or multiple spatial filters. Or equivalently, the UE could report N_bg*N_bmgp (N_bg ≥ 1, N_bmgp ≥ 1) BM-RI pairs/beam qualities (including the resource indicators and their corresponding/associated beam metrics) in a single reporting instance or N_bg separate reporting instances for the coordinating TRPs in the multi-TRP system.

As aforementioned above, the design procedures shown in FIGURES 10-18 for the inter-cell operation could be extended/applied/generalized to the multi-TRP operation as well by treating the serving/non-serving cells as the coordinating TRPs.

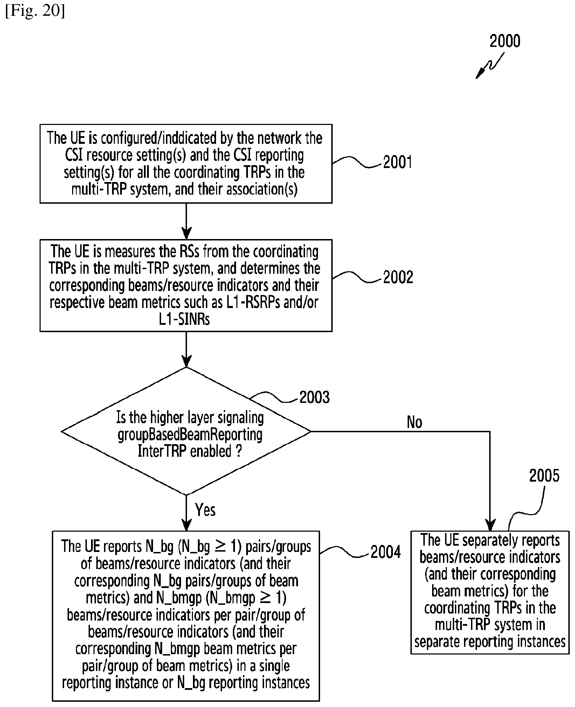

FIGURE 20 illustrates a flowchart of a method 2000 for a network configured group based beam reporting procedure for the multi-TRP operation according to embodiments of the present disclosure. For example, the method 2000 as may be performed by a UE (e.g., 111-116 as illustrated in FIGURE 1). An embodiment of the method 2000 shown in FIGURE 20 is for illustration only. One or more of the components illustrated in FIGURE 20 can be implemented in specialized circuitry configured to perform the noted functions or one or more of the components can be implemented by one or more processors executing instructions to perform the noted functions.

In FIGURE 20, an example of network configured group based beam reporting procedure for the multi-TRP operation is depicted, imitating those presented in FIGURE 18 for the inter-cell operation.

The beam metrics considered in all of the above described schemes/design examples in this disclosure could correspond to L1 based beam metrics such as L1-RSRP/L1-SINR or L3 based beam metrics such as L3-RSRP/L3-SINR or a hybrid of L1 based beam metrics and L3 based beam metrics, though the L1 based beam metrics such as L1-RSRP/L1-SINR are used in the above described schemes/design examples for the illustrative purpose.

In one embodiment, a report format of reporting one or more resource indicators/beam metrics associated with/for the serving cell and the non-serving cell(s) in separate reporting instances is provided.

As illustrated in FIGURE 20, in step 2001, the UE is configured/indicated by the network the CSI resources setting and the CSI reporting setting for the multi-TRP operation. In step 2002, the UE measures the RSs from the coordinating TRPs in the multi-TRP system. In step 2003, the UE determines whether the higher layer signaling groupBasedBeamReportingInterTRP is enabled. In step 2004, the UE reports in a single reporting instance the resource indicators/beam metrics for the coordinating TRPs in the multi-TRP system, and the UE separately reports in separate reporting instances the resource indicators/beam metrics for the coordinating TRPs in the multi-TRP system in step 2005.

In addition to the group based beam reporting designs/enhancements for the inter-TRP/inter-cell operation, the non-group based beam reporting procedures such as those in 1805 and 2005 as illustrated in FIGURE 20 could also be optimized. For the non-group based beam reporting for the inter-TRP/inter-cell operation, in a single reporting instance, the UE would report to the network the resource indicator(s) and their corresponding/associated beam metric(s) for only a single cell (either the serving cell or a non-serving cell).

Furthermore, the UE could autonomously associate different beam reports/reporting instances depending on various factors such as the channel condition, UE's orientation and etc., and indicate to the network the association rule/mapping relationship. For instance, for the inter-cell operation, the UE could associate different beam reports for both the serving and non-serving cells obtained under the same UE's orientation. Upon receiving the beam reports and the corresponding association rule(s)/mapping relationship(s), the network could better decide whether to switch/handover the UE from the current serving cell to one of the non-serving cells. In this part of the disclosure, a reported resource indicator (RI) such as SSBRI/CRI and its corresponding/associated beam metric (BM) such as L1-RSRP/L1-SINR form a BM-RI pair {beam metric, resource indicator}. Or a reported resource indicator such as SSBRI/CRI and its corresponding/associated beam metric such as L1-RSRP/L1-SINR form a beam quality.

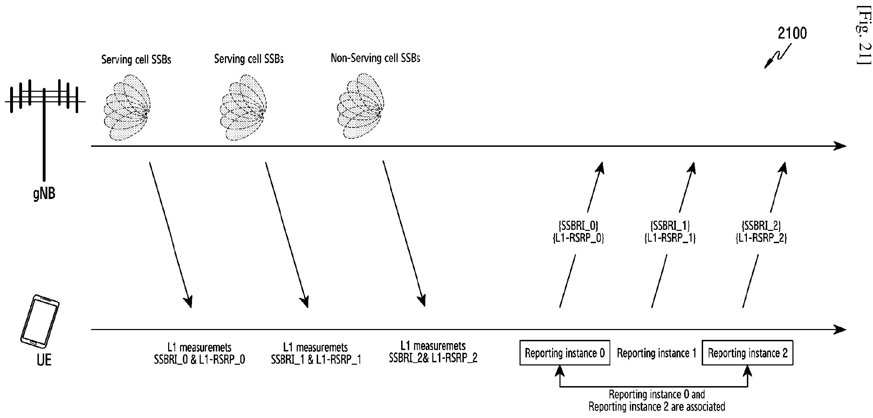

FIGURE 21 illustrates an example of a non-group based beam reporting for the inter-TRP/inter-cell operation 2100 according to embodiments of the present disclosure. An embodiment of the non-group based beam reporting for the inter-TRP/inter-cell operation 2100 shown in FIGURE 21 is for illustration only.

In FIGURE 21, a conceptual example of the non-group based beam reporting design for the inter-cell/inter-TRP operation is presented. In this example, the UE could be configured by the network to measure two bursts of SSBs from the serving cell and one burst of SSBs from the non-serving cell. The UE, therefore, could obtain two SSBRIs, i.e., SSBRI_0 and SSBRI_1, from measuring the two bursts of SSBs of the serving cell, and one SSBRI, i.e., SSBRI_2, from measuring the SSBs of the non-serving cell. The UE could then report to the network {SSBRI_0}, {SSBRI_1} and {SSBRI_2} and their corresponding beam metrics {L1-RSRP_0}, {L1-RSRP_I} and {L1-RSRP_2} through three separate reporting instances, i.e., Reporting instance 0, Reporting instance 1 and Reporting instance 2 as shown in FIGURE 20.

Note that in each reporting instance, the reported SSBRI and the corresponding L1-RSRP (e.g., SSBRI_0 and L1-RSRP_0 in Reporting instance 0) can be regarded as a BM-RI pair or a beam quality. In this example, the UE autonomously decides to associate Reporting instance 0 and Reporting instance 2, which comprise of the SSBRIs for the serving and non-serving cells, respectively. There could be various reasons that the UE would associate one reporting instance with another reporting instance. For example, the UE could associate between the beam reports, and therefore, their corresponding reporting instances, that are obtained using the same receive panel and/or under the same orientation.

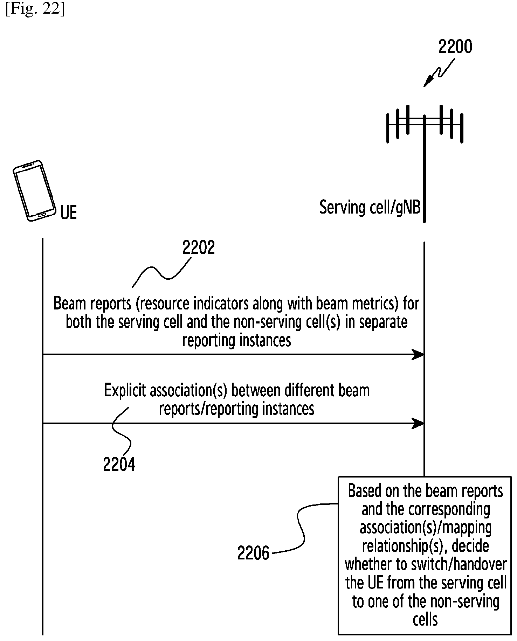

FIGURE 22 illustrates a signaling flow 2200 between the UE and serving cell/gNB for a non-group based beam reporting according to embodiments of the present disclosure. For example, the signaling flow 2200 as may be performed by a UE (e.g., 111-116 as illustrated in FIGURE 1) and a BS (e.g., 101-103 as illustrated in FIGURE 1). An embodiment of the signaling flow 2200 shown in FIGURE 22 is for illustration only. One or more of the components illustrated in FIGURE 22 can be implemented in specialized circuitry configured to perform the noted functions or one or more of the components can be implemented by one or more processors executing instructions to perform the noted functions.

As illustrated in FIGURE 22, in step 2202, the UE sends beam reports (resource indicators along with beam metrics) for both the serving cell and the non-serving cell(s) in separate reporting instances. In step 2204, the UE indicates the explicit association(s)/mapping relationship(s) between different beam reports/reporting instances. In step 2206, the serving cell/gNB, based on the beam reports and the corresponding association(s)/mapping relationship(s), decides whether to switch/handover the UE from the serving cell to one of the non-serving cells.

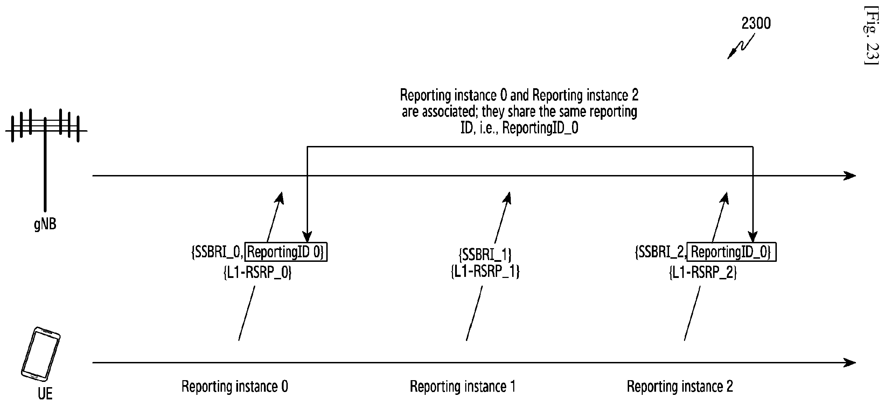

FIGURE 23 illustrates an example of a non-group based beam reporting 2300 according to embodiments of the present disclosure. An embodiment of the non-group based beam reporting 2300 shown in FIGURE 23 is for illustration only.

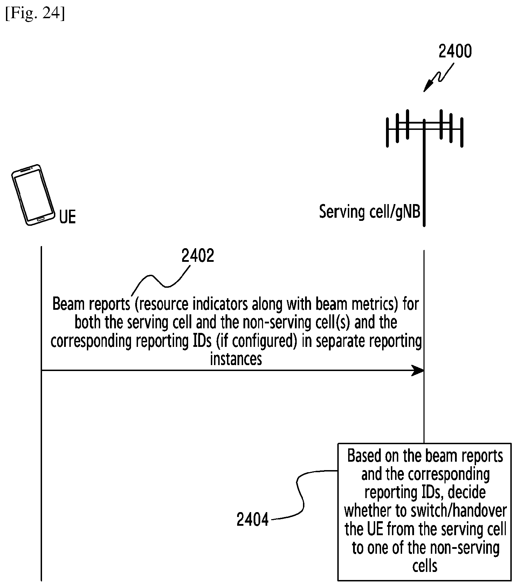

FIGURE 24 illustrates a signaling flow 2400 between the UE and serving cell/gNB for a non-group based beam reporting according to embodiments of the present disclosure. For example, the signaling flow 2400 as may be performed by a UE (e.g., 111-116 as illustrated in FIGURE 1) and a BS (e.g., 101-103 as illustrated in FIGURE 1). An embodiment of the signaling flow 2400 shown in FIGURE 24 is for illustration only. One or more of the components illustrated in FIGURE 24 can be implemented in specialized circuitry configured to perform the noted functions or one or more of the components can be implemented by one or more processors executing instructions to perform the noted functions.

As illustrated in FIGURE 24, the UE in step 2402 sends beam reports (resource indicators along with beam metrics) for both the serving cell and the non-serving cell(s) and the corresponding reporting IDs (if configured) in separate reporting instances. In step 2404, the serving cell/gNB, based on the beam reports and the corresponding reporting IDs, decides whether to switch/handover the UE from the serving cell to one of the non-serving cells.

The UE could explicitly indicate to the network the association rule(s)/mapping relationship(s) between different reporting instances (see FIGURE 22). Alternatively, the UE could incorporate a reporting ID into the beam report. If two beam reports, and therefore, their corresponding reporting instances are associated, they would share the same reporting ID. One conceptual example of incorporating the reporting ID into the beam reports is depicted in FIGURE 23. The corresponding signaling procedure is presented in FIGURE 24. As indicated in FIGURE 24, for the inter-cell/inter-TRP operation, the network could use the beam reports with the same reporting ID to decide whether to switch/handover the UE from the current serving cell to one of the non-serving cells.

The beam metrics considered in all of the above described schemes/design examples in this disclosure could correspond to L1 based beam metrics such as L1-RSRP/L1-SINR or L3 based beam metrics such as L3-RSRP/L3-SINR or a hybrid of L1 based beam metrics and L3 based beam metrics, though the L1 based beam metrics such as L1-RSRP/L1-SINR are used in the above described schemes/design examples for the illustrative purpose.

In one embodiment, a report format of reporting one or more resource indicators/beam metrics associated with/for the non-serving cell(s) in one reporting instance and reporting one or more resource indicators/beam metrics associated with/for the serving cell in another reporting instance is provided.

The UE could report the resource indicators such as SSBRIs/CRIs along with their corresponding/associated beam metrics for both the serving cell and the non-serving cell(s) in two stages (or two separate CSI reporting instances). In this part of the disclosure, a reported resource indicator (RI) such as SSBRI/CRI and its corresponding/associated beam metric (BM) such as L1-RSRP/L1-SINR form a BM-RI pair {beam metric, resource indicator} or a reported resource indicator such as SSBRI/CRI and its corresponding/associated beam metric such as L1-RSRP/L1-SINR form a beam quality.

At the first stage (stage-1), the UE could only report to the network in a single reporting instance (the first reporting instance) the resource indicator(s) such as SSBRI(s)/CRI(s) and the corresponding/associated beam metric(s) for the serving cell (the BM-RI pair(s)/beam quality(s) for the serving cell). At the second stage (stage-2), the UE could report to the network in a single reporting instance (the second reporting instance) the resource indicators such as SSBRIs/CRIs and the corresponding beam metrics for all the M_nsc (M_nsc ≥ 1) non-serving cells (the corresponding L_nsc ≥ 1 BM-RI pairs/beam qualities for the non-serving cells). The overall beam reporting procedure (stage-1 followed by stage-2) is similar to the non-group based beam reporting as shown in FIGURE 21 and FIGURE 23.

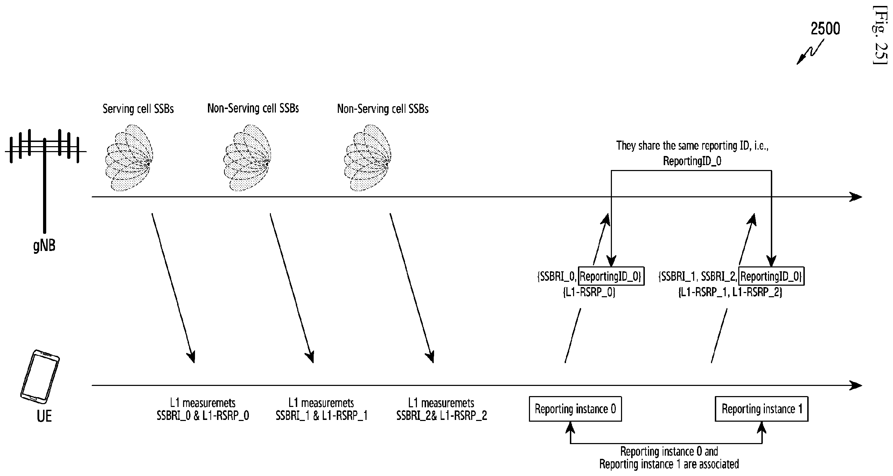

FIGURE 25 illustrates an example of a two-stage beam reporting format for the inter-cell operation 2500 according to embodiments of the present disclosure. An embodiment of the two-stage beam reporting format for the inter-cell operation 2500 shown in FIGURE 25 is for illustration only.

In FIGURE 25, a conceptual example illustrating the measurement and reporting procedures for the two-stage beam reporting is presented. At stage-1, the UE reports in a single reporting instance (Reporting instance 0) SSBRI_0 along with the L1 beam metric L1-RSRP_0 for the serving cell. Here, {L1-RSRP_0, SSBRI_0} is regarded as the BM-RI pair/beam quality for the serving cell. At stage-2, the UE reports in a single reporting instance (Reporting instance 1) a pair of SSBRIs, {SSBRI_1 and SSBRI_2} along with {L1-RSRP_1, L1-RSRP_2}, for the two non-serving cells. Here, {L1-RSRP_1, SSBRI_1} and {L1-RSRP_2, SSBRI_2} can be regarded as two BM-RI pairs/two beam qualities for the two non-serving cells. Furthermore, the two reporting instances are associated with each other.

The UE could (1) explicit indicate to the network that Reporting instance 0 and Reporting instance 1 are associated, or (2) incorporate the same reporting ID, ReportingID _0 in this example, into the corresponding beam reports. Upon receiving the beam reports along with the association indication, the network could compare the beam metrics obtained for the serving cell and the non-serving cell(s), and decide whether to switch/handover the UE from the current serving cell to one of the non-serving cells.

The above discussed procedures are described as follows: the UE could report to the network in a single reporting instance N_bg (N_bg ≥ 1) pairs/groups of beams/resource indicators (and therefore, their corresponding N_bg pairs/groups of beam metrics) and at least M_nsc (M_nsc ≥ 1) beams/resource indicators per pair/group of beams/resource indicators (and therefore, at least M_nsc beam metrics per pair/group of beam metrics); different beams/resource indicators within a pair/group of beams/resource indicators (and therefore, different beam metrics within a pair/group of beam metrics) only correspond to the M_nsc non-serving cells. The UE is not restricted from only reporting the beams/resource indicators within a pair/group that can be simultaneously received by the UE using either a single spatial filter or multiple spatial filters. Or equivalently, the UE could report in a single reporting instance L_nsc (1≤L_nsc≤K_nsc) BM-RI pairs/beam qualities (including the resource indicators and their corresponding/associated beam metrics) only for the M_nsc non-serving cells.

The detailed configuration/indication methods of L_nsc and/or K_nsc and/or the corresponding/associated parameters could follow those discussed in part 1 of this disclosure. Two or more beam reports/reporting instances could be associated, and at least one beam report may be for the serving cell (with the serving cell ID (SCI) and/or the serving cell PCI). The UE could explicitly indicate to the network the association rule(s)/mapping relationship(s) between different beam reports/reporting instances. Alternatively, the UE could incorporate a reporting ID into the beam report. If two beam reports, and therefore, their corresponding reporting instances are associated, they would share the same reporting ID.

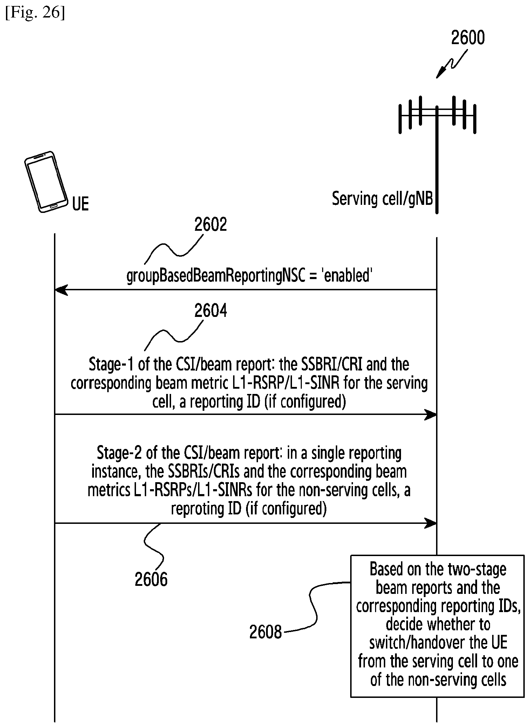

FIGURE 26 illustrates a signaling flow 2600 between the UE and serving cell/gNB for a two-stage beam reporting for the inter-cell operation according to embodiments of the present disclosure. For example, the signaling flow 2600 as may be performed by a UE (e.g., 111-116 as illustrated in FIGURE 1) and a BS (e.g., 101-103 as illustrated in FIGURE 1). An embodiment of the signaling flow 2600 shown in FIGURE 26 is for illustration only. One or more of the components illustrated in FIGURE 26 can be implemented in specialized circuitry configured to perform the noted functions or one or more of the components can be implemented by one or more processors executing instructions to perform the noted functions.

As illustrated in FIGURE 26, the UE in step 2602 receives from the serving cell/gNB the higher layer parameter groupBasedBeamReportingNSC set to 'enabled'. In step 2604, the UE sends the first-stage CSI/beam report: the SSBRI/CRI and the corresponding beam metric L1-RSRP/L1-SINR for the serving cell, a reporting ID (if configured). In step 2606, the UE sends the second-stage CSI/beam report: in a single reporting instance, the SSBRIs/CRIs and the corresponding beam metrics L1-RSRPs/L1-SINRs for the non-serving cells, a reporting ID (if configured). In step 2608, the serving cell/gNB, based on the two-stage beam reports and the corresponding reporting IDs, decides whether to switch/handover the UE from the serving cell to one of the non-serving cells.

The UE could be configured/indicated by the network to group the beam reports for the M_nsc non-serving cells (i.e., in a single reporting instance), and associate the beam reports (and therefore, the corresponding reporting instances) for the serving cell and the non-serving cells. For instance, a RRC parameter, denoted by groupBasedBeamReportingNSC, could be incorporated in the higher layer parameter CSI-ReportConfig and used to turn on/off the group based beam reporting for the non-serving cells.

As illustrated in FIGURE 26, the signaling procedure for the two-stage beam reporting is given. As illustrated in FIGURE 26, if the groupBasedBeamReportingNSC is "enabled," the UE would perform the provided two-stage beam reporting mechanism. In this example, the reporting ID is incorporated into the beam reports and used to associate different beam reports from the serving cell and the non-serving cell(s). Note that the explicit indication method discussed in FIGURE 22 could also be used to indicate to the network the association rule(s)/mapping relationship(s) between different beam reports (and therefore, the corresponding reporting instances).

The beam metrics considered in all of the above described schemes/design examples in this disclosure could correspond to L1 based beam metrics such as L1-RSRP/L1-SINR or L3 based beam metrics such as L3-RSRP/L3-SINR or a hybrid of L1 based beam metrics and L3 based beam metrics, though the L1 based beam metrics such as L1-RSRP/L1-SINR are used in the above described schemes/design examples for the illustrative purpose.

In one embodiment, another report format of reporting one or more resource indicators/beam metrics associated with/for both the serving cell and the non-serving cell(s) in a single reporting instance is provided.

The UE could be higher layer configured/indicated by the network (e.g., via higher layer RRC signaling) the total/maximum number of non-serving cells N_nsc for beam measurement. The UE could or would report to the network in a single reporting instance the resource indicators along with the corresponding beam metrics for only a subset of all the N_nsc non-serving cells. Denote the number of non-serving cells configured/selected for beam measurement and reporting by M_nsc. Hence, 1_nsc≤N_nsc. In this part of the disclosure, a reported resource indicator (RI) such as SSBRI/CRI and its corresponding/associated beam metric (BM) such as L1-RSRP/L1-SINR form a BM-RI pair {beam metric, resource indicator}. For instance, a BM-RI pair could correspond to {SSBRI, SS-RSRP} or {CRI, CSI-RSRP}. Or a reported resource indicator such as SSBRI/CRI and its corresponding/associated beam metric such as L1-RSRP/L1-SINR form a beam quality. As aforementioned, a non-serving cell could be associated with or broadcast a PCI different from the serving cell PCI(s).

The UE could be indicated/configured by the network (e.g., via higher layer RRC signaling) to report in the same CSI reporting instance/CSI report K ≥ 1 BM-RI pairs/beam qualities (including K resource indicators and their associated/corresponding K beam metrics) for both the serving cell and the non-serving cell(s) per reporting setting. That is, if configured by the network, the UE may report in the same CSI reporting instance/CSI-Report the resource indicators such as SSBRIs/CRIs and their associated/corresponding beam metrics such as L1-RSRPs/L1-SINRs for both the serving cell and the non-serving cell(s) per reporting setting.

For instance, a higher layer parameter interCellBasedBeamReporting could be included/incorporated in CSI reporting configuration/setting, e.g., in the higher layer parameter CSI-ReportConfig, to turn on/off the inter-cell beam measurement and reporting, wherein beam qualities corresponding to both the serving cell and non-serving cell(s) are reported in the same CSI reporting instance/CSI-Report. If the UE is configured with the higher layer parameter interCellBasedBeamReporting set to "enabled," the UE may report in a single CSI reporting instance/CSI-Report K≥1 SSBRIs or CRIs for both the serving cell/TRP and the non-serving (or neighboring) cell(s)/TRP(s) (and therefore, the corresponding K≥1 beam metrics such as L1-RSRPs/L1-SINRs for both the serving cell/TRP and the non-serving (or neighboring) cell(s)/TRP(s)) for each reporting setting, wherein the non-serving (or neighboring) cell(s)/TRP(s) could broadcast/be associated with different PCI(s) from the serving cell PCI(s).

Under certain settings, e.g., the UE is not configured with the higher layer parameter interCellBasedBeamReporting or configured with the higher layer parameter interCellBasedBeamReporting set to "disabled," the UE could report in the same CSI reporting instance/CSI-Report K≥1 BM-RI pairs/beam qualities (including K resource indicators and their associated/corresponding K beam metrics) for only non-serving cell(s)/TRP(s) per reporting setting, wherein the non-serving cell(s)/TRP(s) could broadcast/be associated with different PCI(s) from the serving cell PCI(s).

Alternatively, the UE could autonomously determine to report in the same CSI reporting instance/CSI report K≥1 BM-RI pairs/beam qualities (including K resource indicators and their associated/corresponding K beam metrics) for both the serving cell and the non-serving cell(s) per reporting setting. Under certain settings, the UE could autonomously determine to report in the same CSI reporting instance/CSI report K≥1 BM-RI pairs/beam qualities (including K resource indicators and their associated/corresponding K beam metrics) for only non-serving cell(s)/TRP(s) per reporting setting.

In this case, the UE may indicate to the network that the resource indicators such as SSBRIs/CRIs (and therefore, the corresponding beam metrics such as L1-RSRPs/L1-SINRs) reported in the same CSI reporting instance/CSI report are for both the serving cell and the non-serving cell(s) or only the non-serving cell(s). For instance, the UE could report to the network a one-bit flag/indicator along with/in part of the beam/CSI report(s). If the one-bit flag/indicator is set to "1"/"ON"/"enabled," the reported BM-RI pairs/beam qualities in the same reporting instance/CSI report are from/for both the serving cell and the non-serving cell(s). Otherwise, that is, if the one-bit flag/indicator is set to "0"/"OFF"/"disabled," the reported BM-RI pairs/beam qualities in the same reporting instance/CSI report are from/for non-serving cell(s) only.

In the present disclosure, the UE could determine one or more BM-RI pairs/beam qualities (including the resource indicator(s) such as SSBRI(s)/CRI(s) and the corresponding beam metric(s) such as L1-RSRP(s)/L1-SINR(s)) for or associated with one or more non-serving cell PCIs by measuring one or more RSs through one or more RS resources configured/indicated for the one or more non-serving cell PCIs. For example, a RS resource configured in a CSI resource setting/configuration provided by the higher layer parameter CSI-ResourceConfig is for or associated with a PCI (e.g., corresponding to a non-serving cell PCI) if the PCI information/value is indicated/included in the corresponding CSI resource setting/configuration. That is, if/when the UE is configured with/provided by the network the higher layer parameter interCellBasedBeamReporting or NumberofAdditionalPCI or AdditionalPCIInfo or etc., the UE is configured with a CSI resource setting/configuration provided by the higher layer parameter CSI-ResourceConfig for L1-RSRP reporting including one or more SSB resources or NZP CSI-RS resource configurations associated with one or more PCIs or indices in a list/set/pool of PCIs, respectively.

In one example (e.g., example v.1), a CSI resource setting/configuration, and therefore the corresponding higher layer parameter CSI-ResourceConfig, could include/indicate a PCI value, e.g., corresponding to either a serving cell PCI or a non-serving cell PCI. A RS resource configured/indicated in the CSI resource setting/configuration (and therefore, in the corresponding higher layer parameter CSI-ResourceConfig) is for or associated with the PCI indicated/configured therein. If the UE is configured with the inter-cell beam measurement and reporting operation enabled, and if the configured CSI resource setting/configuration (and therefore, the corresponding higher layer parameter CSI-ResourceConfig) does not indicate/include any PCI value(s) or the PCI is absent in the configured CSI resource setting (and therefore, the corresponding higher layer parameter CSI-ResourceConfig), the UE could expect that a RS resource configured/indicated in the CSI resource setting/configuration (and therefore, in the corresponding higher layer parameter CSI-ResourceConfig) is for or associated with the serving cell PCI.

In another example (e.g., example v.2), a CSI resource setting/configuration, and therefore, the corresponding higher layer parameter CSI-ResourceConfig, could include/indicate a one-bit indicator/flag indicating either the serving cell PCI or a non-serving cell PCI. For instance, a RS resource configured/indicated in the CSI resource setting/configuration (and therefore, in the corresponding higher layer parameter CSI-ResourceConfig) with the one-bit indicator/flag set to "1"/"ON"/"enabled" could be for or associated with the serving cell PCI (or the non-serving cell PCI), and a RS resource configured/indicated in the CSI resource setting/configuration (and therefore, in the corresponding higher layer parameter CSI-ResourceConfig) with the one-bit indicator/flag set to "0"/"OFF"/"disabled" could be for or associated with the non-serving cell PCI (or the serving cell PCI). If the UE is configured with the inter-cell beam measurement and reporting operation enabled, and if the configured CSI resource setting/configuration (and therefore, the corresponding higher layer parameter CSI-ResourceConfig) does not indicate/include the one-bit flag/indicator or the one-bit flag/indication is absent in the configured CSI resource setting/configuration (and therefore, the corresponding higher layer parameter CSI-ResourceConfig), the UE could expect that a RS resource configured/indicated in the CSI resource setting/configuration (and therefore, in the corresponding higher layer parameter CSI-ResourceConfig) is for or associated with the serving cell PCI.

In yet another example (e.g., example v.3), a CSI resource setting/configuration, and therefore, the corresponding higher layer parameter CSI-ResourceConfig, could include/indicate a multi-bit indicator with each state of the multi-bit indicator corresponding to a PCI (e.g., either a serving cell PCI or a non-serving cell PCI). A RS resource configured/indicated in the CSI resource setting/configuration (and therefore, in the corresponding higher layer parameter CSI-ResourceConfig) is for or associated with the PCI associated with/corresponding to the multi-bit indicator indicated/configured therein. If the UE is configured with the inter-cell beam measurement and reporting operation enabled, and if the configured CSI resource setting/configuration (and therefore, the corresponding higher layer parameter CSI-ResourceConfig) does not indicate/include the multi-bit indicator or the multi-bit indicator is absent in the configured CSI resource setting/configuration (and therefore, the corresponding higher layer parameter CSI-ResourceConfig), the UE could expect that a RS resource configured/indicated in the CSI resource setting/configuration (and therefore, in the corresponding higher layer parameter CSI-ResourceConfig) is for or associated with the serving cell PCI.

In yet another example (e.g., example v.4), a CSI resource setting/configuration, and therefore, the corresponding higher layer parameter CSI-ResourceConfig, could include/indicate an index to an entry in a set/list/pool of PCIs (e.g., including both the serving cell PCI and non-serving cell PCIs higher layer configured to the UE). A RS resource configured/indicated in the CSI resource setting/configuration (and therefore, in the corresponding higher layer parameter CSI-ResourceConfig) is for or associated with the indicated entry (and therefore, the corresponding PCI) in the set/list/pool of PCIs. If the UE is configured with the inter-cell beam measurement and reporting operation enabled, and if the configured CSI resource setting/configuration (and therefore, the corresponding higher layer parameter CSI-ResourceConfig) does not indicate/include any index to an entry in the set/list/pool of PCIs or the index to an entry in the set/list/pool of PCIs is absent in the configured CSI resource setting/configuration (and therefore, the corresponding higher layer parameter CSI-ResourceConfig), the UE could expect that a RS resource configured/indicated in the CSI resource setting/configuration (and therefore, in the corresponding higher layer parameter CSI-ResourceConfig) is for or associated with the serving cell PCI.

In yet another example (e.g., example v.5), a CSI resource setting/configuration, and therefore, the corresponding higher layer parameter CSI-ResourceConfig, could include/indicate an index/ID of another higher layer RRC parameter, wherein one or more PCIs or PCI information could be indicated/included. A RS resource configured/indicated in the CSI resource setting/configuration (and therefore, in the higher layer parameter CSI-ResourceConfig) is for or associated with the indicated RRC parameter (and therefore, the corresponding PCI(s) or PCI information indicated/included therein). If the UE is configured with the inter-cell beam measurement and reporting operation enabled, and if the configured CSI resource setting/configuration (and therefore, the corresponding higher layer parameter CSI-ResourceConfig) does not indicate/include any index/ID of any other RRC parameters indicating/including one or more PCIs or PCI information or the index/ID of of another RRC parameter indicating/including one or more PCIs or PCI information is absent in the configured CSI resource setting/configuration (and therefore, the corresponding higher layer parameter CSI-ResourceConfig), the UE could expect that a RS resource configured/indicated in the CSI resource setting/configuration (and therefore, in the corresponding higher layer parameter CSI-ResourceConfig) is for or associated with the serving cell PCI.

In yet another example (e.g., example v.6), a CSI resource setting/configuration, and therefore, the corresponding higher layer parameter CSI-ResourceConfig, could include/indicate an entity ID. In the present disclosure, an entity ID could correspond to a PCI value, a CORESETPoolIndex value, a TRP-specific index/ID value, a TRP-specific higher layer signaling index/ID value or a TRP-specific RS set index/ID value. A RS resource configured/indicated in the CSI resource setting/configuration (and therefore, in the corresponding higher layer parameter CSI-ResourceConfig) is for or associated with the indicated entity ID (and therefore, the corresponding PCI value, CORESETPoolIndex value, TRP-specific index/ID value, TRP-specific higher layer signaling index/ID value or TRP-specific RS set index/ID value). If the UE is configured with the inter-cell beam measurement and reporting operation enabled, and if the configured CSI resource setting/configuration (and therefore, the corresponding higher layer parameter CSI-ResourceConfig) does not indicate/include any entity ID or the entity ID is absent in the configured CSI resource setting/configuration (and therefore, the corresponding higher layer parameter CSI-ResourceConfig), the UE could expect that a RS resource configured/indicated in the CSI resource setting/configuration (and therefore, in the corresponding higher layer parameter CSI-ResourceConfig) is for or associated with the serving cell PCI.

In yet another example (e.g., example v.7), S>1 CSI-RS resource sets could be included/indicated/configured in a CSI resource setting/configuration (e.g., in the corresponding higher layer parameter CSI-ResourceConfig) for Rel. 17 inter-cell beam measurement and reporting, wherein a CSI-RS resource set could correspond to a SSB resource set provided by the higher layer parameter CSI-SSB-ResourceSet or a NZP CSI-RS resource set provided by the higher layer parameter nzp-CSI-RS-ResourceSet. Furthermore, one or more entity IDs could be included/indicated/configured in a CSI resource setting/configuration (e.g., in the corresponding higher layer parameter CSI-ResourceConfig), each corresponding to/associated with one or more CSI-RS resource sets configured/indicated/included in the same CSI resource setting/configuration.

In the present disclosure, an entity ID could correspond to a PCI value (corresponding to either a serving cell PCI or a non-serving cell PCI), an index to an entry in a list of PCIs configured to the UE, a CORESETPoolIndex value, a TRP-specific index/ID value, a TRP-specific higher layer signaling index/ID value, a TRP-specific RS set index/ID value, a one-bit flag/indicator indicating either the serving cell PCI or a non-serving cell PCI or a multi-bit indicator with each state of the multi-bit indicator corresponding to a different PCI.

For example, a set of S>1 PCI values could be included/indicated/configured in a CSI-RS resource setting/configuration (e.g., in the higher layer parameter CSI-ResourceConfig) including/indicating/configuring S>1 CSI resource sets (corresponding to, e.g., S>1 SSB resource sets provided by CSI-SSB-ResourceSet or S>1 NZP CSI-RS resource sets provided by nzp-CSI-RS-ResourceSet). Each of the S>1 PCIs could correspond to a different CSI-RS resource set (either a SSB resource set provided by CSI-SSB-ResourceSet or a NZP CSI-RS resource set provided by nzp-CSI-RS-ResourceSet), and therefore, the SSB resources/SSB indexes or NZP CSI-RS resources/NZP CSI-RS resource indexes configured therein.

For instance, the k-th PCI or the k-th lowest (or the k-th highest) PCI value in the set of S>1 PCIs could correspond to the k-th CSI-RS resource set or the CSI-RS resource set with the k-th lowest (or the k-th highest) resource set ID among the S>1 CSI-RS resource sets, where k = 1, 2, ...,S. For another example, a set of S>1 indexes each corresponding/pointing to an entry/PCI in a first set/list/pool of PCIs could be included/indicated/configured in a CSI resource setting/configuration (e.g., in the higher layer parameter CSI-ResourceConfig) including/indicating/configuring S>1 CSI-RS resource sets (corresponding to, e.g., S>1 SSB resource sets provided by CSI-SSB-ResourceSet or S>1 NZP CSI-RS resource sets provided by nzp-CSI-RS-ResourceSet).

Each of the S>1 indexes, and therefore the corresponding entry/PCI in the first set/list/pool of PCIs, could correspond to a different CSI-RS resource set (either a SSB resource set provided by CSI-SSB-ResourceSet or a NZP CSI-RS resource set provided by nzp-CSI-RS-ResourceSet), and therefore, the SSB resources/SSB indexes or NZP CSI-RS resources/NZP CSI-RS resource indexes configured therein. For instance, the k-th index in the set of S>1 indexes, and therefore the corresponding entry/PCI in the first set/list/pool of PCIs could correspond to the k-th CSI-RS resource set or the CSI-RS resource set with the k-th lowest (or the k-th highest) resource set ID among the S>1 CSI-RS resource sets, where k = 1, 2, ...,S. Furthermore, the first list/set/pool of PCIs could be determined/configured according to:

For example, the UE could be higher layer configured by the network (e.g., via higher layer RRC signaling) the first list/set/pool of PCIs (e.g., including both the serving cell PCI and non-serving cell PCIs).

For another example, the UE could be first higher layer configured by the network (e.g., via higher layer RRC signaling) a second list/set/pool of PCIs (e.g., including both the serving cell PCI and non-serving cell PCIs) and the UE could then receive from the network a MAC CE activation command/bitmap to activate/indicate one or more entries from the higher layer RRC configured second list/set/pool of PCIs as the first list/set/pool of PCIs.

For another example, a RS resource configured in a CSI-RS resource set in a CSI resource setting/configuration corresponding to either a SSB resource set or a NZP CSI-RS resource set provided by either the higher layer parameter CSI-SSB-ResourceSet or the higher layer parameter nzp-CSI-RS-ResourceSet is for or associated with a PCI (e.g., corresponding to a non-serving cell PCI) if the PCI information/value is indicated/included in the corresponding CSI-RS resource set. That is, if/when the UE is configured with/provided by the network the higher layer parameter interCellBasedBeamReporting or NumberofAdditionalPCI or AdditionalPCIInfo or etc., the UE is configured with a CSI-RS resource set, e.g., a SSB resource set or a NZP CSI-RS resource set provided by the higher layer parameter CSI-SSB-ResourceSet or nzp-CSI-RS-ResourceSet for L1-RSRP reporting, including one or more SSB resources or NZP CSI-RS resource configurations associated with one or more PCIs or indices in a list/set/pool of PCIs, respectively.

In one example (e.g., example v.8), a CSI-RS resource set, and therefore the corresponding higher layer parameter CSI-SSB-ResourceSet or nzp-CSI-RS-ResourceSet, could include/indicate a PCI value, e.g., corresponding to either a serving cell PCI or a non-serving cell PCI. A RS resource configured/indicated in the CSI-RS resource set (and therefore, in the corresponding higher layer parameter CSI-SSB-ResourceSet or nzp-CSI-RS-ResourceSet) is for or associated with the PCI indicated/configured therein. If the UE is configured with the inter-cell beam measurement and reporting operation enabled, and if the configured CSI-RS resource set (and therefore, the corresponding higher layer parameter CSI-SSB-ResourceSet or nzp-CSI-RS-ResourceSet) does not indicate/include any PCI value(s) or the PCI is absent in the CSI-RS resource set (and therefore, in the corresponding higher layer parameter CSI-SSB-ResourceSet or nzp-CSI-RS-ResourceSet), the UE could expect that a RS resource configured/indicated in the CSI-RS resource set (and therefore, in the corresponding higher layer parameter CSI-SSB-ResourceSet or nzp-CSI-RS-ResourceSet) is for or associated with the serving cell PCI.

In another example (e.g., example v.9), a CSI-RS resource set, and therefore, the corresponding higher layer parameter CSI-SSB-ResourceSet or nzp-CSI-RS-ResourceSet, could include/indicate a one-bit indicator/flag indicating either the serving cell PCI or a non-serving cell PCI. For instance, a RS resource configured/indicated in the CSI-RS resource set (and therefore, in the corresponding higher layer parameter CSI-SSB-ResourceSet or nzp-CSI-RS-ResourceSet) with the one-bit indicator/flag set to "1"/"ON"/"enabled" could be for or associated with the serving cell PCI (or the non-serving cell PCI), and a RS resource configured/indicated in the CSI-RS resource set (and therefore, in the corresponding higher layer parameter CSI-SSB-ResourceSet or nzp-CSI-RS-ResourceSet) with the one-bit indicator/flag set to "0"/"OFF"/"disabled" could be for or associated with the non-serving cell PCI (or the serving cell PCI).

If the UE is configured with the inter-cell beam measurement and reporting operation enabled, and if the configured CSI-RS resource set (and therefore, the corresponding higher layer parameter CSI-SSB-ResourceSet or nzp-CSI-RS-ResourceSet) does not indicate/include the one-bit flag/indicator or the one-bit flag/indication is absent in the CSI-RS resource set (and therefore, in the corresponding higher layer parameter CSI-SSB-ResourceSet or nzp-CSI-RS-ResourceSet), the UE could expect that a RS resource configured/indicated in the CSI-RS resource set (and therefore, in the corresponding higher layer parameter CSI-SSB-ResourceSet or nzp-CSI-RS-ResourceSet) is for or associated with the serving cell PCI.

In yet another example (e.g., example v.10), a CSI-RS resource set, and therefore, the corresponding higher layer parameter CSI-SSB-ResourceSet or nzp-CSI-RS-ResourceSet, could include/indicate a multi-bit indicator with each state of the multi-bit indicator corresponding to a PCI (e.g., either a serving cell PCI or a non-serving cell PCI). A RS resource configured/indicated in the CSI-RS resource set (and therefore, in the corresponding higher layer parameter CSI-SSB-ResourceSet or nzp-CSI-RS-ResourceSet) is for or associated with the PCI associated with/corresponding to the multi-bit indicator indicated/configured therein. If the UE is configured with the inter-cell beam measurement and reporting operation enabled, and if the configured CSI-RS resource set (and therefore, the corresponding higher layer parameter CSI-SSB-ResourceSet or nzp-CSI-RS-ResourceSet) does not indicate/include the multi-bit indicator or the multi-bit indicator is absent in the CSI-RS resource set (and therefore, in the corresponding higher layer parameter CSI-SSB-ResourceSet or nzp-CSI-RS-ResourceSet), the UE could expect that a RS resource configured/indicated in the CSI-RS resource set (and therefore, in the corresponding higher layer parameter CSI-SSB-ResourceSet or nzp-CSI-RS-ResourceSet) is for or associated with the serving cell PCI.

In yet another example (e.g., example v.11), a CSI-RS resource set, and therefore, the corresponding higher layer parameter CSI-SSB-ResourceSet or nzp-CSI-RS-ResourceSet, could include/indicate an index to an entry in a set/list/pool of PCIs (e.g., including both the serving cell PCI and non-serving cell PCIs higher layer configured to the UE). A RS resource configured/indicated in the CSI-RS resource set (and therefore, the corresponding higher layer parameter CSI-SSB-ResourceSet or nzp-CSI-RS-ResourceSet) is for or associated with the indicated entry (and therefore, the corresponding PCI) in the set/list/pool of PCIs. If the UE is configured with the inter-cell beam measurement and reporting operation enabled, and if the configured CSI-RS resource set (and therefore, the corresponding higher layer parameter CSI-SSB-ResourceSet or nzp-CSI-RS-ResourceSet) does not indicate/include any index to an entry in the set/list/pool of PCIs or the index to an entry in the set/list/pool of PCIs is absent in the CSI-RS resource set (and therefore, in the corresponding higher layer parameter CSI-SSB-ResourceSet or nzp-CSI-RS-ResourceSet), the UE could expect that a RS resource configured/indicated in the CSI-RS resource set (and therefore, in the corresponding higher layer parameter CSI-SSB-ResourceSet or nzp-CSI-RS-ResourceSet) is for or associated with the serving cell PCI.

In yet another example (e.g., example v.12), a CSI-RS resource set, and therefore, the corresponding higher layer parameter CSI-SSB-ResourceSet or nzp-CSI-RS-ResourceSet, could include/indicate an index/ID of another higher layer RRC parameter, wherein one or more PCIs or PCI information could be indicated/included. A RS resource configured/indicated in the CSI-RS resource set (and therefore, in the corresponding higher layer parameter CSI-SSB-ResourceSet or nzp-CSI-RS-ResourceSet) is for or associated with the indicated RRC parameter (and therefore, the corresponding PCI(s) or PCI information indicated/included therein). If the UE is configured with the inter-cell beam measurement and reporting operation enabled, and if the configured CSI-RS resource set (and therefore, the corresponding higher layer parameter CSI-SSB-ResourceSet or nzp-CSI-RS-ResourceSet) does not indicate/include any index/ID of any other RRC parameters indicating/including one or more PCIs or PCI information or the index/ID of another higher layer RRC parameter indicating/including one or more PCIs or PCI information is absent in the CSI-RS resource set (and therefore, in the corresponding higher layer parameter CSI-SSB-ResourceSet or nzp-CSI-RS-ResourceSet), the UE could expect that a RS resource configured/indicated in the CSI-RS resource set (and therefore, in the corresponding higher layer parameter CSI-SSB-ResourceSet or nzp-CSI-RS-ResourceSet) is for or associated with the serving cell PCI.

In yet another example (e.g., example v.13), a CSI-RS resource set, and therefore, the corresponding higher layer parameter CSI-SSB-ResourceSet or nzp-CSI-RS-ResourceSet, could include/indicate an entity ID. In the present disclosure, an entity ID could correspond to a PCI value, a CORESETPoolIndex value, a TRP-specific index/ID value, a TRP-specific higher layer signaling index/ID value or a TRP-specific RS set index/ID value. A RS resource configured/indicated in the CSI-RS resource set (and therefore, in the corresponding higher layer parameter CSI-SSB-ResourceSet or nzp-CSI-RS-ResourceSet) is for or associated with the indicated entity ID (and therefore, the corresponding PCI value, CORESETPoolIndex value, TRP-specific index/ID value, TRP-specific higher layer signaling index/ID value or TRP-specific RS set index/ID value). If the UE is configured with the inter-cell beam measurement and reporting operation enabled, and if the configured CSI-RS resource set (and therefore, the corresponding higher layer parameter CSI-SSB-ResourceSet or nzp-CSI-RS-ResourceSet) does not indicate/include any entity ID or the entity ID is absent in the CSI-RS resource set (and therefore, in the corresponding higher layer parameter CSI-SSB-ResourceSet or nzp-CSI-RS-ResourceSet), the UE could expect that a RS resource configured/indicated in the CSI-RS resource set (and therefore, in the corresponding higher layer parameter CSI-SSB-ResourceSet or nzp-CSI-RS-ResourceSet) is for or associated with the serving cell PCI.

In yet another example (e.g., example v.14), a set of at least one (e.g., M>1) entity IDs could be included/indicated/configured in a CSI-RS resource set including/indicating/configuring a set of at least one (e.g., M>1) channel measurement resources (CMRs) such as SSB resources/SSB indexes or NZP CSI-RS resources/NZP CSI-RS resource configuration indexes; the CSI-RS resource set could correspond to a SSB resource set provided by the higher layer parameter CSI-SSB-ResourceSet or a NZP CSI-RS resource set provided by the higher layer parameter nzp-CSI-RS-ResourceSet.

In the present disclosure, an entity ID could correspond to a PCI value (corresponding to either a serving cell PCI or a non-serving cell PCI), an index to an entry in a list of PCIs configured to the UE, a CORESETPoolIndex value, a TRP-specific index/ID value, a TRP-specific higher layer signaling index/ID value, a TRP-specific RS set index/ID value, a one-bit flag/indicator indicating either the serving cell PCI or a non-serving cell PCI or a multi-bit indicator with each state of the multi-bit indicator corresponding to a different PCI. Each entity ID in the set of M entity IDs included/indicated/configured in a CSI-RS resource set (corresponding to either a SSB resource set provided by CSI-SSB-ResourceSet or a NZP CSI-RS resource set provided by nzp-CSI-RS-ResourceSet) could correspond to one or more CMRs such as SSB resources/SSB indexes or NZP CSI-RS resources/NZP CSI-RS resource indexes configured/indicated/included in the same CSI-RS resource set. For example, a set of M>1 PCI values could be included/indicated/configured in a CSI-RS resource set (e.g., a SSB resource set provided by the higher layer parameter SSB-CSI-RS-ResourceSet or a NZP CSI-RS resource set provided by the higher layer parameter nzp-CSI-RS-ResourceSet) including/indicating/configuring a set of M CMRs such as SSB resources/SSB indexes or NZP CSI-RS resources/NZP CSI-RS resource indexes.

Each of the M>1 indicated PCIs could correspond to a different CMR such as SSB resource/SSB index or NZP CSI-RS resource/NZP CSI-RS resource index included/indicated/configured in the same CSI-RS resource set. For instance, in a CSI-RS resource set such as a SSB resource set provided by CSI-SSB-ResourceSet or a NZP CSI-RS resource set provided by nzp-CSI-RS-ResourceSet, the m-th PCI or the m-th lowest (or the m-th highest) PCI value in the set of M>1 PCIs could correspond to the m-th CMR such as SSB resource/SSB index or NZP CSI-RS resource/NZP CSI-RS resource index in the set of M>1 CMRs, where m = 1, 2,..., M. For another example, a set of M>1 indexes each pointing to an entry in a first list/set/pool of PCIs could be included/indicated/configured in a CSI-RS resource set (e.g., a SSB resource set provided by the higher layer parameter SSB-CSI-RS-ResourceSet or a NZP CSI-RS resource set provided by the higher layer parameter nzp-CSI-RS-ResourceSet) including/indicating/configuring a set of M CMRs such as SSB resources/SSB indexes or NZP CSI-RS resources/NZP CSI-RS resource indexes.

Each of the M>1 indicated indexes, and therefore, the corresponding entry/PCI in the first list/set/pool of PCIs could correspond to a different CMR such as SSB resource/SSB index or NZP CSI-RS resource/NZP CSI-RS resource index included/indicated/configured in the same CSI-RS resource set. For instance, in a CSI-RS resource set such as a SSB resource set provided by CSI-SSB-ResourceSet or a NZP CSI-RS resource set provided by nzp-CSI-RS-ResourceSet, the m-th index in the set of M>1 indexes, and therefore, the corresponding entry/PCI in the first list/set/pool of PCIs, could correspond to the m-th CMR such as SSB resource/SSB index or NZP CSI-RS resource/NZP CSI-RS resource index in the set of M>1 CMRs, where m = 1, 2,..., M. Furthermore, the first list/set/pool of PCIs could be determined/configured according to:

For example, the UE could be higher layer configured by the network (e.g., via higher layer RRC signaling) the first list/set/pool of PCIs (e.g., including both the serving cell PCI and non-serving cell PCIs).

For another example, the UE could be first higher layer configured by the network (e.g., via higher layer RRC signaling) a second list/set/pool of PCIs (e.g., including both the serving cell PCI and non-serving cell PCIs) and the UE could then receive from the network a MAC CE activation command/bitmap to activate/indicate one or more entries from the higher layer RRC configured second list/set/pool of PCIs as the first list/set/pool of PCIs.

In yet another example (e.g., example v.15), a set of at least one (e.g., M1>1) entity IDs could be included/indicated/configured in a CSI-RS resource set including/indicating/configuring a set of at least one (e.g., M>1) channel measurement resources (CMRs) such as SSB resources/SSB indexes or NZP CSI-RS resources/NZP CSI-RS resource configuration indexes; the CSI-RS resource set could correspond to a SSB resource set provided by the higher layer parameter CSI-SSB-ResourceSet or a NZP CSI-RS resource set provided by the higher layer parameter nzp-CSI-RS-ResourceSet.

In the present disclosure, an entity ID could correspond to a PCI value (corresponding to either a serving cell PCI or a non-serving cell PCI), an index to an entry in a list of PCIs configured to the UE, a CORESETPoolIndex value, a TRP-specific index/ID value, a TRP-specific higher layer signaling index/ID value, a TRP-specific RS set index/ID value, a one-bit flag/indicator indicating either the serving cell PCI or a non-serving cell PCI or a multi-bit indicator with each state of the multi-bit indicator corresponding to a different PCI. Each entity ID in the set of M1 entity IDs included/indicated/configured in a CSI-RS resource set (corresponding to either a SSB resource set provided by CSI-SSB-ResourceSet or a NZP CSI-RS resource set provided by nzp-CSI-RS-ResourceSet) could correspond to one or more CMRs such as SSB resources/SSB indexes or NZP CSI-RS resources/NZP CSI-RS resource indexes configured/indicated/included in the same CSI-RS resource set. For example, a set of M1>1 PCI values could be included/indicated/configured in a CSI-RS resource set (e.g., a SSB resource set provided by the higher layer parameter SSB-CSI-RS-ResourceSet or a NZP CSI-RS resource set provided by the higher layer parameter nzp-CSI-RS-ResourceSet) including/indicating/configuring a first set of M CMRs such as SSB resources/SSB indexes or NZP CSI-RS resources/NZP CSI-RS resource indexes.

Each of the M1>1 indicated PCIs could be associated with/linked to a second set of CMRs such as SSB resources/SSB indexes or NZP CSI-RS resources/NZP CSI-RS resource indexes out of the first set of M CMRs included/indicated/configured in the same CSI-RS resource set. For instance, the UE could be provided by the network in a CSI-RS resource set such as a SSB resource set provided by CSI-SSB-ResourceSet or a NZP CSI-RS resource set provided by nzp-CSI-RS-ResourceSet, one or more (e.g., M1) PCI-CMR association parameters each indicating a PCI value and a second set of CMRs such as SSB resources/SSB indexes or NZP CSI-RS resources/NZP CSI-RS resource indexes out of the first set of M CMRs included/configured/indicated in the same CSI-RS resource set. The second set of CMRs and the PCI value indicated in the same PCI-CMR association parameter are associated, i.e., the second set of CMRs are configured for the PCI if they are indicated in the same PCI-CMR association parameter.

For another example, a set of M1>1 indexes pointing to M1>1 entries in a first list/set/pool of PCIs could be included/indicated/configured in a CSI-RS resource set (e.g., a SSB resource set provided by the higher layer parameter SSB-CSI-RS-ResourceSet or a NZP CSI-RS resource set provided by the higher layer parameter nzp-CSI-RS-ResourceSet) including/indicating/configuring a set of M CMRs such as SSB resources/SSB indexes or NZP CSI-RS resources/NZP CSI-RS resource indexes.

Each of the M1>1 indicated indexes, and therefore, the corresponding entry/PCI in the first list/set/pool of PCIs could be associated with/linked to a second set of CMRs such as SSB resources/SSB indexes or NZP CSI-RS resources/NZP CSI-RS resource indexes out of the first set of M CMRs included/indicated/configured in the same CSI-RS resource set. For instance, the UE could be provided by the network in a CSI-RS resource set such as a SSB resource set provided by CSI-SSB-ResourceSet or a NZP CSI-RS resource set provided by nzp-CSI-RS-ResourceSet, one or more (e.g., M1) PCIidx-CMR association parameters each indicating an index pointing to an entry/PCI in the first set/list/pool of PCIs and a second set of CMRs such as SSB resources/SSB indexes or NZP CSI-RS resources/NZP CSI-RS resource indexes out of the first set of M CMRs included/configured/indicated in the same CSI-RS resource set.

The second set of CMRs and the index, and therefore the corresponding entry/PCI in the first set/pool/list of PCIs indicated in the same PCIidx-CMR association parameter are associated, i.e., the second set of CMRs are configured for the index, and therefore the corresponding entry/PCI in the first set/pool/list of PCIs if they are indicated in the same PCIidx-CMR parameter.

Furthermore, the first list/set/pool of PCIs could be determined/configured according to: (1) for example, the UE could be higher layer configured by the network (e.g., via higher layer RRC signaling) the first list/set/pool of PCIs (e.g., including both the serving cell PCI and non-serving cell PCIs); and/or (2) for another example, the UE could be first higher layer configured by the network (e.g., via higher layer RRC signaling) a second list/set/pool of PCIs (e.g., including both the serving cell PCI and non-serving cell PCIs) and the UE could then receive from the network a MAC CE activation command/bitmap to activate/indicate one or more entries from the higher layer RRC configured second list/set/pool of PCIs as the first list/set/pool of PCIs.

In yet another example (e.g., example v.16), a set of at least one (e.g., M1>1) entity IDs could be included/indicated/configured in a CSI-RS resource set including/indicating/configuring a set of at least one (e.g., M>1) channel measurement resources (CMRs) such as SSB resources/SSB indexes or NZP CSI-RS resources/NZP CSI-RS resource configuration indexes; the CSI-RS resource set could correspond to a SSB resource set provided by the higher layer parameter CSI-SSB-ResourceSet or a NZP CSI-RS resource set provided by the higher layer parameter nzp-CSI-RS-ResourceSet.

In the present disclosure, an entity ID could correspond to a PCI value (corresponding to either a serving cell PCI or a non-serving cell PCI), an index to an entry in a list of PCIs configured to the UE, a CORESETPoolIndex value, a TRP-specific index/ID value, a TRP-specific higher layer signaling index/ID value, a TRP-specific RS set index/ID value, a one-bit flag/indicator indicating either the serving cell PCI or a non-serving cell PCI or a multi-bit indicator with each state of the multi-bit indicator corresponding to a different PCI. Each entity ID in the set of M1 entity IDs included/indicated/configured in a CSI-RS resource set (corresponding to either a SSB resource set provided by CSI-SSB-ResourceSet or a NZP CSI-RS resource set provided by nzp-CSI-RS-ResourceSet) could correspond to one or more CMRs such as SSB resources/SSB indexes or NZP CSI-RS resources/NZP CSI-RS resource indexes configured/indicated/included in the same CSI-RS resource set.

The set of M CMRs could be partitioned/divided into M1 groups of CMRs each including/indicating/configuring one or more CMRs. Here, a group of CMRs could be referred to as a CMR group corresponding to a SSB resource group or a NZP CSI-RS resource group. For instance, the r-th CMR group (e.g., the r-th SSB resource group or the r-th NZP CSI-RS resource group) among the M1 CMR groups (r = 1, ..., M1) could comprise/include *kᵣ* CMRs such as SSB resources/SSB resource indexes or NZP CSI-RS resources/NZP CSI-RS resource indexes out of the total M CMRs; hence, $M = {\sum }_{r = 1}^{M 1} {k}_{r}$. In this case, each entity ID in the set of M1 entity IDs included/indicated/configured in a CSI-RS resource set (corresponding to either a SSB resource set provided by CSI-SSB-ResourceSet or a NZP CSI-RS resource set provided by nzp-CSI-RS-ResourceSet) could correspond to one or more CMR groups such as SSB resource groups or NZP CSI-RS resource groups included/indicated/configured in the same CSI-RS resource set.

For example, a set of M1>1 PCI values could be included/indicated/configured in a CSI-RS resource set (e.g., a SSB resource set provided by the higher layer parameter SSB-CSI-RS-ResourceSet or a NZP CSI-RS resource set provided by the higher layer parameter nzp-CSI-RS-ResourceSet) including/indicating/configuring a set of M CMRs such as SSB resources/SSB indexes or NZP CSI-RS resources/NZP CSI-RS resource indexes, which are further divided/partitioned into M1 CMR groups (such as M1 SSB resource groups or M1 NZP CSI-RS resource groups) as discussed above.

Each of the M1>1 indicated PCIs could correspond to a different CMR group such as SSB resource group including/indicating/configuring one or more SSB resources/SSB indexes or NZP CSI-RS resource group including/indicating/configuring one or more NZP CSI-RS resources/NZP CSI-RS resource indexes included/indicated/configured in the same CSI-RS resource set. For instance, in a CSI-RS resource set such as a SSB resource set provided by CSI-SSB-ResourceSet or a NZP CSI-RS resource set provided by nzp-CSI-RS-ResourceSet, the r-th PCI or the r-th lowest (or the r-th highest) PCI value in the set of M1>1 PCIs could correspond to the r-th CMR group such as SSB resource group including/indicating/configuring one or more SSB resources/SSB indexes or NZP CSI-RS resource group including/indicating/configuring one or more NZP CSI-RS resources/NZP CSI-RS resource indexes among the M1 CMR groups partitioned/divided from the set of M>1 CMRs; that is, the r-th CMR group, and therefore the corresponding SSB resources/SSB indexes or NZP CSI-RS resources/NZP CSI-RS resource indexes configured therein, is configured for the r-th PCI, where r = 1, 2,..., M1.

Optionally, the serving cell PCI could correspond to the s-th CMR group such as SSB resource group including/indicating/configuring one or more SSB resources/SSB indexes or NZP CSI-RS resource group including/indicating/configuring one or more NZP CSI-RS resources/NZP CSI-RS resource indexes among the M1 CMR groups partitioned/divided from the set of M>1 CMRs; that is, the s-th CMR group, and therefore the corresponding SSB resources/SSB indexes or NZP CSI-RS resources/NZP CSI-RS resource indexes configured therein, is configured for the serving cell PCI, where s could be determined according to: (1) fixed in the system specifications or deterministic per RRC configuration, e.g., 1 (i.e., the 1^{st} CMR group), (2) configured/indicated by the network, or (3) autonomously determined by the UE.

For another example, a set of M1>1 indexes pointing to M1>1 entries in a first list/set/pool of PCIs could be included/indicated/configured in a CSI-RS resource set (e.g., a SSB resource set provided by the higher layer parameter SSB-CSI-RS-ResourceSet or a NZP CSI-RS resource set provided by the higher layer parameter nzp-CSI-RS-ResourceSet) including/indicating/configuring a set of M CMRs such as SSB resources/SSB indexes or NZP CSI-RS resources/NZP CSI-RS resource indexes, which are further partitioned/divided into M1 CMR groups (such as M1 SSB resource groups or M1 NZP CSI-RS resource groups) as discussed above.

Each of the M1>1 indicated indexes, and therefore, the corresponding entry/PCI in the first list/set/pool of PCIs could correspond to a different CMR group such as SSB resource group including/indicating/configuring one or more SSB resources/SSB indexes or NZP CSI-RS resource group including/indicating/configuring one or more NZP CSI-RS resources/NZP CSI-RS resource indexes. For instance, in a CSI-RS resource set such as a SSB resource set provided by CSI-SSB-ResourceSet or a NZP CSI-RS resource set provided by nzp-CSI-RS-ResourceSet, the r-th index in the set of M1>1 indexes, and therefore, the corresponding entry/PCI in the first list/set/pool of PCIs, could correspond to the r-th CMR group such as SSB resource group including/indicating/configuring one or more SSB resources/SSB indexes or NZP CSI-RS resource group including/indicating/configuring one or more NZP CSI-RS resources/NZP CSI-RS resource indexes among the M1 CMR groups partitioned/divided from the set of M>1 CMRs; that is, the r-th CMR group, and therefore the corresponding SSB resources/SSB indexes or NZP CSI-RS resources/NZP CSI-RS resource indexes configured therein, is configured for the r-th index, and therefore the corresponding entry/PCI in the first set/list/pool of PCIs, where r = 1, 2,..., M1.

Optionally, the index corresponding to the serving cell PCI in the first set/list/pool of PCIs could correspond to the s-th CMR group such as SSB resource group including/indicating/configuring one or more SSB resources/SSB indexes or NZP CSI-RS resource group including/indicating/configuring one or more NZP CSI-RS resources/NZP CSI-RS resource indexes among the M1 CMR groups partitioned/divided from the set of M>1 CMRs; that is, the s-th CMR group, and therefore the corresponding SSB resources/SSB indexes or NZP CSI-RS resources/NZP CSI-RS resource indexes configured therein, is configured for the index pointing to the serving cell PCI in the first set/list/pool of PCIs, and therefore the serving cell PCI, where s could be determined according to: (1) fixed in the system specifications or deterministic per RRC configuration, e.g., 1 (i.e., the 1^{st} CMR group), (2) configured/indicated by the network, or (3) autonomously determined by the UE.

Furthermore, the first list/set/pool of PCIs could be determined/configured according to: (1) for example, the UE could be higher layer configured by the network (e.g., via higher layer RRC signaling) the first list/set/pool of PCIs (e.g., including both the serving cell PCI and non-serving cell PCIs); and/or (2) for another example, the UE could be first higher layer configured by the network (e.g., via higher layer RRC signaling) a second list/set/pool of PCIs (e.g., including both the serving cell PCI and non-serving cell PCIs) and the UE could then receive from the network a MAC CE activation command/bitmap to activate/indicate one or more entries from the higher layer RRC configured second list/set/pool of PCIs as the first list/set/pool of PCIs.

In yet another example (e.g., example v.17), a set of at least one (e.g., M1>1) entity IDs could be included/indicated/configured in a CSI-RS resource set including/indicating/configuring a set of at least one (e.g., M>1) channel measurement resources (CMRs) such as SSB resources/SSB indexes or NZP CSI-RS resources/NZP CSI-RS resource configuration indexes; the CSI-RS resource set could correspond to a SSB resource set provided by the higher layer parameter CSI-SSB-ResourceSet or a NZP CSI-RS resource set provided by the higher layer parameter nzp-CSI-RS-ResourceSet.

In the present disclosure, an entity ID could correspond to a PCI value (corresponding to either a serving cell PCI or a non-serving cell PCI), an index to an entry in a list of PCIs configured to the UE, a CORESETPoolIndex value, a TRP-specific index/ID value, a TRP-specific higher layer signaling index/ID value, a TRP-specific RS set index/ID value, a one-bit flag/indicator indicating either the serving cell PCI or a non-serving cell PCI or a multi-bit indicator with each state of the multi-bit indicator corresponding to a different PCI. Each entity ID in the set of M1 entity IDs included/indicated/configured in a CSI-RS resource set (corresponding to either a SSB resource set provided by CSI-SSB-ResourceSet or a NZP CSI-RS resource set provided by nzp-CSI-RS-ResourceSet) could correspond to one or more CMRs such as SSB resources/SSB indexes or NZP CSI-RS resources/NZP CSI-RS resource indexes configured/indicated/included in the same CSI-RS resource set. The UE could be provided by the network in a CSI-RS resource set such as a SSB resource set provided by CSI-SSB-ResourceSet or a NZP CSI-RS resource set provided by nzp-CSI-RS-ResourceSet, M1 groups of CMRs each including/indicating/configuring one or more CMRs obtained/configured from the set of M CMRs.

Here, a group of CMRs could be referred to as a CMR group corresponding to a SSB resource group provided by a higher layer parameter CSI-SSB-ResourceGroup or a NZP CSI-RS resource group provided by a higher layer parameter nzp-CSI-RS-ResourceGroup. For instance, the r-th configured CMR group among the M1 configured CMR groups (e.g., the r-th SSB resource group or the SSB resource group with the r-th lowest or the r-th highest SSB resource group ID among the M1 configured SSB resource groups or the r-th NZP CSI-RS resource group or the NZP CSI-RS resource group with the r-th lowest or the r-th highest NZP CSI-RS resource group ID among the M1 configured NZP CSI-RS resource groups) could comprise/include *kᵣ* CMRs such as SSB resources/SSB resource indexes or NZP CSI-RS resources/NZP CSI-RS resource indexes out of the total M CMRs; hence, $M = {\sum }_{r = 1}^{M 1} {k}_{r}$*.*

Each configured CMR group, e.g., each configured SSB resource group and therefore the corresponding higher layer parameter CSI-SSB-ResourceGroup or each configured NZP CSI-RS resource group and therefore the corresponding higher layer parameter nzp-CSI-RS-ResourceGroup, could include/indicate/configure an entity ID (e.g., one of M1 entity IDs). For example, each configured CMR group, e.g., each configured SSB resource group and therefore the corresponding higher layer parameter CSI-SSB-ResourceGroup or each configured NZP CSI-RS resource group and therefore the corresponding higher layer parameter nzp-CSI-RS-ResourceGroup, could include/indicate/configure a PCI value. The CMRs (SSB resources/SSB indexes or NZP CSI-RS resources/NZP CSI-RS resource indexes) in a CMR group (a SSB resource group provided by CSI-SSB-ResourceGroup or a NZP CSI-RS resource group provided by nzp-CSI-RS-ResourceGroup) are configured for the PCI indicated in the same CMR group (the same SSB resource group provided by the same CSI-SSB-ResourceGroup or the same NZP CSI-RS resource group provided by the same nzp-CSI-RS-ResourceGroup).

Optionally, the s-th configured CMR group among the M1 configured CMR groups (e.g., the s-th SSB resource group or the SSB resource group with the s-th lowest or the s-th highest SSB resource group ID among the M1 configured SSB resource groups or the s-th NZP CSI-RS resource group or the NZP CSI-RS resource group with the s-th lowest or the s-th highest NZP CSI-RS resource group ID among the M1 configured NZP CSI-RS resource groups) could include/indicate/configure the serving cell PCI; that is, the SSB resources/SSB indexes or NZP CSI-RS resources/NZP CSI-RS resource indexes in the s-th CMR group are configured for the serving cell PCI, where s could be determined according to: (1) fixed in the system specifications or deterministic per RRC configuration, e.g., 1 (i.e., the 1^{st} CMR group), (2) configured/indicated by the network, or (3) autonomously determined by the UE.

For another example, each configured CMR group, e.g., each configured SSB resource group and therefore the corresponding higher layer parameter CSI-SSB-ResourceGroup or each configured NZP CSI-RS resource group and therefore the corresponding higher layer parameter nzp-CSI-RS-ResourceGroup, could include/indicate/configure an index pointing to an entry/PCI in a first set/list/pool of PCIs. The CMRs (SSB resources/SSB indexes or NZP CSI-RS resources/NZP CSI-RS resource indexes) in a CMR group (a SSB resource group provided by CSI-SSB-ResourceGroup or a NZP CSI-RS resource group provided by nzp-CSI-RS-ResourceGroup) are configured for the index indicated in the same CMR group (the same SSB resource group provided by the same CSI-SSB-ResourceGroup or the same NZP CSI-RS resource group provided by the same nzp-CSI-RS-ResourceGroup), and therefore the corresponding entry/PCI in the first list/set/pool of PCIs.

Optionally, the s-th configured CMR group among the M1 configured CMR groups (e.g., the s-th SSB resource group or the SSB resource group with the s-th lowest or the s-th highest SSB resource group ID among the M1 configured SSB resource groups or the s-th NZP CSI-RS resource group or the NZP CSI-RS resource group with the s-th lowest or the s-th highest NZP CSI-RS resource group ID among the M1 configured NZP CSI-RS resource groups) could include/indicate/configure the index corresponding to the serving cell PCI in the first set/list/pool of PCIs; that is, the SSB resources/SSB indexes or NZP CSI-RS resources/NZP CSI-RS resource indexes in the s-th CMR group are configured for the index pointing to the serving cell PCI in the first set/list/pool of PCIs, and therefore the serving cell PCI, where s could be determined according to: (1) fixed in the system specifications or deterministic per RRC configuration, e.g., 1 (i.e., the 1^{st} CMR group), (2) configured/indicated by the network, or (3) autonomously determined by the UE.

Furthermore, the first list/set/pool of PCIs could be determined/configured according to: (1) for example, the UE could be higher layer configured by the network (e.g., via higher layer RRC signaling) the first list/set/pool of PCIs (e.g., including both the serving cell PCI and non-serving cell PCIs); and/or (2) for another example, the UE could be first higher layer configured by the network (e.g., via higher layer RRC signaling) a second list/set/pool of PCIs (e.g., including both the serving cell PCI and non-serving cell PCIs) and the UE could then receive from the network a MAC CE activation command/bitmap to activate/indicate one or more entries from the higher layer RRC configured second list/set/pool of PCIs as the first list/set/pool of PCIs.

Yet for another example, a NZP CSI-RS resource/NZP CSI-RS resource index provided by the higher layer parameter NZP-CS-RS-Resource is for or associated with a PCI (e.g., corresponding to a non-serving cell PCI) if the PCI information/value is indicated/included in the corresponding parameter configuring the NZP CSI-RS resource/NZP CSI-RS resource index, e.g., in the higher layer parameter NZP-CS-RS-Resource. That is, if/when the UE is configured with/provided by the network the higher layer parameter interCellBasedBeamReporting or NumberofAdditionalPCI or AdditionalPCIInfo or etc., the UE is configured with one or more NZP CSI-RS resources/NZP CSI-RS resource indexes (e.g., provided by the higher layer parameter NZP-CSI-RS-Resource for L1-RSRP reporting) each associated with a PCI or an index in a list/set/pool of PCIs.

In one example (e.g., example v.18), the parameter configuring a NZP CSI-RS resource/NZP CSI-RS resource index, e.g., the higher layer parameter NZP-CS-RS-Resource, could include/indicate a PCI value, e.g., corresponding to either a serving cell PCI or a non-serving cell PCI. The NZP CSI-RS resource/NZP CSI-RS resource index provided by the higher layer parameter NZP-CS-RS-Resource is for or associated with the PCI indicated/configured in the same NZP-CS-RS-Resource. If the UE is configured with the inter-cell beam measurement and reporting operation enabled, and if the higher layer parameter, e.g., NZP-CS-RS-Resource, configuring the NZP CSI-RS resource/NZP CSI-RS resource index does not indicate/include any PCI value(s) or the PCI is absent in the higher layer parameter, e.g., NZP-CS-RS-Resource, configuring the NZP CSI-RS resource/NZP CSI-RS resource index, the UE could expect that the NZP CSI-RS resource/NZP CSI-RS resource index provided by the higher layer parameter NZP-CS-RS-Resource is for or associated with the serving cell PCI.

In another example (e.g., example v.19), the parameter configuring a NZP CSI-RS resource/NZP CSI-RS resource index, e.g., the higher layer parameter NZP-CS-RS-Resource could include/indicate a one-bit indicator/flag indicating either the serving cell PCI or a non-serving cell PCI. For instance, the NZP CSI-RS resource/NZP CSI-RS resource index provided by the higher layer parameter NZP-CS-RS-Resource with the one-bit indicator/flag set to "1"/"ON"/"enabled" could be for or associated with the serving cell PCI (or the non-serving cell PCI), and the NZP CSI-RS resource/NZP CSI-RS resource index provided by the higher layer parameter NZP-CS-RS-Resource with the one-bit indicator/flag set to "0"/"OFF"/"disabled" could be for or associated with the non-serving cell PCI (or the serving cell PCI). If the UE is configured with the inter-cell beam measurement and reporting operation enabled, and if the higher layer parameter NZP-CS-RS-Resource configuring the NZP CSI-RS resource/NZP CSI-RS resource index does not indicate/include the one-bit flag/indicator or the one-bit flag/indication is absent in the higher layer parameter NZP-CS-RS-Resource configuring the NZP CSI-RS resource/NZP CSI-RS resource index, the UE could expect that the NZP CSI-RS resource/NZP CSI-RS resource index provided by the higher layer parameter NZP-CS-RS-Resource is for or associated with the serving cell PCI.

In yet another example (e.g., example v.20), the parameter configuring a NZP CSI-RS resource/NZP CSI-RS resource index, e.g., the higher layer parameter NZP-CS-RS-Resource could include/indicate a multi-bit indicator with each state of the multi-bit indicator corresponding to a PCI (e.g., either a serving cell PCI or a non-serving cell PCI). The NZP CSI-RS resource/NZP CSI-RS resource index provided by the higher layer parameter NZP-CS-RS-Resource is for or associated with the PCI associated with/corresponding to the multi-bit indicator indicated/configured in the same NZP-CS-RS-Resource. If the UE is configured with the inter-cell beam measurement and reporting operation enabled, and if the higher layer parameter NZP-CS-RS-Resource configuring the NZP CSI-RS resource/NZP CSI-RS resource index does not indicate/include the multi-bit indicator or the multi-bit indicator is absent in the higher layer parameter NZP-CS-RS-Resource configuring the NZP CSI-RS resource/NZP CSI-RS resource index, the UE could expect that the NZP CSI-RS resource/NZP CSI-RS resource index provided by the higher layer parameter NZP-CS-RS-Resource is for or associated with the serving cell PCI.

In yet another example (e.g., example v.21), the parameter configuring a NZP CSI-RS resource/NZP CSI-RS resource index, e.g., the higher layer parameter NZP-CS-RS-Resource could include/indicate an index pointing to an entry in a first set/list/pool of PCIs (e.g., including both the serving cell PCI and non-serving cell PCIs configured to the UE). The NZP CSI-RS resource/NZP CSI-RS resource index provided by the higher layer parameter NZP-CS-RS-Resource is for or associated with the index, and therefore the corresponding entry/PCI in the first set/list/pool of PCIs, indicated in the same NZP-CS-RS-Resource. If the UE is configured with the inter-cell beam measurement and reporting operation enabled, and if the higher layer parameter NZP-CS-RS-Resource configuring the NZP CSI-RS resource/NZP CSI-RS resource index does not indicate/include any index to an entry in the first set/list/pool of PCIs or the index to an entry in the first set/list/pool of PCIs is absent in the higher layer parameter NZP-CS-RS-Resource configuring the NZP CSI-RS resource/NZP CSI-RS resource index, the UE could expect that the NZP CSI-RS resource/NZP CSI-RS resource index provided by the higher layer parameter NZP-CS-RS-Resource is for or associated with the serving cell PCI.

Furthermore, the first list/set/pool of PCIs could be determined/configured according to: (1) for example, the UE could be higher layer configured by the network (e.g., via higher layer RRC signaling) the first list/set/pool of PCIs (e.g., including both the serving cell PCI and non-serving cell PCIs); and/or (2) for another example, the UE could be first higher layer configured by the network (e.g., via higher layer RRC signaling) a second list/set/pool of PCIs (e.g., including both the serving cell PCI and non-serving cell PCIs) and the UE could then receive from the network a MAC CE activation command/bitmap to activate/indicate one or more entries from the higher layer RRC configured second list/set/pool of PCIs as the first list/set/pool of PCIs.

In yet another example (e.g., example v.22), the parameter configuring a NZP CSI-RS resource/NZP CSI-RS resource index, e.g., the higher layer parameter NZP-CS-RS-Resource could include/indicate an index/ID of another higher layer RRC parameter, wherein one or more PCIs or PCI information could be indicated/included. The NZP CSI-RS resource/NZP CSI-RS resource index provided by the higher layer parameter NZP-CS-RS-Resource is for or associated with the RRC parameter (and therefore, the corresponding PCI(s) or PCI information indicated/included therein) indicated in the same NZP-CS-RS-Resource. If the UE is configured with the inter-cell beam measurement and reporting operation enabled, and if the higher layer parameter NZP-CS-RS-Resource configuring the NZP CSI-RS resource/NZP CSI-RS resource index does not indicate/include any index/ID of any other RRC parameters indicating/including one or more PCIs or PCI information or the index/ID of another higher layer RRC parameter indicating/including one or more PCIs or PCI information is absent in the higher layer parameter NZP-CS-RS-Resource configuring the NZP CSI-RS resource/NZP CSI-RS resource index, the UE could expect that the NZP CSI-RS resource/NZP CSI-RS resource index provided by the higher layer parameter NZP-CS-RS-Resource is for or associated with the serving cell PCI.

In yet another example (e.g., example v.23), the parameter configuring a NZP CSI-RS resource/NZP CSI-RS resource index, e.g., the higher layer parameter NZP-CS-RS-Resource could include/indicate an entity ID. In the present disclosure, an entity ID could correspond to a PCI value, a CORESETPoolIndex value, a TRP-specific index/ID value, a TRP-specific higher layer signaling index/ID value or a TRP-specific RS set index/ID value. The NZP CSI-RS resource/NZP CSI-RS resource index provided by the higher layer parameter NZP-CS-RS-Resource is for or associated with the entity ID (and therefore, the corresponding PCI value, CORESETPoolIndex value, TRP-specific index/ID value, TRP-specific higher layer signaling index/ID value or TRP-specific RS set index/ID value) indicated in the same NZP-CS-RS-Resource. If the UE is configured with the inter-cell beam measurement and reporting operation enabled, and if the higher layer parameter NZP-CS-RS-Resource configuring the NZP CSI-RS resource/NZP CSI-RS resource index does not indicate/include any entity ID or the entity ID is absent in the higher layer parameter NZP-CS-RS-Resource configuring the NZP CSI-RS resource/NZP CSI-RS resource index, the UE could expect that the NZP CSI-RS resource/NZP CSI-RS resource index provided by the higher layer parameter NZP-CS-RS-Resource is for or associated with the serving cell PCI.

Yet for another example, a SSB resource/SSB index provided by the higher layer parameter SSB-Index is for or associated with a PCI (e.g., corresponding to a non-serving cell PCI) if the PCI information/value is indicated/included in the corresponding parameter configuring the SSB resource/SSB index, e.g., in the higher layer parameter SSB-Index. That is, if/when the UE is configured with/provided by the network the higher layer parameter interCellBasedBeamReporting or NumberofAdditionalPCI or AdditionalPCIInfo or etc., the UE is configured with one or more SSB resources/SSB indexes (e.g., provided by the higher layer parameter SSB-Index) each associated with a PCI or an index in a list/set/pool of PCIs.

In one example (e.g., example v.24), the parameter configuring a SSB resource/SSB index, e.g., the higher layer parameter SSB-Index, could include/indicate a PCI value, e.g., corresponding to either a serving cell PCI or a non-serving cell PCI. The SSB resource/SSB index provided by the higher layer parameter SSB-Index is for or associated with the PCI indicated/configured in the same SSB-Index. If the UE is configured with the inter-cell beam measurement and reporting operation enabled, and if the higher layer parameter, e.g., SSB-Index, configuring the SSB resource/SSB index does not indicate/include any PCI value(s) or the PCI is absent in the higher layer parameter, e.g., SSB-Index, configuring the SSB resource/SSB index, the UE could expect that the SSB resource/SSB index provided by the higher layer parameter SSB-Index is for or associated with the serving cell PCI.

In another example (e.g., example v.25), the parameter configuring a SSB resource/SSB index, e.g., the higher layer parameter SSB-Index could include/indicate a one-bit indicator/flag indicating either the serving cell PCI or a non-serving cell PCI. For instance, the SSB resource/SSB index provided by the higher layer parameter SSB-Index with the one-bit indicator/flag set to "1"/"ON"/"enabled" could be for or associated with the serving cell PCI (or the non-serving cell PCI), and the SSB resource/SSB index provided by the higher layer parameter SSB-Index with the one-bit indicator/flag set to "0"/"OFF"/"disabled" could be for or associated with the non-serving cell PCI (or the serving cell PCI). If the UE is configured with the inter-cell beam measurement and reporting operation enabled, and if the higher layer parameter SSB-Index configuring the SSB resource/SSB index does not indicate/include the one-bit flag/indicator or the one-bit flag/indication is absent in the higher layer parameter SSB-Index configuring the SSB resource/SSB index, the UE could expect that the SSB resource/SSB index provided by the higher layer parameter SSB-Index is for or associated with the serving cell PCI.

In yet another example (e.g., example v.26), the parameter configuring a SSB resource/SSB index, e.g., the higher layer parameter SSB-Index could include/indicate a multi-bit indicator with each state of the multi-bit indicator corresponding to a PCI (e.g., either a serving cell PCI or a non-serving cell PCI). The SSB resource/SSB index provided by the higher layer parameter SSB-Index is for or associated with the PCI associated with/corresponding to the multi-bit indicator indicated/configured in the same SSB-Index. If the UE is configured with the inter-cell beam measurement and reporting operation enabled, and if the higher layer parameter SSB-Index configuring the SSB resource/SSB index does not indicate/include the multi-bit indicator or the multi-bit indicator is absent in the higher layer parameter SSB-Index configuring the SSB resource/SSB index, the UE could expect that the SSB resource/SSB index provided by the higher layer parameter SSB-Index is for or associated with the serving cell PCI.

In yet another example (e.g., example v.27), the parameter configuring a SSB resource/SSB index, e.g., the higher layer parameter SSB-Index could include/indicate an index pointing to an entry in a first set/list/pool of PCIs (e.g., including both the serving cell PCI and non-serving cell PCIs configured to the UE). The SSB resource/SSB index provided by the higher layer parameter SSB-Index is for or associated with the index, and therefore the corresponding entry/PCI in the first set/list/pool of PCIs, indicated in the same SSB-Index. If the UE is configured with the inter-cell beam measurement and reporting operation enabled, and if the higher layer parameter SSB-Index configuring the SSB resource/SSB index does not indicate/include any index to an entry in the first set/list/pool of PCIs or the index to an entry in the first set/list/pool of PCIs is absent in the higher layer parameter SSB-Index configuring the SSB resource/SSB index, the UE could expect that the SSB resource/SSB index provided by the higher layer parameter SSB-Index is for or associated with the serving cell PCI.

Furthermore, the first list/set/pool of PCIs could be determined/configured according to: (1) for example, the UE could be higher layer configured by the network (e.g., via higher layer RRC signaling) the first list/set/pool of PCIs (e.g., including both the serving cell PCI and non-serving cell PCIs); and/or (2) for another example, the UE could be first higher layer configured by the network (e.g., via higher layer RRC signaling) a second list/set/pool of PCIs (e.g., including both the serving cell PCI and non-serving cell PCIs) and the UE could then receive from the network a MAC CE activation command/bitmap to activate/indicate one or more entries from the higher layer RRC configured second list/set/pool of PCIs as the first list/set/pool of PCIs.

In yet another example (e.g., example v.28), the parameter configuring a SSB resource/SSB index, e.g., the higher layer parameter SSB-Index could include/indicate an index/ID of another higher layer RRC parameter, wherein one or more PCIs or PCI information could be indicated/included. The SSB resource/SSB index provided by the higher layer parameter SSB-Index is for or associated with the RRC parameter (and therefore, the corresponding PCI(s) or PCI information indicated/included therein) indicated in the same SSB-Index. If the UE is configured with the inter-cell beam measurement and reporting operation enabled, and if the higher layer parameter SSB-Index configuring the SSB resource/SSB index does not indicate/include any index/ID of any other RRC parameters indicating/including one or more PCIs or PCI information or the index/ID of another higher layer RRC parameter indicating/including one or more PCIs or PCI information is absent in the higher layer parameter SSB-Index configuring the SSB resource/SSB index, the UE could expect that the SSB resource/SSB index provided by the higher layer parameter SSB-Index is for or associated with the serving cell PCI.

In yet another example (e.g., example v.29), the parameter configuring a SSB resource/SSB index, e.g., the higher layer parameter SSB-Index could include/indicate an entity ID. In the present disclosure, an entity ID could correspond to a PCI value, a CORESETPoolIndex value, a TRP-specific index/ID value, a TRP-specific higher layer signaling index/ID value or a TRP-specific RS set index/ID value. The SSB resource/SSB index provided by the higher layer parameter SSB-Index is for or associated with the entity ID (and therefore, the corresponding PCI value, CORESETPoolIndex value, TRP-specific index/ID value, TRP-specific higher layer signaling index/ID value or TRP-specific RS set index/ID value) indicated in the same SSB-Index. If the UE is configured with the inter-cell beam measurement and reporting operation enabled, and if the higher layer parameter SSB-Index configuring the SSB resource/SSB index does not indicate/include any entity ID or the entity ID is absent in the higher layer parameter SSB-Index configuring the SSB resource/SSB index, the UE could expect that the SSB resource/SSB index provided by the higher layer parameter SSB-Index is for or associated with the serving cell PCI.

For group based beam reporting for inter-cell operation is illustrated in FIGURES 10, 11, 12, 13, and 14, and TABLE 1 in the present disclosure.

In one example (e.g., example 5.A), the UE could report in a single CSI reporting instance/CSI report at least one (Ng0≥1) group/pair of resource indicators such as SSBRIs or CRIs (and therefore, the corresponding beam metrics such as L1-RSRPs/L1-SINRs), wherein each reported group/pair of resource indicators could contain/comprise/indicate at least two (Mg0≥2) resource indicators such as SSBRIs or CRIs. The UE could simultaneously receive the SSB resources or CSI-RS resources corresponding to the Mg0 SSBRIs or CRIs reported in the same group/pair of resource indicators using either a single spatial domain receive filter/panel or multiple spatial domain receive filters/panels. Furthermore, the Mg0 SSBRIs or CRIs reported in the same group/pair of resource indicators could be associated with either the serving cell PCI or a non-serving cell PCI.

For the report setting, the UE could determine the Mg0 SSBRIs or CRIs reported in the same group/pair of resource indicators for a non-serving cell PCI from one or more CSI-RS resource settings/configurations or one or more CSI resource sets or one or more NZP CSI-RS resources or one or more SSB resources associated with/configured for the non-serving cell PCI following at least one of the design examples, example v.1 to example v.29, discussed in the present disclosure.

For instance, a higher layer parameter interCellgroupBasedBeamReportingR16 could be included/incorporated in CSI reporting configuration/setting, e.g., in the higher layer parameter CSI-ReportConfig, to turn on/off the group based inter-cell beam measurement and reporting based on the Rel. 15/16 group based beam reporting framework. If the UE is configured with the higher layer parameter interCellgroupBasedBeamReportingR16 set to "enabled," the UE may report in a single CSI reporting instance/CSI Report a group/pair (i.e., Ng0=1) of two (i.e., Mg0=2) resource indicators such as SSBRIs or CRIs (and therefore, their corresponding beam metrics such as L1-RSRPs or L1-SINRs). The UE could simultaneously receive the SSB resources or CSI-RS resources corresponding to the two SSBRIs or CRIs reported in the same group/pair of resource indicators per report setting using either a single spatial domain receive filter/panel or multiple spatial domain receive filters/panels.

Furthermore, the two SSBRIs or CRIs reported in the same group/pair of resource indicators could be associated with either a serving cell PCI or a non-serving cell PCI. For the report setting, the UE could determine the two SSBRIs or CRIs reported in the same group/pair of resource indicators for a non-serving cell PCI from one or more CSI-RS resource settings/configurations or one or more CSI resource sets or one or more NZP CSI-RS resources or one or more SSB resources associated with/configured for the non-serving cell PCI following at least one of the design examples, example v.1 to example v.29, discussed in the present disclosure.

In another example (e.g., example 5.B), the UE could report in a single CSI reporting instance/CSI report at least one (Ng1≥1) group/pair of resource indicators such as SSBRIs or CRIs (and therefore, the corresponding beam metrics such as L1-RSRPs/L1-SINRs), wherein each reported group/pair of resource indicators could contain/comprise/indicate at least two (Mg1≥2) resource indicators such as SSBRIs or CRIs. The UE could simultaneously receive the SSB resources or CSI-RS resources corresponding to the Mg1 SSBRIs or CRIs reported in the same group/pair of resource indicators using either a single spatial domain receive filter/panel or multiple spatial domain receive filters/panels. Furthermore, the Mg1 SSBRIs or CRIs reported in the same group/pair of resource indicators could be associated with the serving cell PCI and one or more non-serving cell PCIs.

For the report setting, the UE could determine one or more of the Mg1 SSBRIs or CRIs reported in the same group/pair of resource indicators for a non-serving cell PCI from one or more CSI-RS resource settings/configurations or one or more CSI resource sets or one or more NZP CSI-RS resources or one or more SSB resources associated with/configured for the non-serving cell PCI following at least one of the design examples, example v.1 to example v.29, discussed in the present disclosure. For instance, a higher layer parameter interCellgroupBasedBeamReportingR17 could be included/incorporated in CSI reporting configuration/setting, e.g., in the higher layer parameter CSI-ReportConfig, to turn on/off the group based inter-cell beam measurement and reporting based on the Rel. 17 group based beam reporting framework. If the UE is configured with the higher layer parameter interCellgroupBasedBeamReportingR17 set to "enabled," the UE may report in a single CSI reporting instance/CSI Report Ng1≥1 groups/pairs of resource indicators such as SSBRIs or CRIs (and therefore, their corresponding beam metrics such as L1-RSRPs or L1-SINRs) with each group/pair containing/comprising/indicating two (i.e., Mg1=2) resource indicators such as SSBRIs or CRIs. The UE could simultaneously receive the SSB resources or CSI-RS resources corresponding to the two SSBRIs or CRIs reported in the same group/pair of resource indicators per report setting using either a single spatial domain receive filter/panel or multiple spatial domain receive filters/panels.

Furthermore, the two SSBRIs or CRIs reported in the same group/pair of resource indicators could be associated with the serving cell PCI and a non-serving cell PCI, respectively. For the report setting, the UE could determine the SSBRI or CRI reported in the same group/pair of resource indicators for the non-serving cell PCI from one or more CSI-RS resource settings/configurations or one or more CSI resource sets or one or more NZP CSI-RS resources or one or more SSB resources associated with/configured for the non-serving cell PCI following at least one of the design examples, example v.1 to example v.29, discussed in the present disclosure.

For the example 5.A, (1) for L1-RSRP reporting, if the higher layer parameter interCellgroupBasedBeamReportingR16 is configured/set to "enabled," the UE may use differential L1-RSRP based reporting, where the largest measured value of L1-RSRP is quantized to a 7-bit value in the range [-140,-44] dBm with 1 dB step size, and the differential L1-RSRP is quantized to a 4-bit value. The differential L1-RSRP value is computed with 2 dB step size with a reference to the largest measured L1-RSRP value which is part of the same L1-RSRP reporting instance, and (2) for L1-SINR reporting, if the higher layer parameter interCellgroupBasedBeamReportingR16 is configured/set to "enabled," the UE may use differential L1-SINR based reporting, where the largest measured value of L1-SINR is quantized to a 7-bit value in the range [-23,-40] dBm with 0.5 dB step size, and the differential L1-SINR is quantized to a 4-bit value. The differential L1-SINR value is computed with 1 dB step size with a reference to the largest measured L1-SINR value which is part of the same L1-SINR reporting instance.

For the example 5.A, if the resource indicators such as SSBRIs/CRIs reported in the same group/pair of resource indicators are for/associated with a non-serving cell PCI, the UE could also report in the same CSI reporting instance/CSI report information related to the non-serving cell PCI. For example, the information could correspond to the exact PCI value. For another example, the information could correspond to a one-bit flag/indicator indicating either the serving cell PCI (e.g., by setting the one-bit flag/indicator as "1") or the non-serving cell PCI (e.g., by setting the one-bit flag/indicator as "0"). Yet for another example, the information could correspond to a multi-bit indicator with each state of the multi-bit indicator indicating a different non-serving cell PCI. Yet for another example, the information could correspond to an index pointing to an entry in a set/list/pool of PCIs. Yet for another example, the information could correspond to an index/ID of another higher layer RRC parameter, wherein one or more PCIs, PCI information or non-serving cell SSB information such as SSB time-domain position, SSB frequency or SSB transmit power could be indicated/included. Yet for another example, the information could correspond to an entity ID, which could be a PCI value, a CORESETPoolIndex value, a TRP-specific index/ID value, a TRP-specific higher layer signaling index/ID value or a TRP-specific RS set index/ID value.

For the example 5.B, for L1-RSRP reporting, if the higher layer parameter interCellgroupBasedBeamReportingR17 is configured/set to "enabled," the UE may use differential L1-RSRP based reporting, where the largest measured value of L1-RSRP is quantized to a 7-bit value in the range [-140,-44] dBm with 1 dB step size, and the differential L1-RSRP is quantized to a 4-bit value. The differential L1-RSRP value is computed with 2 dB step size with a reference to the largest measured L1-RSRP value which is part of the same L1-RSRP reporting instance.

Furthermore, the UE may send to the network an indicator related to the largest measured value of L1-RSRP in part of the same CSI reporting instance/CSI report. For example, the indicator could indicate the CSI resource setting/configuration provided by the higher layer parameter CSI-ResourceConfig associated with the largest measured value of L1-RSRP (e.g., the indicator could be a one-bit flag/indicator if two CSI resource settings are respectively configured for the serving cell PCI and the non-serving cell PCI). For another example, the indicator could indicate the CSI-RS resource set (e.g., either a SSB resource set or a NZP CSI-RS resource set) associated with the largest measured value of L1-RSRP (e.g., the indicator could be a one-bit flag/indicator if two CSI-RS resource sets are respectively configured for the serving cell PCI and the non-serving cell PCI). Yet for another example, the indicator could indicate PCI information associated with the largest measured value of L1-RSRP.

The PCI information could correspond to at least one of: (1) the PCI information could correspond to the exact PCI value; (2) the PCI information could correspond to a one-bit flag/indicator indicating either the serving cell PCI (e.g., by setting the one-bit flag/indicator as "1") or the non-serving cell PCI (e.g., by setting the one-bit flag/indicator as "0"); (3) the PCI information could correspond to a multi-bit indicator with each state of the multi-bit indicator indicating a different non-serving cell PCI; (4) the PCI information could correspond to an index pointing to an entry in a set/list/pool of PCIs; (5) the PCI information could correspond to an index/ID of another higher layer RRC parameter, wherein one or more PCIs, PCI information or non-serving cell SSB information such as SSB time-domain position, SSB frequency or SSB transmit power could be indicated/included; and (6) the PCI information could correspond to an entity ID, which could be a PCI value, a CORESETPoolIndex value, a TRP-specific index/ID value, a TRP-specific higher layer signaling index/ID value or a TRP-specific RS set index/ID value.

In one example, the number M_nsc of non-serving cell(s) for inter-cell beam measurement and reporting could be a fixed value (e.g., 2) in system specification(s) and/or a deterministic value per RRC configuration.

In another example, the UE could be provided by the network, e.g., via higher layer (RRC) or/and MAC CE or/and DCI based signaling or via a separate (dedicated) parameter or joint with another parameter, the number M_nsc of non-serving cell(s) for beam measurement and reporting. Furthermore, the UE could be configured/indicated by the network which M_nsc non-serving cells out of the total N_nsc non-serving cells (e.g., in form of their PCI values, indices of entries in a list of PCI values or other higher layer signaling index values) to perform beam measurement and reporting; this indication could be via higher layer (RRC) or/and MAC CE or/and DCI based signaling; this indication could be via a separate (dedicated) parameter or joint with another parameter.

For example, the UE could be provided by the network, e.g., in the CSI reporting configuration/setting via the higher layer parameter CSI-ReportConfig, one or more (e.g., M_nsc) PCI values in addition to or including the serving cell PCI to perform beam measurement and reporting.

For another example, the UE could be first higher layer configured by the network a set/list/pool of N_nsc PCIs in addition to or including the serving cell PCI. The UE could receive from the network a MAC CE activation command/bitmap to activate M_nsc PCIs/entries from the set/list/pool of N_nsc PCIs to perform beam measurement and reporting.

Yet for another example, the UE could be first higher layer configured by the network a set/list/pool of N_nsc PCIs in addition to or including the serving cell PCI. The UE could be provided by the network, e.g., in the CSI reporting configuration/setting via the higher layer parameter CSI-ReportConfig, M_nsc indexes each corresponding to an entry in the set/list/pool of N_nsc PCIs. The UE could perform beam measurement on the M_nsc PCIs corresponding to/associated with the indicated M_nsc entries in the set/list/pool of N_nsc PCIs and report to the network the corresponding beam qualities.

Furthermore, the UE could also be configured/indicated by the network the number/quantity of resource indicators/beam metrics to be reported in the same CSI reporting instance/CSI report for the selected M_nsc non-serving cells (denoted by L_nsc) and/or the number of resource indicators/beam metrics to be reported in the same CSI reporting instance/CSI report for the serving cell (denoted by L_sc); this indication could be via higher layer (RRC) or/and MAC CE or/and DCI based signaling; this indication could be via a separate (dedicated) parameter or joint with another parameter.

For example, the quantity L_nsc and/or the quantity L_sc could be provided by the CSI reporting configuration/setting, e.g., via the higher layer parameter CSI-ReportConfig. Here, 1≤L_nsc≤K_nsc and/or 1≤L_sc≤K_sc, where K_nsc is the total/maximum number of resource indicators/beam metrics allowed to be reported in the same CSI reporting instance/CSI report for the non-serving cell(s) and K_sc is the total/maximum number of resource indicators/beam metrics allowed to be reported in the same CSI reporting instance/CSI report for the serving cell, which could be higher layer configured/indicated to the UE by the network (e.g., provided by the CSI reporting configuration/setting, e.g., via the higher layer parameter CSI-ReportConfig).

For instance, the candidate values for K_nsc could be 4, 8 or 16, and the candidate values for K_sc could be 4, 8 or 16. Optionally, the UE could be configured/indicated by the network the total/maximum number (K_tot=K_nsc+K_sc) of resource indicators/beam metrics allowed to be reported in the same CSI reporting instance/CSI report for both the serving cell and the non-serving cell(s) - e.g., provided by the CSI reporting configuration/setting via the higher layer parameter CSI-ReportConfig; the candidate values for K_tot could be 4, 8 or 16. Hence, based on network's configuration, i.e., if the UE is configured with/provided by the network the higher layer parameter interCellBasedBeamReporting or NumberofAdditionalPCI or AdditionalPCIInfo or etc.

In one example, the UE may report in the same CSI reporting instance/CSI-Report up to K_sc (e.g., L_sc) BM-RI pairs/beam qualities (including up to K_sc - e.g., L_sc - resource indicators such as SSBRIs/CRIs and the corresponding/associated up to K_sc - e.g., L_sc - beam metrics such as L1-RSRPs/L1-SINRs) for only the serving cell PCI per reporting setting. That is, based on network's configuration, i.e., if the UE is configured with/provided by the network the higher layer parameter interCellBasedBeamReporting or NumberofAdditionalPCI or AdditionalPCIInfo or etc., the UE could or is allowed to report in a single CSI reporting instance/CSI-Report up to K_sc - e.g., K_sc=4 - SSBRIs or CRIs for each report setting, where the corresponding SSB resources or NZP CSI-RS resource configurations are associated with only the serving cell PCI, or index in a list/set/pool of PCIs corresponding/pointing to the serving cell PCI. Furthermore, the UE could also report in the same CSI reporting instance/CSI-Report up to K_sc - e.g., K_sc=4 - SS-RSRPs or CSI-RSRPs for each report setting, corresponding to/associated with the reported SSBRIs/CRIs.

In another example, the UE may report in the same CSI reporting instance/CSI-Report up to K_nsc (e.g., L_nsc) BM-RI pairs/beam qualities (including up to K_nsc - e.g., L_nsc - resource indicators such as SSBRIs/CRIs and the corresponding/associated up to K_nsc - e.g., L_nsc - beam metrics such as L1-RSRPs/L1-SINRs) for only the non-serving cell PCI(s) per reporting setting. That is, based on network's configuration, i.e., if the UE is configured with/provided by the network the higher layer parameter interCellBasedBeamReporting or NumberofAdditionalPCI or AdditionalPCIInfo or etc., the UE could or is allowed to report in a single CSI reporting instance/CSI-Report up to K_nsc - e.g., K_nsc=4 - SSBRIs or CRIs for each report setting, where the corresponding SSB resources or NZP CSI-RS resource configurations are associated with only PCI(s) different from the serving cell PCI, or index(es) in a list/set/pool of PCIs corresponding/pointing to PCI(s) different from the serving cell PCI. Furthermore, the UE could also report in the same CSI reporting instance/CSI-Report up to K_nsc - e.g., K_nsc=4 - SS-RSRPs or CSI-RSRPs for each report setting, corresponding to/associated with the reported SSBRIs/CRIs.

In yet another example, the UE may report in the same CSI reporting instance/CSI-Report up to K_sc (e.g., L_sc) BM-RI pairs/beam qualities (including up to K_sc - e.g., L_sc - resource indicators such as SSBRIs/CRIs and the corresponding/associated up to K_sc - e.g., L_sc - beam metrics such as L1-RSRPs/L1-SINRs) for the serving cell PCI and up to K_nsc (e.g., L_nsc) BM-RI pairs/beam qualities (including up to K_nsc - e.g., L_nsc - resource indicators such as SSBRIs/CRIs and the corresponding/associated up to K_nsc - e.g., L_nsc - beam metrics such as L1-RSRPs/L1-SINRs) for the non-serving cell PCI(s) per reporting setting. That is, based on network's configuration, i.e., if the UE is configured with/provided by the network the higher layer parameter interCellBasedBeamReporting or NumberofAdditionalPCI or AdditionalPCIInfo or etc., the UE could or is allowed to report in a single CSI reporting instance/CSI-Report up to K_sc - e.g., K_sc=2 - SSBRIs or CRIs, where the corresponding SSB resources or NZP CSI-RS resource configurations are associated with the serving cell PCI or index in a list/set/pool of PCIs corresponding/pointing to the serving cell PCI, and up to K_nsc - e.g., K_nsc=2 - SSBRIs or CRIs, where the corresponding SSB resources or NZP CSI-RS resource configurations are associated with PCI(s) different from the serving cell PCI or index(es) in a list/set/pool of PCIs corresponding/pointing to PCI(s) different from the serving cell PCI. Furthermore, the UE could also report in the same CSI reporting instance/CSI-Report up to K_sc - e.g., K_sc=2 - SS-RSRPs or CSI-RSRPs corresponding to/associated with the reported SSBRIs/CRIs for the serving cell PCI and up to K_nsc - e.g., K_nsc=2 - SS-RSRPs or CSI-RSRPs corresponding to/associated with the reported SSBRIs/CRIs for the PCI(s) different from the serving cell PCI.

In yet another example, the UE may report in the same CSI reporting instance/CSI-Report up to K_tot (e.g., 1≤L_tot≤K_tot) BM-RI pairs/beam qualities (including up to K_tot - e.g., L_tot - resource indicators such as SSBRIs/CRIs and the corresponding/associated up to K_tot - e.g., L_tot - beam metrics such as L1-RSRPs/L1-SINRs) for both the serving cell PCI and the non-serving cell PCI(s) per reporting setting. That is, based on network's configuration, i.e., if the UE is configured with/provided by the network the higher layer parameter interCellBasedBeamReporting or NumberofAdditionalPCI or AdditionalPCIInfo or etc., the UE could or is allowed to report in a single CSI reporting instance/CSI-Report up to K_tot - e.g., K_tot=4 - SSBRIs or CRIs for each report setting, where the corresponding SSB resources or NZP CSI-RS resource configurations are associated with both the serving cell PCI and PCI(s) different from the serving cell PCI, or indices in a list/set/pool of PCIs corresponding/pointing to both the serving cell PCI and PCI(s) different from the serving cell PCI. Furthermore, the UE could also report in the same CSI reporting instance/CSI-Report up to K_tot - e.g., K_tot=4 - SS-RSRPs or CSI-RSRPs for each report setting, corresponding to/associated with the reported SSBRIs/CRIs.

The UE could be configured/indicated by the network the number L_sc of BM-RI pairs/beam qualities (including the resource indicators and their corresponding/associated beam metrics) to be reported in a single reporting instance/CSI report for the serving cell and a set of M_nsc values/quantities with each entry in the set indicating the number of BM-RI pairs/beam qualities (including the resource indicators and their corresponding/associated beam metrics) to be reported in the same reporting instance/CSI report for a non-serving cell PCI. For example, the k-th entry in the set of M_nsc values/quantities L_nsc[k] (k∈{1, ..., M_nsc}) indicates to the UE that the UE may report in the same reporting instance/CSI report L_nsc[k] BM-RI pairs/beam qualities (including the resource indicators and their corresponding/associated beam metrics) for the non-serving cell PCI associated with the k-th entry in the set of M_nsc values/quantities. As aforementioned, the UE could perform beam measurement and reporting on the M_nsc non-serving cell PCIs. There could be various means to associate/link the L_nsc BM-RI pairs/beam qualities and the M_nsc non-serving cell PCIs.

For example, the set of M_nsc values/quantities indicating the L_nsc BM-RI pairs/beam qualities to be reported in the same CSI reporting instance/CSI report for the M_nsc non-serving cell(s) could be absent/an empty set/not indicated in the corresponding higher layer parameter. In this case, the UE is expected to report in the same reporting instance/CSI report L_nsc/M_nsc or [L_nsc/M_nsc] or [L_nsc/M_nsc] BM-RI pairs/beam qualities for each of the M_nsc non-serving cell PCIs.

For another example, all the entries in the set of M_nsc values/quantities indicating the L_nsc BM-RI pairs/beam qualities to be reported in the same CSI reporting instance/CSI report for the M_nsc non-serving cell(s) could be all equal, i.e., L_nsc[1]=L_nsc[2]=···=L_nsc[M_nsc]=L_nsc_common. In this case, the UE could report in the same reporting instance/CSI report L_nsc_common BM-RI pairs/beam qualities for each of the M_nsc non-serving cell PCIs.

Yet for another example, the k-th entry (i.e., L_nsc[k]) in the set of M_nsc values/quantities indicating the L_nsc BM-RI pairs/beam qualities to be reported in the same CSI reporting instance/CSI report for the M_nsc non-serving cell(s) is associated with/linked to the k-th non-serving cell PCI among the M_nsc non-serving cell PCIs, where k=1, 2, ..., M_nsc.

Yet for another example, the k-th entry (i.e., L_nsc[k]) in the set of M_nsc values/quantities indicating the L_nsc BM-RI pairs/beam qualities to be reported in the same CSI reporting instance/CSI report for the M_nsc non-serving cell(s) is associated with/linked to the k-th lowest (or highest) non-serving cell PCI value among the M_nsc non-serving cell PCIs, where k=1, 2, ..., M_nsc.

Yet for another example, the UE could be explicitly indicated by the network the association/mapping/linkage between the entries in the set of M_nsc values/quantities indicating the L_nsc BM-RI pairs/beam qualities to be reported in the same reporting instance/CSI report for the M_nsc non-serving cell(s) and the M_nsc non-serving cell PCIs. For instance, the UE could receive from the network one or more parameters each indicating/including an index to an entry in the set of M_nsc values/quantities indicating the L_nsc BM-RI pairs/beam qualities and a non-serving cell PCI value. The entry in the set of M_nsc values/quantities indicating the L_nsc BM-RI pairs/beam qualities and the non-serving cell PCI are associated if they are indicated/included in the same parameter.

There could be various means to order the resource indicators such as SSBRIs/CRIs (and therefore, the corresponding beam metrics such as L1-RSRPs/L1-SINRs) for (i) both the serving cell and the non-serving cell(s) or (ii) only the non-serving cell(s) in the same reporting instance/CSI report.

For example (example 5.1), the UE could report in the same reporting instance/CSI report a total of L_tot BM-RI pairs/beam qualities (including the resource indicators and their corresponding/associated beam metrics) or a total of L_tot resource indicators such as SSBRIs/CRIs (and therefore, the corresponding L_tot beam metrics such as L1-RSRPs/L1-SINRs) for both the serving cell and the non-serving cell(s), where L_tot = L_sc + L_nsc, and L_sc is the number of resource indicators/beam metrics reported for the serving cell and L_nsc is the number of resource indicators/beam metrics reported for the M_nsc non-serving cell(s) in the same CSI reporting instance/CSI-Report.

In this case, the 1^{st} to the L_sc-th entries/positions in the CSI reporting instance/CSI report/beam report could include/indicate the L_sc BM-RI pairs/beam qualities (including the resource indicators such as SSBRIs/CRIs and the corresponding beam metrics such as L1-RSRPs) for the serving cell PCI, and the ( $L_sc + {\sum }_{k ′ = 1}^{k - 1} L _ nsc \left[k′\right] + 1$)-th to the ( $L_sc + {\sum }_{k ′ = 1}^{k - 1} L _ nsc \left[k′\right] + L_nsc \left[k\right]$)-th entries/positions in the same CSI reporting instance/CSI report/beam report could include/indicate the L_nsc[k] BM-RI pairs/beam qualities (including the resource indicators such as SSBRIs/CRIs and the corresponding beam metrics such as L1-RSRPs) for the non-serving cell k, corresponding to the k-th non-serving cell PCI among the M_nsc non-serving cell PCIs or the k-th lowest (or highest) non-serving cell PCI among the M_nsc non-serving cell PCIs, where k=1, 2,..., M_nsc. For M_nsc=1, i.e., for an inter-cell system comprising a serving cell PCI and a non-serving cell PCI, if configured by the network, the UE could use the first L_sc entries/positions in a CSI reporting instance/CSI report/beam report to report the L_sc BM-RI pairs/beam qualities (including the resource indicators and the corresponding beam metrics) for the serving cell PCI, and the (L_sc+1)-th to the (L_sc+L_nsc)-th entries/positions in the same CSI reporting instance/CSI report/beam report to report the L_nsc BM-RI pairs/beam qualities (including the resource indicators and the corresponding beam metrics) for the non-serving cell PCI.

Optionally, the UE could report in the same reporting instance/CSI report a total of L_nsc BM-RI pairs/beam qualities (including the resource indicators and their corresponding/associated beam metrics) or a total of L_nsc resource indicators such as SSBRIs/CRIs (and therefore, the corresponding L_nsc beam metrics such as L1-RSRPs/L1-SINRs) for only the non-serving cell(s). In this case, the ( ${\sum }_{k ′ = 1}^{k - 1} L _ nsc \left[k′\right] + 1$)-th to the ( ${\sum }_{k ′ = 1}^{k - 1} L _ nsc \left[k′\right] + L_nsc \left[k\right]$)-th entries/positions in the same CSI reporting instance/CSI report/beam report could include/indicate the L_nsc[k] BM-RI pairs/beam qualities (including the resource indicators such as SSBRIs/CRIs and the corresponding beam metrics such as L1-RSRPs) for the non-serving cell k, corresponding to the k-th non-serving cell PCI among the M_nsc non-serving cell PCIs or the k-th lowest (or highest) non-serving cell PCI among the M_nsc non-serving cell PCIs, where k=1, 2,..., M_nsc. For M_nsc=1, i.e., for an inter-cell system comprising a serving cell PCI and a non-serving cell PCI, if configured by the network, the UE could only report in the same reporting instance/CSI report the L_nsc BM-RI pairs/beam qualities (including the resource indicators and the corresponding beam metrics) for the non-serving cell PCI.

If the set of M_nsc values/quantities indicating the L_nsc BM-RI pairs/beam qualities to be reported in the same reporting instance for the M_nsc non-serving cell(s) is absent/an empty set/not indicated in the corresponding higher layer parameter, the UE could use the 1^{st} to the L_sc-th entries/positions in the CSI reporting instance/CSI report/beam report to report the L_sc BM-RI pairs/beam qualities (including the resource indicators such as SSBRIs/CRIs and the corresponding beam metrics such as L1-RSRPs/L1-SINRs) for the serving cell, and the (L_sc+(k-1)× L_nsc_0+1)-th to the (L_sc+k×L_nsc_0)-th entries/positions in the same CSI reporting instance/CSI report/beam report to report the L_nsc_0 BM-RI pairs/beam qualities (including the resource indicators such as SSBRIs/CRIs and the corresponding beam metrics such as L1-RSRPs/L1-SINRs) for the non-serving cell k, corresponding to the k-th non-serving cell PCI among the M_nsc non-serving cell PCIs or the k-th lowest (or highest) non-serving cell PCI among the M_nsc non-serving cell PCIs, where k=1, 2,..., M_nsc and L_nsc_0= L_nsc/M_nsc or [L_nsc/M_nsc] or [L_nsc/M_nsc]. For M_nsc=1, i.e., for an inter-cell system comprising a serving cell PCI and a non-serving cell PCI, the UE could use the first L_sc entries/positions in a CSI reporting instance/CSI report/beam report to report the L_sc BM-RI pairs/beam qualities (including the resource indicators and the corresponding beam metrics) for the serving cell PCI, and the (L_sc+1)-th to the (L_sc+L_nsc_0)-th entries/positions in the same CSI reporting instance/CSI report/beam report to report the [L_nsc/M_nsc] BM-RI pairs/beam qualities (including the resource indicators and the corresponding beam metrics) for the non-serving cell PCI.

Optionally, if the set of M_nsc values/quantities indicating the L_nsc BM-RI pairs/beam qualities to be reported in the same reporting instance for the M_nsc non-serving cell(s) is absent/an empty set/not indicated in the corresponding higher layer parameter, the UE could use the ((k-1)× L_nsc_0+1)-th to the (k×L_nsc_0)-th entries/positions in the same CSI reporting instance/CSI report/beam report to report the L_nsc_0 BM-RI pairs/beam qualities (including the resource indicators such as SSBRIs/CRIs and the corresponding beam metrics such as L1-RSRPs/L1-SINRs) for the non-serving cell k, corresponding to the k-th non-serving cell PCI among the M_nsc non-serving cell PCIs or the k-th lowest (or highest) non-serving cell PCI among the M_nsc non-serving cell PCIs, where k=1, 2,..., M_nsc and L_nsc_0= L_nsc/M_nsc or $\left⌊L_nsc/M_nsc\right⌋$ or $\left⌈L_nsc/M_nsc\right⌉$. In this case, the UE could report in the same reporting instance/CSI report the BM-RI pairs/beam qualities for only the non-serving cell(s) and is not expected to report in the same reporting instance/CSI report the L_sc BM-RI pairs/beam qualities for the serving cell PCI.

If all the entries in the set of M_nsc values/quantities indicating the L_nsc BM-RI pairs/beam qualities to be reported in the same reporting instance for the M_nsc non-serving cell(s) are equal, i.e., L_nsc_common=L_nsc[1]=L_nsc[2]=···=L_nsc[M_nsc], the UE could use the 1^{st} to the L_sc-th entries/positions in the CSI reporting instance/CSI report/beam report to report the L_sc BM-RI pairs/beam qualities (including the resource indicators such as SSBRIs/CRIs and the corresponding beam metrics such as L1-RSRPs/L1-SINRs) for the serving cell, and the (L_sc+(k-1)×L_nsc_common+1)-th to the (L_sc+k×L_nsc_common)-th entries/positions in the same CSI reporting instance/CSI report/beam report to report the L_nsc_common BM-RI pairs/beam qualities (including the resource indicators such as SSBRIs/CRIs and the corresponding beam metrics such as L1-RSRPs/L1-SINRs) for the non-serving cell k, corresponding to the k-th non-serving cell PCI among the M_nsc non-serving cell PCIs or the k-th lowest (or highest) non-serving cell PCI among the M_nsc non-serving cell PCIs, where k=1, 2, ..., M_nsc. For M_nsc=1, i.e., for an inter-cell system comprising a serving cell PCI and a non-serving cell PCI, the UE could use the first L_sc entries/positions in a CSI reporting instance/CSI report/beam report to report the L_sc BM-RI pairs/beam qualities (including the resource indicators and the corresponding beam metrics) for the serving cell PCI, and the (L_sc+1)-th to the (L_sc+ L_nsc_common)-th entries/positions in the same CSI reporting instance/CSI report/beam report to report the L_nsc_common BM-RI pairs/beam qualities (including the resource indicators and the corresponding beam metrics) for the non-serving cell PCI.

Optionally, if all the entries in the set of M_nsc values/quantities indicating the L_nsc BM-RI pairs/beam qualities to be reported in the same reporting instance for the M_nsc non-serving cell(s) are equal, i.e., L_nsc_common=L_nsc[1]=L_nsc[2]=···=L_nsc[M_nsc], the UE could use the ((k-1)×L_nsc_common+1)-th to the (k×L_nsc_common)-th entries/positions in the same CSI reporting instance/CSI report/beam report to report the L_nsc_common BM-RI pairs/beam qualities (including the resource indicators such as SSBRIs/CRIs and the corresponding beam metrics such as L1-RSRPs/L1-SINRs) for the non-serving cell k, corresponding to the k-th non-serving cell PCI among the M_nsc non-serving cell PCIs or the k-th lowest (or highest) non-serving cell PCI among the M_nsc non-serving cell PCIs, where k=1, 2, ..., M_nsc. In this case, the UE could report in the same reporting instance/CSI report the BM-RI pairs/beam qualities for only the non-serving cell(s) and is not expected to report in the same reporting instance/CSI report the L_sc BM-RI pairs/beam qualities for the serving cell PCI.

For another example (example 5.2), the UE could report in the same CSI reporting instance the L_sc BM-RI pairs/beam qualities (including the resource indicators and their associated/corresponding beam metrics) for the serving cell or the serving cell PCI and the L_nsc BM-RI pairs/beam qualities (including the resource indicators and their associated/corresponding beam metrics) for the M_nsc non-serving cells or non-serving cell PCIs. The UE could report the L_nsc BM-RI pairs/beam qualities for the M_nsc non-serving cells following the order of the entries in the set of M_nsc values/quantities, e.g., starting from the least significant bit (LSB) to the most significant bit (MSB) or vice versa, and their associations with the M_nsc non-serving cell PCIs.

In this case, the UE could use the 1^{st} to the L_sc-th entries/positions in the CSI reporting instance/CSI report/beam report to report the L_sc BM-RI pairs/beam qualities (including the resource indicators such as SSBRIs/CRIs and the corresponding beam metrics such as L1-RSRPs/L1-SINRs) for the serving cell, and the ( $L_sc + {\sum }_{k ′ = 1}^{k - 1} L _ nsc \left[k′\right] + 1$)-th to the ( $L_sc + {\sum }_{k ′ = 1}^{k - 1} L _ nsc \left[k′\right] + L_nsc \left[k\right]$)-th entries/positions in the same CSI reporting instance/CSI report/beam report to report the L_nsc[k] (i.e., the k-th entry in the set of M_nsc values/quantities indicating the L_nsc BM-RI pairs/beam qualities to be reported in the same reporting instance for the M_nsc non-serving cells) BM-RI pairs/beam qualities (including the resource indicators such as SSBRIs/CRIs and the corresponding beam metrics such as L1-RSRPs/L1-SINRs) for the non-serving cell k, corresponding to the k-th non-serving cell PCI among the M_nsc non-serving cell PCIs or the k-th lowest (or highest) non-serving cell PCI among the M_nsc non-serving cell PCIs, where k=1, 2,..., M_nsc. For M_nsc=1, i.e., for an inter-cell system comprising a serving cell PCI and a non-serving cell PCI, if configured by the network, the UE could use the first L_sc entries/positions in a CSI reporting instance/CSI report/beam report to report the L_sc BM-RI pairs/beam qualities (including the resource indicators and the corresponding beam metrics) for the serving cell, and the (L_sc+1)-th to the (L_sc+L_nsc)-th entries/positions in the same CSI reporting instance/CSI report/beam report to report the L_nsc BM-RI pairs/beam qualities (including the resource indicators and the corresponding beam metrics) for the non-serving cell PCI.

Optionally, the UE could report in the same CSI reporting instance the L_nsc BM-RI pairs/beam qualities (including the resource indicators and their associated/corresponding beam metrics) for only the M_nsc non-serving cells or non-serving cell PCIs. The UE could report the L_nsc BM-RI pairs/beam qualities for the M_nsc non-serving cells following the order of the entries in the set of M_nsc values/quantities, e.g., starting from the least significant bit (LSB) to the most significant bit (MSB) or vice versa, and their associations with the M_nsc non-serving cell PCIs. In this case, the UE could use the ( ${\sum }_{k ′ = 1}^{k - 1} L _ nsc \left[k′\right] + 1$)-th to the ( ${\sum }_{k ′ = 1}^{k - 1} L _ nsc \left[k′\right] + L _ nsc \left[k\right]$)-th entries/positions in the same CSI reporting instance/CSI report/beam report to report the L_nsc[k] (i.e., the k-th entry in the set of M_nsc values/quantities indicating the L_nsc BM-RI pairs/beam qualities to be reported in the same reporting instance for the M_nsc non-serving cells) BM-RI pairs/beam qualities (including the resource indicators such as SSBRIs/CRIs and the corresponding beam metrics such as L1-RSRPs/L1-SINRs) for the non-serving cell k, corresponding to the k-th non-serving cell PCI among the M_nsc non-serving cell PCIs or the k-th lowest (or highest) non-serving cell PCI among the M_nsc non-serving cell PCIs, where k=1, 2,..., M_nsc. For M_nsc=1, i.e., for an inter-cell system comprising a serving cell PCI and a non-serving cell PCI, if configured by the network, the UE could only report in the same reporting instance/CSI report the L_nsc BM-RI pairs/beam qualities (including the resource indicators and the corresponding beam metrics) for the non-serving cell PCI.

Yet for another example (example 5.3), the UE could use a reference entry/position, e.g., the first entry/position, in a CSI reporting instance/CSI report/beam report to report a reference BM-RI pair/beam quality (including the resource indicator and the corresponding beam metric) for either the serving cell PCI or a non-serving cell PCI. The UE could be indicated by the network the reference entry/position in the CSI reporting instance/CSI-Report; this indication could be via higher layer (RRC) or/and MAC CE or/and DCI based signaling; this indication could be via a separate (dedicated) parameter or joint with another parameter.

For instance, the UE could be provided by the network, e.g., in a CSI reporting setting/configuration via the higher layer parameter CSI-ReportConfig, a bitmap with each entry/bit position in the bitmap corresponding to an entry/position in the CSI reporting instance/CSI-Report; if an entry/bit position in the bitmap is set to "1," the corresponding entry/position in the CSI reporting instance/CSI-Report may be used to indicate the reference BM-RI pair/beam quality. The reference entry/position in the CSI reporting instance could be fixed in the system specifications or deterministic per RRC configuration - e.g., the first entry/position in the CSI reporting instance/CSI-Report.

In this case, the bitmap indication for the reference entry/position in the CSI reporting instance/CSI-Report may not be needed. Furthermore, the reference BM-RI pair could contain/include a reference resource indicator and a reference beam metric, wherein the reference beam metric could correspond to the largest measured (or quantized/differential) beam metric such as the largest measured (or quantized/differential) L1-RSRP/L1-SINR among all the measured (or quantized/differential) beam metrics reported in the same reporting instance/CSI report. In the present disclosure, a measured beam metric could correspond to a measured L1-RSRP/L1-SINR, and a quantized/differential beam metric could correspond to a quantized/differential L1-RSRP/L1-SINR calculated with respect to a reference value (e.g., the largest measured L1-RSRP/L1-SINR) and a quantization resolution. The UE could indicate to the network along with/in part of the same CSI report/beam report the PCI information/value corresponding to/associated with the reference BM-RI pair/beam quality, i.e., the reference position/entry (e.g., the first position/entry) in the CSI reporting instance/CSI-Report.

The PCI information could correspond to a PCI value, a CORESETPoolIndex value, a TRP-specific index/ID value, a TRP-specific higher layer signaling index value, a one-bit indicator, a multi-bit indicator with each state of the multi-bit indicator corresponding to a PCI, or an index to an entry in a list/set/pool of (e.g., M_nsc) PCIs. For M_nsc=1, i.e., for an inter-cell system comprising a serving cell PCI and a non-serving cell PCI, the UE could send to the network a one-bit flag/indicator along with/in part of the CSI/beam report(s) to indicate to the network whether the reference BM-RI pair/beam quality (and therefore, the reference entry/position - e.g., the first entry/position - in the CSI reporting instance/CSI-Report) is associated with the serving cell PCI or the non-serving cell PCI. For instance, if the one-bit flag/indicator is set to "1"/"ON"/"enabled," the reference BM-RI pair/beam quality reported in the CSI reporting instance/CSI-Report (or equivalently, the reference entry/position - e.g., the first entry/position - in the CSI reporting instance/CSI-Report) is from/for the serving cell PCI. Otherwise, that is, if the one-bit flag/indicator is set to "0"/"OFF"/"disabled," the reference BM-RI pair/beam quality in the CSI reporting instance/CSI-Report (or equivalently, the reference entry/position - e.g., the first entry/position - in the CSI reporting instance/CSI-Report) is from/for the non-serving cell PCI.

If the reference BM-RI pair/beam quality reported in the reference entry/position - e.g., the first entry/position - in the CSI reporting instance/CSI report/beam report is associated with the serving cell PCI, the UE could follow the procedures specified in the example 5.1 and/or the example 5.2 to report the remaining (L_sc - 1) BM-RI pairs/beam qualities for the serving cell PCI and the L_nsc BM-RI pairs/beam qualities for the M_nsc non-serving cell PCIs in the remaining entries/positions other than the reference entry/position - e.g., the first entry/position - in the CSI reporting instance/CSI-Report.

If the reference BM-RI pair/beam quality reported in the reference entry/position - e.g., the first entry/position - in the CSI reporting instance/CSI report/beam report is associated with a non-serving cell PCI, the UE could follow the procedures specified in the example 5.1 and/or the example 5.2 to report the L_sc BM-RI pairs/beam qualities for the serving cell PCI and the remaining (L_nsc - 1) BM-RI pairs/beam qualities for the M_nsc non-serving cell PCIs in the remaining entries/positions other than the reference entry/position - e.g., the first entry/position - in the CSI reporting instance/CSI-Report, or the UE could follow the procedures specified in the example 5.1 and/or the example 5.2 to report the remaining (L_nsc - 1) BM-RI pairs/beam qualities for the M_nsc non-serving cell PCIs in the remaining entries/positions other than the reference entry/position - e.g., the first entry/position - in the CSI reporting instance/CSI-Report.

Yet for another example (example 5.4), the UE could be explicitly indicated by the network the ordering/positions in the same CSI reporting instance/CSI report/beam report to send the BM-RI pairs/beam qualities for (i) the serving cell and the M_nsc non-serving cells or (ii) only the M_nsc non-serving cells; this indication could be via higher layer (RRC) or/and MAC CE or/and DCI based signaling; this indication could be via a separate (dedicated) parameter or joint with another parameter. For instance, the UE could receive from the network one or more (e.g., M_nsc+1) MAC CE commands/bitmaps each indicating the ordering/position(s) in the same CSI reporting instance/CSI report/beam report to send the BM-RI pairs/beam qualities for a PCI, corresponding to either the serving cell PCI or a non-serving cell PCI.

Each MAC CE command/bitmap could indicate/include PCI information/value. The PCI information could correspond to a PCI value, a CORESETPoolIndex value, a TRP-specific index/ID value, a TRP-specific higher layer signaling index value, a one-bit indicator, a multi-bit indicator with each state of the multi-bit indicator corresponding to a PCI, or an index to an entry in a list/set/pool of (e.g., M_nsc) PCIs. For instance, the UE could receive from the network a MAC CE command/bitmap for the serving cell with each entry in the MAC CE command/bitmap corresponding to an entry/position in the CSI reporting instance/CSI report/beam report; if an entry in the MAC CE command/bitmap is set to "1," the UE could/would use the corresponding entry/position in the CSI reporting instance/CSI report/beam report to send the BM-RI pair/beam quality for the serving cell.

The UE could receive from the network another MAC CE command/bitmap for the non-serving cell k (corresponding to the k-th non-serving cell PCI among the M_nsc non-serving cell PCIs, the k-th entry in the list/set/pool of M_nsc non-serving cell PCIs or the k-th lowest (or highest) non-serving cell PCI value among the M_nsc non-serving cell PCIs, where k=1, 2, ..., M_nsc) with each entry in the MAC CE command/bitmap corresponding to an entry/position in the same CSI reporting instance/CSI report/beam report; if an entry in the MAC CE command/bitmap is set to "1," the UE could/would use the corresponding entry/position in the same CSI reporting instance/CSI report/beam report to send the BM-RI pair/beam quality for the non-serving cell k.

Alternatively, the UE could autonomously/dynamically determine the M_nsc non-serving cells or non-serving cell PCIs out of the total N_nsc non-serving cells or non-serving cell PCIs and report to the network, e.g., in a single CSI reporting instance/CSI-Report, the resource indicators such as SSBRIs/CRIs and their corresponding/associated beam metrics such as L1-RSRPs/L1-SINRs for (i) both the serving cell and the selected M_nsc non-serving cells or (ii) only the selected M_nsc non-serving cells. In this case, the UE may also need to indicate to the network, e.g., along with/in part of the same CSI report(s)/beam report(s), the number/quantity of the dynamically selected non-serving cells (i.e., M_nsc) and/or which M_nsc non-serving cells or non-serving cell PCIs out of the total N_nsc non-serving cells or non-serving cell PCIs (e.g., in form of their PCI values or indices of entries in a list of PCI values or other higher layer signaling index values) the BM-RI pairs/beam qualities reported in the same CSI reporting instance/CSI-Report for the non-serving cell(s) are associated with.

The UE could also report to the network, e.g., along with/in part of the same CSI report(s)/beam report(s), the number/quantity L_nsc (1 ≤ L_nsc ≤ K_nsc) of resource indicators/beam metrics reported in the same CSI reporting instance/CSI-Report for the selected M_nsc non-serving cells and/or a set of M_nsc values/quantities with each entry in the set corresponding to the number/quantity of BM-RI pairs/beam qualities (including the resource indicators and their corresponding/associated beam metrics) reported in the same CSI reporting instance/CSI-Report for a different non-serving cell PCI.

Furthermore, the UE could report to the network the number/quantity L_sc (1 ≤ L_sc ≤ K_sc) of resource indicators/beam metrics reported in the same CSI reporting instance/CSI-Report for the serving cell PCI. The UE could be higher layer configured/indicated by the network (e.g., provided by the CSI reporting configuration/setting via the higher layer parameter CSI-ReportConfig) the total/maximum number K_nsc of resource indicators/beam metrics allowed to be reported in the same CSI reporting instance/CSI-Report for non-serving cell(s) and/or the total/maximum number K_sc of resource indicators/beam metrics allowed to be reported in the same CSI reporting instance/CSI-Report for the serving cell.

For instance, the candidate values for K_nsc could be 4, 8 or 16, and the candidate values for K_sc could be 4, 8 or 16. Optionally, the UE could be configured/indicated by the network the total/maximum number (K_tot=K_nsc+K_sc) of resource indicators/beam metrics allowed to be reported in the same CSI reporting instance/CSI-Report for both the serving cell PCI and non-serving cell PCI(s) - e.g., provided by the CSI reporting configuration/setting via the higher layer parameter CSI-ReportConfig; the candidate values for K_tot could be 4, 8 or 16.

As discussed above, the UE could indicate to the network, e.g., along with/in part of CSI report(s)/beam report(s), which M_nsc non-serving cells or non-serving cell PCIs out of the total N_nsc non-serving cells or non-serving cell PCIs (e.g., in form of their PCI values, indices of entries in a list of PCI values, or other higher layer signaling index values) the BM-RI pairs/beam qualities reported in the same CSI reporting instance/CSI-Report for the non-serving cell(s) are associated with. In addition, the UE could indicate to the network the number/quantity M_nsc of the selected non-serving cell PCIs.

For example, the UE could indicate to the network, e.g., in part of the CSI/beam report(s) or via PUSCH MAC CE, one or more (e.g., M_nsc) PCI values in addition to the serving cell PCI, with which the BM-RI pairs/beam qualities reported in the same CSI reporting instance/CSI-Report for the non-serving cell(s) are associated.

For another example, the UE could send to the network, e.g., in part of the CSI/beam report(s) or via PUSCH MAC CE, a bitmap indicating M_nsc non-serving cell PCIs from a set/list/pool of N_nsc non-serving cell PCIs higher layer configured to the UE. The bitmap indicated M_nsc non-serving cell PCIs are associated with the BM-RI pairs/beam qualities reported in the same CSI reporting instance/CSI-Report for the non-serving cell(s).

Yet for another example, the UE could indicate to the network, e.g., in part of the CSI/beam report(s) or via PUSCH MAC CE, M_nsc indexes each corresponding to an entry in a set/list/pool of N_nsc PCIs higher layer configured to the UE. The M_nsc PCIs corresponding to/associated with the indicated M_nsc entries in the set/list/pool of N_nsc PCIs are associated with the BM-RI pairs/beam qualities reported in the same CSI reporting instance/CSI-Report for the non-serving cell(s).

Yet for another example, the UE could indicate to the network, e.g., in part of the CSI/beam report(s) or via PUSCH MAC CE, M_nsc entity IDs with each entity ID indicating a non-serving cell. In one example, an entity ID could be a PCI value, a CORESETPoolIndex value or other TRP-specific higher layer signaling index/ID value. In another example, an entity ID could be a multi-bit indicator with each state of the multi-bit indicator corresponding to a PCI value/CORESETPoolIndex value/other TRP-specific higher signaling index/ID. In yet another example, an entity ID could be an index corresponding to an entry in a set/list/pool of N_nsc PCIs higher layer configured to the UE.

Yet for another example, the UE could report in a single CSI reporting instance/CSI-Report K BM-RI pairs/beam qualities (including K resource indicators such as SSBRIs/CRIs and their corresponding K beam metrics such as L1-RSRPs/L1-SINRs) associated with both the serving cell PCI and the non-serving cell PCI(s) or only the serving cell PCI or only the non-serving cell PCI(s). The UE could indicate to the network, e.g., in part of the same CSI/beam report(s) or via PUSCH MAC CE, K PCI values each corresponding to/associated with a BM-RI pair/beam quality (including the resource indicator such as SSBRI/CRI and the corresponding beam metric such as L1-RSRP/L1-SINR) reported in the same CSI reporting instance/CSI report. The reported K PCI values and the K BM-RI pairs/beam qualities (including the K resource indicators such as SSBRIs/CRIs and their corresponding K beam metrics such as L1-RSRPs/L1-SINRs) reported in the same CSI reporting instance/CSI report could have one-to-one correspondence starting from the LSB to the MSB or vice versa. For instance, the k-th reported PCI value among the K reported PCI values could be associated with/mapped to the k-th reported BM-RI pair/beam quality among the K reported BM-RI pairs/beam qualities in the same CSI reporting instance/CSI report, where k=1, 2, ..., K.

Yet for another example, the UE could report in a single CSI reporting instance/CSI-Report K BM-RI pairs/beam qualities (including K resource indicators such as SSBRIs/CRIs and their corresponding K beam metrics such as L1-RSRPs/L1-SINRs) associated with both the serving cell PCI and the non-serving cell PCI(s) or only the serving cell PCI or only the non-serving cell PCI(s). The UE could indicate to the network, e.g., in part of the same CSI/beam report(s) or via PUSCH MAC CE, K indexes each corresponding to an entry in a set/list/pool of PCIs (e.g., including both the serving cell PCI or non-serving cell PCIs or only the non-serving cell PCIs). The reported K indexes (and therefore, the corresponding indicated K PCI values) and the K BM-RI pairs/beam qualities (including the K resource indicators such as SSBRIs/CRIs and their corresponding K beam metrics such as L1-RSRPs/L1-SINRs) reported in the same CSI reporting instance/CSI report could have one-to-one correspondence starting from the LSB to the MSB or vice versa. For instance, the k-th reported index among the K reported indexes (and therefore, the corresponding indicated PCI value) could be associated with/mapped to the k-th reported BM-RI pair/beam quality among the K reported BM-RI pairs/beam qualities in the same CSI reporting instance/CSI report, where k=1, 2, ..., K.

Yet for another example, the UE could report in a single CSI reporting instance/CSI-Report K BM-RI pairs/beam qualities associated with both the serving cell PCI and the non-serving cell PCI(s) or only the serving cell PCI or only the non-serving cell PCI(s). The UE could indicate to the network, e.g., in part of the same CSI/beam report(s) or via PUSCH MAC CE, K entity IDs with each entity ID corresponding to a serving cell or a non-serving cell. In one example, an entity ID could be a one-bit indicator indicating either the serving cell PCI or the non-serving cell PCI. In another example, an entity ID could be a PCI value, a CORESETPoolIndex value or other TRP-specific higher layer signaling index/ID.

In yet another example, an entity ID could be a multi-bit indicator with each state of the multi-bit indicator corresponding to a PCI value/CORESETPoolIndex value/other TRP-specific higher signaling index/ID.

In yet another example, an entity ID could be an index corresponding to an entry in a set/list/pool of PCIs. The reported K entity IDs and the K BM-RI pairs/beam qualities (including the K resource indicators such as SSBRIs/CRIs and their corresponding K beam metrics such as L1-RSRPs/L1-SINRs) reported in the same CSI reporting instance/CSI report could have one-to-one correspondence starting from the LSB to the MSB or vice versa. For instance, the k-th reported entity ID among the K reported entity IDs could be associated with/mapped to the k-th reported BM-RI pair/beam quality among the K reported BM-RI pairs/beam qualities in the same CSI reporting instance/CSI report, where k=1, 2, ..., K.

Yet for another example, the UE could report in a single CSI reporting instance/CSI-Report K BM-RI pairs/beam qualities (including K resource indicators such as SSBRIs/CRIs and their corresponding K beam metrics such as L1-RSRPs/L1-SINRs) associated with both the serving cell PCI and the non-serving cell PCI(s) or only the serving cell PCI or only the non-serving cell PCI(s). The UE could indicate to the network, e.g., in part of the same CSI/beam report(s) or via PUSCH MAC CE, K1≤K non-serving cell PCI values each corresponding to/associated with a reported BM-RI pair/beam quality for the non-serving cell PCI. The reported K1 non-serving cell PCI values and the K1 BM-RI pairs/beam qualities (including K1 resource indicators such as SSBRIs/CRIs and their corresponding K1 beam metrics such as L1-RSRPs/L1-SINRs) reported in the same CSI reporting instance/CSI report for the non-serving cell(s) could have one-to-one correspondence starting from the LSB to the MSB or vice versa.

For instance, the k1-th reported non-serving cell PCI value among the K1 reported non-serving cell PCI values could be associated with/mapped to the k1-th reported BM-RI pair/beam quality among the K1 reported BM-RI pairs/beam qualities for the non-serving cell(s) in the same CSI reporting instance/CSI report, where k1=1, 2, ..., K1. One or more of the reported K BM-RI pairs/beam qualities, and therefore the corresponding entries/positions, in the same CSI reporting instance/CSI-Report could be for/associated with the serving cell PCI. The one or more of the reported K BM-RI pairs/beam qualities, and therefore the corresponding entries/positions, in the same CSI reporting instance/CSI-Report for the serving cell PCI could be known to both the network and UE sides according to: (1) fixed in the system specifications or deterministic per RRC configurations, (2) configured/indicated by the network via RRC and/or MAC CE and/or DCI signaling, or (3) autonomously determined by the UE and reported to the network, e.g., in part of the CSI/beam report(s) or via PUSCH MAC CE.

Yet for another example, the UE could report in a single CSI reporting instance/CSI-Report K BM-RI pairs/beam qualities (including K resource indicators such as SSBRIs/CRIs and their corresponding K beam metrics such as L1-RSRPs/L1-SINRs) associated with both the serving cell PCI and the non-serving cell PCI(s) or only the serving cell PCI or only the non-serving cell PCI(s). The UE could indicate to the network, e.g., in part of the same CSI/beam report(s) or via PUSCH MAC CE, K1≤K indexes each corresponding to an entry in a set/list/pool of non-serving cell PCIs. The reported K1 indexes (and therefore, the corresponding indicated K1 non-serving cell PCI values) and the K1 BM-RI pairs/beam qualities (including K1 resource indicators such as SSBRIs/CRIs and their corresponding K1 beam metrics such as L1-RSRPs/L1-SINRs) reported in the same CSI reporting instance/CSI report for the non-serving cell(s) could have one-to-one correspondence starting from the LSB to the MSB or vice versa.

For instance, the k1-th reported index among the K1 reported indexes (and therefore, the corresponding indicated non-serving cell PCI value) could be associated with/mapped to the k1-th reported BM-RI pair/beam quality among the K1 reported BM-RI pairs/beam qualities for the non-serving cell(s) in the same CSI reporting instance/CSI report, where k1=1, 2, ..., K1. One or more of the reported K BM-RI pairs/beam qualities, and therefore the corresponding entries/positions, in the same CSI reporting instance/CSI-Report could be for/associated with the serving cell PCI. The one or more of the reported K BM-RI pairs/beam qualities, and therefore the corresponding entries/positions, in the same CSI reporting instance/CSI-Report for the serving cell PCI could be known to both the network and UE sides according to: (1) fixed in the system specifications or deterministic per RRC configurations, (2) configured/indicated by the network via RRC and/or MAC CE and/or DCI signaling, or (3) autonomously determined by the UE and reported to the network, e.g., in part of the CSI/beam report(s) or via PUSCH MAC CE.

Yet for another example, the UE could report in a single CSI reporting instance/CSI-Report K BM-RI pairs/beam qualities associated with both the serving cell PCI and the non-serving cell PCI(s) or only the serving cell PCI or only the non-serving cell PCI(s). The UE could indicate to the network, e.g., in part of the same CSI/beam report(s) or via PUSCH MAC CE, K1≤K entity IDs with each entity ID corresponding to a non-serving cell.

In one example, an entity ID could be a non-serving cell PCI value, a CORESETPoolIndex value associated with a non-serving cell PCI or other TRP-specific higher layer signaling index/ID associated with a non-serving cell PCI.

In yet another example, an entity ID could be a multi-bit indicator with each state of the multi-bit indicator corresponding to a non-serving cell PCI value/CORESETPoolIndex value associated with a non-serving cell PCI/other TRP-specific higher signaling index/ID associated with a non-serving cell PCI. In yet another example, an entity ID could be an index corresponding to an entry in a set/list/pool of non-serving cell PCIs. The reported K1 entity IDs and the K1 BM-RI pairs/beam qualities (including K1 resource indicators such as SSBRIs/CRIs and their corresponding K1 beam metrics such as L1-RSRPs/L1-SINRs) reported in the same CSI reporting instance/CSI report could have one-to-one correspondence starting from the LSB to the MSB or vice versa.

For instance, the k1-th reported entity ID among the K1 reported entity IDs could be associated with/mapped to the k1-th reported BM-RI pair/beam quality among the K1 reported BM-RI pairs/beam qualities for the non-serving cell(s) in the same CSI reporting instance/CSI report, where k1=1, 2, ..., K1. One or more of the reported K BM-RI pairs/beam qualities, and therefore the corresponding entries/positions, in the same CSI reporting instance/CSI-Report could be for/associated with the serving cell PCI. The one or more of the reported K BM-RI pairs/beam qualities, and therefore the corresponding entries/positions, in the same CSI reporting instance/CSI-Report for the serving cell PCI could be known to both the network and UE sides according to: (1) fixed in the system specifications or deterministic per RRC configurations, (2) configured/indicated by the network via RRC and/or MAC CE and/or DCI signaling, or (3) autonomously determined by the UE and reported to the network, e.g., in part of the CSI/beam report(s) or via PUSCH MAC CE.

The UE could indicate to the network the number L_sc of BM-RI pairs/beam qualities (including the resource indicators and their corresponding/associated beam metrics) reported in a single reporting instance/CSI report for the serving cell, and/or send to the network a set of M_nsc values/quantities with each entry in the set indicating the number of BM-RI pairs/beam qualities (including the resource indicators and their corresponding/associated beam metrics) reported in the same CSI reporting instance/CSI-Report for a non-serving cell PCI.

For example, the k-th entry L_nsc[k] (k ∈ {1, ..., M_nsc}) in the set of M_nsc values/quantities could indicate to the network that the UE could report in the same CSI reporting instance/CSI-Report L_nsc[k] BM-RI pairs/beam qualities (including the resource indicators and their corresponding/associated beam metrics) for the non-serving cell PCI associated with the k-th entry in the set of M_nsc values/quantities. As aforementioned, the UE could autonomously select the M_nsc non-serving cell PCIs out of the total N_nsc non-serving cell PCIs to perform beam measurement and reporting. There could be various means to associate/link the L_nsc BM-RI pairs/beam qualities and the M_nsc non-serving cell PCIs.

For example, the set of M_nsc values/quantities indicating the L_nsc BM-RI pairs/beam qualities reported in the same reporting instance for the M_nsc non-serving cell(s) could be absent/an empty set/not indicated in the corresponding CSI/beam report or PUSCH MAC CE. In this case, the network could expect the UE to report in the same reporting instance/CSI report L_nsc/M_nsc or [L_nsc/M_nsc] or [L_nsc/M_nsc] BM-RI pairs/beam qualities for each of the M_nsc non-serving cell PCIs.

For another example, all the entries in the set of M_nsc values/quantities indicating the L_nsc BM-RI pairs/beam qualities reported in the same reporting instance/CSI report for the M_nsc non-serving cell(s) could be all equal, i.e., L_nsc[1]=L_nsc[2]=···=L_nsc[M_nsc]=L_nsc_common. In this case, the UE could report in the same CSI reporting instance/CSI-Report L_nsc_common BM-RI pairs/beam qualities for each of the M_nsc non-serving cell PCIs.

Yet for another example, the k-th entry (i.e., L_nsc[k]) in the set of M_nsc values/quantities indicating the L_nsc BM-RI pairs/beam qualities reported in the same reporting instance/CSI report for the M_nsc non-serving cell(s) is associated with/linked to the k-th non-serving cell PCI among the M_nsc non-serving cell PCIs, where k=1, 2, ..., M_nsc.

Yet for another example, the k-th entry (i.e., L_nsc[k]) in the set of M_nsc values/quantities indicating the L_nsc BM-RI pairs/beam qualities reported in the same reporting instance/CSI report for the M_nsc non-serving cell(s) is associated with/linked to the k-th lowest (or highest) non-serving cell PCI value among the M_nsc non-serving cell PCIs, where k=1, 2, ..., M_nsc.

Yet for another example, the UE could explicitly indicate to the network the association/mapping/linkage between the entries in the set of M_nsc values/quantities indicating the L_nsc BM-RI pairs/beam qualities reported in the same reporting instance/CSI report for the M_nsc non-serving cell(s) and the M_nsc non-serving cell PCIs. For instance, the UE could send to the network one or more parameters each indicating/including an index to an entry in the set of M_nsc values/quantities indicating the L_nsc BM-RI pairs/beam qualities and a non-serving cell PCI value. The entry in the set of M_nsc values/quantities indicating the L_nsc BM-RI pairs/beam qualities and the non-serving cell PCI are associated if they are indicated/included in the same parameter.

There could be various means to order the resource indicators such as SSBRIs/CRIs (and therefore, the corresponding beam metrics such as L1-RSRPs/L1-SINRs) for (i) both the serving cell and the non-serving cell(s) or (ii) only the non-serving cell(s) in the same reporting instance/CSI report.

For example (example 5.5), the UE could report in the same CSI reporting instance/CSI-Report a total of L_tot BM-RI pairs/beam qualities (including the resource indicators and the corresponding beam metrics) or a total of L_tot resource indicators such as SSBRIs/CRIs (and therefore, the corresponding L_tot beam metrics such as L1-RSRPs/L1-SINRs) for both the serving cell and the non-serving cell(s), where L_tot = L_sc + L_nsc, and L_sc is the number of resource indicators/beam metrics reported for the serving cell and L_nsc is the number of resource indicators/beam metrics reported for the M_nsc non-serving cell(s) in the same CSI reporting instance/CSI-Report.

In this case, the 1^{st} to the L_sc-th entries/positions in the CSI reporting instance/CSI report/beam report could include/indicate the L_sc BM-RI pairs/beam qualities (including the resource indicators such as SSBRIs/CRIs and the corresponding beam metrics such as L1-RSRPs/L1-SINRs) for the serving cell, and the ( $L_sc + {\sum }_{k ′ = 1}^{k - 1} L _ nsc \left[k′\right] + 1$)-th to the ( $L_sc + {\sum }_{k ′ = 1}^{k - 1} L _ nsc \left[k′\right] + L _ nsc \left[k\right]$)-th entries/positions in the same CSI reporting instance/CSI report/beam report could include/indicate the L_nsc[k] BM-RI pairs/beam qualities (including the resource indicators such as SSBRIs/CRIs and the corresponding beam metrics such as L1-RSRPs/L1-SINRs) for the non-serving cell k, corresponding to the k-th non-serving cell PCI among the M_nsc non-serving cell PCIs or the k-th lowest (or highest) non-serving cell PCI among the M_nsc non-serving cell PCIs, where k=1, 2,..., M_nsc. For M_nsc=1, i.e., for an inter-cell system comprising a serving cell PCI and a non-serving cell PCI, the UE could use the first L_sc entries/positions in a CSI reporting instance/CSI report/beam report to report the L_sc BM-RI pairs/beam qualities (including the resource indicators and the corresponding beam metrics) for the serving cell, and the (L_sc+1)-th to the (L_sc+L_nsc)-th entries/positions in the same CSI reporting instance/CSI report/beam report to report the L_nsc BM-RI pairs/beam qualities (including the resource indicators and the corresponding beam metrics) for the non-serving cell PCI.

Optionally, the UE could report in the same CSI reporting instance/CSI-Report a total of L_nsc BM-RI pairs/beam qualities (including the resource indicators and the corresponding beam metrics) or a total of L_nsc resource indicators such as SSBRIs/CRIs (and therefore, the corresponding L_nsc beam metrics such as L1-RSRPs/L1-SINRs) for only the non-serving cell(s), where L_nsc is the number of resource indicators/beam metrics reported for the M_nsc non-serving cell(s) in the same CSI reporting instance/CSI-Report.

In this case, the ( ${\sum }_{k ′ = 1}^{k - 1} L _ nsc \left[k′\right] + 1$)-th to the ( ${\sum }_{k ′ = 1}^{k - 1} L _ nsc \left[k′\right] + L _ nsc \left[k\right]$)-th entries/positions in the same CSI reporting instance/CSI report/beam report could include/indicate the L_nsc[k] BM-RI pairs/beam qualities (including the resource indicators such as SSBRIs/CRIs and the corresponding beam metrics such as L1-RSRPs) for the non-serving cell k, corresponding to the k-th non-serving cell PCI among the M_nsc non-serving cell PCIs or the k-th lowest (or highest) non-serving cell PCI among the M_nsc non-serving cell PCIs, where k=1, 2,..., M_nsc. For M_nsc=1, i.e., for an inter-cell system comprising a serving cell PCI and a non-serving cell PCI, if configured by the network, the UE could only report in the same reporting instance/CSI report the L_nsc BM-RI pairs/beam qualities (including the resource indicators and the corresponding beam metrics) for the non-serving cell PCI.

If the set of M_nsc values/quantities indicating the L_nsc BM-RI pairs/beam qualities reported in the same reporting instance for the M_nsc non-serving cell(s) is absent/an empty set/not indicated in the corresponding CSI/beam report(s) or PUSCH MAC CE, the UE could use the 1^{st} to the L_sc-th entries/positions in the CSI reporting instance/CSI report/beam report to report the L_sc BM-RI pairs/beam qualities (including the resource indicators such as SSBRIs/CRIs and the corresponding beam metrics such as L1-RSRPs) for the serving cell PCI, and the (L_sc+(k-1)×L_nsc_0+1)-th to the (L_sc+k× L_nsc_0)-th entries/positions in the same CSI reporting instance/CSI report/beam report to report the L_nsc_0 BM-RI pairs/beam qualities (including the resource indicators such as SSBRIs/CRIs and the corresponding beam metrics such as L1-RSRPs) for the non-serving cell k, corresponding to the k-th non-serving cell PCI among the M_nsc non-serving cell PCIs or the k-th lowest (or highest) non-serving cell PCI among the M_nsc non-serving cell PCIs, where k=1, 2,..., M_nsc and L_nsc_0= L_nsc/M_nsc or [L_nsc/M_nsc] or [L_nsc/M_nsc].

For M_nsc=1, i.e., for an inter-cell system comprising a serving cell PCI and a non-serving cell PCI, the UE could use the first L_sc entries/positions in a CSI reporting instance/CSI report/beam report to report the L_sc BM-RI pairs/beam qualities (including the resource indicators and the corresponding beam metrics) for the serving cell, and the (L_sc+1)-th to the (L_sc+L_nsc_0)-th entries/positions in the same CSI reporting instance/CSI report/beam report to report the L_nsc_0 BM-RI pairs/beam qualities (including the resource indicators and the corresponding beam metrics) for the non-serving cell PCI.

Optionally, if the set of M_nsc values/quantities indicating the L_nsc BM-RI pairs/beam qualities reported in the same reporting instance for the M_nsc non-serving cell(s) is absent/an empty set/not indicated in the corresponding CSI/beam report(s) or PUSCH MAC CE, the UE could use the ((k-1)×L_nsc_0+1)-th to the (k× L_nsc_0)-th entries/positions in the same CSI reporting instance/CSI report/beam report to report the L_nsc_0 BM-RI pairs/beam qualities (including the resource indicators such as SSBRIs/CRIs and the corresponding beam metrics such as L1-RSRPs) for the non-serving cell k, corresponding to the k-th non-serving cell PCI among the M_nsc non-serving cell PCIs or the k-th lowest (or highest) non-serving cell PCI among the M_nsc non-serving cell PCIs, where k=1, 2, ..., M_nsc and L_nsc_0= L_nsc/M_nsc or [L_nsc/M_nsc] or [L_nsc/M_nsc]. In this case, the UE could report in the same reporting instance/CSI report the BM-RI pairs/beam qualities for only the non-serving cell(s) and is not expected to report in the same reporting instance/CSI report the L_sc BM-RI pairs/beam qualities for the serving cell PCI.

If all the entries in the set of M_nsc values/quantities indicating the L_nsc BM-RI pairs/beam qualities reported in the same reporting instance for the M_nsc non-serving cell(s) are equal, i.e., L_nsc_common=L_nsc[1]=L_nsc[2]=···=L_nsc[M_nsc], the UE could use the 1^{st} to the L_sc-th entries/positions in the CSI reporting instance/CSI report/beam report to report the L_sc BM-RI pairs/beam qualities (including the resource indicators such as SSBRIs/CRIs and the corresponding beam metrics such as L1-RSRPs) for the serving cell, and the (L_sc+(k-1)×L_nsc_common+1)-th to the (L_sc+k×L_nsc_common)-th entries/positions in the same CSI reporting instance/CSI report/beam report to report the L_nsc_common BM-RI pairs/beam qualities (including the resource indicators such as SSBRIs/CRIs and the corresponding beam metrics such as L1-RSRPs) for the non-serving cell k, corresponding to the k-th non-serving cell PCI among the M_nsc non-serving cell PCIs or the k-th lowest (or highest) non-serving cell PCI among the M_nsc non-serving cell PCIs, where k=1, 2, ..., M_nsc. For M_nsc=1, i.e., for an inter-cell system comprising a serving cell PCI and a non-serving cell PCI, the UE could use the first L_sc entries/positions in a CSI reporting instance/CSI report/beam report to report the L_sc BM-RI pairs/beam qualities (including the resource indicators and the corresponding beam metrics) for the serving cell PCI, and the (L_sc+1)-th to the (L_sc+ L_nsc_common)-th entries/positions in the same CSI reporting instance/CSI report/beam report to report the L_nsc_common BM-RI pairs/beam qualities (including the resource indicators and the corresponding beam metrics) for the non-serving cell PCI.

Optionally, if all the entries in the set of M_nsc values/quantities indicating the L_nsc BM-RI pairs/beam qualities reported in the same reporting instance for the M_nsc non-serving cell(s) are equal, i.e., L_nsc_common=L_nsc[1]=L_nsc[2]=···=L_nsc[M_nsc], the UE could use the ((k-1) × L_nsc_common+1)-th to the (k × L_nsc_common)-th entries/positions in the same CSI reporting instance/CSI report/beam report to report the L_nsc_common BM-RI pairs/beam qualities (including the resource indicators such as SSBRIs/CRIs and the corresponding beam metrics such as L1-RSRPs) for the non-serving cell k, corresponding to the k-th non-serving cell PCI among the M_nsc non-serving cell PCIs or the k-th lowest (or highest) non-serving cell PCI among the M_nsc non-serving cell PCIs, where k=1, 2, ..., M_nsc. In this case, the UE could report in the same reporting instance/CSI report the BM-RI pairs/beam qualities for only the non-serving cell(s) and is not expected to report in the same reporting instance/CSI report the L_sc BM-RI pairs/beam qualities for the serving cell PCI.

For another example (example 5.6), the UE could report in the same CSI reporting instance/CSI-Report the L_sc BM-RI pairs/beam qualities (including the resource indicators and their associated/corresponding beam metrics) for the serving cell PCI and the L_nsc BM-RI pairs/beam qualities (including the resource indicators and their associated/corresponding beam metrics) for the M_nsc non-serving cell PCIs. The UE could report the L_nsc BM-RI pairs/beam qualities for the M_nsc non-serving cells following the order of the entries in the set of M_nsc values/quantities, e.g., starting from the LSB to the MSB or vice versa, and their associations with the M_nsc non-serving cell PCIs.

In this case, the UE could use the 1^{st} to the L_sc-th entries/positions in the CSI reporting instance/CSI report/beam report to report the L_sc BM-RI pairs/beam qualities (including the resource indicators such as SSBRIs/CRIs and the corresponding beam metrics such as L1-RSRPs/L1-SINRs) for the serving cell PCI, and the ( $L_sc + {\sum }_{k ′ = 1}^{k - 1} L _ nsc \left[k′\right] + 1$)-th to the ( $L_sc + {\sum }_{k ′ = 1}^{k - 1} L _ nsc \left[k′\right] + L _ nsc \left[k\right]$)-th entries/positions in the same CSI reporting instance/CSI report/beam report to report the L_nsc[k] (i.e., the k-th entry in the set of M_nsc values/quantities indicating the L_nsc BM-RI pairs/beam qualities reported in the same reporting instance for the M_nsc non-serving cell PCIs) BM-RI pairs/beam qualities (including the resource indicators such as SSBRIs/CRIs and the corresponding beam metrics such as L1-RSRPs) for the non-serving cell k, corresponding to the k-th non-serving cell PCI among the M_nsc non-serving cell PCIs or the k-th lowest (or highest) non-serving cell PCI among the M_nsc non-serving cell PCIs, where k=1, 2,..., M_nsc.

For M_nsc=1, i.e., for an inter-cell system comprising a serving cell PCI and a non-serving cell PCI, the UE could use the first L_sc entries/positions in a CSI reporting instance/CSI report/beam report to report the L_sc BM-RI pairs/beam qualities (including the resource indicators and the corresponding beam metrics) for the serving cell PCI, and the (L_sc+1)-th to the (L_sc+L_nsc)-th entries/positions in the same CSI reporting instance/CSI report/beam report to report the L_nsc BM-RI pairs/beam qualities (including the resource indicators and the corresponding beam metrics) for the non-serving cell PCI.

Optionally, the UE could report in the same CSI reporting instance/CSI-Report the L_nsc BM-RI pairs/beam qualities (including the resource indicators and their associated/corresponding beam metrics) for only the M_nsc non-serving cell PCIs. The UE could report the L_nsc BM-RI pairs/beam qualities for the M_nsc non-serving cells following the order of the entries in the set of M_nsc values/quantities, e.g., starting from the LSB to the MSB or vice versa, and their associations with the M_nsc non-serving cell PCIs. In this case, the UE could use the ( ${\sum }_{k ′ = 1}^{k - 1} L _ nsc \left[k′\right] + 1$)-th to the ( ${\sum }_{k ′ = 1}^{k - 1} L _ nsc \left[k′\right] + L _ nsc \left[k\right]$)-th entries/positions in the same CSI reporting instance/CSI report/beam report to report the L_nsc[k] (i.e., the k-th entry in the set of M_nsc values/quantities indicating the L_nsc BM-RI pairs/beam qualities reported in the same reporting instance for the M_nsc non-serving cell PCIs) BM-RI pairs/beam qualities (including the resource indicators such as SSBRIs/CRIs and the corresponding beam metrics such as L1-RSRPs/L1-SINRs) for the non-serving cell k, corresponding to the k-th non-serving cell PCI among the M_nsc non-serving cell PCIs or the k-th lowest (or highest) non-serving cell PCI among the M_nsc non-serving cell PCIs, where k=1, 2,..., M_nsc. For M_nsc=1, i.e., for an inter-cell system comprising a serving cell PCI and a non-serving cell PCI, if configured by the network, the UE could only report in the same reporting instance/CSI report the L_nsc BM-RI pairs/beam qualities (including the resource indicators and the corresponding beam metrics) for the non-serving cell PCI.

Yet for another example (example 5.7), the UE could use a reference entry/position, e.g., the first entry/position, in a CSI reporting instance/CSI report/beam report to report a reference BM-RI pair/beam quality (including the resource indicator and the corresponding beam metric) for either the serving cell PCI or a non-serving cell PCI. The UE could indicate to the network the reference entry/position in the CSI reporting instance/CSI-Report; this indication could be sent in part of the beam/CSI report(s) or via PUSCH MAC CE.

For instance, the UE could send to the network, e.g., in part of the beam/CSI report(s) or PUSCH MAC CE, a bitmap with each entry/bit position in the bitmap corresponding to an entry/position in the CSI reporting instance/CSI-Report; if an entry/bit position in the bitmap is set to "1," the corresponding entry/position in the CSI reporting instance/CSI-Report is used by the UE to indicate the reference BM-RI pair/beam quality. The reference entry/position in the CSI reporting instance/CSI-Report could be fixed in the system specifications or deterministic per RRC configuration - e.g., the first entry/position in the CSI reporting instance/CSI-Report.

In this case, the bitmap indication for the reference entry/position in the CSI reporting instance/CSI-Report may not be needed. Furthermore, the reference BM-RI pair could contain/include a reference resource indicator and a reference beam metric, wherein the reference beam metric could correspond to the largest measured (or quantized/differential) beam metric such as the largest measured (or quantized/differential) L1-RSRP/L1-SINR among all the measured (or quantized/differential) beam metrics reported in the same reporting instance/CSI report.

In the present disclosure, a measured beam metric could correspond to a measured L1-RSRP/L1-SINR, and a quantized/differential beam metric could correspond to a quantized/differential L1-RSRP/L1-SINR calculated with respect to a reference value (e.g., the largest measured L1-RSRP/L1-SINR) and a quantization resolution. The UE could indicate to the network along with/in part of the same CSI/beam report the PCI information/value corresponding to/associated with the reference BM-RI pair/beam quality, i.e., the reference position/entry (e.g., the first position/entry) in the CSI reporting instance/CSI-Report. The PCI information could correspond to a PCI value, a CORESETPoolIndex value, a TRP-specific index/ID value, a TRP-specific higher layer signaling index value, a one-bit indicator, a multi-bit indicator with each state of the multi-bit indicator corresponding to a PCI, or an index to an entry in a list/set/pool of (e.g., M_nsc) PCIs.

For M _nsc=1, i.e., for an inter-cell system comprising a serving cell PCI and a non-serving cell PCI, the UE could send to the network a one-bit flag/indicator along with/in part of the same CSI/beam report(s) to indicate to the network whether the reference BM-RI pair/beam quality (and therefore, the reference entry/position - e.g., the first entry/position - in the CSI reporting instance/CSI-Report) is associated with the serving cell PCI or the non-serving cell PCI. For instance, if the one-bit flag/indicator is set to "1"/"ON"/"enabled," the reference BM-RI pair/beam quality reported in the CSI reporting instance/CSI-Report (or equivalently, the reference entry/position - e.g., the first entry/position - in the CSI reporting instance/CSI-Report) is from/for the serving cell PCI. Otherwise, that is, if the one-bit flag/indicator is set to "0"/"OFF"/"disabled," the reference BM-RI pair/beam quality in the CSI reporting instance/CSI-Report (or equivalently, the reference entry/position - e.g., the first entry/position - in the CSI reporting instance/CSI-Report) is from/for the non-serving cell PCI.

If the reference BM-RI pair/beam quality reported in the reference entry/position - e.g., the first entry/position - in the CSI reporting instance/CSI report/beam report is associated with the serving cell PCI, the UE could follow the procedures specified in the example 5.5 and/or the example 5.6 to report the remaining (L_sc - 1) BM-RI pairs/beam qualities for the serving cell PCI and the L_nsc BM-RI pairs/beam qualities for the M_nsc non-serving cell PCIs in the remaining entries/positions other than the reference entry/position - e.g., the first entry/position - in the CSI reporting instance/CSI-Report.

If the reference BM-RI pair/beam quality reported in the reference entry/position - e.g., the first entry/position - in the CSI reporting instance/CSI report/beam report is associated with a non-serving cell PCI, the UE could follow the procedures specified in the example 5.5 and/or the example 5.6 to report the L_sc BM-RI pairs/beam qualities for the serving cell PCI and the remaining (L_nsc - 1) BM-RI pairs/beam qualities for the M_nsc non-serving cell PCIs in the remaining entries/positions other than the reference entry/position - e.g., the first entry/position - in the CSI reporting instance/CSI-Report, or the UE could follow the procedures specified in the example 5.5 and/or the example 5.6 to report the remaining (L_nsc - 1) BM-RI pairs/beam qualities for the M_nsc non-serving cell PCIs in the remaining entries/positions other than the reference entry/position - e.g., the first entry/position - in the CSI reporting instance/CSI report.

Yet for another example (example 5.8), the UE could explicitly indicate to the network the ordering/positions in the same CSI reporting instance/CSI report/beam report of the reported BM-RI pairs/beam qualities for (i) both the serving cell PCI and the M_nsc non-serving cell PCIs or (ii) only the M_nsc non-serving cell PCIs. For instance, the UE could send to the network one or more (e.g., M_nsc+1) bitmaps each indicating the ordering/position(s) in the same CSI reporting instance/CSI report/beam report of the reported BM-RI pairs/beam qualities for a PCI, corresponding to either the serving cell PCI or a non-serving cell PCI. Each bitmap could indicate/include a PCI value. For instance, the UE could send to the network a bitmap for the serving cell PCI with each entry in the bitmap corresponding to an entry/position in the CSI reporting instance/CSI report/beam report; if an entry/bit position in the bitmap for the serving cell PCI is set to "1," the network could expect that the BM-RI pair/beam quality reported in the corresponding entry/position in the reporting instance/CSI report/beam report is for the serving cell PCI.

The UE could send to the network another bitmap for the non-serving cell k (corresponding to the k-th non-serving cell PCI among the M_nsc non-serving cell PCIs or the k-th lowest (or highest) non-serving cell PCI among the M_nsc non-serving cell PCIs, where k=1, 2,..., M_nsc) with each entry in the bitmap corresponding to an entry/position in the CSI reporting instance/CSI report/beam report; if an entry/bit position in the bitmap for the non-serving cell k is set to "1," the network could expect that the BM-RI pair/beam quality reported in the corresponding entry/position in the CSI reporting instance/CSI report/beam report is for the non-serving cell k, e.g., corresponding to the k-th non-serving cell PCI among the M_nsc non-serving cell PCIs or the k-th lowest (or highest) non-serving cell PCI among the M_nsc non-serving cell PCIs, where k=1, 2,..., M_nsc.

Yet for another example (example 5.9), the UE could report in the same CSI reporting instance/CSI report/beam report a total of L_tot BM-RI pairs/beam qualities (including the resource indicators and the corresponding beam metrics) or a total of L_tot resource indicators such as SSBRIs/CRIs (and therefore, the corresponding L_tot beam metrics such as L1-RSRPs/L1-SINRs) for both the serving cell PCI and the non-serving cell PCI(s), where L_tot = L_sc + L_nsc, and L_sc is the number of resource indicators/beam metrics reported for the serving cell PCI and L_nsc is the number of resource indicators/beam metrics reported for the M_nsc non-serving cell PCI(s). The L_tot BM-RI pairs/beam qualities, or the L_tot resource indicators such as SSBRIs/CRIs, or the L_tot measured (or quantized/differential) beam metrics such as measured (or quantized/differential) L1-RSRPs/L1-SINRs in the same CSI reporting instance/CSI report/beam report are ordered according to the order of the L_tot measured (or quantized/differential) beam metrics such as measured (or quantized/differential) L1-RSRPs/L1-SINRs, e.g., in decreasing order, i.e., from the largest/highest measured (or quantized/differential) beam metric such as the largest/highest measured (or quantized/differential) L1-RSRP/L1-SINR to the smallest/lowest measured (or quantized/differential) beam metric such as the smallest/lowest measured (or quantized/differential) L1-RSRP/L1-SINR.

Alternatively, the L_tot BM-RI pairs/beam qualities, or the L_tot resource indicators such as SSBRIs/CRIs, or the L_tot measured (or quantized/differential) beam metrics such as measured (or quantized/differential) L1-RSRPs/L1-SINRs in the same CSI reporting instance/CSI report/beam report are ordered according to the order of the L_tot measured (or quantized/differential) beam metrics such as measured (or quantized/differential) L1-RSRPs/L1-SINRs, e.g., in increasing order, i.e., from the smallest/lowest measured (or quantized/differential) beam metric such as the smallest/lowest measured (or quantized/differential) L1-RSRP/L1-SINR to the largest/highest measured (or quantized/differential) beam metric such as the largest/highest measured (or quantized/differential) L1-RSRP/L1-SINR.

Optionally, the UE could report in the same CSI reporting instance/CSI report/beam report a total of L_nsc BM-RI pairs/beam qualities (including the resource indicators and the corresponding beam metrics) or a total of L_nsc resource indicators such as SSBRIs/CRIs (and therefore, the corresponding L_nsc beam metrics such as L1-RSRPs/L1-SINRs) for only the non-serving cell(s), where L_nsc is the number of resource indicators/beam metrics reported for the M_nsc non-serving cell PCI(s). The L_nsc BM-RI pairs/beam qualities, or the L_nsc resource indicators such as SSBRIs/CRIs, or the L_nsc measured (or quantized/differential) beam metrics such as measured (or quantized/differential) L1-RSRPs/L1-SINRs in the same CSI reporting instance/CSI report/beam report for the M_nsc non-serving cell PCIs are ordered according to the order of the L_nsc measured (or quantized/differential) beam metrics such as measured (or quantized/differential) L1-RSRPs/L1-SINRs, e.g., in decreasing order, i.e., from the largest/highest measured (or quantized/differential) beam metric such as the largest/highest measured (or quantized/differential) L1-RSRP/L1-SINR to the smallest/lowest measured (or quantized/differential) beam metric such as the smallest/lowest measured (or quantized/differential) L1-RSRP/L1-SINR. Alternatively, the L_nsc BM-RI pairs/beam qualities, or the L_nsc resource indicators such as SSBRIs/CRIs, or the L_nsc measured (or quantized/differential) beam metrics such as measured (or quantized/differential) L1-RSRPs/L1-SINRs in the same CSI reporting instance/CSI report/beam report for the M_nsc non-serving cell PCIs are ordered according to the order of the L_nsc measured (or quantized/differential) beam metrics such as measured (or quantized/differential) L1-RSRPs/L1-SINRs, e.g., in increasing order, i.e., from the smallest/lowest measured (or quantized/differential) beam metric such as the smallest/lowest measured (or quantized/differential) L1-RSRP/L1-SINR to the largest/highest measured (or quantized/differential) beam metric such as the largest/highest measured (or quantized/differential) L1-RSRP/L1-SINR.

In the present disclosure, a measured beam metric could correspond to a measured L1-RSRP/L1-SINR, and a quantized/differential beam metric could correspond to a quantized/differential L1-RSRP/L1-SINR calculated with respect to a reference value (e.g., the largest measured L1-RSRP/L1-SINR) and a quantization resolution.

Yet for another example (example 5.10), the UE could report the BM-RI pair/beam quality or the resource indicator such as SSBRI/CRI or the measured (or quantized/differential) beam metric such as measured (or quantized/differential) L1-RSRP/L1-SINR corresponding to the largest measured (or quantized/differential) beam metric such as the largest measured (or quantized/differential) L1-RSRP/L1-SINR in the first position/entry in the CSI reporting instance/CSI report/beam report and the UE could report the remaining (L_tot - 1) BM-RI pairs/beam qualities or the remaining (L_tot - 1) resource indicators such as SSBRIs/CRIs or the remaining (L_tot - 1) measured (or quantized/differential) beam metrics such as measured (or quantized/differential) L1-RSRPs/L1-SINRs according to the order of the remaining (L_tot - 1) measured (or quantized/differential) beam metrics such as the remaining (L_tot - 1) measured (or quantized/differential) L1-RSRPs/L1-SINRs, e.g., in decreasing order, i.e., from the largest/highest measured (or quantized/differential) beam metric such as the largest/highest measured (or quantized/differential) L1-RSRP/L1-SINR to the smallest/lowest measured (or quantized) beam metric such as the smallest/lowest measured (or quantized/differential) L1-RSRP/L1-SINR.

Alternatively, the UE could report the BM-RI pair/beam quality or the resource indicator such as SSBRI/CRI or the measured (or quantized/differential) beam metric such as measured (or quantized/differential) L1-RSRP/L1-SINR corresponding to the largest measured (or quantized/differential) beam metric such as measured (or quantized/differential) L1-RSRP/L1-SINR in the first position/entry in the CSI reporting instance/CSI report/beam report and the UE could report the remaining (L_tot - 1) BM-RI pairs/beam qualities or the remaining (L_tot - 1) resource indicators such as SSBRIs/CRIs or the remaining (L_tot - 1) measured (or quantized/differential) beam metrics such as measured (or quantized/differential) L1-RSRPs/L1-SINRs according to the order of the remaining (L_tot - 1) measured (or quantized/differential) beam metrics such as the remaining (L_tot - 1) measured (or quantized/differential) L1-RSRPs/L1-SINRs, e.g., in increasing order, i.e., from the smallest/lowest measured (or quantized/differential) beam metric such as the smallest/lowest measured (or quantized/differential) L1-RSRP/L1-SINR to the largest/highest measured (or quantized) beam metric such as the largest/highest measured (or quantized/differential) L1-RSRP/L1-SINR.

In the present disclosure, a measured beam metric could correspond to a measured L1-RSRP/L1-SINR, and a quantized/differential beam metric could correspond to a quantized/differential L1-RSRP/L1-SINR calculated with respect to a reference value (e.g., the largest measured L1-RSRP/L1-SINR) and a quantization resolution. Specifically, the UE could report the BM-RI pair/beam quality or the resource indicator such as SSBRI/CRI or the measured (or quantized/differential) beam metric such as measured (or quantized/differential) L1-RSRP/L1-SINR corresponding to the largest measured (or quantized/differential) beam metric such as the largest measured (or quantized/differential) L1-RSRP/L1-SINR in the first position/entry in the CSI reporting instance/CSI report/beam report, wherein the largest quantized L1-RSRP could be obtained by quantizing the largest measured L1-RSRP to a 7-bit value in the range [-140, -44] dBm with 1dB step size and the UE could report the remaining (L_tot - 1) BM-RI pairs/beam qualities or the remaining (L_tot - 1) resource indicators such as SSBRIs/CRIs or the remaining measured (or quantized/differential) (L_tot - 1) beam metrics such as measured (or quantized/differential) L1-RSRPs/L1-SINRs according to the order of the remaining (L_tot - 1) measured (or quantized/differential) beam metrics such as the remaining (L_tot - 1) measured (or quantized/differential) L1-RSRPs/L1-SINRs, e.g., in decreasing order, i.e., from the largest/highest measured (or quantized/differential) beam metrics such as the largest/highest measured (or quantized/differential) L1-RSRP/L1-SINR to the smallest/lowest measured (or quantized/differential) beam metric such as the smallest/lowest measured (or quantized/differential) L1-RSRP/L1-SINR, wherein the (L_tot - 1) quantized/differential L1-RSRP values could be obtained by quantizing the corresponding (L_tot - 1) measured L1-RSRPs to 4-bit values with 2 dB step size with a reference to the largest measured L1-RSRP value.

Alternatively, the UE could report the BM-RI pair/beam quality or the resource indicator such as SSBRI/CRI or the measured (or quantized/differential) beam metric such as measured (or quantized/differential) L1-RSRP/L1-SINR corresponding to the largest measured (or quantized/differential) beam metric such as the largest measured (or quantized/differential) L1-RSRP/L1-SINR in the first position/entry in the CSI reporting instance/CSI report/beam report, wherein the largest quantized L1-RSRP could be obtained by quantizing the largest measured L1-RSRP to a 7-bit value in the range [-140, -44] dBm with 1dB step size and the UE could report the remaining (L_tot - 1) BM-RI pairs/beam qualities or the remaining (L_tot - 1) resource indicators such as SSBRIs/CRIs or the remaining measured (or quantized/differential) (L_tot - 1) beam metrics such as measured (or quantized/differential) L1-RSRPs/L1-SINRs according to the order of the remaining (L_tot - 1) measured (or quantized/differential) beam metrics such as the remaining (L_tot - 1) measured (or quantized/differential) L1-RSRPs/L1-SINRs, e.g., in increasing order, i.e., from the smallest/lowest measured (or quantized/differential) beam metrics such as the smallest/lowest measured (or quantized/differential) L1-RSRP/L1-SINR to the largest/highest measured (or quantized/differential) beam metric such as the largest/highest measured (or quantized/differential) L1-RSRP/L1-SINR, wherein the (L_tot - 1) quantized/differential L1-RSRP values could be obtained by quantizing the corresponding (L_tot - 1) measured L1-RSRPs to 4-bit values with 2 dB step size with a reference to the largest measured L1-RSRP value. In the present disclosure, a measured beam metric could correspond to a measured L1-RSRP/L1-SINR, and a quantized/differential beam metric could correspond to a quantized/differential L1-RSRP/L1-SINR calculated with respect to a reference value (e.g., the largest measured L1-RSRP/L1-SINR) and a quantization resolution.

Yet for another example (example 5.11), the UE could report the BM-RI pair/beam quality or the resource indicator such as SSBRI/CRI or the measured (or quantized/differential) beam metric such as measured (or quantized/differential) L1-RSRP/L1-SINR corresponding to the largest measured (or quantized/differential) beam metric such as the largest measured (or quantized/differential) L1-RSRP/L1-SINR associated with a non-serving cell PCI in the first position/entry in the CSI reporting instance/CSI report/beam report and the UE could report the remaining (L_nsc - 1) BM-RI pairs/beam qualities or the remaining (L_nsc - 1) resource indicators such as SSBRIs/CRIs or the remaining (L_nsc - 1) measured (or quantized/differential) beam metrics such as measured (or quantized/differential) L1-RSRPs/L1-SINRs for the non-serving cell PCIs according to the order of the remaining (L_nsc - 1) measured (or quantized/differential) beam metrics such as the remaining (L_nsc - 1) measured (or quantized/differential) L1-RSRPs/L1-SINRs for the non-serving cell PCIs, e.g., in decreasing order, i.e., from the largest/highest measured (or quantized/differential) beam metric such as the largest/highest measured (or quantized/differential) L1-RSRP/L1-SINR associated with a non-serving cell PCI to the smallest/lowest measured (or quantized) beam metric such as the smallest/lowest measured (or quantized/differential) L1-RSRP/L1-SINR associated with a non-serving cell PCI.

Alternatively, the UE could report the BM-RI pair/beam quality or the resource indicator such as SSBRI/CRI or the measured (or quantized/differential) beam metric such as measured (or quantized/differential) L1-RSRP/L1-SINR corresponding to the largest measured (or quantized/differential) beam metric such as the largest measured (or quantized/differential) L1-RSRP/L1-SINR associated with a non-serving cell PCI in the first position/entry in the CSI reporting instance/CSI report/beam report and the UE could report the remaining (L_nsc - 1) BM-RI pairs/beam qualities or the remaining (L_nsc - 1) resource indicators such as SSBRIs/CRIs or the remaining (L_nsc - 1) measured (or quantized/differential) beam metrics such as measured (or quantized/differential) L1-RSRPs/L1-SINRs for the non-serving cell PCIs according to the order of the remaining (L_nsc - 1) measured (or quantized/differential) beam metrics such as the remaining (L_nsc - 1) measured (or quantized/differential) L1-RSRPs/L1-SINRs for the non-serving cell PCIs, e.g., in increasing order, i.e., from the smallest/lowest measured (or quantized/differential) beam metric such as the smallest/lowest measured (or quantized/differential) L1-RSRP/L1-SINR associated with a non-serving cell PCI to the largest/highest measured (or quantized) beam metric such as the largest/highest measured (or quantized/differential) L1-RSRP/L1-SINR associated with a non-serving cell PCI.

In the present disclosure, a measured beam metric could correspond to a measured L1-RSRP/L1-SINR, and a quantized/differential beam metric could correspond to a quantized/differential L1-RSRP/L1-SINR calculated with respect to a reference value (e.g., the largest measured L1-RSRP/L1-SINR) and a quantization resolution. Specifically, the UE could report the BM-RI pair/beam quality or the resource indicator such as SSBRI/CRI or the measured (or quantized/differential) beam metric such as measured (or quantized/differential) L1-RSRP/L1-SINR corresponding to the largest measured (or quantized/differential) beam metric such as the largest measured (or quantized/differential) L1-RSRP/L1-SINR associated with a non-serving cell PCI in the first position/entry in the CSI reporting instance/CSI report/beam report, wherein the largest quantized L1-RSRP associated with the non-serving cell PCI could be obtained by quantizing the largest measured L1-RSRP associated with the non-serving cell PCI to a 7-bit value in the range [-140, -44] dBm with 1dB step size and the UE could report the remaining (L_nsc - 1) BM-RI pairs/beam qualities or the remaining (L_nsc - 1) resource indicators such as SSBRIs/CRIs or the remaining measured (or quantized/differential) (L_nsc - 1) beam metrics such as measured (or quantized/differential) L1-RSRPs/L1-SINRs for the non-serving cell PCIs according to the order of the remaining (L_nsc - 1) measured (or quantized/differential) beam metrics such as the remaining (L_nsc - 1) measured (or quantized/differential) L1-RSRPs/L1-SINRs for the non-serving cell PCIs, e.g., in decreasing order, i.e., from the largest/highest measured (or quantized/differential) beam metrics such as the largest/highest measured (or quantized/differential) L1-RSRP/L1-SINR associated with a non-serving cell PCI to the smallest/lowest measured (or quantized/differential) beam metric such as the smallest/lowest measured (or quantized/differential) L1-RSRP/L1-SINR associated with a non-serving cell PCI, wherein the (L_nsc - 1) quantized/differential L1-RSRP values associated with the non-serving cell PCIs could be obtained by quantizing the corresponding (L_nsc - 1) measured L1-RSRPs associated with the non-serving cell PCIs to 4-bit values with 2 dB step size with a reference to the largest measured L1-RSRP value associated with a non-serving cell PCI.

Alternatively, the UE could report the BM-RI pair/beam quality or the resource indicator such as SSBRI/CRI or the measured (or quantized/differential) beam metric such as measured (or quantized/differential) L1-RSRP/L1-SINR corresponding to the largest measured (or quantized/differential) beam metric such as the largest measured (or quantized/differential) L1-RSRP/L1-SINR associated with a non-serving cell PCI in the first position/entry in the CSI reporting instance/CSI report/beam report, wherein the largest quantized L1-RSRP associated with the non-serving cell PCI could be obtained by quantizing the largest measured L1-RSRP associated with the non-serving cell PCI to a 7-bit value in the range [-140, -44] dBm with 1dB step size and the UE could report the remaining (L_nsc - 1) BM-RI pairs/beam qualities or the remaining (L_nsc - 1) resource indicators such as SSBRIs/CRIs or the remaining measured (or quantized/differential) (L_nsc - 1) beam metrics such as measured (or quantized/differential) L1-RSRPs/L1-SINRs for the non-serving cell PCIs according to the order of the remaining (L_nsc - 1) measured (or quantized/differential) beam metrics such as the remaining (L_nsc - 1) measured (or quantized/differential) L1-RSRPs/L1-SINRs for the non-serving cell PCIs, e.g., in increasing order, i.e., from the smallest/lowest measured (or quantized/differential) beam metrics such as the smallest/lowest measured (or quantized/differential) L1-RSRP/L1-SINR associated with a non-serving cell PCI to the largest/highest measured (or quantized/differential) beam metric such as the largest/highest measured (or quantized/differential) L1-RSRP/L1-SINR associated with a non-serving cell PCI, wherein the (L_nsc - 1) quantized/differential L1-RSRP values associated with the non-serving cell PCIs could be obtained by quantizing the corresponding (L_nsc - 1) measured L1-RSRPs associated with the non-serving cell PCIs to 4-bit values with 2 dB step size with a reference to the largest measured L1-RSRP value associated with a non-serving cell PCI.

In this design example, the UE could report in the same reporting instance/CSI report the BM-RI pairs/beam qualities for only the non-serving cell(s) and is not expected to report in the same reporting instance/CSI report the L_sc BM-RI pairs/beam qualities for the serving cell PCI.

Yet for another example (example 5.12), the UE could report in the same CSI reporting instance/CSI-Report a total of L_tot BM-RI pairs/beam qualities (including the resource indicators and the corresponding beam metrics) or a total of L_tot resource indicators such as SSBRIs/CRIs (and therefore, the corresponding L_tot beam metrics such as L1-RSRPs/L1-SINRs) for both the serving cell PCI and the non-serving cell PCI(s), where L_tot = L_sc + L_nsc, and L_sc is the number of resource indicators/beam metrics reported for the serving cell PCI and L_nsc is the number of resource indicators/beam metrics reported for the M_nsc non-serving cell PCI(s).

The UE could report the reference RSRP value (and therefore, the corresponding resource indicator such as SSBRI or CRI) obtained by quantizing the largest measured L1-RSRP to a 7-bit value in the range [-140, -44] dBm with 1dB step size in the first position/entry in the CSI reporting instance/CSI report/beam report and the UE could report the remaining (L_tot - 1) differential RSRP values (and therefore, the corresponding (L_tot - 1) resource indicators such as SSBRIs or CRIs) obtained by quantizing the corresponding (L_tot - 1) measured L1-RSRPs to 4-bit values with 2 dB step size with a reference to the largest measured L1-RSRP value in the remaining (L_tot - 1) entries/positions in the same CSI reporting instance/CSI report/beam report in decreasing order (e.g., from the highest/largest to the smallest/lowest) or increasing order (e.g., from the smallest/lowest to the highest/largest).

Optionally, the UE could report in the same CSI reporting instance/CSI-Report a total of L_nsc BM-RI pairs/beam qualities (including the resource indicators and the corresponding beam metrics) or a total of L_nsc resource indicators such as SSBRIs/CRIs (and therefore, the corresponding L_nsc beam metrics such as L1-RSRPs/L1-SINRs) for only the non-serving cell(s), where L_nsc is the number of resource indicators/beam metrics reported for the M_nsc non-serving cell PCI(s). The UE could report the reference RSRP value (and therefore, the corresponding resource indicator such as SSBRI or CRI) obtained by quantizing the largest measured L1-RSRP associated with a non-serving cell PCI to a 7-bit value in the range [-140, - 44] dBm with 1dB step size in the first position/entry in the CSI reporting instance/CSI report/beam report.

The UE could report the remaining (L_nsc - 1) differential RSRP values (and therefore, the corresponding (L_nsc - 1) resource indicators such as SSBRIs or CRIs) for the non-serving cell PCIs obtained by quantizing the corresponding (L_nsc - 1) measured L1-RSRPs for the non-serving cell PCIs to 4-bit values with 2 dB step size with a reference to the largest measured L1-RSRP value associated with a non-serving cell PCI in the remaining (L_nsc - 1) entries/positions in the same CSI reporting instance/CSI report/beam report in decreasing order (e.g., from the highest/largest to the smallest/lowest) or increasing order (e.g., from the smallest/lowest to the highest/largest).

Yet for another example (example 5.13), the UE could report in the same CSI reporting instance/CSI report/beam report a total of L_tot BM-RI pairs/beam qualities (including the resource indicators and the corresponding beam metrics) or a total of L_tot resource indicators such as SSBRIs/CRIs (and therefore, the corresponding L_tot beam metrics such as L1-RSRPs/L1-SINRs) for both the serving cell PCI and the non-serving cell PCI(s), where L_tot = L_sc + L_nsc, and L_sc is the number of resource indicators/beam metrics reported for the serving cell PCI and L_nsc is the number of resource indicators/beam metrics reported for the M_nsc non-serving cell PCI(s).

The L_tot BM-RI pairs/beam qualities, or the L_tot resource indicators such as SSBRIs/CRIs, or the L_tot beam metrics such as L1-RSRPs/L1-SINRs in the same CSI reporting instance/CSI report/beam report are ordered according to the order of their associated PCI values, e.g., in decreasing order, i.e., from the largest/highest PCI to the smallest/lowest PCI. Alternatively, the L_tot BM-RI pairs/beam qualities, or the L_tot resource indicators such as SSBRIs/CRIs, or the L_tot beam metrics such as L1-RSRPs/L1-SINRs in the same CSI reporting instance/CSI report/beam report are ordered according to the order of their associated PCI values, e.g., in increasing order, i.e., from the smallest/lowest PCI to the largest/highest PCI.

Optionally, the UE could report in the same CSI reporting instance/CSI report/beam report a total of L_nsc BM-RI pairs/beam qualities (including the resource indicators and the corresponding beam metrics) or a total of L_nsc resource indicators such as SSBRIs/CRIs (and therefore, the corresponding L_nsc beam metrics such as L1-RSRPs/L1-SINRs) for only the non-serving cell(s), where L_nsc is the number of resource indicators/beam metrics reported for the M_nsc non-serving cell PCI(s). The L_nsc BM-RI pairs/beam qualities, or the L_nsc resource indicators such as SSBRIs/CRIs, or the L_nsc beam metrics such as L1-RSRPs/L1-SINRs in the same CSI reporting instance/CSI report/beam report are ordered according to the order of their associated non-serving cell PCI values, e.g., in decreasing order, i.e., from the largest/highest non-serving cell PCI to the smallest/lowest non-serving cell PCI. Alternatively, the L_nsc BM-RI pairs/beam qualities, or the L_nsc resource indicators such as SSBRIs/CRIs, or the L_nsc beam metrics such as L1-RSRPs/L1-SINRs in the same CSI reporting instance/CSI report/beam report are ordered according to the order of their associated PCI values, e.g., in increasing order, i.e., from the smallest/lowest non-serving cell PCI to the largest/highest non-serving cell PCI.

Yet for another example (example 5.13), the UE could report in the same CSI reporting instance/CSI-Report a total of L_tot BM-RI pairs/beam qualities (including the resource indicators and the corresponding beam metrics) or a total of L_tot resource indicators such as SSBRIs/CRIs (and therefore, the corresponding L_tot beam metrics such as L1-RSRPs/L1-SINRs) for both the serving cell PCI and the non-serving cell PCI(s), where L_tot = L_sc + L_nsc, and L_sc is the number of resource indicators/beam metrics reported for the serving cell PCI and L_nsc is the number of resource indicators/beam metrics reported for the M_nsc non-serving cell PCI(s).

The UE could report the reference RSRP value (and therefore, the corresponding resource indicator such as SSBRI or CRI) obtained by quantizing the largest measured L1-RSRP to a 7-bit value in the range [-140, -44] dBm with 1dB step size in the first position/entry in the CSI reporting instance/CSI report/beam report; The UE could report the remaining (L_tot - 1) differential RSRP values (and therefore, the corresponding (L_tot - 1) resource indicators such as SSBRIs or CRIs) obtained by quantizing the corresponding (L_tot - 1) measured L1-RSRPs to 4-bit values with 2 dB step size with a reference to the largest measured L1-RSRP value in the remaining (L_tot - 1) entries/positions in the same CSI reporting instance/CSI report/beam report according to the order of their associated PCI values, e.g., in decreasing order, i.e., from the largest/highest PCI to the smallest/lowest PCI, or in increasing order, i.e., from the smallest/lowest PCI to the largest/highest PCI.

Optionally, the UE could report in the same CSI reporting instance/CSI-Report a total of L_nsc BM-RI pairs/beam qualities (including the resource indicators and the corresponding beam metrics) or a total of L_nsc resource indicators such as SSBRIs/CRIs (and therefore, the corresponding L_nsc beam metrics such as L1-RSRPs/L1-SINRs) for only the non-serving cell(s), where L_nsc is the number of resource indicators/beam metrics reported for the M_nsc non-serving cell PCI(s). The UE could report the reference RSRP value (and therefore, the corresponding resource indicator such as SSBRI or CRI) obtained by quantizing the largest measured L1-RSRP associated with a non-serving cell PCI to a 7-bit value in the range [-140, - 44] dBm with 1dB step size in the first position/entry in the CSI reporting instance/CSI report/beam report.

The UE could report the remaining (L_nsc - 1) differential RSRP values (and therefore, the corresponding (L_nsc - 1) resource indicators such as SSBRIs or CRIs) for the non-serving cell PCIs obtained by quantizing the corresponding (L_nsc - 1) measured L1-RSRPs for the non-serving cell PCIs to 4-bit values with 2 dB step size with a reference to the largest measured L1-RSRP value associated with a non-serving cell PCI in the remaining (L_nsc - 1) entries/positions in the same CSI reporting instance/CSI report/beam report according to the order of their associated non-serving cell PCI values, e.g., in decreasing order, i.e., from the largest/highest non-serving cell PCI to the smallest/lowest non-serving cell PCI, or in increasing order, i.e., from the smallest/lowest non-serving cell PCI to the largest/highest non-serving cell PCI.

In the present disclosure, the k-th entry/position in a CSI reporting instance/CSI report could be: (1) the k-th overall or exact entry/position/field in a CSI report or (2) the k-th entry/position/field among K resource indicators such as SSBRIs/CRIs or the k-th entry/position/field among K beam metrics such as L1-RSRPs/L1-SINRs, where k=1, 2, ..., K. In TABLE 2, an illustrative example of mapping order of CSI fields in a CSI reporting instance/CSI report for inter-cell beam reporting is provided.

**TABLE 2.**

| CSI report number | CSI fields |
|---|---|
| CSI report #n | Resource indicator (SSBRI or CRI) #1 (associated with PCI #A), if reported |
| | Resource indicator (SSBRI or CRI) #2 (associated with PCI #B), if reported |
| | Resource indicator (SSBRI or CRI) #3 (associated with PCI #C), if reported |
| | Resource indicator (SSBRI or CRI) #4 (associated with PCI #D), if reported |
| | Beam metric (L1-RSRP or L1-SINR) #1 (associated with PCI #A), if reported |
| | Beam metric (L1-RSRP or L1-SINR) #2 (associated with PCI #B), if reported |
| | Beam metric (L1-RSRP or L1-SINR) #3 (associated with PCI #C), if reported |
| | Beam metric (L1-RSRP or L1-SINR) #4 (associated with PCI #D), if reported |

As shown in TABLE 2, the resource indicators #1, #2, #3 and #4 are in the 1^{st}, 2^{nd}, 3^{rd} or 4^{th} entries/positions in a CSI reporting instance/CSI report, corresponding to the 1^{st}, 2^{nd}, 3^{rd} and 4^{th} overall or exact entries/positions/fields in the CSI report #n or the 1^{st}, 2^{nd}, 3^{rd} and 4^{th} entries/positions/fields among the K=4 reported resource indicators; the beam metrics #1, #2, #3 and #4 are in the 1^{st}, 2^{nd}, 3^{rd} or 4^{th} entries/positions in a CSI reporting instance/CSI report, corresponding to the 5^{th}, 6^{th}, 7^{th} and 8^{th} overall or exact entries/positions/fields in the CSI report #n or the 1^{st}, 2^{nd}, 3^{rd} and 4^{th} entries/positions/fields among the K=4 reported beam metrics.

Hence, the corresponding BM-RI pair/beam quality #1 (including the resource indicator #1 and the corresponding beam metric #1), BM-RI pair/beam quality #2 (including the resource indicator #2 and the corresponding beam metric #2), BM-RI pair/beam quality #3 (including the resource indicator #3 and the corresponding beam metric #3) and BM-RI pair/beam quality #4 (including the resource indicator #4 and the corresponding beam metric #4) are in the 1^{st}, 2^{nd}, 3^{rd} or 4^{th} entries/positions in a CSI reporting instance/CSI report. In the CSI report #n, the beam metric #1 is associated with/corresponding to the resource indicator #1, the beam metric #2 is associated with/corresponding to the resource indicator #2, the beam metric #3 is associated with/corresponding to the resource indicator #3 and the beam metric #4 is associated with/corresponding to the resource indicator #4.

Furthermore, the resource indicator #1 (and therefore, the corresponding beam metric #1 or the BM-RI pair/beam quality #1) is associated with PCI #A, the resource indicator #2 (and therefore, the corresponding beam metric #2 or the BM-RI pair/beam quality #2) is associated with PCI #B, the resource indicator #3 (and therefore, the corresponding beam metric #3 or the BM-RI pair/beam quality #3) is associated with PCI #C and the resource indicator #4 (and therefore, the corresponding beam metric #4 or the BM-RI pair/beam quality #4) is associated with PCI #D.

In one example (example V.1), PCI #A, PCI #B, PCI #C or PCI #D corresponds to either a serving cell PCI or a non-serving cell PCI.

In another example (example V.2), PCI #A, PCI #B, PCI #C or PCI #D corresponds to a non-serving cell PCI.

In yet another example (example V.3), PCI #A, PCI #B, PCI #C and PCI #D are all different PCIs/PCI values, each corresponding to either a serving cell PCI or a non-serving cell PCI.

In yet another example (example V.4), PCI #A, PCI #B, PCI #C and PCI #D are all different PCIs/PCI values, each corresponding to a non-serving cell PCI.

In yet another example (example V.5), PCI #A, PCI #B, PCI #C and PCI #D are in decreasing order, i.e., PCI #A is larger than or equal to PCI #B, PCI #B is larger than or equal to PCI #C, and PCI #C is larger than or equal to PCI #D.

In yet another example (example V.6), PCI #A, PCI #B, PCI #C and PCI #D are in increasing order, i.e., PCI #D is larger than or equal to PCI #C, PCI #C is larger than or equal to PCI #B, and PCI #B is larger than or equal to PCI #A.

In yet another example (example V.7), PCI #A corresponds to the serving cell PCI.

In yet another example (example V.8), PCI #A corresponds to a non-serving cell PCI.

In yet another example (example V.9), the UE could expect that PCI #A, PCI #B, PCI #C or PCI #D is determined/configured according to/based on example V.1, example V.2, example V.3, example V.4, example V.5, example V.6, example V.7 or example V.8; furthermore, the beam metric #1, the beam metric #2, the beam metric #3 and the beam metric #4 are in decreasing order, i.e., the beam metric #1 is larger than or equal to the beam metric #2, the beam metric #3 is larger than or equal to the beam metric #3 and the beam metric #3 is larger than or equal to the beam metric #4.

In yet another example (example V.10), the UE could expect that PCI #A, PCI #B, PCI #C or PCI #D is determined/configured according to/based on example V.1, example V.2, example V.3, example V.4, example V.5, example V.6, example V.7 or example V.8; furthermore, the UE could expect that the beam metric #1, the beam metric #2, the beam metric #3 and the beam metric #4 are in increasing order, i.e., the beam metric #4 is larger than or equal to the beam metric #3, the beam metric #3 is larger than or equal to the beam metric #2 and the beam metric #2 is larger than or equal to the beam metric #1.

In yet another example (example V.11), the UE could expect that PCI #A, PCI #B, PCI #C or PCI #D is determined/configured according to/based on example V.1, example V.2, example V.3, example V.4, example V.5, example V.6, example V.7 or example V.8; furthermore, the beam metric #1 corresponds to a reference RSRP value, obtained/calculated by quantizing the largest measured L1-RSRP to a 7-bit value in the range [-140, -44] dBm with 1dB step size; the beam metric #2, the beam metric #3 and the beam metric #4 correspond to differential RSRP values, obtained/calculated by quantizing the corresponding 3 measured L1-RSRPs to 4-bit values with 2 dB step size with a reference to the largest measured L1-RSRP value.

In yet another example (example V.12), the UE could expect that PCI #A, PCI #B, PCI #C or PCI #D is determined/configured according to/based on example V.1, example V.2, example V.3, example V.4, example V.5, example V.6, example V.7 or example V.8; furthermore, the beam metric #1, the beam metric #2, the beam metric #3 and the beam metric #4 correspond to quantized measured RSRP values, obtained/calculated by quantizing the corresponding 4 measured L1-RSRPs to 7-bit values in the range [-140, -44] dBm with 1dB step size.

In yet another example (example V.13), the UE could expect that PCI #A, PCI #B, PCI #C or PCI #D is determined/configured according to/based on example V.1, example V.2, example V.3, example V.4, example V.5, example V.6, example V.7 or example V.8; furthermore, one or more of the beam metric #1, the beam metric #2, the beam metric #3 and the beam metric #4 correspond to reference RSRP value(s), obtained/calculated by quantizing the corresponding measured L1-RSRP(s) to 7-bit value(s) in the range [-140, -44] dBm with 1dB step size; in addition, one or more of the beam metric #1, the beam metric #2, the beam metric #3 and the beam metric #4 correspond to differential RSRP value(s), obtained/calculated by quantizing the corresponding measured L1-RSRP(s) to 4-bit values with 2 dB step size with reference to the corresponding reference L1-RSRP value(s).

Detailed descriptions of various design options to indicate a subset of the total N_nsc non-serving cells (i.e., M_nsc≤N_nsc non-serving cells) are illustrated below.

In one example of Option-1, the UE could be indicated/configured by the network which M_nsc non-serving cells out of the total N_nsc non-serving cells (e.g., in form of their PCI values/indices of entries in a list of PCI values/other higher layer signaling index values) are for beam measurement and reporting (i.e., the BM-RI pairs/beam qualities may be associated with); this indication could be via higher layer (RRC) or/and MAC CE or/and DCI based signaling; this indication could be via a separate (dedicated) parameter or joint with another parameter.

In one example of Option-1a, the CSI request field in DCI 0_1 is used as an indication to instruct the UE which M_nsc non-serving cells out of the total N_nsc non-serving cells are for beam measurement and reporting (i.e., the BM-RI pairs/beam qualities may be associated with). The UE could be first higher layer configured by the network a list of all possible combinations of M_nsc non-serving cells out of the total N_nsc non-serving cells, where 1 ≤ M_nsc ≤ N_nsc. For example, assume that N_nsc = 3 and the non-serving cells are indexed as NSC#0, NSC#1 and NSC#2. Then, the non-serving cells list could include 7 states, which are {NSC#0}, {NSC#1}, {NSC#2}, {NSC#0, NSC#1}, {NSC#0, NSC#2}, {NSC#1, NSC#2} and {NSC#0, NSC#1, NSC#2}.

The CSI request field in DCI 0_1 could be used to indicate a specific state in the list. For instance, if the CSI request field is 5, the UE would know that the fifth state in the non-serving cells list, i.e., {NSC#0, NSC#2} is indicated. The UE could then report to the network, e.g., in a single reporting instance, a group of resource indicators such as SSBRIs/CRIs for the serving cell and the non-serving cells #0 and #2 along with their corresponding/associated beam metrics such as L1-RSRPs/L1-SINRs. Or equivalently, the UE could report to the network, e.g., in a single reporting instance, at least three BM-RI pairs/beam qualities including the resource indicators and their corresponding/associated beam metrics, for the serving cell and the non-serving cells #0 and #2, respectively.

In one example of Option-1b, both the CSI request field in DCI 0_1 and the MAC-CE command are used to indicate to the UE which M_nsc non-serving cells out of the total N_nsc non-serving cells are for beam measurement and reporting (i.e., the BM-RI pairs/beam qualities may be associated with). The UE could be first higher layer configured by the network a list of all possible combinations of M_nsc non-serving cells out of the total N_nsc non-serving cells, where 1 ≤ M_nsc ≤ N_nsc. For example, assume that N_nsc = 3 and the non-serving cells are indexed as NSC#0, NSC#1 and NSC#2. Then, the non-serving cells list could include 7 states, which are {NSC#0}, {NSC#1}, {NSC#2}, {NSC#0, NSC#1}, {NSC#0, NSC#2}, {NSC#1, NSC#2} and {NSC#0, NSC#1, NSC#2}. The UE could then receive a MAC-CE that selects a subset of all states in the non-serving cells list. For the example described above, the subset determined by the MAC-CE could be, e.g., {NSC#0}, {NSC#1} and {NSC#0, NSC#2}.

The CSI request field in DCI 0_1 could then point to a codepoint in the MAC-CE. For instance, if the CSI request field is 3, the third codepoint in the MAC-CE {NSC#0, NSC#2} is selected and indicated. The UE could then report to the network, e.g., in a single reporting instance, a group of resource indicators such as SSBRIs/CRIs for the serving cell and the non-serving cells #0 and #2 along with their corresponding/associated beam metrics such as L1-RSRPs/L1-SINRs. Or equivalently, the UE could report to the network, e.g., in a single reporting instance, at least three BM-RI pairs/beam qualities including the resource indicators and their corresponding/associated beam metrics, for the serving cell and the non-serving cells #0 and #2, respectively.

In one example of Option-1c, a new field, denoted by non-serving cell (NSC) indication field, is defined/incorporated in the DCI, e.g., in DCI format 0_1, or provided in the CSI reporting configuration/setting, e.g., in the higher layer parameter CSI-ReportConfig. The NSC indication field is used as an indication (instead of using the CSI request field in Option-1a and Option-1b) to instruct the UE which M_nsc non-serving cells out of the total N_nsc non-serving cells are for beam measurement and reporting (i.e., the BM-RI pairs/beam qualities may be associated with). The NSC indication field could be configured/triggered along with the configuration/triggering of the CSI request.

The UE could be first higher layer configured by the network a list of all possible combinations of M_nsc non-serving cells out of the total N_nsc non-serving cells, where 1 ≤ M_nsc ≤ N_nsc. For example, assume that N_nsc = 3 and the non-serving cells are indexed as NSC#0, NSC#1 and NSC#2. Then, the non-serving cells list could include 7 states, which are {NSC#0}, {NSC#1}, {NSC#2}, {NSC#0, NSC#1}, {NSC#0, NSC#2}, {NSC#1, NSC#2} and {NSC#0, NSC#1, NSC#2}. The NSC indication field in the DCI, e.g., in DCI format 0_1, could be used to indicate a specific state in the list.

For instance, if the NSC indication field is 5, the UE would know that the fifth state in the non-serving cells list, i.e., {NSC#0, NSC#2} is indicated. The UE could then report to the network, e.g., in a single reporting instance, a group of resource indicators such as SSBRIs/CRIs for the serving cell and the non-serving cells #0 and #2 along with their corresponding/associated beam metrics such as L1-RSRPs/L1-SINRs. Or equivalently, the UE could report to the network, e.g., in a single reporting instance, at least three BM-RI pairs/beam qualities including the resource indicators and their corresponding/associated beam metrics, for the serving cell and the non-serving cells #0 and #2, respectively.

Alternatively, the NSC indication field could be a bitmap with the bit string length as N_nsc, and each entry in the bitmap corresponds to a different non-serving cell. For example, for N_nsc = 3, the first, second and third entries in the NSC indication field (i.e., the bitmap) correspond to NSC#0, NSC#1 and NSC#2. Hence, if the NSC indication field is configured as [1 0 1], {NSC#0, NSC#2} is selected and indicated. In another example, the NSC indication could contain the explicit PCI values/other higher layer signaling index values/indices of the entries in a higher layer configured/indicated list of PCI values (or other higher layer signaling index values) corresponding to the M_nsc non-serving cells selected/configured for beam measurement and reporting (i.e., the BM-RI pairs/beam qualities ought to be associated with).

In one example of Option-1d, a new field, denoted by NSC indication field, is defined/incorporated in the DCI, e.g., in DCI format 0_1, or provided in the CSI reporting configuration/setting, e.g., in the higher layer parameter CSI-ReportConfig. The NSC indication field is used as an indication (instead of using the CSI request field in Option-1a and Option-1b) to instruct the UE which M_nsc non-serving cells out of the total N_nsc non-serving cells are for beam measurement and reporting (i.e., the BM-RI pairs/beam qualities may be associated with). The NSC indication field could be configured/triggered along with the configuration/triggering of the CSI request. Both the NSC indication field in the DCI, e.g., in DCI format 0_1, and the MAC-CE command are used to indicate to the UE which M_nsc non-serving cells out of the total N_nsc non-serving cells are for beam measurement and reporting (i.e., the BM-RI pairs/beam qualities may be associated with).

The UE could be first higher layer configured by the network a list of all possible combinations of M_nsc non-serving cells out of the total N_nsc non-serving cells, where 1 ≤ M_nsc ≤ N_nsc. For example, assume that N_nsc = 3 and the non-serving cells are indexed as NSC#0, NSC#1 and NSC#2. Then, the non-serving cells list could include 7 states, which are {NSC#0}, {NSC#1}, {NSC#2}, {NSC#0, NSC#1}, {NSC#0, NSC#2}, {NSC#1, NSC#2} and {NSC#0, NSC#1, NSC#2}. The UE could then receive a MAC-CE that selects a subset of all states in the non-serving cells list. For the example described above, the subset determined by the MAC-CE could be, e.g., {NSC#0}, {NSC#1} and {NSC#0, NSC#2}.

The NSC indication field in DCI 0_1 could then point to a codepoint in the MAC-CE. For instance, if the NSC indication field is 3, the third codepoint in the MAC-CE {NSC#0, NSC#2} is selected and indicated. The UE could then report to the network, e.g., in a single reporting instance, a group of resource indicators such as SSBRIs/CRIs for the serving cell and the non-serving cells #0 and #2 along with their corresponding beam metrics such as L1-RSRPs/L1-SINRs. Or equivalently, the UE could report to the network, e.g., in a single reporting instance, at least three BM-RI pairs/beam qualities including the resource indicators and their corresponding/associated beam metrics, for the serving cell and the non-serving cells #0 and #2, respectively.

In one example of Option-1e, the UE receives from the network a MAC-CE command activating M_nsc non-serving cells from a higher layer configured pool of N_nsc non-serving cells. For instance, for N_nsc = 5, the non-serving cells pool would correspond to {NSC#0, NSC#1, NSC#2, NSC#3, NSC#4}. The MAC-CE command could activate {NSC#0, NSC#2} from the non-serving cells pool. The UE could then report to the network, e.g., in a single reporting instance, a group of resource indicators such as SSBRIs/CRIs for the serving cell and the non-serving cells #0 and #2 along with their corresponding beam metrics such as L1-RSRPs/L1-SINRs. Or equivalently, the UE could report to the network, e.g., in a single reporting instance, at least three BM-RI pairs/beam qualities including both the resource indicators and their corresponding/associated beam metrics, for the serving cell and the non-serving cells #0 and #2, respectively.

For Option-1a and Option-1b, the UE could be indicated by the network that (1) the CSI request field is only used for triggering the aperiodic CSI report from the UE, or (2) the CSI request field is only used as the NSC indication, or (3) in addition to triggering the aperiodic CSI report from the UE, the CSI request field is also used as the NSC indication. In the above described design options, the non-serving cell indices such as NSC#0, NSC#1 and NSC#2 are used for illustrative purpose. They could correspond to different non-serving cells' PCIs, e.g., in/from a non-serving cell PCIs list higher layer configured/indicated to the UE by the network, or any other valid identifiers/higher layer signaling index values.

In one example of Option-2, the UE could autonomously determine and indicate to the network which M_nsc non-serving cells from the total N_nsc non-serving cells (e.g., in form of their PCI values/indices of entries in a list of PCI values/other higher layer signaling index values) the BM-RI pairs/beam qualities (including the resource indicators and their associated/corresponding beam metrics) are associated with. The UE could be higher layer configured/indicated by the network (e.g., via RRC signaling) the total/maximum number of non-serving cells N_nsc. The UE could dynamically determine/select the M_nsc non-serving cells and send to the network the selection result(s) together with the CSI/beam report(s).

In one example of Option-2a, the UE sends to the network an indication (NSC indication) to tell the network which M_nsc non-serving cells out of the total N_nsc non-serving cells the BM-RI pairs/beam qualities (including the resource indicators and their corresponding/associated beam metrics) are associated with. The UE could be first higher layer configured by the network a list of all possible combinations of M_nsc non-serving cells out of the total N_nsc non-serving cells, where 1 ≤ M_nsc ≤ N_nsc.

For example, assume that N_nsc = 3 and the non-serving cells are indexed as NSC#0, NSC#1 and NSC#2. Then, the non-serving cells list could include 8 states, which are {NULL}, {NSC#0}, {NSC#1}, {NSC#2}, {NSC#0, NSC#1}, {NSC#0, NSC#2}, {NSC#1, NSC#2} and {NSC#0, NSC#1, NSC#2}. The UE could configure the NSC indication to indicate a specific state in the list. For instance, the UE could first determine that the beam metrics from NSC#0 and NSC#2 are the highest among those from all the 3 non-serving cells. The UE could then report to the network, e.g., in a single reporting instance, a group of resource indicators such as SSBRIs/CRIs for the serving cell and the non-serving cells #0 and #2 along with their corresponding/associated beam metrics such as L1-RSRPs/L1-SINRs.

Or equivalently, the UE could report to the network, e.g., in a single reporting instance, at least three BM-RI pairs/beam qualities including the resource indicators and their corresponding/associated beam metrics, for the serving cell and the non-serving cells #0 and #2, respectively. Along with the CSI/beam report(s), the UE would also set the NSC indication as 5 and send it to the network. Upon receiving from the UE, the NSC indication, the network could know that the BM-RI pairs/beam qualities (including the resource indicators and their corresponding/associated beam metrics) for the non-serving cells are associated with NSC#0 and NSC#1.

In one example of Option-2b, similar to Option-2a, the UE could send to the network a NSC indication to tell the network which M_nsc non-serving cells out of the total N_nsc non-serving cells the BM-RI pairs/beam qualities (including the resource indicators and their corresponding/associated beam metrics) are associated with. In this design option, the NSC indication is a bitmap with the bit string length as N_nsc, and each entry in the bitmap corresponds to a different non-serving cell.

For example, for N_nsc = 3, the first, second and third entries in the NSC indication bitmap correspond to NSC#0, NSC#1 and NSC#2. Hence, if the UE would send to the network the BM-RI pairs/beam qualities for NSC#0 and NSC#1, the UE would configure the NSC indication bitmap as [1 0 1] and send it to the network along with the CSI/beam report(s). Alternatively, the NSC indication could contain the explicit PCI values/other higher layer signaling index values/indices of the entries in a higher layer configured/indicated list of PCIs (or other higher layer signaling index values) corresponding to the selected M_nsc non-serving cells which the BM-RI pairs/beam qualities (including the resource indicators and their corresponding/associated beam metrics) are associated with.

For both Option-2a and Option-2b, the UE could report to the network the BM-RI pairs/beam qualities (the resource indicator(s) together with the corresponding beam metric(s)) for both the serving cell and the non-serving cell(s), and the NSC indication in two stages (e.g., through two CSI reporting instances). For instance, in the first stage (stage-1), the UE could report to the network the resource indicator(s) and the corresponding beam metric(s) for the serving cell (with the serving cell ID (SCI) and/or the serving cell PCI), along with the NSC indication. In the second stage (stage-2), the UE could report to the network the resource indicator(s) and the corresponding beam metric(s) for the M_nsc non-serving cells.

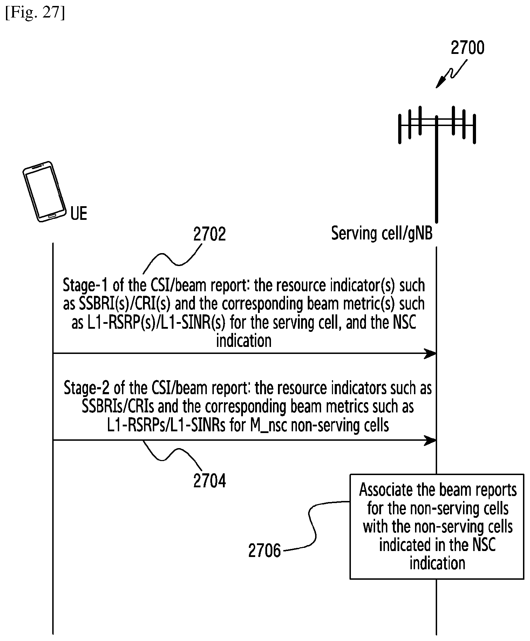

FIGURE 27 illustrates a signaling flow 2700 between the UE and serving cell/gNB for a two-stage beam reporting for the inter-cell operation according to embodiments of the present disclosure. For example, the signaling flow 2700 as may be performed by a UE (e.g., 111-116 as illustrated in FIGURE 1) and a BS (e.g., 101-103 as illustrated in FIGURE 1). An embodiment of the signaling flow 2700 shown in FIGURE 27 is for illustration only. One or more of the components illustrated in FIGURE 27 can be implemented in specialized circuitry configured to perform the noted functions or one or more of the components can be implemented by one or more processors executing instructions to perform the noted functions.

As illustrated in FIGURE 27, the UE in step 2702 sends the first-stage CSI/beam report: the resource indicator(s) such as SSBRI(s)/CRI(s) and the corresponding beam metric(s) such as L1-RSRP(s)/L1-SINR(s) for the serving cell, and the NSC indication. In step 2704, the UE sends the second-stage CSI/beam report: the resource indicators such as SSBRIs/CRIs and the corresponding beam metrics such as L1-RSRPs/L1-SINRs for the M_nsc non-serving cells. In step 2706, the serving cell/gNB associates the beam reports for the non-serving cells with the non-serving cells indicated in the NSC indication.

An example of the above described two-stage signaling procedure is depicted in FIGURE 27. Alternatively, the UE could report to the network in a single reporting instance the BM-RI pairs/beam qualities (the resource indicator(s) such as SSBRI(s)/CRI(s) along with the corresponding/associated beam metric(s) such as L1-RSRP(s)/L1-SINR(s)) for both the serving cell (e.g., associated with the serving cell ID (SCI) and/or the serving cell PCI) and the non-serving cell(s), and the NSC indication in two parts. The first part (Part 1) of the report could have fixed payload size, and indicate the payload size for the second part (Part 2) of the report.

Detailed design procedures of the two-part group based beam reporting for the inter-cell operation are provided and discussed in later parts of this disclosure. In the above described design options, the non-serving cell indices such as NSC#0, NSC#1 and NSC#2 are used for illustrative purpose. They could correspond to different non-serving cells' PCIs, e.g., in/from a non-serving cell PCIs list higher layer configured/indicated to the UE by the network, or any other valid identifiers/higher layer signaling index values.

In one example of Option-3, the UE could receive from the network the indication/instruction on which M_nsc non-serving cells out of the total N_nsc non-serving cells the BM-RI pairs/beam qualities ought to be associated with. The UE could also autonomously determine the M_nsc' non-serving cells from the total N_nsc non-serving cells the BM-RI pairs/beam qualities are associated with. The UE could be higher layer configured/indicated by the network (e.g., via RRC signaling) the total/maximum number of non-serving cells N_nsc. The UE could dynamically determine/select the M_nsc' non-serving cells. The UE may indicate to the network if the UE would report a different NSC configuration from that indicated by the network and/or indicate to the network the different NSC configuration. The UE could send this indication (i.e., the different NSC configuration) together with the CSI/beam report(s).

In one example of Option-3a, the UE could be first configured/indicated by the network via Option-1a, Option-1b, Option-1c, Option-1d and/or Option-1e which M_nsc non-serving cells out of the total N_nsc non-serving cells the BM-RI pairs/beam qualities may be associated with. The UE could then autonomously determine the M_nsc' non-serving cells out of the total N_nsc non-serving cells according to the ranking of their L1-RSRPs/L1-SINRs (note that here M_nsc and M_nsc' could be different values). If the M_nsc' non-serving cells determined at the UE side are different from those indicated by the network, and the UE decides to send the BM-RI pairs/beam qualities (the resource indicator(s) along with the corresponding beam metric(s)) that are associated with their autonomously determined M_nsc' non-serving cells, the UE would employ Option-2a and/or Option-2b to send the BM-RI pairs/beam qualities and the NSC indication to the network. Otherwise, i.e., if the M_nsc' non-serving cells determined at the UE side are the same as those indicated by the network and/or the UE decides to follow the network's instruction/indication, the UE would send the resource indicators such as SSBRIs/CRIs for the serving cell and the non-serving cells (indicated by the network) along with their corresponding beam metrics such as L1-RSRPs/L1-SINRs. In this case, the UE would not send to the network any NSC indication.

In one example of Option-3b, the UE could be first configured/indicated by the network via Option-1a, Option-1b, Option-1c, Option-1d and/or Option-1e which M_nsc non-serving cells out of the total N_nsc non-serving cells the BM-RI pairs/beam qualities may be associated with. The UE could then autonomously determine the M_nsc' non-serving cells out of the total N_nsc non-serving cells according to the ranking of their L1-RSRPs/L1-SINRs (note that here M_nsc and M_nsc' could be different values). If the M_nsc' non-serving cells determined at the UE side are a subset of those indicated by the network and the UE decides to follow their determination of the non-serving cells, the UE could send to the network the BM-RI pairs/beam qualities (the resource indicator(s) along with the corresponding beam metric(s)) that are associated with their autonomously determined M_nsc' non-serving cells, and the UE could further indicate to the network the difference between the network configured/indicated M_nsc non-serving cells and the M_nsc' non-serving cells determined at the UE side. For instance, the UE could use a bitmap with bit string length as M_nsc to indicate the difference. For example, if the network indicated M_nsc non-serving cells are NSC#0, NSC#2 and NSC#6, and the UE determined M_nsc' non-serving cells are NSC#2 and NSC#6, the UE would configure the bitmap as [0 1 1] and send it to the network along with the CSI/beam report(s).

In the above described design options, the non-serving cell indices such as NSC#0, NSC#1 and NSC#2 are used for illustrative purpose. They could correspond to different non-serving cells' PCIs, e.g., in/from a non-serving cell PCIs list higher layer configured/indicated to the UE by the network, or any other valid identifiers/higher layer signaling index values.

For all the above described design options, M_nsc could take all possible integer values in the range of [1, N_nsc]. For instance, if N_nsc = 3, M_nsc could be 1, 2 and 3, and the total number of states in the higher layer configured non-serving cells list (see Option-1a) could be 7. The UE could be higher layer indicated/configured (e.g., via RRC signaling) by the network a fixed/deterministic value of M_nsc per RRC configuration, on top of which the provided design options (Option-1, Option-2 and Option-3) could be applied. For example, if N_nsc = 3 and M_nsc = 2, the total number of states in the non-serving cells list would become 4.

The above discussed procedures are described as follows: the UE could report to the network in a single CSI reporting instance N_bg (N_bg ≥ 1) pairs/groups of beams/resource indicators (and therefore N_bg pairs/groups of beam metrics) with N_bmgp (N_bmgp ≥ 1) beams/resource indicators per pair/group of resource indicators (and therefore N_bmgp beam metrics per pair/group of beam metrics); different beams/resource indicators within a pair/group of beams/resource indicators (and therefore, the corresponding/associated different beam metrics within a pair/group of beam metrics) correspond to both the serving cell and the M_nsc non-serving cell(s); the selection/determination of the M_nsc non-serving cells from the total N_nsc non-serving cells could follow those discussed in Option-1 or/and Option-2 or/and Option-3. Or equivalently, the UE could report in a single reporting instance N_bg*N_bmgp (N_bg ≥ 1, N_bmgp ≥ 1) BM-RI pairs/beam qualities (including the resource indicators and their corresponding/associated beam metrics) for both the serving cell and the M_nsc non-serving cell(s), and the M_nsc non-serving cell(s) could be selected/determined from the total N_nsc non-serving cells following those discussed in Option-1 or/and Option-2 or/and Option-3.

The beam metrics considered in all of the above described schemes/design examples in this disclosure could correspond to L1 based beam metrics such as L1-RSRP/L1-SINR or L3 based beam metrics such as L3-RSRP/L3-SINR or a hybrid of L1 based beam metrics and L3 based beam metrics, though the L1 based beam metrics such as L1-RSRP/L1-SINR are used in the above described schemes/design examples for the illustrative purpose. Furthermore, the UE could be indicated/configured by the network to report in a single CSI reporting instance the BM-RI pairs/beam qualities including the resource indicators and their corresponding/associated beam metrics for both the serving cell and the non-serving cell(s); this indication could be via higher layer RRC (e.g., via the higher layer parameter CSI-ReportConfig) or/and MAC CE or/and DCI based signaling; this indication could be via a separate (dedicated) parameter or joint with another parameter.

In one embodiment, various two-part beam report/two-part UCI formats for both the serving cell and the non-serving cell(s) in an inter-cell/inter-TRP system are provided.

The UE could report to the network in a single reporting instance a beam report including two parts. Part 1 of the beam report/UCI could have a fixed payload size (in terms of the number of bits) and could be used to identify/indicate the size of the payload in Part 2 of the beam report/UCI. Part 1 of the beam report/UCI may be transmitted in its entirety before the transmission of Part 2 of the beam report/UCI. In one example, Part 2 of the beam report/UCI can be absent. When absent, the beam report is via Part 1 only (i.e., one part UCI), and when present, the beam report is via both Part 1 and Part 2 (i.e., two-part UCI).

In one example, Part 2 of the beam report/UCI is always present, but its payload could vary depending on the information in Part 1. In this part of the disclosure, a reported resource indicator (RI) such as SSBRI/CRI and its corresponding/associated beam metric (BM) such as L1-RSRP/L1-SINR form a BM-RI pair {beam metric, resource indicator}. Or a reported resource indicator such as SSBRI/CRI and its corresponding/associated beam metric such as L1-RSRP/L1-SINR form a beam quality.

In one example, the UE could report to the network in a single CSI reporting instance the BM-RI pairs/beam qualities including the resource indicators such as SSBRIs/CRIs and the corresponding/associated beam metrics such as L1-RSRPs/L1-SINRs for both the serving cell and the non-serving cell(s); this report could be in form of the two-part beam report/two-part UCI. In another example, the UE could report to the network in a single CSI reporting instance the BM-RI pairs/beam qualities including the resource indicators such as SSBRIs/CRIs and the corresponding/associated beam metrics such as L1-RSRPs/L1-SINRs for only the non-serving cell(s); this report could be in form of the two-part beam report/two-part UCI. In the following, various design options of the two-part beam report/UCI for the inter-cell/inter-TRP operation are presented. Note that they can be extended/applied to other inter-TRP deployment scenarios as well, such as the multi-TRP operation depicted in FIGURE 19, with moderate modifications.

In one example of Scheme-1, Part 1 of the beam report/UCI could contain at least one of the following: one or more resource indicators such as SSBRIs/CRIs for the serving cell (e.g., associated with the serving cell ID (SCI) and/or the serving cell PCI), one or more beam metrics such as L1-RSRPs/L1-SINRs corresponding to/associated with the SSBRIs/CRIs for the serving cell (i.e., one or more BM-RI pairs/beam qualities containing the resource indicators and the corresponding/associated beam metrics for the serving cell), a NSC indication to indicate which M_nsc (≥1) non-serving cells out of the total N_nsc (≥1) non-serving cells (e.g., in form of their PCI values/indices of entries in a list of PCI values/other higher layer signaling index values) the resource indicators/beam metrics in Part 2 of the beam report/UCI are associated with, the number of the selected non-serving cells (i.e., M_nsc), the number of BM-RI pairs/beam qualities (including both the resource indicators and their corresponding/associated beam metrics) in Part 2 of the beam report/UCI for the selected M_nsc non-serving cells (denoted by L_nsc≥1), and a set of size M_nsc with each entry in the set corresponding to the number of BM-RI pairs/beam qualities (including both the resource indicators and their corresponding/associated beam metrics) for a different non-serving cell from the selected M_nsc non-serving cells; the UE could be higher layer configured/indicated by the network (e.g., via RRC signaling) the total/maximum number of non-serving cells N_nsc and/or the total/maximum number of L_nsc, denoted by K_nsc (e.g., via the higher layer parameter CSI-ReportConfig).

For instance, the candidate values for K_nsc could be 4, 8 or 16, the UE could dynamically determine/select the M_nsc non-serving cells with 1 ≤ M_nsc ≤ N_nsc and/or L_nsc; Part 2 of the beam report/UCI could contain at least one of the following: at least M_nsc, or L_nsc, resource indicators such as SSBRIs/CRIs for the M_nsc non-serving cells indicated in Part 1 of the beam report/UCI, and the corresponding at least M_nsc, or L_nsc, beam metrics such as L1-RSRPs/L1-SINRs (i.e., at least M_nsc, or L_nsc, BM-RI pairs/beam qualities containing the resource indicators and the corresponding beam metrics for the M_nsc non-serving cells indicated in Part 1 of the beam report/UCI).

The number of selected non-serving cells M_nsc, and therefore, which M_nsc non-serving cells out of the total N_nsc non-serving cells the resource indicators/beam metrics in Part 2 of the beam report/UCI are associated with, and/or L_nsc could be dynamically indicated/configured by the UE and/or the network because M_nsc could take all possible integer values in the range of 1 ≤ M_nsc ≤ N_nsc and L_nsc could take all possible integer values in the range of 1 ≤ L_nsc ≤ K_nsc. Alternatively, M_nsc and/or L_nsc could be a fixed value (e.g., 2) and/or a deterministic value per RRC configuration, and known to both the network and the UE sides.

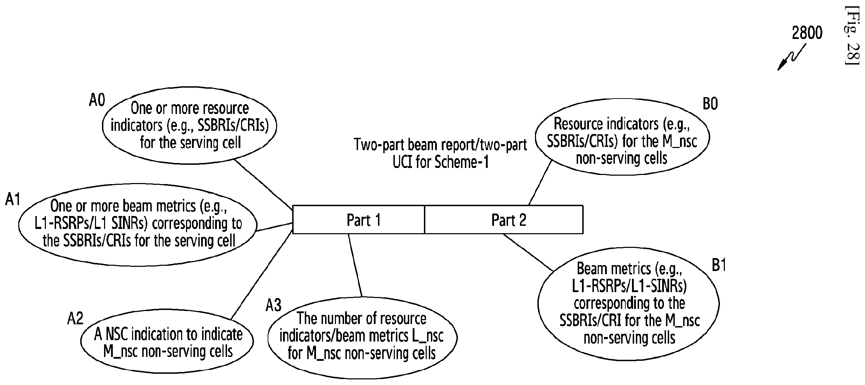

FIGURE 28 illustrates an example of two-part beam report/two-part UCI format for the inter-cell operation 2800 according to embodiments of the present disclosure. An embodiment of the two-part beam report/two-part UCI format for the inter-cell operation 2800 shown in FIGURE 28 is for illustration only.

As illustrated in FIGURE 28, one design example of the two-part beam report/two-part UCI for Scheme-1 is presented.

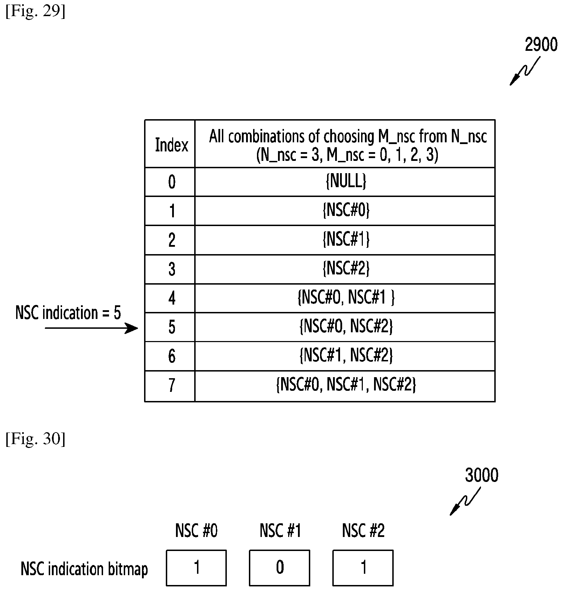

In one example-1.1, the NSC indication could indicate a specific state/entry from a list containing all possible combinations of M_nsc non-serving cells out of the total N_nsc non-serving cells, e.g., in form of their PCIs/indices of entries in a list of PCI values/other higher layer signaling index values, where 1 ≤ M_nsc ≤ N_nsc; the list could be higher layer configured/indicated to the UE, e.g., via RRC signaling. For example, assume that N_nsc = 3 and the non-serving cells are indexed as NSC#0, NSC#1 and NSC#2 (as discussed before, the NSC index values could correspond to the NSC's PCI values/other higher layer signaling index values). Then, the non-serving cells list could include 8 states, which are {NULL}, {NSC#0}, {NSC#1}, {NSC#2}, {NSC#0, NSC#1}, {NSC#0, NSC#2}, {NSC#1, NSC#2} and {NSC#0, NSC#1, NSC#2}. If the UE sets the NSC indication as 5 (as shown in FIGURE 29), the non-serving cells NSC#0 and NSC#2 are indicated in Part 1 of the beam report/UCI, and their associated resource indicators (SSBRIs/CRIs) and beam metrics (L1-RSRPs/L1-SINRs) would be included in Part 2 of the beam report/UCI (e.g., in terms of the BM-RI pairs/beam qualities; in this example, two BM-RI pairs/two beam qualities could be configured, for NSC#0 and NSC#2, respectively).

FIGURE 29 illustrates an example of non-serving cell (NSC) information indication 2900 according to embodiments of the present disclosure. An embodiment of the NSC information indication 2900 shown in FIGURE 29 is for illustration only.

If the UE sets the NSC indication as 0 (corresponding to M_nsc = 0), a {NULL} state is obtained/returned from the table in FIGURE 29, indicating that Part 2 of the beam report/UCI is absent. Alternatively, if M_nsc = 0, the NSC indication could be absent/not reported in Part 1 of the beam report/UCI, and Part 2 of the beam report/UCI is therefore absent.

FIGURE 30 illustrates an example of non-serving cell (NSC) information indication via a bitmap 3000 according to embodiments of the present disclosure. An embodiment of the NSC information indication via the bitmap 3000 shown in FIGURE 30 is for illustration only.

In one example-1.2, the NSC indication could be a bitmap with length N_nsc. Each entry in the bitmap corresponds to a different non-serving cell. For example, for N_nsc = 3, the first, second and third entries in the NSC indication bitmap correspond to NSC#0, NSC#1 and NSC#2. Hence, if the UE configures the NSC indication bitmap as [1 0 1] (as shown in FIGURE 30), the non-serving cells NSC#0 and NSC#2 are indicated in Part 1 of the beam report/UCI, and their associated resource indicators (SSBRIs/CRIs) and beam metrics (L1-RSRPs/L1-SINRs) would be included in Part 2 of the beam report/UCI (e.g., in terms of the BM-RI pairs/beam qualities; in this example, two BM-RI pairs/two beam qualities are configured/included, for NSC#0 and NSC#2, respectively). If the UE configures the NSC indication bitmap as [0 0 0] (corresponding to M_nsc = 0), it indicates that Part 2 of the beam report/UCI is absent. Alternatively, if M_nsc = 0, the NSC indication could be absent/not reported in Part 1 of the beam report/UCI, and Part 2 of the beam report/UCI is therefore absent.

In one example-1.3, the NSC indication could include the explicit PCI values/other higher layer signaling index values of the selected M_nsc NSCs. Alternatively, the NSC indication could include the indices of the PCI values/other higher layer signaling index values of the selected M_nsc NSCs in a list of NSC's PCI values/other higher layer signaling index values. If the NSC indication is absent/not reported in Part 1 of the beam report/UCI, Part 2 of the beam report/UCI is absent.

In one example-1.4, the NSC indication could be any combination of the NSC indications in example-1.1, example-1.2 and/or example-1.3.

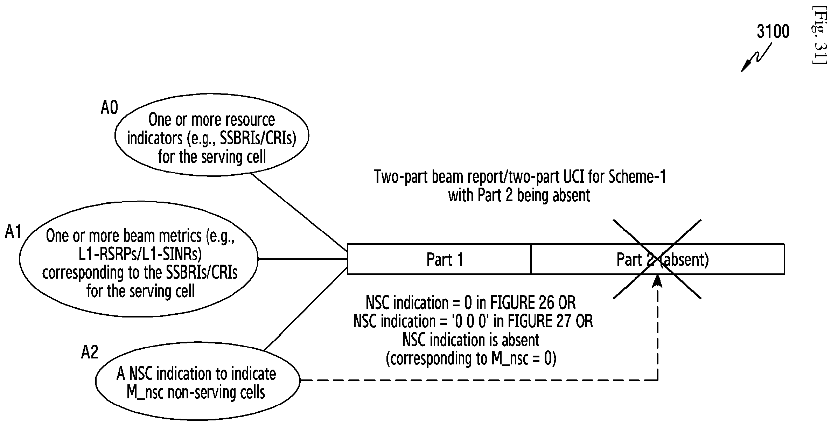

FIGURE 31 illustrates an example of two-part beam report/two-part UCI format for the inter-cell operation 3100 according to embodiments of the present disclosure. An embodiment of the two-part beam report/two-part UCI for the inter-cell operation 3100 shown in FIGURE 31 is for illustration only.

As illustrated in FIGURE 31, a diagram illustrating the case wherein Part 2 of the beam report/UCI is absent (indicated via the NSC indication in Part 1 of the beam report/UCI, or indicated via the absence of the NSC indication in Part 1 of the beam report/UCI) is presented.

In the above described design examples, the non-serving cell indices such as NSC#0, NSC#1 and NSC#2 are used for illustrative purpose. They could correspond to different non-serving cells' PCIs, e.g., in/from a non-serving cell PCIs list higher layer configured/indicated to the UE by the network, or any other valid identifiers/higher layer signaling index values.

In one example of Scheme-2a, Part 1 of the beam report/UCI could contain at least one of the following: one or more resource indicators such as SSBRIs/CRIs for the serving cell (e.g., associated with the serving cell ID (SCI) and/or the serving cell PCI), one or more beam metrics such as L1-RSRPs/L1-SINRs corresponding to/associated with the SSBRIs/CRIs for the serving cell (i.e., one or more BM-RI pairs/beam qualities containing the resource indicators and the corresponding beam metrics for the serving cell), one or more resource indicators such as SSBRIs/CRIs for a non-serving cell (denoted by cell-q), one or more beam metrics such as L1-RSRPs/L1-SINRs corresponding to the SSBRIs/CRIs for the non-serving cell (cell-q) (i.e., one or more BM-RI pairs/beam qualities containing the resource indicators and the corresponding beam metrics for the non-serving cell cell-q), a first NSC indication to indicate which M_nsc non-serving cells out of the total N_nsc non-serving cells are selected (e.g., in form of their PCI values/indices of entries in a list of PCI values/other higher layer signaling index values), a second NSC indication (if reported) to indicate cell-q's index in the selected M_nsc non-serving cells, the number of the selected non-serving cells (i.e., M_nsc), the number of the selected non-serving cells for Part 2 of the beam report/UCI (i.e., M_nsc- 1), the number of BM-RI pairs/beam qualities (including both the resource indicators and their corresponding/associated beam metrics) for cell-q (denoted by L_q≥1), the number of BM-RI pairs/beam qualities (including both the resource indicators and their corresponding/associated beam metrics) for the selected M_nsc non-serving cells (denoted by L_nsc≥1), a set of size M_nsc with each entry in the set corresponding to the number of BM-RI pairs/beam qualities (including both the resource indicators and their corresponding/associated beam metrics) for a different non-serving cell from the selected M_nsc non-serving cells, and a set of size (M_nsc - 1) with each entry in the set corresponding to the number of BM-RI pairs/beam qualities (including both the resource indicators and their corresponding/associated beam metrics) for a different non-serving cell from the selected (M_nsc - 1) non-serving cells (i.e., excluding cell-q from the selected M_nsc non-serving cells).

The UE could be higher layer configured/indicated by the network (e.g., via RRC signaling) the total/maximum number of non-serving cells N_nsc and/or the total/maximum number of L_nsc, denoted by K_nsc (e.g., via the higher layer parameter CSI-ReportConfig); for instance, the candidate values for K_nsc could be 4, 8 or 16; the UE could dynamically determine/select the M_nsc non-serving cells with 1 ≤ M_nsc ≤ N_nsc and/or L_nsc and/or L_q; Part 2 of the beam report/UCI could contain at least one of the following: at least (M_nsc - 1), or (L_nsc - L_q), resource indicators such as SSBRIs/CRIs for the (M_nsc - 1) non-serving cells indicated in Part 1 of the beam report/UCI (i.e., excluding cell-q from the selected M_nsc non-serving cells), and the corresponding at least (M_nsc -1), or (L_nsc - L_q), beam metrics such as L1-RSRPs/L1-SINRs (i.e., at least (M_nsc - 1), or (L_nsc - L_q), BM-RI pairs/beam qualities containing the resource indicators and the corresponding/associated beam metrics for the (M_nsc - 1) non-serving cells excluding the non-serving cell cell-q from the selected M_nsc non-serving cells).

The number of selected non-serving cells (M_nsc - 1) for Part 2 of the beam report/UCI, and therefore, which (M_nsc - 1) non-serving cells out of the total (N_nsc - 1) non-serving cells the resource indicators/beam metrics in Part 2 of the beam report/UCI are associated with, and/or L_nsc and/or L_q could be dynamically indicated/configured by the UE and/or the network because M_nsc could take all possible integer values in the range of 1 ≤ M_nsc ≤ N_nsc and L_nsc/L_q could take all possible integer values in the range of 1 ≤ L_nsc, L_q ≤ K_nsc. Alternatively, M_nsc and/or L_nsc and/or L_q could be a fixed value (e.g., 2) and/or a deterministic value per RRC configuration, and known to both the network and the UE sides.

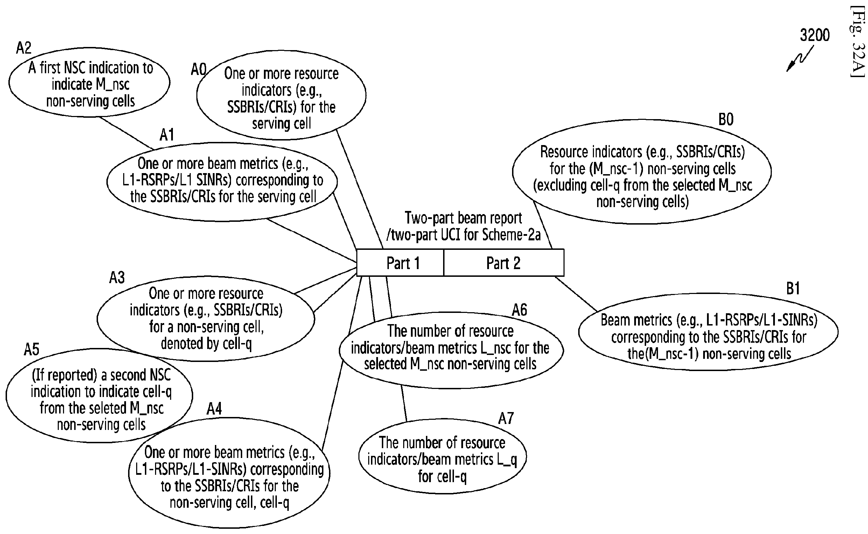

FIGURE 32A illustrates an example of two-part beam report/two-part UCI format for the inter-cell operation 3200 according to embodiments of the present disclosure. An embodiment of the two-part beam report/two-part UCI format for the inter-cell operation 3200 shown in FIGURE 32A is for illustration only.

As illustrated in FIGURE 32A, one design example of the two-part beam report/two-part UCI for Scheme-2a is presented.

Here, the first NSC indication in Scheme-2a is the same as the NSC indication in Scheme-1, i.e., it could be a combinatorial indication of choosing M_nsc non-serving cells from the total of N_nsc non-serving cells (see, e.g., FIGURE 29), or a bitmap with length N_nsc (see, e.g., FIGURE 30), or comprise of the explicit PCI values/other higher layer signaling index values of the selected M_nsc NSCs, or comprise of the indices of the entries in the list of PCI values/other higher layer signaling index values corresponding to the selected M_nsc NSCs, or any combination of the above (i.e., any combination of the NSC indications in example-1.1, example-1.2 and/or example-1.3). If M_nsc = 0 (NSC indication = 0 in FIGURE 29 or NSC indication bitmap = [0 0 0] in FIGURE 30) or M_nsc = 1 (NSC indication = 1, 2 or 3 in FIGURE 29, or NSC indication bitmap = [1 0 0], [0 1 0], or [0 0 1] in FIGURE 30), Part 2 of the beam report/UCI would be absent.

Furthermore, if M_nsc = 0 or M_nsc = 1, the second NSC indication could also be absent/not reported in Part 1 of the beam report/UCI. Furthermore, if M_nsc = 0, the first NSC indication could be absent/not reported in Part 1 of the beam report/UCI meaning that Part 1 of the beam report/UCI only includes the BM-RS pair(s)/beam quality(s) of the resource indicator(s) and the corresponding/associated beam metric(s) for the serving cell. Hence, if the first NSC indication is absent/not reported in Part 1 of the beam report/UCI, the second NSC indication in Part 1 of the beam report/UCI, and therefore Part 2 of the beam report/UCI would also be absent.

The second NSC indication could explicitly indicate cell-q's PCI value/higher layer signaling index value. Alternatively, the second NSC indication could indicate the index of cell-q in the list of selected M_nsc non-serving cells. For the example shown in FIGURE 29, {NSC#0, NSC#2} are indicated as the selected non-serving cells because the first NSC indication is 5. If cell-q corresponds to NSC#0, e.g., the beam metric of NSC#0 is higher than that of NSC#2, the second NSC indicator would be configured as 1. If, e.g., cell-q would always correspond to the first PCI/cell in the list of the selected M_nsc non-serving cells or the lowest/highest PCI among all the selected M_nsc non-serving cells PCIs, the second NSC indication may no longer be needed/reported.

In the above described design examples, the non-serving cell indices such as NSC#0, NSC#1 and NSC#2 are used for illustrative purpose. They could correspond to different non-serving cells' PCIs, e.g., in/from a non-serving cell PCIs list higher layer configured/indicated to the UE by the network, or any other valid identifiers/higher layer signaling index values.

In one example of Scheme-2b, Part 1 of the beam report/UCI could contain at least one of the following: one or more resource indicators such as SSBRIs/CRIs for the serving cell (e.g., associated with the serving cell ID (SCI) and/or the serving cell PCI), one or more beam metrics such as L1-RSRPs/L1-SINRs corresponding to/associated with the SSBRIs/CRIs for the serving cell (i.e., one or more BM-RI pairs/beam qualities containing the resource indicators and the corresponding beam metrics for the serving cell), one or more resource indicators such as SSBRIs/CRIs for a non-serving cell (denoted by cell-q), one or more beam metrics such as L1-RSRPs/L1-SINRs corresponding to/associated with the SSBRIs/CRIs for the non-serving cell (cell-q) (i.e., one or more BM-RI pairs/beam qualities containing the resource indicators and the corresponding beam metrics for the non-serving cell cell-q), a NSC indication to jointly indicate which M_nsc non-serving cells out of the total N_nsc non-serving cells are selected (e.g., in form of their PCI values/indices of entries in a list of PCI values/other higher layer signaling index values) and cell-q's index in the selected M_nsc non-serving cells, the number of the selected non-serving cells (i.e., M_nsc), the number of the selected non-serving cells for Part 2 of the beam report/UCI (i.e., M_nsc - 1), the number of BM-RI pairs/beam qualities (including both the resource indicators and their corresponding/associated beam metrics) for cell-q (denoted by L_q≥1), the number of BM-RI pairs/beam qualities (including both the resource indicators and their corresponding/associated beam metrics) for the selected M_nsc non-serving cells (denoted by L_nsc≥1), a set of size M_nsc with each entry in the set corresponding to the number of BM-RI pairs/beam qualities (including both the resource indicators and their corresponding/associated beam metrics) for a different non-serving cell from the selected M_nsc non-serving cells, and a set of size (M_nsc - 1) with each entry in the set corresponding to the number of BM-RI pairs/beam qualities (including both the resource indicators and their corresponding/associated beam metrics) for a different non-serving cell from the selected (M_nsc - 1) non-serving cells (i.e., excluding cell-q from the selected M_nsc non-serving cells).

The UE could be higher layer configured/indicated by the network (e.g., via RRC signaling) the total/maximum number of non-serving cells N_nsc and/or the total/maximum number of L_nsc, denoted by K_nsc (e.g., via the higher layer parameter CSI-ReportConfig); for instance, the candidate values for K_nsc could be 4, 8 or 16; the UE could dynamically determine/select the M_nsc non-serving cells with 1 ≤ M_nsc ≤ N_nsc and/or L_nsc and/or L_q; Part 2 of the beam report/UCI could contain at least one of the following: at least (M_nsc - 1), or (L_nsc - L_q), resource indicators such as SSBRIs/CRIs for the (M_nsc - 1) non-serving cells indicated in Part 1 of the beam report/UCI (i.e., excluding cell-q from the selected M_nsc non-serving cells), and the corresponding at least (M_nsc -1), or (L_nsc - L_q), beam metrics such as L1-RSRPs/L1-SINRs (i.e., at least (M_nsc - 1), or (L_nsc - L_q), BM-RI pairs/beam qualities containing the resource indicators and the corresponding beam metrics for the (M_nsc - 1) non-serving cells excluding the non-serving cell cell-q from the selected M_nsc non-serving cells).

The number of selected non-serving cells (M_nsc - 1) for Part 2 of the beam report/UCI, and therefore, which (M_nsc - 1) non-serving cells out of the total (N_nsc - 1) non-serving cells the resource indicators/beam metrics in Part 2 of the beam report/UCI are associated with, and/or L_nsc and/or L_q could be dynamically indicated/configured by the UE and/or the network because M_nsc could take all possible integer values in the range of 1 ≤ M_nsc ≤ N_nsc and L_nsc/L_q could take all possible integer values in the range of 1 ≤ L_nsc, L_q ≤ K_nsc. Alternatively, M_nsc and/or L_nsc and/or L_q could be a fixed value (e.g., 2) and/or a deterministic value per RRC configuration, and known to both the network and the UE sides.

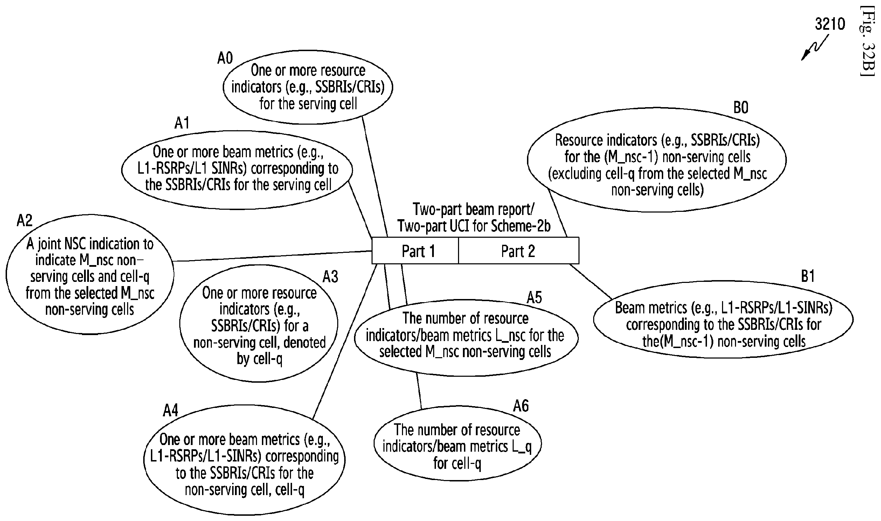

FIGURE 32B illustrates an example of non-serving cell (NSC) information indication 3210 according to embodiments of the present disclosure. An embodiment of the NSC information indication 3210 shown in FIGURE 32B is for illustration only.

As illustrated in FIGURE 32B, one design example of the two-part beam report/two-part UCI for Scheme-2b is presented. As can be seen from FIGURE 32A and FIGURE 32B, most of the key components in Scheme-2a and Scheme-2b are the same, except that a joint NSC indication (A2 in FIGURE 32B) is used in Scheme-2b while separate first and second NSC indications (A2 and A5 in FIGURE 32A) are used in Scheme-2a.

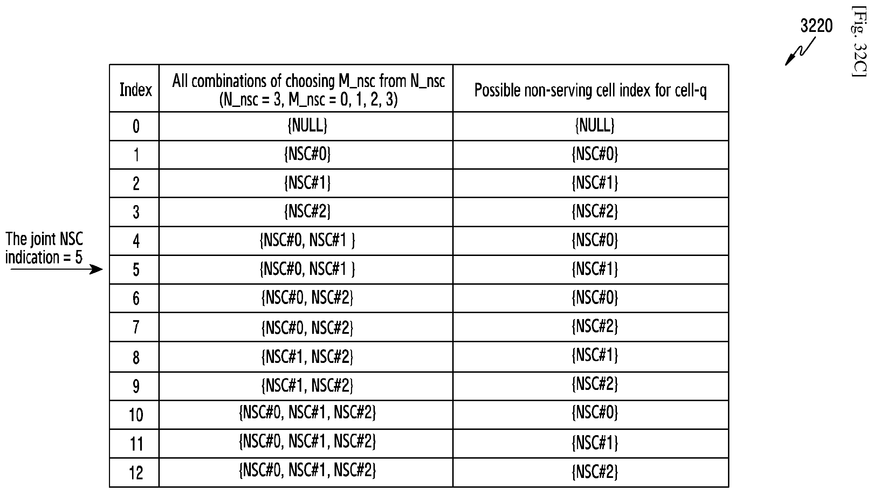

FIGURE 32C illustrates an example of non-serving cell (NSC) information indication 3220 according to embodiments of the present disclosure. An embodiment of the NSC information indication 3220 shown in FIGURE 32C is for illustration only.

In one example-2.1, a design example of the NSC indication in A2 in FIGURE 32B (jointly indicate the M_nsc non-serving cells and cell-q from the M_nsc non-serving cells) is presented in FIGURE 32C.

In contrast to the example shown in FIGURE 29, in which the NSC indication is only used to indicate the M_nsc non-serving cells, the table shown in FIGURE 32C exhibits more states/entries to characterize all possible non-serving cell indices for cell-q. For instance, if {NSC#0, NSC#1} are indicated as the selected non-serving cells (with M_nsc = 2), cell-q could correspond to either NSC#0 or NSC#1. As indicated in FIGURE 32C, since the UE configures the joint NSC indication as 5, not only the selected non-serving cells are indicated as {NSC#0, NSC#1}, but also cell-q is indicated as NSC#1, in Part 1 of the beam report/UCI.

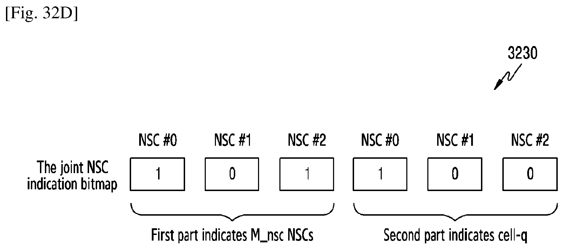

FIGURE 32D illustrates an example of non-serving cell (NSC) information indication via a bitmap 3230 according to embodiments of the present disclosure. An embodiment of the NSC information indication via the bitmap 3230 shown in FIGURE 32D is for illustration only.

In one example-2.2, the NSC indication in A2 in FIGURE 32B could also be constructed as a bitmap with length 2*N_nsc. As indicated in FIGURE 32D, the NSC indication bitmap contains two parts. The first part has N_nsc entries and is used to indicate the selected M_nsc non-serving cells. The second part has N_nsc entries to indicate cell-q. In this example, the NSC indication bitmap is configured as [1 0 1 1 0 0], implying that {NSC#0, NSC#2} are indicated as the selected non-serving cells (with M_nsc = 2), and NSC#0 is indicated as cell-q.

In one example-2.3, alternatively, the NSC indication in A2 in FIGURE 32B could comprise of the explicit PCI values/other higher layer signaling index values of the selected M_nsc NSCs and cell-q, or comprise of the indices of the entries in the list of PCI values/other higher layer signaling index values corresponding to the selected M_nsc NSCs and cell-q.

In one example-2.4, the NSC indication could be any combination of the NSC indications in example-2.1, example-2.2 and/or example-2.3.

If M_nsc = 0 (the joint NSC indication = 0 in FIGURE 32C or the first part of the joint NSC indication bitmap = [0 0 0] in FIGURE 32D) or M_nsc = 1 (the joint NSC indication = 1, 2 or 3 in FIGURE 32C, or the first part of the joint NSC indication bitmap = [1 0 0], [0 1 0], or [0 0 1] in FIGURE 32D), Part 2 of the beam report/UCI would be absent. For M_nsc = 0, the joint NSC indication could be absent/not reported in Part 1 of the beam report/UCI meaning that Part 1 of the beam report/UCI only includes the BM-RI pair(s)/beam quality(s) containing the resource indicator(s) and the corresponding/associated beam metric(s) for the serving cell, and Part 2 of the beam report/UCI is absent.

In the above described design examples, the non-serving cell indices such as NSC#0, NSC#1 and NSC#2 are used for illustrative purpose. They could correspond to different non-serving cells' PCIs, e.g., in/from a non-serving cell PCIs list higher layer configured/indicated to the UE by the network, or any other valid identifiers/higher layer signaling index values.

In one example of Scheme-2c, Part 1 of the beam report/UCI could contain at least one of the following: one or more resource indicators such as SSBRIs/CRIs for the serving cell (e.g., associated with the serving cell ID (SCI) and/or the serving cell PCI), one or more beam metrics such as L1-RSRPs/L1-SINRs corresponding to/associated with the SSBRIs/CRIs for the serving cell (i.e., one or more BM-RI pairs/beam qualities containing the resource indicators and the corresponding/associated beam metrics for the serving cell), one or more resource indicators such as SSBRIs/CRIs for a non-serving cell (denoted by cell-q), one or more beam metrics such as L1-RSRPs/L1-SINRs corresponding to/associated with the SSBRIs/CRIs for the non-serving cell (cell-q) (i.e., one or more BM-RI pairs/beam qualities containing the resource indicators and the corresponding/associated beam metrics for the non-serving cell cell-q), the PCI value or any other valid identifier/higher layer signaling index value for cell-q, a NSC indication to indicate which (M_nsc - 1) non-serving cells out of the total (N_nsc - 1) non-serving cells (e.g., in form of their PCI values/indices of entries in a list of PCI values/other higher layer signaling index values) are selected (not including cell-q), the number of the selected non-serving cells (i.e., M_nsc), the number of the selected non-serving cells for Part 2 of the beam report/UCI (i.e., M_nsc - 1), the number of BM-RI pairs/beam qualities (including both the resource indicators and their corresponding/associated beam metrics) for cell-q (denoted by L_q≥1), the number of BM-RI pairs/beam qualities (including both the resource indicators and their corresponding/associated beam metrics) for the selected M_nsc non-serving cells (denoted by L_nsc≥1), a set of size M_nsc with each entry in the set corresponding to the number of BM-RI pairs/beam qualities (including both the resource indicators and their corresponding/associated beam metrics) for a different non-serving cell from the selected M_nsc non-serving cells, and a set of size (M_nsc - 1) with each entry in the set corresponding to the number of BM-RI pairs/beam qualities (including both the resource indicators and their corresponding/associated beam metrics) for a different non-serving cell from the selected (M_nsc - 1) non-serving cells (i.e., excluding cell-q from the selected M_nsc non-serving cells).

The UE could be higher layer configured/indicated by the network the total/maximum number of non-serving cells N_nsc and/or the total/maximum number of L_nsc, denoted by K_nsc (e.g., via the higher layer parameter CSI-ReportConfig); for instance, the candidate values for K_nsc could be 4, 8 or 16; the UE could dynamically determine/select the (M_nsc - 1) non-serving cells with 1 ≤ M_nsc ≤ N_nsc and/or L_nsc and/or L_q. Part 2 of the beam report/UCI could contain at least one of the following: at least (M_nsc - 1), or (L_nsc - L_q), resource indicators such as SSBRIs/CRIs for the (M_nsc - 1) non-serving cells indicated in Part 1 of the beam report/UCI, and the corresponding/associated at least (M_nsc - 1), or (L_nsc - L_q), beam metrics such as L1-RSRPs/L1-SINRs (i.e., at least (M_nsc - 1), or (L_nsc - L_q), BM-RI pairs/beam qualities containing the resource indicators and the corresponding/associated beam metrics for the (M_nsc - 1) non-serving cells indicated by the NSC indication in Part 1 of the beam report/UCI).

The number of the selected non-serving cells (M_nsc - 1) for Part 2 of the beam report/UCI, and therefore, which (M_nsc - 1) non-serving cells out of the total (N_nsc - 1) non-serving cells the resource indicators/beam metrics in Part 2 of the beam report/UCI are associated with, and/or L_nsc and/or L_q could be dynamically indicated/configured by the UE and/or the network because M_nsc could take all possible integer values in the range of 1 ≤ M_nsc ≤ N_nsc and L_nsc/L_q could take all possible integer values in the range of 1 ≤ L_nsc, L_q ≤ K_nsc.

Alternatively, M_nsc and/or L_nsc and/or L_q could be a fixed value (e.g., 2) and/or a deterministic value per RRC configuration, and is known to both the network and the UE sides.

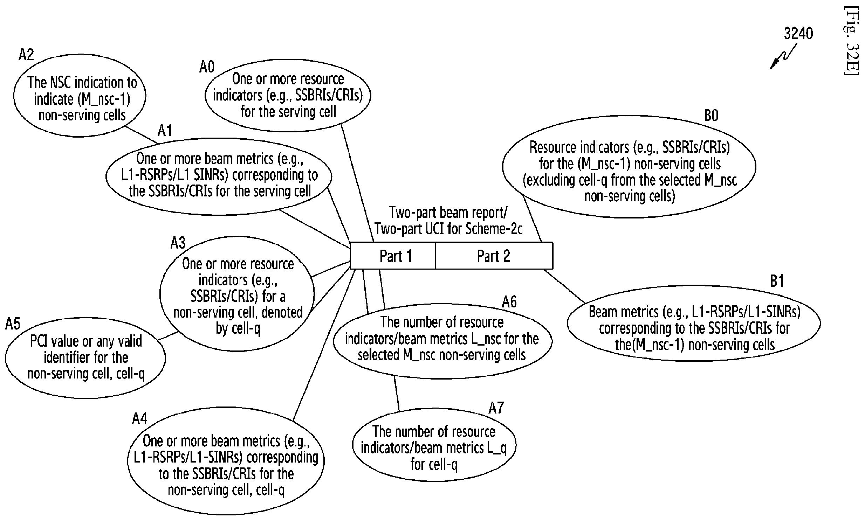

FIGURE 32E illustrates an example of two-part beam report/two-part UCI for the inter-cell operation 3240 according to embodiments of the present disclosure. An embodiment of the two-part beam report/two-part UCI for the inter-cell operation 3240 shown in FIGURE 32E is for illustration only.

As illustrated in FIGURE 32E, one design example of the two-part beam report/two-part UCI for Scheme-2c is presented. Different from Scheme-2a in FIGURE 32A, A2 in Part 1 of the beam report/UCI in Scheme-2c indicates the selected (M_nsc - 1) non-serving cells (not including cell-q) while A2 in Part 1 of the beam report/UCI in Scheme-2a indicates the selected M_nsc non-serving cells (including cell-q). Furthermore, in Scheme-2c, the PCI value or any valid identifier/higher layer signaling index for cell-q is explicitly included in Part 1 of the beam report/UCI (see A5 in FIGURE 32E).

Here, the NSC indication in Scheme-2c is similar to the first NSC indication in Scheme-2a, i.e., it could be a combinatorial indication of choosing (M_nsc - 1) non-serving cells from the total (N_nsc - 1) non-serving cells (not including cell-q, M_nsc = 1, 2, ..., N_nsc), or a bitmap with length N_nsc - 1, or comprise of the explicit PCI values/other higher layer signaling index values of the selected (M_nsc - 1) NSCs (not including cell-q), or comprise of the indices of the entries in the list of PCI values/other higher layer signaling index values corresponding to the selected (M_nsc - 1) NSCs (not including cell-q), or any combination of the above.

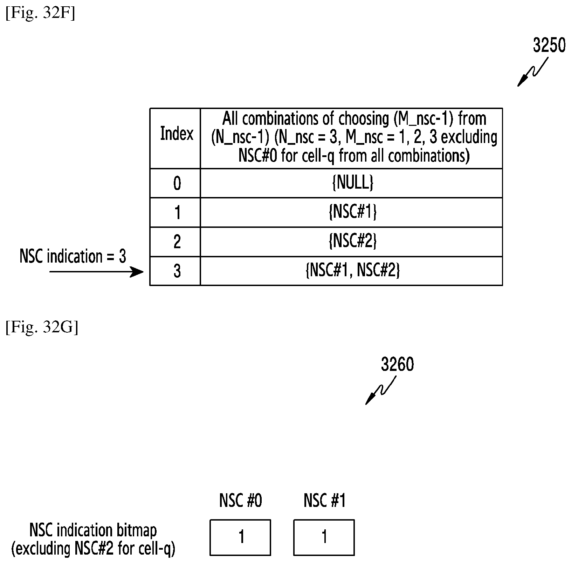

For example, assume that N_nsc = 3 and the non-serving cells are indexed as NSC#0, NSC#1 and NSC#2. Furthermore, if cell-q corresponds to NSC#0 (its PCI value or any valid identifier/higher layer signaling index has been reported/included in Part 1 of the beam report/UCI), the non-serving cells list for Part 2 of the beam report/UCI could include 4 states, which are {NULL}, {NSC#1}, {NSC#2}, and {NSC#1, NSC#2}. If the UE sets the NSC indication as 3 (as shown in FIGURE 32F), the non-serving cells NSC#1 and NSC#2 are indicated in Part 1 of the beam report/UCI. If the UE sets the NSC indication as 0 (corresponding to M_nsc = 1), Part 2 of the beam report/UCI would be absent. The resource indicator(s) and the corresponding/associated beam metric(s) (i.e., the corresponding at least (M_nsc - 1), or (L_nsc - L_q), BM-RI pairs/beam qualities) for the (M_nsc - 1) non-serving cell(s) indicated in Part 1 of the beam report/UCI (NSC#1 and NSC#2 in this example) are reported in Part 2 of the beam report/UCI.

FIGURE 32F illustrates an example of non-serving cell (NSC) information indication 3250 according to embodiments of the present disclosure. An embodiment of the NSC information indication 3250 shown in FIGURE 32F is for illustration only.

The NSC indication could be a bitmap with length N_nsc - 1 (not including cell-q). Each entry in the bitmap corresponds to a different non-serving cell. For example, assuming that N_nsc = 3 and cell-q corresponds to NSC#2, the first and second entries in the NSC indication bitmap correspond to NSC#0 and NSC#1.

FIGURE 32G illustrates an example of non-serving cell (NSC) information indication via a bitmap 3260 according to embodiments of the present disclosure. An embodiment of the NSC information indication via the bitmap 3260 shown in FIGURE 32G is for illustration only.

Hence, if the UE configures the NSC indication bitmap as [1 1] (as shown in FIGURE 32G), the non-serving cells NSC#0 and NSC#1 are indicated in Part 1 of the beam report/UCI. If the UE configures the NSC indication bitmap as [0 0] (corresponding to M_nsc = 1), it indicates that Part 2 of the beam report/UCI is absent. The resource indicator(s) and the corresponding/associated beam metric(s) (i.e., the corresponding at least (M_nsc - 1), or (L_nsc - L_q), BM-RI pairs/beam qualities) for the (M_nsc - 1) non-serving cell(s) indicated by the NSC indication in Part 1 of the beam report/UCI (NSC#0 and NSC#1 in this example) are reported in Part 2 of the beam report/UCI.

Furthermore, if M_nsc = 0, Part 1 of the beam report/UCI only includes the BM-RI pair(s)/beam quality(s) containing the resource indicator(s) and the corresponding/associated beam metric(s) for the serving cell. In this case, A3, A4 and A5 in FIGURE 32E would be absent/not reported in Part 1 of the beam report/UCI, and therefore, Part 2 of the beam report/UCI would be absent.

In the above described design examples, the non-serving cell indices such as NSC#0, NSC#1 and NSC#2 are used for illustrative purpose. They could correspond to different non-serving cells' PCIs, e.g., in/from a non-serving cell PCIs list higher layer configured/indicated to the UE by the network, or any other valid identifiers/higher layer signaling index values.

In one example of Scheme-3, for Scheme-1, Scheme-2a, Scheme-2b and Scheme-2c, an additional indication to indicate the deterministic/fixed number/value of M_nsc, could be incorporated into Part 1 of the beam report/UCI. Recall that in Scheme-1, Scheme-2a, Scheme-2b and Scheme-2c, M_nsc could take all possible integer values from 1 to N_nsc. Here, M_nsc is deterministic and fixed for a given RRC configuration.

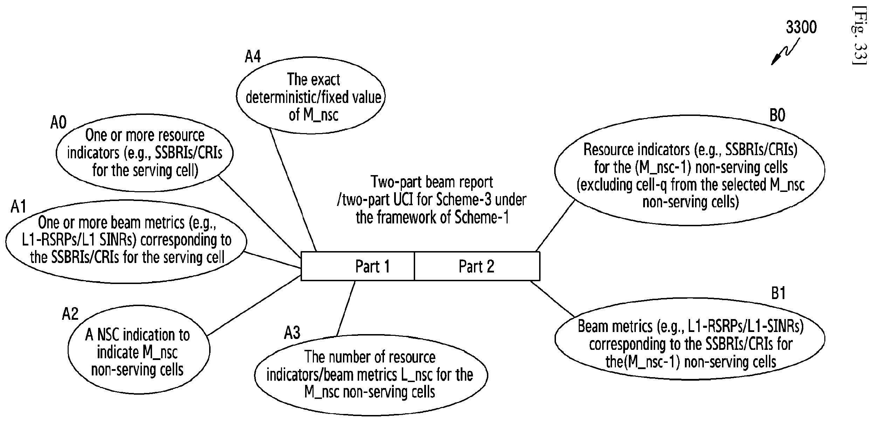

FIGURE 33 illustrates an example of two-part beam report/two-part UCI format for the inter-cell operation 3300 according to embodiments of the present disclosure. An embodiment of the two-part beam report/two-part UCI format for the inter-cell operation 3300 shown in FIGURE 33 is for illustration only.

As illustrated in FIGURE 33, one design example of the two-part beam report/two-part UCI for Scheme-3 is presented under the framework of Scheme-1. Similar diagrams could be derived for Scheme-3 under the frameworks of Scheme-2a, Scheme-2b and Scheme-2c.

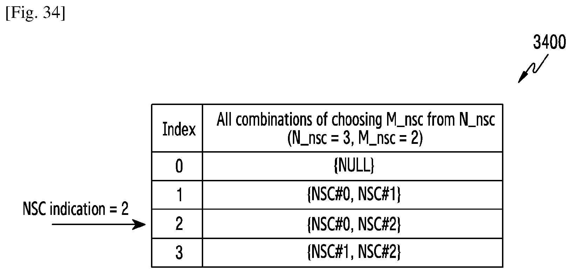

By incorporating the exact deterministic/fixed value of M_nsc into Part 1 of the beam report/UCI, the signaling overhead of the (first) NSC indication could be reduced. For instance, if N_nsc = 3 and M_nsc = 2, a 2-bit NSC indicator could be used to identify the selected non-serving cells (see FIGURE 34), while for the example shown in FIGURE 29, a 3-bit NSC indicator is needed.

FIGURE 34 illustrates an example of non-serving cell (NSC) information indication 3400 according to embodiments of the present disclosure. An embodiment of the NSC information indication 3400 shown in FIGURE 34 is for illustration only.

In one example of Scheme-4, for Scheme-1, Scheme-2a, Scheme-2b, Scheme-2c and Scheme-3, the resource indicators (such as SSBRIs/CRIs) for the M_nsc or (M_nsc - 1) non-serving cells could be removed/absent from Part 2 of the beam report/UCI. That is, Part 2 of the beam report/UCI only contains the beam metrics (such as L1-RSRPs/L1-SINRs) for the selected non-serving cells.

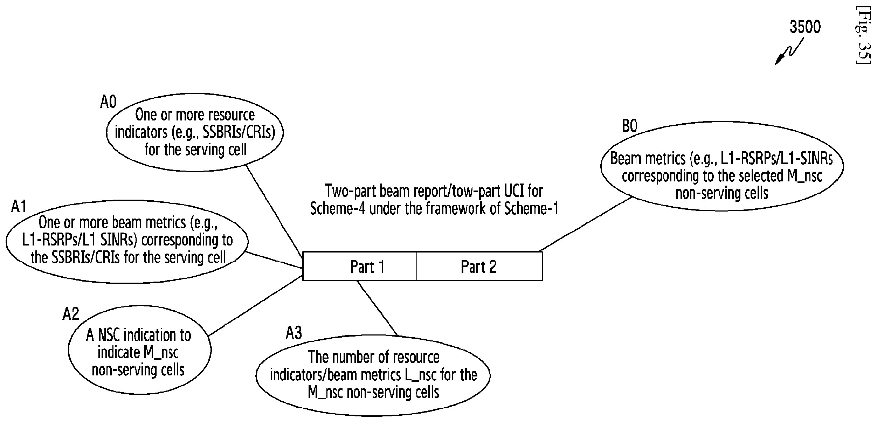

FIGURE 35 illustrates an example of two-part beam report/two-part UCI format for the inter-cell operation 3500 according to embodiments of the present disclosure. An embodiment of the two-part beam report/two-part UCI format for the inter-cell operation 3500 shown in FIGURE 35 is for illustration only.

As illustrated in FIGURE 35, one design example of the two-part beam report/two-part UCI for Scheme-4 is presented under the framework of Scheme-1. Similar diagrams could be derived for Scheme-4 under the frameworks of Scheme-2a, Scheme-2b, Scheme-2c and Scheme-3.

By not indicating the resource indicators such as SSBRIs/CRIs for the selected non-serving cells in Part 2 of the beam report/UCI, the payload size of Part 2 could be reduced. The network could only use the beam metrics such as L1-RSRPs/L1-SINRs from the serving cell and the non-serving cells to decide whether to switch/handover the UE from the current serving cell to a non-serving cell. The UE could be indicated/configured by the network in a later phase to report one or more SSBRIs/CRIs for one or more non-serving cells if the network has decided to execute the handover for the UE.

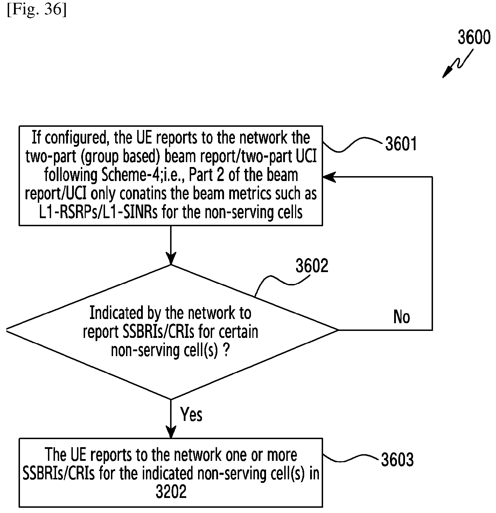

FIGURE 36 illustrates a flowchart of a method 3600 for UE reporting two-part beam report/two-part UCI for the inter-cell operation according to embodiments of the present disclosure. For example, the method 3600 as may be performed by a UE (e.g., 111-116 as illustrated in FIGURE 1). An embodiment of the method 1100 shown in FIGURE 36 is for illustration only. One or more of the components illustrated in FIGURE 36 can be implemented in specialized circuitry configured to perform the noted functions or one or more of the components can be implemented by one or more processors executing instructions to perform the noted functions.

An algorithm flow describing the above process is depicted in FIGURE 36. As can be seen from FIGURE 36, the UE may not report to the network any resource indicators such as SSBRIs/CRIs for the non-serving cells if, e.g., the current serving cell would continue to serve the UE.

As illustrated in FIGURE 36, in step 3601, the UE, if configured, reports to the network the two-part (group based) beam report/two-part UCI following Scheme-4; i.e., Part 2 of the beam report/UCI only contains the beam metrics such as L1-RSRPs/L1-SINRs for the non-serving cells.

In step 3602, the UE determines whether the network indicates to report SSBRIs/CRIs for certain non-serving cell(s). In step 3603, the UE reports to the network one or more SSBRIs/CRIs for the indicated non-serving cell(s) in step 3602.

For all of the above described schemes/design examples, the non-serving cell indices such as NSC#0, NSC#1 and NSC#2 are used for illustrative purpose. They could correspond to different non-serving cells' PCIs, e.g., in/from a non-serving cell PCIs list higher layer configured/indicated to the UE by the network, or any other valid identifiers/higher layer signaling index values for the non-serving cells. The NSC indications/indicators in all of the above described schemes/design examples could also explicitly indicate the exact PCI values, non-serving cell indices, any other valid identifiers/higher layer signaling index values for the selected non-serving cells and/or indices of the entries in the higher layer configured/indicated list of PCI values/other valid identifiers/higher layer signaling index values corresponding to the selected non-serving cells.

The beam metrics considered in all of the above described schemes/design examples in this disclosure could correspond to L1 based beam metrics such as L1-RSRP/L1-SINR or L3 based beam metrics such as L3-RSRP/L3-SINR or a hybrid of L1 based beam metrics and L3 based beam metrics, though the L1 based beam metrics such as L1-RSRP/L1-SINR are used in the above described schemes/design examples for the illustrative purpose.

Furthermore, the UE could be indicated/configured by the network to report in a single CSI reporting instance the BM-RI pairs/beam qualities including the resource indicators and their corresponding/associated beam metrics for both the serving cell and the non-serving cell(s) (e.g., following those discussed in Scheme-1 or/and Scheme-2 or/and Scheme-3 or/and Scheme-4); this indication could be via higher layer RRC (e.g., via the higher layer parameter CSI-ReportConfig) or/and MAC CE or/and DCI based signaling; this indication could be via a separate (dedicated) parameter or joint with another parameter.

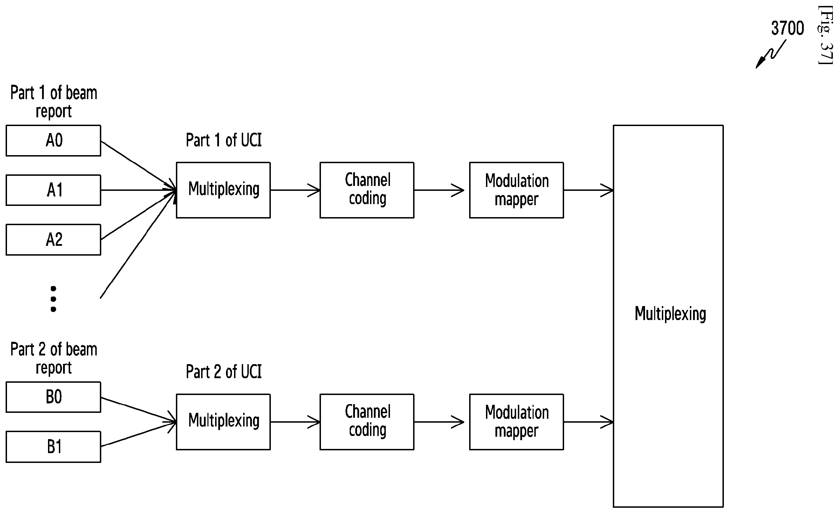

FIGURE 37 illustrates an example of two-part UCI format 3700 according to embodiments of the present disclosure. An embodiment of the two-part UCI format 3700 shown in FIGURE 37 is for illustration only.

In all of the above schemes, Part 1 and Part 2 of the beam report/UCI are separately encoded (see FIGURE 37) and reported in a single reporting instance. Detailed correspondences between A0, A1, A2, ..., B0, B1 and the contents in the beam report are presented in FIGURES 28, 32A, 32B, 32E, 33, and 35 for Scheme-1, Scheme-2a, Scheme-2b, Scheme-2c, Scheme-3, and Scheme-4. Furthermore, for any given two-part beam reporting/two-part UCI scheme presented above, the payload size of Part 1 of the beam report/UCI is fixed for a given RRC configuration. The payload size of Part 2 of the beam report/UCI, however, could vary because the UE could (dynamically) determine a different M_nsc and/or L_nsc and/or L_q for each CSI resource/reporting setting/configuration. As which non-serving cells are selected, and therefore, the exact value of M_nsc, and/or the number of resource indicators/beam metrics for the non-serving cells L_nsc/L_q, is indicated in Part 1 of the beam report/UCI, the contents in Part 1 of the beam report/UCI could be used to indicate/identify the number of information bits in Part 2 of the beam report/UCI.

In a first variation of Scheme 1 through Scheme 4, the group based beam reporting is via one-part UCI or a two-part UCI depending on a condition. In one example, the condition is based on the value of N_nsc. For example, when N_nsc <= x (where x is threshold, fixed or configured), the one-part UCI is used for the reporting, and when N_nsc > x, the two-part UCI is used for the reporting.

In a second variation of Scheme 1 through Scheme 4, the group based beam reporting is via one-part UCI or a two-part UCI depending on a signaling from the NW. This signaling could be semi-static via higher layer RRC signaling (using a dedicated parameter or with a joint configuration parameter) or more dynamic via MAC CE or DCI based signaling (using a dedicated indication or with a joint indication).

In one example, the group based beam reporting could be multiplexed with other types of CSI or beam reports, wherein whether one-part or two-part UCI is used for beam reporting could depend on the other CSI or beam reports. For example, the two-part UCI is used only when at least one of the other CSI or beam reports is configured with a two-part UCI.

In one example, the UL channel for group based beam reporting (via two-part UCI) can be fixed, e.g., to PUSCH. In one example, the UL channel for group based beam reporting (via two-part UCI) can be fixed, e.g., to PUCCH. In one example, the UL channel for group based beam reporting (via two-part UCI) can be configured from PUCCH and PUSCH.

In one example, the group based beam reporting (via two-part UCI) can be configured via higher layer RRC signaling. In one example, the group based beam reporting (via two-part UCI) can only be triggered via a code point in DCI (UL-related or DL-related DCI).

The provided two-part (group based) beam reporting schemes can be applied to multi-TRP operation. For instance, for the inter-cell multi-TRP wherein different coordinating TRPs would have different PCIs, the serving cell (with the serving cell ID (SCI) and/or the serving cell PCI) illustrated in Scheme-1, Scheme-2a, Scheme-2b, Scheme-2c, Scheme-3 and Scheme-4 could correspond to the serving cell TRP, while the non-serving cell(s) depicted in Scheme-1, Scheme-2a, Scheme-2b, Scheme-2c, Scheme-3 and Scheme-4 could correspond to the non-serving cell TRP(s).

For the intra-cell multi-TRP wherein different coordinating TRPs could share the same PCI, the serving cell (with the serving cell ID (SCI) and/or the serving cell PCI) illustrated in Scheme-1, Scheme-2a, Scheme-2b, Scheme-2c, Scheme-3 and Scheme-4 could correspond to a primary TRP, with which the UE would perform the initial access, common search space monitoring, and etc., while the non-serving cell(s) depicted in Scheme-1, Scheme-2a, Scheme-2b, Scheme-2c, Scheme-3 and Scheme-4 could correspond to secondary TRP(s), with which the UE could perform low-priority operations such as reliability/throughput enhancement; the primary TRP and the secondary TRP(s) could be associated with different higher layer signaling index values such as CORESETPoolIndex values.

Furthermore, for the hybrid group based and non-group based beam reporting for the inter-TRP operation (as illustrated in FIGURE 25), an NSC indication/indicator could be incorporated in the stage-1 report to indicate which M_nsc≥1 non-serving cells out of the total N_nsc non-serving cells the beam reports in stage-2 may be associated with. Here, the NSC indicator/indicator design could follow those discussed in Scheme-1, Scheme-2a, Scheme-2b, Scheme-2c, Scheme-3 and Scheme-4. For instance, the NSC indication could indicate a specific state/entry from a list containing all possible combinations of M_nsc non-serving cells out of the total N_nsc non-serving cells (as illustrated in FIGURE 29), or a bitmap of length N_nsc (as illustrated in FIGURE 30).

In one embodiment, various two-part beam report/two-part UCI formats for only the non-serving cell(s) in an inter-cell/inter-TRP system are provided.

In the present disclosure, a reported resource indicator (RI) such as SSBRI/CRI and its corresponding/associated beam metric (BM) such as L1-RSRP/L1-SINR form a BM-RI pair {beam metric, resource indicator}. Or a reported resource indicator such as SSBRI/CRI and its corresponding/associated beam metric such as L1-RSRP/L1-SINR form a beam quality.

In one example, the UE could report in a single reporting instance at least M_nsc (≥1), or L_nsc ( ≥ 1), BM-RI pairs/beam qualities containing the resource indicators and the corresponding/associated beam metrics only for M_nsc non-serving cells; the report could be in form of the two-part beam report/two-part UCI.

Here, 1 ≤M_nsc ≤ N_nsc, where the UE could be higher layer configured/indicated by the network the total/maximum number of non-serving cells N_nsc, and the UE could dynamically determine/select the M_nsc non-serving cells with 1 ≤ M_nsc ≤ N_nsc and send to the network the selection result(s) together with the CSI/beam report(s). Furthermore, 1 ≤L_nsc ≤ K_nsc, where the UE could be higher layer configured/indicated by the network the total/maximum number of the resource indicators/beam metrics allowed to be reported for the non-serving cell(s) K_nsc (for instance, the candidate values for K_nsc could be 4, 8 or 16), and the UE could dynamically determine/select the value of L_nsc with 1 ≤ L_nsc ≤ K_nsc and send to the network the selection result(s) together with the CSI/beam report(s).

In one example of Scheme-5a, Part 1 of the beam report/UCI could contain at least one of the following: one or more resource indicators such as SSBRIs/CRIs for a non-serving cell (denoted by cell-q), one or more beam metrics such as L1-RSRPs/L1-SINRs corresponding to/associated with the SSBRIs/CRIs for the non-serving cell cell-q (i.e., one or more BM-RI pairs/beam qualities containing the resource indicators and the corresponding/associated beam metrics for the non-serving cell cell-q), a first NSC indication to indicate which M_nsc non-serving cells out of the total N_nsc non-serving cells are selected (e.g., in form of their PCI values/indices of entries in a list of PCI values/other higher layer signaling index values), a second NSC indication (if reported) to indicate cell-q's index in the selected M_nsc non-serving cells (alternatively, the second NSC indication could correspond to the PCI value/other higher layer signaling index value of the non-serving cell cell-q), the number of the selected non-serving cells (i.e., M_nsc), the number of the selected non-serving cells for Part 2 of the beam report/UCI (i.e., M_nsc - 1), the number of BM-RI pairs/beam qualities (including both the resource indicators and their corresponding/associated beam metrics) for cell-q (denoted by L_q≥1), the number of BM-RI pairs/beam qualities (including both the resource indicators and their corresponding/associated beam metrics) for the selected M_nsc non-serving cells (denoted by L_nsc≥1), a set of size M_nsc with each entry in the set corresponding to the number of BM-RI pairs/beam qualities (including both the resource indicators and their corresponding/associated beam metrics) for a different non-serving cell from the selected M_nsc non-serving cells, and a set of size (M_nsc - 1) with each entry in the set corresponding to the number of BM-RI pairs/beam qualities (including both the resource indicators and their corresponding/associated beam metrics) for a different non-serving cell from the selected (M_nsc - 1) non-serving cells (i.e., excluding cell-q from the selected M_nsc non-serving cells).

The UE could be higher layer configured/indicated by the network the total/maximum number of non-serving cells N_nsc and/or the total/maximum number of L_nsc, denoted by K_nsc (e.g., via the higher layer parameter CSI-ReportConfig); for instance, the candidate values for K_nsc could be 4, 8 or 16; the UE could dynamically determine/select the M_nsc non-serving cells with 1 ≤ M_nsc ≤ N_nsc and/or L_nsc and/or L_q. Part 2 of the beam report/UCI could contain at least one of the following: at least (M_nsc - 1), or (L_nsc - L_q), resource indicators such as SSBRIs/CRIs for the (M_nsc - 1) non-serving cells indicated in Part 1 of the beam report/UCI (i.e., excluding cell-q from the selected M_nsc non-serving cells), and the corresponding/associated at least (M_nsc - 1), or (L_nsc - L_q), beam metrics such as L1-RSRPs/L1-SINRs (i.e., at least (M_nsc - 1), or (L_nsc - L_q), BM-RI pairs/beam qualities containing the resource indicators and the corresponding/associated beam metrics for the (M_nsc - 1) non-serving cells excluding the non-serving cell cell-q from the selected M_nsc non-serving cells).

The number of selected non-serving cells (M_nsc - 1) for Part 2 of the beam report/UCI, and therefore, which (M_nsc - 1) non-serving cells out of the total (N_nsc - 1) non-serving cells the resource indicators/beam metrics in Part 2 of the beam report/UCI are associated with, and/or L_nsc and/or L_q could be dynamically indicated/configured by the UE and/or the network because M_nsc could take all possible integer values in the range of 1 ≤ M_nsc ≤ N_nsc and L_nsc/L_q could take all possible integer values in the range of 1 ≤ L_nsc, L_q ≤ K_nsc.

Alternatively, M_nsc and/or L_nsc and/or L_q could be a fixed value (e.g., 2) and/or a deterministic value per RRC configuration, and is known to both the network and the UE sides.

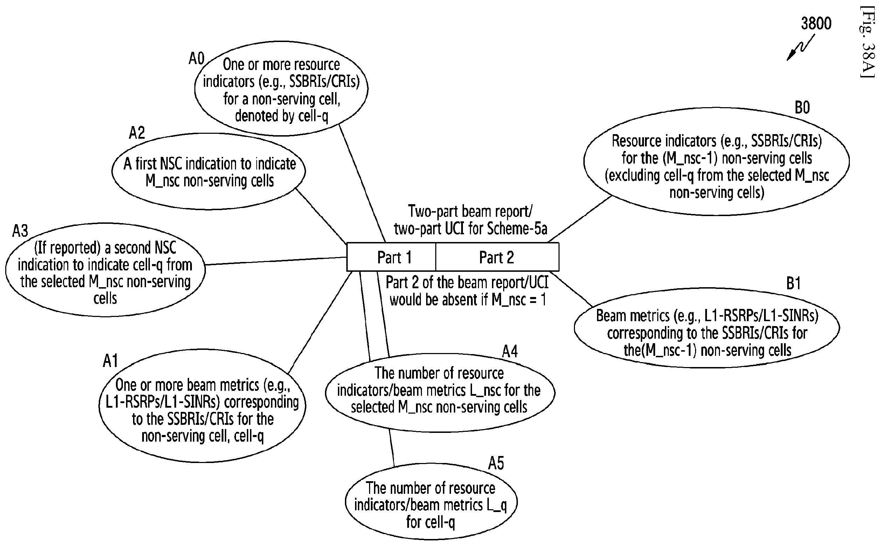

FIGURE 38A illustrates an example of two-part beam report/two-part UCI format for the inter-cell operation 3800 according to embodiments of the present disclosure. An embodiment of the two-part beam report/two-part UCI format for the inter-cell operation 3800 shown in FIGURE 38A is for illustration only.

As illustrated in FIGURE 38A, one design example of the two-part beam report/two-part UCI for Scheme-5a is presented.

Here, the first NSC indication in Scheme-5a is similar to the NSC indication in Scheme-1, i.e., it could be a combinatorial indication of choosing M_nsc non-serving cells from the total N_nsc non-serving cells, or a bitmap with length N_nsc, or comprise of the explicit PCI values/other higher layer signaling index values of the selected M_nsc NSCs, or comprise of the indices of the entries in the list of PCI values/other higher layer signaling index values corresponding to the selected M_nsc NSCs, or any combination of the above.

For example, assume that N_nsc = 3 and the non-serving cells are indexed as NSC#0, NSC#1 and NSC#2. Then, the non-serving cells list could include 7 states, which are {NSC#0}, {NSC#1}, {NSC#2}, {NSC#0, NSC#1}, {NSC#0, NSC#2}, {NSC#1, NSC#2} and {NSC#0, NSC#1, NSC#2}.

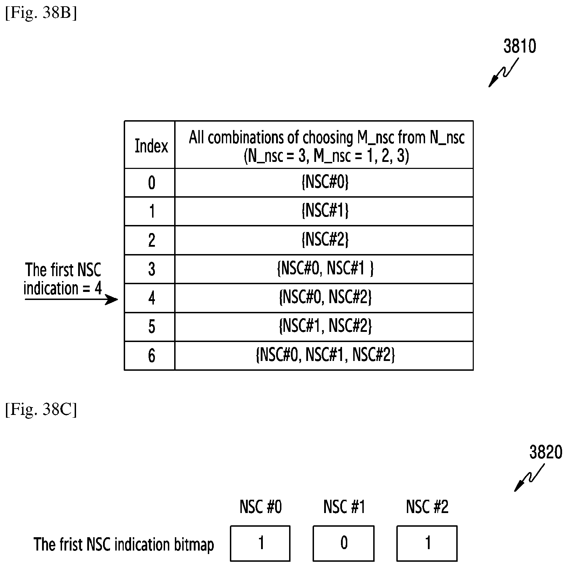

If the UE sets the first NSC indication as 4 (as shown in FIGURE 38B), the non-serving cells NSC#0 and NSC#2 are indicated in Part 1 of the beam report/UCI. If the UE sets the first NSC indication as 0, 1, or 2 (corresponding to M_nsc = 1), Part 2 of the beam report/UCI would be absent. In this case, the second NSC indicator is absent as well because the non-serving cell cell-q could correspond to NSC#0, NSC#1 or NSC#2 according to the first NSC indication. For M_nsc > 1, the second NSC indication is present/reported in Part 1 of the beam report/UCI, which could explicitly indicate cell-q's PCI value/other higher layer signaling index values.

FIGURE 38B illustrates an example of non-serving cell (NSC) information indication 3810 according to embodiments of the present disclosure. An embodiment of the NSC information indication 3810 shown in FIGURE 38B is for illustration only.

Alternatively, the second NSC indication could indicate the index of cell-q in the list of selected M_nsc non-serving cells. For the example shown in FIGURE 38B, {NSC#0, NSC#2} are indicated as the selected non-serving cells because the first NSC indication is 4. If cell-q corresponds to NSC#0, e.g., the beam metric of NSC#0 is higher than that of NSC#2, the second NSC indicator would be configured as 1. The resource indicator(s) and the corresponding/associated beam metric(s) (i.e., the corresponding at least (M_nsc - 1), or (L_nsc - L_q), BM-RI pairs/beam qualities) of the remaining (M_nsc - 1) non-serving cell(s) (NSC#2 in this example) are reported in Part 2 of the beam report/UCI. If, e.g., cell-q would always correspond to the first PCI/cell in the list of the selected M_nsc non-serving cells or the lowest/highest PCI among all the selected M_nsc non-serving cells PCIs, the second NSC indication may no longer be needed/reported.

FIGURE 38C illustrates an example of non-serving cell (NSC) information indication via a bitmap 3820 according to embodiments of the present disclosure. An embodiment of the NSC information indication via the bitmap 3820 shown in FIGURE 38C is for illustration only.

The first NSC indication could be a bitmap with length N_nsc. Each entry in the bitmap corresponds to a different non-serving cell. For example, for N_nsc = 3, the first, second and third entries in the first NSC indication bitmap correspond to NSC#0, NSC#1 and NSC#2. Hence, if the UE configures the first NSC indication bitmap as [1 0 1] (as shown in FIGURE 38C), the non-serving cells NSC#0 and NSC#2 are indicated in Part 1 of the beam report/UCI.

If the UE configures the NSC indication bitmap as [100], [0 1 0], or [0 0 1] (corresponding to M_nsc = 1), it indicates that Part 2 of the beam report/UCI is absent. In this case, the second NSC indication is absent as well because the non-serving cell cell-q could correspond to NSC#0, NSC#1 or NSC#2 according to the first NSC indication bitmap. For M_nsc > 1, the second NSC indication is present/reported in Part 1 of the beam report/UCI, which could explicitly indicate cell-q's PCI value/other higher layer signaling index values.

Alternatively, the second NSC indication could indicate the index of cell-q in the list of selected M_nsc non-serving cells. For the example shown in FIGURE 38C, {NSC#0, NSC#2} are indicated as the selected non-serving cells because the first NSC indication bitmap is [1 0 1]. If cell-q corresponds to NSC#0, e.g., the beam metric of NSC#0 is higher than that of NSC#2, the second NSC indicator would be configured as 1. The resource indicator(s) and the corresponding/associated beam metric(s) (i.e., the corresponding at least (M_nsc - 1), or (L_nsc - L_q), BM-RI pairs/beam qualities) of the remaining (M_nsc - 1) non-serving cell(s) (NSC#2 in this example) are reported in Part 2 of the beam report/UCI. If, e.g., cell-q would always correspond to the first PCI/cell in the list of the selected M_nsc non-serving cells or the lowest/highest PCI among all the selected M_nsc non-serving cells PCIs, the second NSC indication may no longer be needed/reported.

Furthermore, if M_nsc = 1, the first NSC indication could be absent/not reported in Part 1 of the beam report/UCI. In this case, the second NSC indication could still be reported in Part 1 of the beam report/UCI, which could explicitly indicate the non-serving cell-q's PCI and/or its other valid identifiers/higher layer signaling index. Part 2 of the beam report/UCI would be absent under this setting.

In one example of Scheme-5b, Part 1 of the beam report/UCI could contain at least one of the following: one or more resource indicators such as SSBRIs/CRIs for a non-serving cell (denoted by cell-q), one or more beam metrics such as L1-RSRPs/L1-SINRs corresponding to the SSBRIs/CRIs for the non-serving cell cell-q (i.e., one or more BM-RI pairs/beam qualities containing the resource indicators and the corresponding/associated beam metrics for the non-serving cell cell-q), a NSC indication to jointly indicate which M_nsc non-serving cells out of the total N_nsc non-serving cells are selected (e.g., in form of their PCI values/indices of entries in a list of PCI values/other higher layer signaling index values) and cell-q's index in the selected M_nsc non-serving cells, the number of the selected non-serving cells (i.e., M_nsc), the number of the selected non-serving cells for Part 2 of the beam report/UCI (i.e., M_nsc - 1), the number of BM-RI pairs/beam qualities (including both the resource indicators and their corresponding/associated beam metrics) for cell-q (denoted by L_q≥1), the number of BM-RI pairs/beam qualities (including both the resource indicators and their corresponding/associated beam metrics) for the selected M_nsc non-serving cells (denoted by L_nsc≥1), a set of size M_nsc with each entry in the set corresponding to the number of BM-RI pairs/beam qualities (including both the resource indicators and their corresponding/associated beam metrics) for a different non-serving cell from the selected M_nsc non-serving cells, and a set of size (M_nsc - 1) with each entry in the set corresponding to the number of BM-RI pairs/beam qualities (including both the resource indicators and their corresponding/associated beam metrics) for a different non-serving cell from the selected (M_nsc - 1) non-serving cells (i.e., excluding cell-q from the selected M_nsc non-serving cells).

The UE could be higher layer configured/indicated by the network the total/maximum number of non-serving cells N_nsc and/or the total/maximum number of L_nsc, denoted by K_nsc (e.g., via the higher layer parameter CSI-ReportConfig); for instance, the candidate values for K_nsc could be 4, 8 or 16; the UE could dynamically determine/select the M_nsc non-serving cells with 1 ≤ M_nsc ≤ N_nsc and/or L_nsc and/or L_q. Part 2 of the beam report/UCI could contain at least one of the following: at least (M_nsc - 1), or (L_nsc - L_q), resource indicators such as SSBRIs/CRIs for the (M_nsc - 1) non-serving cells indicated in Part 1 of the beam report/UCI (i.e., excluding cell-q from the selected M_nsc non-serving cells), and the corresponding/associated at least (M_nsc - 1), or (L_nsc - L_q), beam metrics such as L1-RSRPs/L1-SINRs (i.e., at least (K - 1), or (L_nsc - L_q), BM-RI pairs/beam qualities containing the resource indicators and the corresponding/associated beam metrics for the (M_nsc - 1) non-serving cells excluding the non-serving cell-q from the selected M_nsc non-serving cells). The number of selected non-serving cells (M_nsc - 1) for Part 2 of the beam report/UCI, and therefore, which (M_nsc - 1) non-serving cells out of the total (N_nsc - 1) non-serving cells the resource indicators/beam metrics in Part 2 of the beam report/UCI are associated with, and/or L_nsc and/or L_q could be dynamically indicated/configured by the UE and/or the network because M_nsc could take all possible integer values in the range of 1 ≤ M_nsc ≤ N_nsc and L_nsc/L_q could take all possible integer values in the range of 1 ≤ L_nsc, L_q ≤ K_nsc.

Alternatively, M_nsc and/or L_nsc and/or L_q could be a fixed value (e.g., 2) and/or a deterministic value per RRC configuration, and known to both the network and the UE sides.

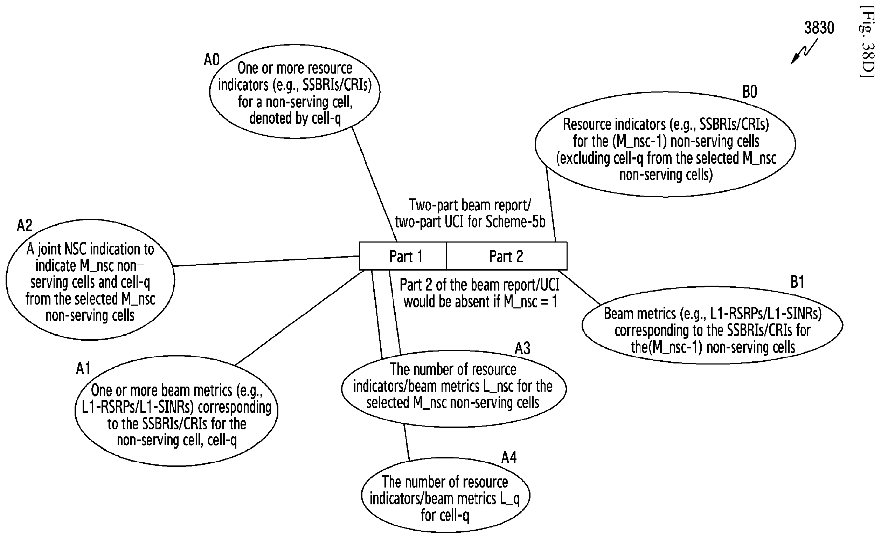

FIGURE 38D illustrates an example of two-part beam report/two-part UCI format for the inter-cell operation 3830 according to embodiments of the present disclosure. An embodiment of the two-part beam report/two-part UCI format for the inter-cell operation 3830 shown in FIGURE 38D is for illustration only.

As illustrated in FIGURE 38D, one design example of the two-part beam report/two-part UCI for Scheme-5b is presented. As can be seen from FIGURE 38A and FIGURE 38D, most of the key components in Scheme-5a and Scheme-5b are the same, except that a joint NSC indication (A2 in FIGURE 38D) is used in Scheme-5b while separate first and second NSC indications (A2 and A3 in FIGURE 38A) are used in Scheme-5a.

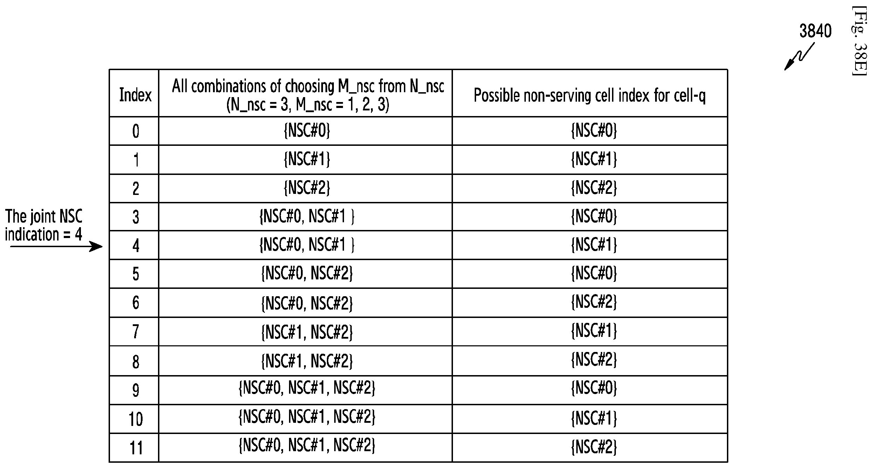

FIGURE 38E illustrates an example of non-serving cell (NSC) information indication 3840 according to embodiments of the present disclosure. An embodiment of the NSC information indication 3840 shown in FIGURE 38E is for illustration only.

In one example-3.1, a design example of the joint NSC indication in A2 in FIGURE 38D (jointly indicate the M_nsc non-serving cells and cell-q from the M_nsc non-serving cells) is presented in FIGURE 38E. If the UE sets the joint NSC indication as 0, 1, or 2 (corresponding to M_nsc = 1), Part 2 of the beam report/UCI would be absent. In this case, the non-serving cell cell-q could correspond to NSC#0, NSC#1 or NSC#2 (see FIGURE 38E) depending on the exact value of the joint NSC indication. Furthermore, the table in FIGURE 38E also provides all possible indices for the non-serving cell cell-q for any combination of M_nsc ≥ 1 selected non-serving cells.

For instance, if the UE sets the joint NSC indication as 4, {NSC#0, NSC#1} are indicated as the selected non-serving cells, and cell-q is indicated as NSC#1, in Part 1 of the beam report/UCI. The resource indicator(s) and the corresponding/associated beam metric(s) (i.e., the corresponding at least (M_nsc - 1), or (L_nsc - L_q), BM-RI pairs/beam qualities) of the remaining (M_nsc - 1) non-serving cell(s) (NSC#1 in this example) are reported in Part 2 of the beam report/UCI.

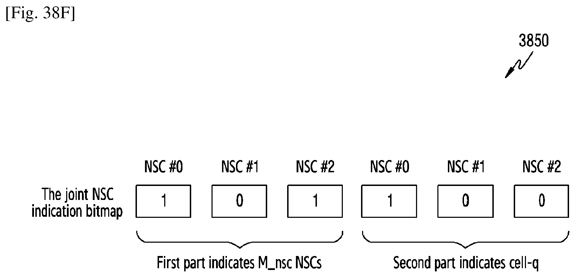

FIGURE 38F illustrates an example of non-serving cell (NSC) information indication via a bitmap 3850 according to embodiments of the present disclosure. An embodiment of the NSC information indication via the bitmap 3850 shown in FIGURE 38F is for illustration only.

In one example-3.2, the joint NSC indication in A2 in FIGURE 38D could also be constructed as a bitmap with length 2*N_nsc. As indicated in FIGURE 38F, the joint NSC indication bitmap contains two parts. The first part has N_nsc entries and is used to indicate the selected M_nsc non-serving cells. The second part has N_nsc entries to indicate cell-q. In this example, the NSC indication bitmap is configured as [1 0 1 1 0 0], implying that {NSC#0, NSC#2} are indicated as the selected non-serving cells (with M_nsc = 2), and NSC#0 is indicated as cell-q. If the first part of the joint NSC indication bitmap is [1 0 0], [0 1 0], or [0 0 1] (implying that M_nsc = 1, and the second part of the joint NSC indication bitmap is [1 0 0], [0 1 0], or [0 0 1]), Part 2 of the beam report/UCI would be absent and cell-q could correspond to NSC#0, NSC#1, or NSC#2 depending on the exact values of the joint NSC indication bitmap.

In one example-3.3, alternatively, the NSC indication in A2 in FIGURE 38D could comprise of the explicit PCI values/other higher layer signaling index values of the selected M_nsc NSCs and cell-q, or comprise of the indices of the entries in the list of PCI values/other higher layer signaling index values corresponding to the selected M_nsc NSCs and cell-q.

In one example-3.4, the NSC indication could be any combination of the NSC indications in example-3.1, example-3.2 and/or example-3.3.

Furthermore, for M_nsc = 1, and joint NSC indication could explicitly indicate only the non-serving cell cell-q's PCI value and/or its other valid identifiers/higher layer signaling index value. In this case, Part 2 of the beam report/UCI would be absent.

In one example of Scheme-5c, Part 1 of the beam report/UCI could contain at least one of the following: one or more resource indicators such as SSBRIs/CRIs for a non-serving cell (denoted by cell-q), one or more beam metrics such as L1-RSRPs/L1-SINRs corresponding to the SSBRIs/CRIs for the non-serving cell cell-q (i.e., one or more BM-RI pairs containing the resource indicators and the corresponding beam metrics for the non-serving cell cell-q), the PCI value or any valid identifier/higher layer signaling index value for cell-q, a NSC indication to indicate which (M_nsc - 1) non-serving cells out of the total (N_nsc - 1) non-serving cells are selected (not including the non-serving cell cell-q), e.g., in form of their PCI values/indices of entries in a list of PCI values/other higher layer signaling index values, the number of the selected non-serving cells (i.e., M_nsc), the number of the selected non-serving cells for Part 2 of the beam report/UCI (i.e., M_nsc - 1), the number of BM-RI pairs/beam qualities (including both the resource indicators and their corresponding/associated beam metrics) for cell-q (denoted by L_q≥1), the number of BM-RI pairs/beam qualities (including both the resource indicators and their corresponding/associated beam metrics) for the selected M_nsc non-serving cells (denoted by L_nsc≥1), a set of size M_nsc with each entry in the set corresponding to the number of BM-RI pairs/beam qualities (including both the resource indicators and their corresponding/associated beam metrics) for a different non-serving cell from the selected M_nsc non-serving cells, and a set of size (M_nsc - 1) with each entry in the set corresponding to the number of BM-RI pairs/beam qualities (including both the resource indicators and their corresponding/associated beam metrics) for a different non-serving cell from the selected (M_nsc - 1) non-serving cells (i.e., excluding cell-q from the selected M_nsc non-serving cells).

The UE could be higher layer configured/indicated by the network the total/maximum number of non-serving cells N_nsc and/or the total/maximum number of L_nsc, denoted by K_nsc (e.g., via the higher layer parameter CSI-ReportConfig); for instance, the candidate values for K_nsc could be 4, 8 or 16; the UE could dynamically determine/select the (M_nsc - 1) non-serving cells with 1 ≤ M_nsc ≤ N_nsc and/or L_nsc and/or L_q. Part 2 of the beam report/UCI could contain at least one of the following: at least (M_nsc - 1), or (L_nsc - L_q), resource indicators such as SSBRIs/CRIs for the (M_nsc - 1) non-serving cells indicated in Part 1 of the beam report/UCI, and the corresponding/associated at least (M_nsc - 1), or (L_nsc - L_q), beam metrics such as L1-RSRPs/L1-SINRs (i.e., at least (M_nsc - 1), or (L_nsc - L_q), BM-RI pairs/beam qualities containing the resource indicators and the corresponding/associated beam metrics for the (M_nsc - 1) non-serving cells indicated by the NSC indication in Part 1 of the beam report/UCI).

The number of selected non-serving cells (M_nsc - 1) for Part 2 of the beam report/UCI, and therefore, which (M_nsc - 1) non-serving cells out of the total (N_nsc - 1) non-serving cells the resource indicators/beam metrics in Part 2 of the beam report/UCI are associated with, and/or L_nsc and/or L_q could be dynamically indicated/configured by the UE and/or the network because M_nsc could take all possible integer values in the range of 1 ≤ M_nsc ≤ N_nsc and L_nsc/L_q could take all possible integer values in the range of 1 ≤ L_nsc, L_q ≤ K_nsc.

Alternatively, M_nsc and/or L_nsc and/or L_q could be a fixed value (e.g., 2) and/or a deterministic value per RRC configuration, and known to both the network and the UE sides.

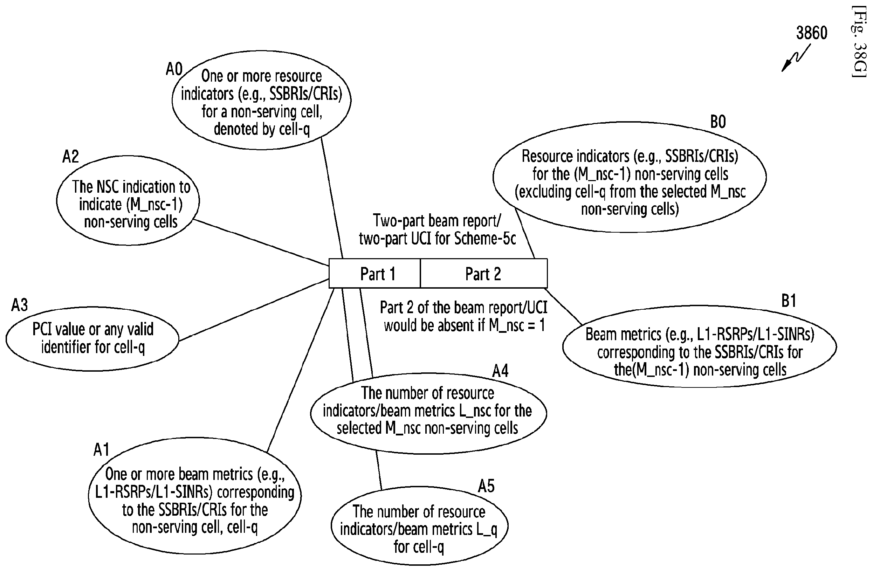

FIGURE 38G illustrates an example of two-part beam report/two-part UCI format for the inter-cell operation 3860 according to embodiments of the present disclosure. An embodiment of the two-part beam report/two-part UCI format for the inter-cell operation 3860 shown in FIGURE 38G is for illustration only.

In FIGURE 38G, one design example of the two-part beam report/two-part UCI for Scheme-5c is presented. Different from Scheme-5a in FIGURE 38A, A2 in Part 1 of the beam report/UCI in Scheme-5c indicates the selected (M_nsc - 1) non-serving cells (not including the non-serving cell cell-q) while A2 in Part 1 of the beam report/UCI in Scheme-5a indicates the selected M_nsc non-serving cells (including the non-serving cell cell-q). Furthermore, in Scheme-5c, the PCI value or any valid identifier/higher layer signaling index value for cell-q is explicitly included in Part 1 of the beam report/UCI (see A3 in FIGURE 38G).

Here, the NSC indication in Scheme-5c is similar to the first NSC indication in Scheme-5a, i.e., it could be a combinatorial indication of choosing (M_nsc - 1) non-serving cells from the total (N_nsc - 1) non-serving cells (not including cell-q, M_nsc = 1, 2, ..., N_nsc), or a bitmap with length N_nsc - 1, or comprise of the explicit PCI values/other higher layer signaling index values of the selected (M_nsc - 1) NSCs, or comprise of the indices of the entries in the list of PCI values/other higher layer signaling index values corresponding to the selected (M_nsc - 1) NSCs, or any combination of the above.

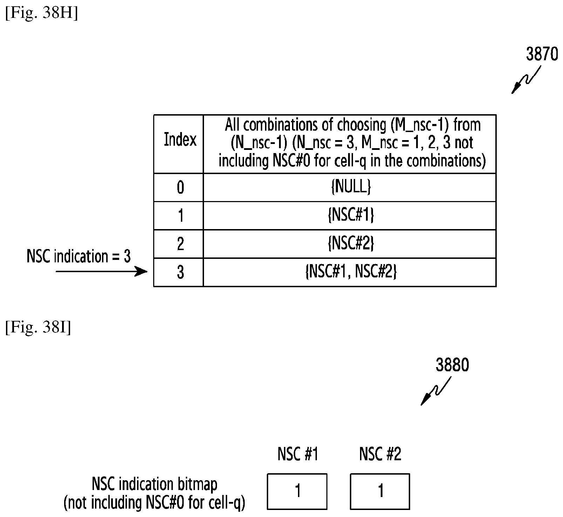

FIGURE 38H illustrates an example of non-serving cell (NSC) information indication 3870 according to embodiments of the present disclosure. An embodiment of the NSC information indication 3870 shown in FIGURE 38H is for illustration only.

For example, assume that N_nsc = 3 and the non-serving cells are indexed as NSC#0, NSC#1 and NSC#2. Furthermore, if cell-q corresponds to NSC#0 (its PCI value or any valid identifier has been reported/included in Part 1 of the beam report/UCI), the non-serving cells list for Part 2 of the beam report/UCI could include 4 states, which are {NULL}, {NSC#1}, {NSC#2}, and {NSC#1, NSC#2}. If the UE sets the NSC indication as 3 (as shown in FIGURE 38H), the non-serving cells NSC#1 and NSC#2 are indicated in Part 1 of the beam report/UCI. If the UE sets the NSC indication as 0 (corresponding to M_nsc = 1), Part 2 of the beam report/UCI would be absent. The resource indicator(s) and the corresponding/associated beam metric(s) (i.e., the corresponding at least (M_nsc - 1), or (L_nsc - L_q), BM-RI pairs/beam qualities) for the (M_nsc - 1) non-serving cell(s) indicated in Part 1 of the beam report/UCI (NSC#1 and NSC#2 in this example) are reported in Part 2 of the beam report/UCI.

FIGURE 38I illustrates an example of non-serving cell (NSC) information indication via a bitmap 3880 according to embodiments of the present disclosure. An embodiment of the NSC information indication via the bitmap 3880 shown in FIGURE 38I is for illustration only.

The NSC indication could be a bitmap with length N_nsc - 1 (not including cell-q). Each entry in the bitmap corresponds to a different non-serving cell. For example, assume that N_nsc = 3 and cell-q corresponds to NSC#0, the first and second entries in the NSC indication bitmap correspond to NSC#1 and NSC#2. Hence, if the UE configures the NSC indication bitmap as [1 1] (as shown in FIGURE 38I), the non-serving cells NSC#1 and NSC#2 are indicated in Part 1 of the beam report/UCI. If the UE configures the NSC indication bitmap as [0 0] (corresponding to M_nsc = 1), it indicates that Part 2 of the beam report/UCI is absent. The resource indicator(s) and the corresponding/associated beam metric(s) (i.e., the corresponding at least (M_nsc - 1), or (L_nsc - L_q), BM-RI pairs/beam qualities) of the (M_nsc - 1) non-serving cell(s) indicated by the NSC indication in Part 1 of the beam report/UCI (NSC#1 and NSC#2 in this example) are reported in Part 2 of the beam report/UCI.

Furthermore, for M_nsc = 1, the NSC indication in A2 in FIGURE 38G could be absent/not reported in Part 1 of the beam report/UCI. In this case, Part 2 of the beam report/UCI is absent.

For all of the above described schemes/design examples, the non-serving cell indices such as NSC#0, NSC#1 and NSC#2 are used for illustrative purpose. They could correspond to different non-serving cells' PCIs, e.g., in/from a non-serving cell PCIs list higher layer configured/indicated to the UE by the network, or any other valid identifiers/higher layer signaling index values for the non-serving cells.

The NSC indications/indicators in all of the above described schemes/design examples could also explicitly indicate the exact PCI values, non-serving cell indices, any other valid identifiers/higher layer signaling index values for the selected non-serving cells and/or indices of the entries in the higher layer configured/indicated list of PCI values/other valid identifiers/higher layer signaling index values corresponding to the selected non-serving cells.

For instance, in the example shown in FIGURE 38H for Scheme-5c, the NSC indication could be two non-serving cell indices, NSC#1 and NSC#2, rather than the index 3 pointing to the fourth row of the table in FIGURE 38H. Furthermore, Scheme-3 could be extended/applied to Scheme-5a, Scheme-5b and Scheme-5c by indicating a deterministic/fixed value of M_nsc (or M_nsc - 1) in Part 1 of the beam report/UCI. Scheme-4 could be extended/applied to Scheme-5a, Scheme-5b and Scheme-5c by indicating only the beam metrics for the selected non-serving cells in Part 2 of the beam report/UCI. The beam metrics considered in all of the above described schemes/design examples in this disclosure could correspond to L1 based beam metrics such as L1-RSRP/L1-SINR or L3 based beam metrics such as L3-RSRP/L3-SINR or a hybrid of L1 based beam metrics and L3 based beam metrics, though the L1 based beam metrics such as L1-RSRP/L1-SINR are used in the above described schemes/design examples for the illustrative purpose.

Furthermore, the UE could be indicated/configured by the network to report in a single CSI reporting instance the BM-RI pairs/beam qualities including the resource indicators and their corresponding/associated beam metrics for the non-serving cell(s) (e.g., following those discussed in Scheme-5a or/and Scheme-5b or/and Scheme-5c); this indication could be via higher layer RRC (e.g., via the higher layer parameter CSI-ReportConfig) or/and MAC CE or/and DCI based signaling; this indication could be via a separate (dedicated) parameter or joint with another parameter.

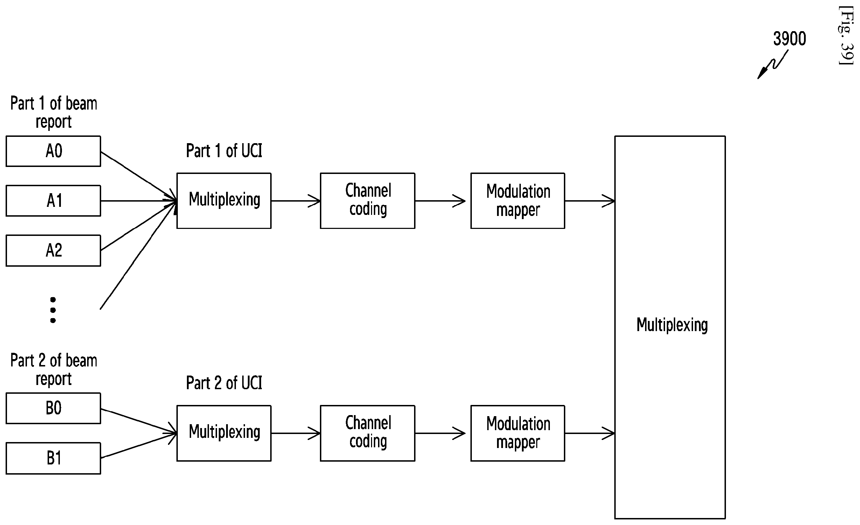

FIGURE 39 illustrates an example of two-part UCI format 3900 according to embodiments of the present disclosure. An embodiment of the two-part UCI format 3900 shown in FIGURE 39 is for illustration only.

In all of the above schemes, Part 1 and Part 2 of the beam report/UCI are separately encoded (as illustrated in FIGURE 39) and reported in a single reporting instance. Detailed correspondences between A0, A1, A2, ..., B0, B1 and the contents in the beam report are presented in FIGURES 38A, 38D, and 38G for Scheme-5a, Scheme-5b, and Scheme-5c.

Furthermore, for any given two-part beam reporting/two-part UCI scheme presented above, the payload size of Part 1 of the beam report/UCI is fixed for a given RRC configuration. The payload size of Part 2 of the beam report/UCI, however, could vary because the UE could (dynamically) determine a different M_nsc and/or L_nsc and/or L_q for each CSI resource/reporting setting/configuration. As which non-serving cells are selected, and therefore, the exact value of M_nsc, and/or the number of resource indicators/beam metrics for the non-serving cells L_nsc/L_q, is indicated in Part 1 of the beam report/UCI, the contents in Part 1 of the beam report/UCI could be used to indicate/identify the number of information bits in Part 2 of the beam report/UCI.

In a first variation of Scheme 5a through Scheme 5c, the group based beam reporting is via one-part UCI or a two-part UCI depending on a condition. In one example, the condition is based on the value of N_nsc. For example, when N_nsc <= x (where x is threshold, fixed or configured), the one-part UCI is used for the reporting, and when N_nsc > x, the two-part UCI is used for the reporting.

In a second variation of Scheme 5a through Scheme 5c, the group based beam reporting is via one-part UCI or a two-part UCI depending on a signaling from the NW. This signaling could be semi-static via higher layer RRC signaling (using a dedicated parameter or with a joint configuration parameter) or more dynamic via MAC CE or DCI based signaling (using a dedicated indication or with a joint indication).

In one example, the group based beam reporting could be multiplexed with other types of CSI or beam reports, wherein whether one-part or two-part UCI is used for beam reporting could depend on the other CSI or beam reports. For example, the two-part UCI is used only when at least one of the other CSI or beam reports is configured with a two-part UCI.

In one example, the UL channel for group based beam reporting (via two-part UCI) can be fixed, e.g., to PUSCH. In one example, the UL channel for group based beam reporting (via two-part UCI) can be fixed, e.g., to PUCCH. In one example, the UL channel for group based beam reporting (via two-part UCI) can be configured from PUCCH and PUSCH.

In one example, the group based beam reporting (via two-part UCI) can be configured via higher layer RRC signaling. In one example, the group based beam reporting (via two-part UCI) can only be triggered via a code point in DCI (UL-related or DL-related DCI).

The provided two-part (group based) beam reporting schemes can be applied to multi-TRP operation. For instance, for the inter-cell multi-TRP wherein different coordinating TRPs would have different PCIs, the serving cell (with the serving cell ID (SCI) and/or the serving cell PCI) illustrated in Scheme-1 through Scheme-4 could correspond to the serving cell TRP, while the non-serving cell(s) depicted in Scheme-5a, Scheme-5b and Scheme-5c could correspond to the non-serving cell TRP(s).

For the intra-cell multi-TRP wherein different coordinating TRPs could share the same PCI, the serving cell (with the serving cell ID (SCI) and/or the serving cell PCI) illustrated in Scheme-1 through Scheme-4 could correspond to a primary TRP, with which the UE would perform the initial access, common search space monitoring, and etc., while the non-serving cell(s) depicted in Scheme-5a, Scheme-5b and Scheme-5c could correspond to secondary TRP(s), with which the UE could perform low-priority operations such as reliability/throughput enhancement; the primary TRP and the secondary TRP(s) could be associated with different higher layer signaling index values such as CORESETPoolIndex values.

Furthermore, for the hybrid group based and non-group based beam reporting for the inter-TRP operation (as illustrated in FIGURE 25 in this disclosure), an NSC indication/indicator could be incorporated in the stage-1 report to indicate which M_nsc≥1 non-serving cells out of the total N_nsc non-serving cells the beam reports in stage-2 may be associated with. Here, the NSC indicator/indicator design could follow those discussed in Scheme-5a, Scheme-5b and Scheme-5c. For instance, the NSC indication could indicate a specific state/entry from a list containing all possible combinations of M_nsc non-serving cells out of the total N_nsc non-serving cells (see FIGURE 38B), or a bitmap of length N_nsc (see FIGURE 38C).

In one embodiment, various two-part beam report/two-part UCI formats for the serving cell or the non-serving cell(s) in an inter-cell/inter-TRP system with variable number of resource indicators/beam metrics reported per cell is provided.

The UE could report to the network, e.g., in a single CSI reporting instance, up to B_i (B_i ≥ 1) resource indicators, and therefore B_i beam metrics, for a given cell (either the serving cell or a non-serving cell) with PCI/another higher layer signaling index #i. The UE could be higher layer configured by the network (e.g., via the higher layer parameter CSI-ReportConfig) the exact number/value of B_i for a given cell with PCI/another higher layer signaling index #i. The UE could report to the network, e.g., in a single CSI reporting instance, b_i (1 ≤ b_i ≤ B_i) resource indicators, and therefore b_i beam metrics, for a given cell (either the serving cell or a non-serving cell) with PCI/another higher layer signaling index #i.

The UE could report to the network in Part 1 of the beam report/UCI the values of b_i's for all the selected non-serving cells, report to the network in Part 1/Part 2 of the beam report/UCI the resource indicators and their corresponding/associated beam metrics for the selected non-serving cells. In this part of the disclosure, a reported resource indicator (RI) such as SSBRI/CRI and its corresponding/associated beam metric (BM) such as L1-RSRP/L1-SINR form a BM-RI pair {beam metric, resource indicator}.

Or a reported resource indicator such as SSBRI/CRI and its corresponding/associated beam metric such as L1-RSRP/L1-SINR form a beam quality. In the following, examples of implementing the above described designs in Scheme-1, Scheme-2a, Scheme-2b, Scheme-2c, Scheme-3, Scheme-4, Scheme-5a, Scheme-5b and Scheme-5c are presented.

In one example of Scheme-1, Scheme-3, and Scheme-4, Part 1 of the beam report/UCI could contain the values of b_i's for all the selected M_nsc≥1 non-serving cells, whose beam qualities would be reported in Part 2 of the beam report/UCI. For instance, if M_nsc = 3, b_i's = {b_i0, b_i1, b_i2} = {2, 2, 3} would mean that two resource indicators and two beam metrics for the first selected non-serving cell in the selected M_nsc non-serving cells for Part 2 of the beam report/UCI and/or the selected non-serving cell with PCI/other higher layer signaling index #i0 (and therefore, two BM-RI pairs/beam qualities each containing a resource indicator and its corresponding/associated beam metric), two resource indicators and two beam metrics for the second selected non-serving cell in the selected M_nsc non-serving cells for Part 2 of the beam report/UCI and/or the selected non-serving cell with PCI/other higher layer signaling index #i1 (and therefore, two BM-RI pairs/beam qualities each containing a resource indicator and its corresponding beam metric), three resource indicators and three beam metrics for the third selected non-serving cell in the selected M_nsc non-serving cells for Part 2 of the beam report/UCI and/or the selected non-serving cell with PCI/other higher layer signaling index #i2 (and therefore, three BM-RI pairs/beam qualities each containing a resource indicator and its corresponding beam metric) would be reported in Part 2 of the beam report/UCI.

In one example of Scheme-2a, Scheme-2b, and Scheme-2c, Part 1 of the beam report/UCI could contain the values of b_i's for all the selected (M_nsc - 1) non-serving cells (excluding cell-q from the selected M_nsc non-serving cells), whose beam qualities would be reported in Part 2 of the beam report/UCI. For instance, for M_nsc = 3, if b_i's = {b_i0, b_i1} = {4, 2}, four resource indicators and four beam metrics (and therefore, four BM-RI pairs/beam qualities each containing a resource indicator and its corresponding/associated beam metric) for the first selected non-serving cell in the selected (M_nsc - 1) non-serving cells for Part 2 of the beam report/UCI and/or the selected non-serving cell with PCI/other higher layer signaling index #i0, and two resource indicators and two beam metrics (and therefore, two BM-RI pairs/beam qualities each containing a resource indicator and its corresponding/associated beam metric) for the second selected non-serving cell in the selected (M_nsc - 1) non-serving cells for Part 2 of the beam report/UCI and/or the selected non-serving cell with PCI/other higher layer signaling index #i1, would be reported in Part 2 of the beam report/UCI.

In one example of Scheme-2a, Scheme-2b, and Scheme-2c, alternatively, Part 1 of the beam report/UCI could contain the values of b_i's for all the selected M_nsc non-serving cells (including cell-q), whose beam qualities would be reported in Part 1/Part 2 of the beam report/UCI. For instance, for M_nsc = 3, if b_i's = {b_i0, b_i1, b_i2} = { 1, 4, 2}, one resource indicator and one beam metric (and therefore, one BM-RI pair/beam quality containing a resource indicator and its corresponding/associated beam metric) for the non-serving cell cell-q (with PCI/other higher layer signaling index #i0), four resource indicators and four beam metrics (and therefore, four BM-RI pairs/beam qualities each containing a resource indicator and its corresponding/associated beam metric) for the first selected non-serving cell in the selected (M_nsc - 1) non-serving cells for Part 2 of the beam report/UCI and/or the selected non-serving cell with PCI/other higher layer signaling index #i1, and two resource indicators and two beam metrics (and therefore, two BM-RI pairs/beam qualities each containing a resource indicator and its corresponding/associated beam metric) for the second selected non-serving cell in the selected (M_nsc - 1) non-serving cells for Part 2 of the beam report/UCI and/or the selected non-serving cell with PCI/other higher layer signaling index #i2, would be reported in Part 2 of the beam report/UCI.

In one example of Scheme-5a, Scheme-5b, and Scheme-5c, Part 1 of the beam report/UCI could contain the values of b_i's for all the selected (M_nsc - 1) non-serving cells (excluding cell-q from the selected M_nsc non-serving cells), whose beam qualities would be reported in Part 2 of the beam report/UCI.

For instance, for M_nsc = 3 (implying that the beam measurement results of two non-serving cells would be reported in Part 2 of the beam report/UCI), if b_i's = {b_i0, b_i1} = {4, 2}, four resource indicators and four beam metrics (and therefore, four BM-RI pairs/beam qualities each containing a resource indicator and its corresponding/associated beam metric) for the first selected non-serving cell in the selected (M_nsc - 1) non-serving cells for Part 2 of the beam report/UCI and/or the selected non-serving cell with PCI/other higher layer signaling index #i0, and two resource indicators and two beam metrics (and therefore, two BM-RI pairs/beam qualities each containing a resource indicator and its corresponding/associated beam metric) for the second selected non-serving cell in the selected (M_nsc - 1) non-serving cells for Part 2 of the beam report/UCI and/or the selected non-serving cell with PCI/other higher layer signaling index #i1, would be reported in Part 2 of the beam report/UCI.

If the values of b_i's are common among all the selected non-serving cells, whose beam qualities would be reported in Part1/Part 2 of the beam report/UCI, a single b_i value could be included in Part 1 of the beam report/UCI. The UE could be configured/indicated by the network the values of b_i's via higher layer RRC or/and MAC CE or/and DCI based signaling, and in this case, they may not need to be included in Part 1 of the beam report/UCI.

Furthermore, in the provided Scheme-1, Scheme-2a, Scheme-2b, Scheme-2c, Scheme-3, Scheme-4, Scheme-5a, Scheme-5b and Scheme-5c, the NSC indication could explicitly indicate the exact PCI values/other higher layer signaling index values of the selected non-serving cells.

For all of the above described schemes/design examples, the non-serving cell indices such as NSC#0, NSC#1 and NSC#2 are used for illustrative purpose. They could correspond to different non-serving cells' PCIs, e.g., in/from a non-serving cell PCIs list higher layer configured/indicated to the UE by the network, or any other valid identifiers/higher layer signaling index values for the non-serving cells.

The NSC indications/indicators in all of the above described schemes/design examples could also explicitly indicate the exact PCI values, non-serving cell indices, any other valid identifiers/higher layer signaling index values for the selected non-serving cells and/or indices of the entries in the higher layer configured/indicated list of PCI values/other valid identifiers/higher layer signaling index values corresponding to the selected non-serving cells.

The beam metrics considered in all of the above described schemes/design examples in this disclosure could correspond to L1 based beam metrics such as L1-RSRP/L1-SINR or L3 based beam metrics such as L3-RSRP/L3-SINR or a hybrid of L1 based beam metrics and L3 based beam metrics, though the L1 based beam metrics such as L1-RSRP/L1-SINR are used in the above described schemes/design examples for the illustrative purpose.

Furthermore, the UE could be indicated/configured by the network to report in a single CSI reporting instance the BM-RI pairs/beam qualities including the resource indicators and their corresponding/associated beam metrics for both the serving cell and the non-serving cell(s) (e.g., following those discussed in Scheme-1 or/and Scheme-2 or/and Scheme-3 or/and Scheme-4); this indication could be via higher layer RRC (e.g., via the higher layer parameter CSI-ReportConfig) or/and MAC CE or/and DCI based signaling; this indication could be via a separate (dedicated) parameter or joint with another parameter.

The UE could be indicated/configured by the network to report in a single CSI reporting instance the BM-RI pairs/beam qualities including the resource indicators and their corresponding/associated beam metrics for the non-serving cell(s) (e.g., following those discussed in Scheme-5a or/and Scheme-5b or/and Scheme-5c); this indication could be via higher layer RRC (e.g., via the higher layer parameter CSI-ReportConfig) or/and MAC CE or/and DCI based signaling; this indication could be via a separate (dedicated) parameter or joint with another parameter.

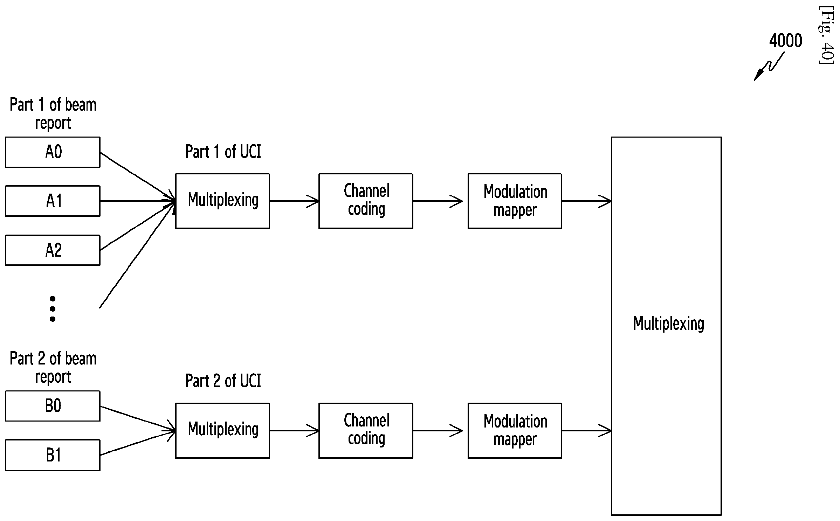

FIGURE 40 illustrates another example of two-part UCI format 4000 according to embodiments of the present disclosure. An embodiment of the two-part UCI format 4000 shown in FIGURE 40 is for illustration only.

In all of the above schemes, Part 1 and Part 2 of the beam report/UCI are separately encoded (as illustrated in FIGURE 40) and reported in a single reporting instance.

Detailed correspondences between A0, A1, A2, ..., B0, B1 and the contents in the beam report are presented in FIGURES 28, 32A, 32B, 32E, 33, 35, 38A, 38D, and 38G for Scheme-1, Scheme-2a, Scheme-2b, Scheme-2c, Scheme-3, Scheme-4, Scheme-5a, Scheme-5b, and Scheme-5c. Furthermore, for any given two-part beam reporting/two-part UCI scheme presented above, the payload size of Part 1 of the beam report/UCI is fixed for a given RRC configuration.

The payload size of Part 2 of the beam report/UCI, however, could vary because the UE could (dynamically) determine a different M_nsc and/or L_nsc and/or L_q for each CSI resource/reporting setting/configuration. As which non-serving cells are selected, and therefore, the exact value of M_nsc, and/or the number of resource indicators/beam metrics for the non-serving cells L_nsc/L_q is indicated in Part 1 of the beam report/UCI, the contents in Part 1 of the beam report/UCI could be used to indicate/identify the number of information bits in Part 2 of the beam report/UCI.

In a first variation of Scheme 1 through Scheme 5, the group based beam reporting is via one-part UCI or a two-part UCI depending on a condition. In one example, the condition is based on the value of N_nsc. For example, when N_nsc <= x (where x is threshold, fixed or configured), the one-part UCI is used for the reporting, and when N_nsc > x, the two-part UCI is used for the reporting.

In a second variation of Scheme 1 through Scheme 5, the group based beam reporting is via one-part UCI or a two-part UCI depending on a signaling from the NW. This signaling could be semi-static via higher layer RRC signaling (using a dedicated parameter or with a joint configuration parameter) or more dynamic via MAC CE or DCI based signaling (using a dedicated indication or with a joint indication).

In one example, the group based beam reporting could be multiplexed with other types of CSI or beam reports, wherein whether one-part or two-part UCI is used for beam reporting could depend on the other CSI or beam reports. For example, the two-part UCI is used only when at least one of the other CSI or beam reports is configured with a two-part UCI.

In one example, the UL channel for group based beam reporting (via two-part UCI) can be fixed, e.g., to PUSCH. In one example, the UL channel for group based beam reporting (via two-part UCI) can be fixed, e.g., to PUCCH. In one example, the UL channel for group based beam reporting (via two-part UCI) can be configured from PUCCH and PUSCH.

In one example, the group based beam reporting (via two-part UCI) can be configured via higher layer RRC signaling. In one example, the group based beam reporting (via two-part UCI) can only be triggered via a code point in DCI (UL-related or DL-related DCI).

The provided two-part (group based) beam reporting schemes can be applied to multi-TRP operation. For instance, for the inter-cell multi-TRP wherein different coordinating TRPs would have different PCIs, the serving cell (with the serving cell ID (SCI) and/or the serving cell PCI) illustrated in Scheme-1 through Scheme-4 could correspond to the serving cell TRP, while the non-serving cell(s) depicted in Scheme-5a, Scheme-5b, and Scheme-5c could correspond to the non-serving cell TRP(s).

For the intra-cell multi-TRP wherein different coordinating TRPs could share the same PCI, the serving cell (with the serving cell ID (SCI) and/or the serving cell PCI) illustrated in Scheme-1 through Scheme-4 could correspond to a primary TRP, with which the UE would perform the initial access, common search space monitoring, and etc., while the non-serving cell(s) depicted in Scheme-5a, Scheme-5b, and Scheme-5c could correspond to secondary TRP(s), with which the UE could perform low-priority operations such as reliability/throughput enhancement; the primary TRP and the secondary TRP(s) could be associated with different higher layer signaling index values such as CORESETPoolIndex values.

Furthermore, for the hybrid group based and non-group based beam reporting for the inter-TRP operation (as illustrated in FIGURE 25), an NSC indication/indicator could be incorporated in the stage-1 report to indicate which M_nsc ≥ non-serving cells out of the total N_nsc non-serving cells the beam reports in stage-2 may be associated with. Here, the NSC indicator/indicator design could follow those discussed in Scheme-5a, Scheme-5b, and Scheme-5c.

For instance, the NSC indication could indicate a specific state/entry from a list containing all possible combinations of M_nsc non-serving cells out of the total N_nsc non-serving cells (as illustrated in FIGURE 38B), or a bitmap of length N_nsc (see FIGURE 38C).

The above flowcharts illustrate example methods that can be implemented in accordance with the principles of the present disclosure and various changes could be made to the methods illustrated in the flowcharts herein. For example, while shown as a series of steps, various steps in each figure could overlap, occur in parallel, occur in a different order, or occur multiple times. In another example, steps may be omitted or replaced by other steps.

According to various embodiments, a user equipment (UE) comprising a transceiver configured to: receive an indication for reporting, in a channel state information (CSI) reporting instance, one or more resource indicators and corresponding beam metrics associated with a first physical cell identity (PCI) or a second PCI; and receive a set of reference signals (RSs) for determining the one or more resource indicators and corresponding beam metrics; and a processor operably coupled to the transceiver, the processor configured to measure one or more RSs in the set of RSs; and determine, based on the measured one or more RSs in the set of RSs, the one or more resource indicators and corresponding beam metrics, wherein the transceiver is further configured to transmit, in the CSI reporting instance, the one or more resource indicators and corresponding beam metrics associated with the first or second PCIs, wherein the set of RSs are synchronization signal blocks (SSBs) or non-zero power channel state information RSs (NZP CSI-RSs), wherein the one or more resource indicators are SSB resource indicators (SSBRIs) or CSI-RS resource indicators (CRIs) and the corresponding beam metrics are layer-1 reference signal received powers (L1-RSRPs) or layer-1 signal to interference and noise ratios (SINRs), and wherein the second PCI is different from a serving cell PCI.

In some embodiments, wherein the indication is received in a CSI reporting setting provided by a higher layer parameter CSI-ReportConfig, which indicates at least one of a number of the resource indicators to be reported in the CSI reporting instance associated with the first or second PCIs; and a maximum number of resource indicators allowed to be reported in the CSI reporting instance associated with the first or second PCIs; a set of RS resources through which the set of RSs are received include one or more first RS resources associated with the first PCI or one or more second RS resources associated with the second PCI; and the corresponding beam metrics include (i) a largest measured value of L1-RSRPs quantized to a 7-bit value in a range of [-140,-44] dBm with a 1 dB step size or (ii) one or more differential L1-RSRP values, each quantized to a 4-bit value with a 2 dB step size with a reference to the largest measured L1-RSRP value.

In some embodiments, wherein the resource indicators and beam metrics are sent in a two-part CSI, a part 1 of the two-part CSI (i) includes one or more resource indicators and corresponding beam metrics associated at least with the first PCI and (ii) indicates a payload size of a part 2 of the two-part CSI, and a part 2 of the two-part CSI includes one or more resource indicators and corresponding beam metrics associated with the second PCI.

In some embodiments, wherein a parameter configuring a set of RS resources through which the set of RSs are received includes one or more entity identifiers (IDs) each associated with a RS resource configured in the set of RS resources; and an entity ID is associated with the first PCI or the second PCI and corresponds to at least one of a PCI value; a PCI index pointing to a PCI value in a set of PCIs that are higher layer configured to the UE; a CORESETPoolIndex value; and a one-bit flag indicating either the first PCI or the second PCI.

In some embodiments, wherein a parameter configuring a RS resource in a set of RS resources through which the set of RSs are received includes an entity identifier (ID), the parameter corresponds to a higher layer parameter SSB-Index for a SSB resource or a higher layer parameter NZP-CSI-RS-Resource for a NZP CSI-RS resource; and an entity ID is associated with the first PCI or the second PCI and corresponds to at least one of a PCI value; a PCI index pointing to a PCI value in a set of PCIs that are higher layer configured to the UE; a CORESETPoolIndex value; and a one-bit flag indicating either the first PCI or the second PCI.

In some embodiments, wherein the indication is to report, in the CSI reporting instance, a group of two resource indicators and corresponding beam metrics associated with the first and second PCIs; the received set of RSs is a first set of RSs received through a first set of RS resources; the transceiver is further configured to receive a second set of RSs received through a second set of RS resources; the processor is further configured to measure one or more RSs in the second set of RSs; the determined one or more resource indicators include a first resource indicator and a second resource indicator of the group of two resource indicators that are determined based on either or both of the first and second sets of RSs; the one or more resource indicators and corresponding beam metrics transmitted in the CSI reporting instance include the group of two resource indicators and corresponding beam metrics; the first and second sets of RSs are SSBs or NZP CSI-RSs; and the first and second resource indicators are SSBRIs or CRIs and the corresponding beam metrics are L1-RSRPs or L1-SINRs.

In some embodiments, wherein the first and second sets of RS resources are associated with the first and second PCIs, respectively; a parameter configuring the first set of RS resources or the second set of RS resources includes an entity identifier (ID) corresponding to at least one of a PCI value; a PCI index pointing to a PCI value in a set of PCIs that are higher layer configured to the UE; a CORESETPoolIndex value; and a one-bit flag indicating either the first PCI or the second PCI; and the corresponding beam metrics associated with the first and second resource indicators include (i) a largest measured value of L1-RSRPs quantized to a 7-bit value in a range of [-140,-44] dBm with a 1 dB step size or (ii) a differential L1-RSRP value quantized to a 4-bit value with a 2 dB step size with a reference to the largest measured L1-RSRP value.

In some embodiments, wherein the first resource indicator is associated with a largest measured value of a L1-RSRP; and the transceiver is further configured to transmit, in the CSI reporting instance, at least one of a PCI value associated with the first or second set of RS resources, from which the first resource indicator is determined; a PCI index, pointing to a PCI value in a set of PCIs higher layer that are configured to the UE, associated with the first or second set of RS resources, from which the first resource indicator is determined; a CORESETPoolIndex associated with the first or second set of RS resources, from which the first resource indicator is determined; and a one-bit indicator associated with the first or second set of RS resources, from which the first resource indicators is determined.

According to various embodiments, a base station (BS) comprising a processor; and a transceiver operably coupled to the processor, the transceiver configured to: transmit an indication for reporting, in a channel state information (CSI) reporting instance, one or more resource indicators and corresponding beam metrics associated with a first physical cell identity (PCI) or a second PCI; transmit a set of reference signals (RSs) for determination of the one or more resource indicators and corresponding beam metrics; and receive, in the CSI reporting instance, one or more resource indicators and corresponding beam metrics associated with the first or second PCIs, the one or more resource indicators and corresponding beam metrics based on one or more RSs in the set of RSs; wherein the set of RSs are synchronization signal blocks (SSBs) or non-zero power channel state information RSs (NZP CSI-RSs), wherein the one or more resource indicators are SSB resource indicators (SSBRIs) or CSI-RS resource indicators (CRIs) and the corresponding beam metrics are layer-1 reference signal received powers (L1-RSRPs) or layer-1 signal to interference and noise ratios (SINRs), and wherein the second PCI is different from a serving cell PCI.

In some embodiments, wherein the indication is sent in a CSI reporting setting by a higher layer parameter CSI-ReportConfig, which indicates at least one of a number of the resource indicators to be reported in the CSI reporting instance associated with the first or second PCIs; and a maximum number of resource indicators allowed to be reported in the CSI reporting instance associated with the first or second PCIs; a set of RS resources through which the set of RSs are received include one or more first RS resources associated with the first PCI or one or more second RS resources associated with the second PCI; and the corresponding beam metrics include (i) a largest measured value of L1-RSRPs quantized to a 7-bit value in a range of [-140,-44] dBm with a 1 dB step size or (ii) one or more differential L1-RSRP values, each quantized to a 4-bit value with a 2 dB step size with a reference to the largest measured L1-RSRP value.

In some embodiments, wherein the resource indicators and beam metrics are sent in a two-part CSI, a part 1 of the two-part CSI (i) includes one or more resource indicators and corresponding beam metrics associated at least with the first PCI and (ii) indicates a payload size of a part 2 of the two-part CSI, and a part 2 of the two-part CSI includes one or more resource indicators and corresponding beam metrics associated with the second PCI.

In some embodiments, wherein a parameter configuring a set of RS resources through which the set of RSs are received includes one or more entity identifiers (IDs) each associated with a RS resource configured in the set of RS resources; and an entity ID is associated with the first PCI or the second PCI and corresponds to at least one of a PCI value; a PCI index pointing to a PCI value in a set of PCIs that are higher layer configured to a user equipment (UE); a CORESETPoolIndex value; and a one-bit flag indicating either the first PCI or the second PCI.

In some embodiments, wherein a parameter configuring a RS resource in a set of RS resources through which the set of RSs are received includes an entity identifier (ID), the parameter corresponds to a higher layer parameter SSB-Index for a SSB resource or a higher layer parameter NZP-CSI-RS-Resource for a NZP CSI-RS resource; and an entity ID is associated with the first PCI or the second PCI and corresponds to at least one of a PCI value; a PCI index pointing to a PCI value in a set of PCIs that are higher layer configured to a user equipment (UE); a CORESETPoolIndex value; and a one-bit flag indicating either the first PCI or the second PCI.

In some embodiments, wherein the indication is to report, in the CSI reporting instance, a group of two resource indicators and corresponding beam metrics associated with the first and second PCIs; the transmitted set of RSs is a first set of RSs transmitted through a first set of RS resources for determination of a first or second of the two resource indicators; the transceiver is further configured to transmit a second set of RSs received through a second set of RS resources; the one or more resource indicators and corresponding beam metrics received in the CSI reporting instance include the group of two resource indicators and corresponding beam metrics, the two resource indicators including first and second resource indicators that based on either or both of first and second sets of RSs; the first and second sets of RSs are SSBs or NZP CSI-RSs; and the first and second resource indicators are SSBRIs or CRIs and the corresponding beam metrics are L1-RSRPs or L1-SINRs.

In some embodiments, wherein the first and second sets of RS resources are associated with the first and second PCIs, respectively; a parameter configuring the first set of RS resources or the second set of RS resources includes an entity identifier (ID) corresponding to at least one of a PCI value; a PCI index pointing to a PCI value in a set of PCIs that are higher layer configured to a user equipment (UE); a CORESETPoolIndex value; and a one-bit flag indicating either the first PCI or the second PCI; and the corresponding beam metrics associated with the first and second resource indicators include (i) a largest measured value of L1-RSRPs quantized to a 7-bit value in a range of [-140,-44] dBm with a 1 dB step size or (ii) a differential L1-RSRP value quantized to a 4-bit value with a 2 dB step size with a reference to the largest measured L1-RSRP value.

In some embodiments, wherein the first resource indicator is associated with a largest measured value of a L1-RSRP; and the transceiver is further configured to receive, in the CSI reporting instance, at least one of a PCI value associated with the first or second set of RS resources, from which the first resource indicator is based; a PCI index, pointing to a PCI value in a set of PCIs higher layer that are configured to a user equipment (UE), associated with the first or second set of RS resources, from which the first resource indicator is based; a CORESETPoolIndex associated with the first or second set of RS resources, from which the first resource indicator is based; and a one-bit indicator associated with the first or second set of RS resources, from which the first resource indicators is based.

According to various embodiments, a method for operating a user equipment (UE), the method comprising receiving an indication for reporting, in a channel state information (CSI) reporting instance, one or more resource indicators and corresponding beam metrics associated with a first physical cell identity (PCI) or a second PCI; receiving a set of reference signals (RSs) for determining the one or more resource indicators and corresponding beam metrics; measuring one or more RSs in the set of RSs; determining, based on the measured one or more RSs in the set of RSs, the one or more resource indicators and corresponding beam metrics; and transmitting, in the CSI reporting instance, the one or more resource indicators and corresponding beam metrics associated with the first or second PCIs, wherein the set of RSs are synchronization signal blocks (SSBs) or non-zero power channel state information RSs (NZP CSI-RSs), wherein the one or more resource indicators are SSB resource indicators (SSBRIs) or CSI-RS resource indicators (CRIs) and the corresponding beam metrics are layer-1 reference signal received powers (L1-RSRPs) or layer-1 signal to interference and noise ratios (SINRs), and wherein the second PCI is different from a serving cell PCI.

In some embodiments, wherein the indication is received in a CSI reporting setting provided by a higher layer parameter CSI-ReportConfig, which indicates at least one of a number of the resource indicators to be reported in the CSI reporting instance associated with the first or second PCIs; and a maximum number of resource indicators allowed to be reported in the CSI reporting instance associated with the first or second PCIs; a set of RS resources through which the set of RSs are received include one or more first RS resources associated with the first PCI or one or more second RS resources associated with the second PCI; and the corresponding beam metrics include (i) a largest measured value of L1-RSRPs quantized to a 7-bit value in a range of [-140,-44] dBm with a 1 dB step size or (ii) one or more differential L1-RSRP values, each quantized to a 4-bit value with a 2 dB step size with a reference to the largest measured L1-RSRP value.

In some embodiments, wherein the resource indicators and beam metrics are sent in a two-part CSI, a part 1 of the two-part CSI (i) includes one or more resource indicators and corresponding beam metrics associated at least with the first PCI and (ii) indicates a payload size of a part 2 of the two-part CSI, and a part 2 of the two-part CSI includes one or more resource indicators and corresponding beam metrics associated with the second PCI.

In some embodiments, wherein receiving the indication comprises receiving the indication for reporting, in the CSI reporting instance, a group of two resource indicators and corresponding beam metrics associated with the first and second PCIs; receiving the set of RSs comprises receiving a first set of RSs through a first set of RS resources; the method further comprises receiving a second set of RSs received through a second set of RS resources; and measuring one or more RSs in the second set of RSs; the determined one or more resource indicators include a first resource indicator and a second resource indicator of the group of two resource indicators that are determined based on either or both of the first and second sets of RSs; transmitting the one or more resource indicators and corresponding beam metrics in the CSI reporting instance comprises transmitting the group of two resource indicators and corresponding beam metrics; the first and second sets of RSs are SSBs or NZP CSI-RSs; and the first and second resource indicators are SSBRIs or CRIs and the corresponding beam metrics are L1-RSRPs or L1-SINRs.

## Claims

1. A user equipment, UE, (111, 112, 113, 114, 115, 116) in a wireless communication system, the UE comprising:
a transceiver (310); and
a controller (340) coupled to the transceiver (310), and configured to:
receive from a base station, BS, (101, 102, 103) information on a synchronization signal block, SSB, resource set including information on a physical cell identity, PCI, associated with a first SSB and information on a PCI associated with a second SSB; and
in case that a higher layer parameter is configured, transmit, to the BS (101, 102, 103), a channel state information, CSI, report including a first resource indicator of the first SSB associated with a PCI of a first cell and a second resource indicator of the second SSB associated with a PCI of a second cell, in a single reporting instance,
wherein the second PCI of the second cell is different from the PCI of the first cell, and
wherein the first cell is a serving cell.

2. The UE (111, 112, 113, 114, 115, 116) of claim 1, wherein the higher layer parameter is configured by a higher layer signaling, and is received on the first cell.

3. The UE (111, 112, 113, 114, 115, 116) of claim 1, wherein the first resource indicator and the second resource indicator comprise an SSB resource indicator.

4. The UE (111, 112, 113, 114, 115, 116) of claim 1, wherein the second resource indicator includes one or more resource indicators.

5. A base station, BS, (101, 102, 103) in a wireless communication system, the BS comprising:
a transceiver (210a-210n); and
a controller (225) coupled to the transceiver (210a-210n), and configured to:
transmit, to a user equipment, UE, (111, 112, 113, 114, 115, 116) information on a synchronization signal block, SSB, resource set including information on physical cell identity, PCI, associated with a first SSB and information on a PCI associated with a second SSB, and
in case that a higher layer parameter is configured, receive, from the UE (111, 112, 113, 114, 115, 116), a channel state information, CSI, report including a first resource indicator of the first SSB associated with a PCI of a first cell and a second resource indicator of the second SSB associated with a PCI of a second cell, in a single reporting instance,
wherein the PCI of the second cell is different from the PCI of the first cell, and
wherein the first cell is a serving cell.

6. The BS (101, 102, 103) of claim 5, wherein the higher layer parameter is configured by a higher layer signaling, and is transmitted on the first cell.

7. The BS (101, 102, 103) of claim 5, wherein the first resource indicator and the second resource indicator comprise an SSB resource indicator.

8. The BS (101, 102, 103) of claim 5, wherein the second resource indicator includes one or more resource indicators.

9. A method (1800, 2000, 3600) performed by a user equipment, UE, (111, 112, 113, 114, 115, 116) in a wireless communication system, the method comprising:
receiving, from a base station, BS, (101, 102, 103) information on a synchronization signal block, SSB, resource set including information on physical cell identity, PCI, associated with a first SSB and information on a second PCI associated with a second SSB; and
in case that a higher layer parameter is configured, transmitting, to the BS (101, 102, 103), a channel state information, CSI, report including a first resource indicator of the first SSB associated with a PCI of a first cell and a second resource indicator of the second SSB associated with a PCI of a second cell, in a single reporting instance,
wherein the PCI of the second cell is different from the PCI of the first cell, and
wherein the first cell is a serving cell.

10. The method (1800, 2000, 3600) of claim 9, wherein the higher layer parameter is configured by a higher layer signaling, and is received on the first cell.

11. The method (1800, 2000, 3600) of claim 9, wherein the first resource indicator and the second resource indicator comprise an SSB resource indicator.

12. The method (1800, 2000, 3600) of claim 9, wherein the second resource indicator includes one or more resource indicators.

13. A method (1800, 2000, 3600) performed by a base station, BS, (101, 102, 103) in a wireless communication system, the method comprising:
transmitting, to a user equipment, UE, (111, 112, 113, 114, 115, 116) information on a synchronization signal block, SSB, resource set including information on physical cell identity, PCI, associated with a first SSB and information on a PCI associated with a second SSB; and
in case that a higher layer parameter is configured, receive, from the UE (111, 112, 113, 114, 115, 116), a channel state information, CSI, report including a first resource indicator of the first SSB associated with a PCI of a first cell and a second resource indicator of the second SSB associated with a PCI of a second cell, in a single reporting instance,
wherein the PCI of the second cell is different from the PCI of the first cell, and
wherein the first cell is a serving cell.

14. The method (1800, 2000, 3600) of claim 13, wherein the higher layer parameter is configured by a higher layer signaling, and is transmitted on the first cell.

15. The method (1800, 2000, 3600) of claim 13, wherein the first resource indicator and the second resource indicator comprise an SSB resource indicator.

## Patentansprüche

1. Benutzereinrichtung, UE, (111, 112, 113, 114, 115, 116) in einem drahtlosen Kommunikationssystem, wobei die UE Folgendes umfasst:
einen Sendeempfänger (310); und
eine Steuerung (340), die an den Sendeempfänger (310) gekoppelt und konfiguriert ist zum:
Empfangen, von einer Basisstation, BS, (101, 102, 103), von Informationen zu einem Ressourcensatz eines Synchronisationssignalblocks, SSB, der Informationen zu einer physikalischen Zellkennung, PCI, die mit einem ersten SSB assoziiert ist, und Informationen zu einer PCI, die mit einem zweiten SSB assoziiert ist, beinhaltet; und
für den Fall, dass ein Parameter einer höheren Schicht konfiguriert ist, Übertragen, an die BS (101, 102, 103), eines Berichts mit Kanalzustandsinformationen, CSI, der einen ersten Ressourcenindikator des ersten SSB, der mit einer PCI einer ersten Zelle assoziiert ist, und einen zweiten Ressourcenindikator des zweiten SSB, der mit einer PCI einer zweiten Zelle assoziiert ist, beinhaltet, in einer einzigen Berichtsinstanz,
wobei sich die zweite PCI der zweiten Zelle von der PCI der ersten Zelle unterscheidet und
wobei die erste Zelle eine bedienende Zelle ist.

2. UE (111, 112, 113, 114, 115, 116) nach Anspruch 1, wobei der Parameter einer höheren Schicht durch eine Signalisierung einer höheren Schicht konfiguriert ist und an der ersten Zelle empfangen wird.

3. UE (111, 112, 113, 114, 115, 116) nach Anspruch 1, wobei der erste Ressourcenindikator und der zweite Ressourcenindikator einen SSB-Ressourcenindikator umfassen.

4. UE (111, 112, 113, 114, 115, 116) nach Anspruch 1, wobei der zweite Ressourcenindikator einen oder mehrere Ressourcenindikatoren beinhaltet.

5. Basisstation, BS, (101, 102, 103) in einem drahtlosen Kommunikationssystem, wobei die BS Folgendes umfasst:
einen Sendeempfänger (210a-210n); und
eine Steuerung (225), die an den Sendeempfänger (210a-210n) gekoppelt und konfiguriert ist zum:
Übertragen, an eine Benutzereinrichtung, UE, (111, 112, 113, 114, 115, 116), von Informationen zu einem Ressourcensatz eines Synchronisationssignalblocks, SSB, der Informationen zu einer physikalischen Zellkennung, PCI, die mit einem ersten SSB assoziiert ist, und Informationen zu einer PCI, die mit einem zweiten SSB assoziiert ist, beinhaltet, und
für den Fall, dass ein Parameter einer höheren Schicht konfiguriert ist, Übertragen, von der UE (111, 112, 113, 114, 115, 116), eines Berichts mit Kanalzustandsinformationen, CSI, der einen ersten Ressourcenindikator des ersten SSB, der mit einer PCI einer ersten Zelle assoziiert ist, und einen zweiten Ressourcenindikator des zweiten SSB, der mit einer PCI einer zweiten Zelle assoziiert ist, beinhaltet, in einer einzigen Berichtsinstanz,
wobei sich die PCI der zweiten Zelle von der PCI der ersten Zelle unterscheidet und
wobei die erste Zelle eine bedienende Zelle ist.

6. BS (101, 102, 103) nach Anspruch 5, wobei der Parameter einer höheren Schicht durch eine Signalisierung einer höheren Schicht konfiguriert ist und an der ersten Zelle übertragen wird.

7. BS (101, 102, 103) nach Anspruch 5, wobei der erste Ressourcenindikator und der zweite Ressourcenindikator einen SSB-Ressourcenindikator umfassen.

8. BS (101, 102, 103) nach Anspruch 5, wobei der zweite Ressourcenindikator einen oder mehrere Ressourcenindikatoren beinhaltet.

9. Verfahren (1800, 2000, 3600), das von einer Benutzereinrichtung, UE, (111, 112, 113, 114, 115, 116) in einem drahtlosen Kommunikationssystem durchgeführt wird, wobei das Verfahren Folgendes umfasst:
Empfangen, von einer Basisstation, BS, (101, 102, 103), von Informationen zu einem Ressourcensatz eines Synchronisationssignalblocks, SSB, der Informationen zu einer physikalischen Zellkennung, PCI, die mit einem ersten SSB assoziiert ist, und Informationen zu einer zweiten PCI, die mit einem zweiten SSB assoziiert ist, beinhaltet; und
für den Fall, dass ein Parameter einer höheren Schicht konfiguriert ist, Übertragen, an die BS (101, 102, 103), eines Berichts mit Kanalzustandsinformationen, CSI, der einen ersten Ressourcenindikator des ersten SSB, der mit einer PCI einer ersten Zelle assoziiert ist, und einen zweiten Ressourcenindikator des zweiten SSB, der mit einer PCI einer zweiten Zelle assoziiert ist, beinhaltet, in einer einzigen Berichtsinstanz,
wobei sich die PCI der zweiten Zelle von der PCI der ersten Zelle unterscheidet und
wobei die erste Zelle eine bedienende Zelle ist.

10. Verfahren (1800, 2000, 3600) nach Anspruch 9, wobei der Parameter einer höheren Schicht durch eine Signalisierung einer höheren Schicht konfiguriert ist und an der ersten Zelle empfangen wird.

11. Verfahren (1800, 2000, 3600) nach Anspruch 9, wobei der erste Ressourcenindikator und der zweite Ressourcenindikator einen SSB-Ressourcenindikator umfassen.

12. Verfahren (1800, 2000, 3600) nach Anspruch 9, wobei der zweite Ressourcenindikator einen oder mehrere Ressourcenindikatoren beinhaltet.

13. Verfahren (1800, 2000, 3600), das von einer Basisstation, BS, (101, 102, 103) in einem drahtlosen Kommunikationssystem durchgeführt wird, wobei das Verfahren Folgendes umfasst:
Übertragen, an eine Benutzereinrichtung, UE, (111, 112, 113, 114, 115, 116), von Informationen zu einem Ressourcensatz eines Synchronisationssignalblocks, SSB, der Informationen zu einer physikalischen Zellkennung, PCI, die mit einem ersten SSB assoziiert ist, und Informationen zu einer PCI, die mit einem zweiten SSB assoziiert ist, beinhaltet; und
für den Fall, dass ein Parameter einer höheren Schicht konfiguriert ist, Übertragen, von der UE (111, 112, 113, 114, 115, 116), eines Berichts mit Kanalzustandsinformationen, CSI, der einen ersten Ressourcenindikator des ersten SSB, der mit einer PCI einer ersten Zelle assoziiert ist, und einen zweiten Ressourcenindikator des zweiten SSB, der mit einer PCI einer zweiten Zelle assoziiert ist, beinhaltet, in einer einzigen Berichtsinstanz,
wobei sich die PCI der zweiten Zelle von der PCI der ersten Zelle unterscheidet und
wobei die erste Zelle eine bedienende Zelle ist.

14. Verfahren (1800, 2000, 3600) nach Anspruch 13, wobei der Parameter einer höheren Schicht durch eine Signalisierung einer höheren Schicht konfiguriert ist und an der ersten Zelle übertragen wird.

15. Verfahren (1800, 2000, 3600) nach Anspruch 13, wobei der erste Ressourcenindikator und der zweite Ressourcenindikator einen SSB-Ressourcenindikator umfassen.

## Revendications

1. Équipement utilisateur, UE, (111, 112, 113, 114, 115, 116) dans un système de communication sans fil, l'UE comprenant :
un émetteur-récepteur (310) ; et
un dispositif de commande (340) couplé à l'émetteur-récepteur (310) et configuré pour :
la réception, depuis une station de base, BS, (101, 102, 103) des informations sur un ensemble de ressources d'un bloc de signaux de synchronisation, SSB, comportant des informations sur un identifiant physique de cellule, PCI, associées à un premier SSB et des informations sur un PCI associées à un deuxième SSB ; et
dans le cas où un paramètre de couche supérieure est configuré, la transmission, à la BS (101, 102, 103), d'un rapport d'informations sur l'état du canal, CSI, comportant un premier indicateur de ressources du premier SSB associé à un PCI d'une première cellule et un deuxième indicateur de ressources du deuxième SSB associé à un PCI d'une deuxième cellule, dans une seule instance de rapport,
dans lequel le deuxième PCI de la deuxième cellule est différent du PCI de la première cellule, et
dans lequel la première cellule est une cellule de desserte.

2. UE (111, 112, 113, 114, 115, 116) selon la revendication 1, dans lequel le paramètre de couche supérieure est configuré par une signalisation de couche supérieure et reçu sur la première cellule.

3. UE (111, 112, 113, 114, 115, 116) selon la revendication 1, dans lequel le premier indicateur de ressources et le deuxième indicateur de ressources comprennent un indicateur de ressources SSB.

4. UE (111, 112, 113, 114, 115, 116) selon la revendication 1, dans lequel le deuxième indicateur de ressources comporte un ou plusieurs indicateurs de ressources.

5. Station de base, BS, (101, 102, 103) dans un système de communication sans fil, la BS comprenant :
un émetteur-récepteur (210a-210n) ; et
un dispositif de commande (225) couplé à l'émetteur-récepteur (210a-210n) et configuré pour :
la transmission, à un équipement utilisateur, UE, (111, 112, 113, 114, 115, 116) des informations sur un ensemble de ressources d'un bloc de signaux de synchronisation, SSB, comportant des informations sur un identifiant physique de cellule, PCI, associées à un premier SSB et des informations sur un PCI associées à un deuxième SSB, et
dans le cas où un paramètre de couche supérieure est configuré, la réception, depuis l'UE (111, 112, 113, 114, 115, 116), d'un rapport d'informations sur l'état du canal, CSI, comportant un premier indicateur de ressources du premier SSB associé à un PCI d'une première cellule et un deuxième indicateur de ressources du deuxième SSB associé à un PCI d'une deuxième cellule, dans une seule instance de rapport,
dans lequel le PCI de la deuxième cellule est différent du PCI de la première cellule, et
dans lequel la première cellule est une cellule de desserte.

6. BS (101, 102, 103) selon la revendication 5, dans lequel le paramètre de couche supérieure est configuré par une signalisation de couche supérieure et transmis sur la première cellule.

7. BS (101, 102, 103) selon la revendication 5, dans lequel le premier indicateur de ressources et le deuxième indicateur de ressources comprennent un indicateur de ressources SSB.

8. BS (101, 102, 103) selon la revendication 5, dans lequel le deuxième indicateur de ressources comporte un ou plusieurs indicateurs de ressources.

9. Procédé (1800, 2000, 3600), mis en œuvre par un équipement utilisateur, UE, (111, 112, 113, 114, 115, 116) dans un système de communication sans fil, le procédé comprenant :
la réception, depuis une station de base, BS, (101, 102, 103) des informations sur un ensemble de ressources d'un bloc de signaux de synchronisation, SSB, comportant des informations sur un identifiant physique de cellule, PCI, associées à un premier SSB et des informations sur un deuxième PCI associées à un deuxième SSB ; et
dans le cas où un paramètre de couche supérieure est configuré, la transmission, à la BS (101, 102, 103), d'un rapport d'informations sur l'état du canal, CSI, comportant un premier indicateur de ressources du premier SSB associé à un PCI d'une première cellule et un deuxième indicateur de ressources du deuxième SSB associé à un PCI d'une deuxième cellule, dans une seule instance de rapport,
dans lequel le PCI de la deuxième cellule est différent du PCI de la première cellule, et
dans lequel la première cellule est une cellule de desserte.

10. Procédé (1800, 2000, 3600) selon la revendication 9, dans lequel le paramètre de couche supérieure est configuré par une signalisation de couche supérieure et reçu sur la première cellule.

11. Procédé (1800, 2000, 3600) selon la revendication 9, dans lequel le premier indicateur de ressources et le deuxième indicateur de ressources comprennent un indicateur de ressources SSB.

12. Procédé (1800, 2000, 3600) selon la revendication 9, dans lequel le deuxième indicateur de ressources comprend un ou plusieurs indicateurs de ressources.

13. Procédé (1800, 2000, 3600), mis en œuvre par une station de base, BS, (101, 102, 103) dans un système de communication sans fil, le procédé comprenant :
la transmission, à un équipement utilisateur, UE, (111, 112, 113, 114, 115, 116) des informations sur un ensemble de ressources d'un bloc de signaux de synchronisation, SSB, comportant des informations sur un identifiant physique de cellule, PCI, associées à un premier SSB et des informations sur un PCI associées à un deuxième SSB ; et
dans le cas où un paramètre de couche supérieure est configuré, la réception, depuis l'UE (111, 112, 113, 114, 115, 116), d'un rapport d'informations sur l'état du canal, CSI, comportant un premier indicateur de ressources du premier SSB associé à un PCI d'une première cellule et un deuxième indicateur de ressources du deuxième SSB associé à un PCI d'une deuxième cellule, dans une seule instance de rapport,
dans lequel le PCI de la deuxième cellule est différent du PCI de la première cellule, et
dans lequel la première cellule est une cellule de desserte.

14. Procédé (1800, 2000, 3600) selon la revendication 13, dans lequel le paramètre de couche supérieure est configuré par une signalisation de couche supérieure et transmis sur la première cellule.

15. Procédé (1800, 2000, 3600) selon la revendication 13, dans lequel le premier indicateur de ressources et le deuxième indicateur de ressources comprennent un indicateur de ressources SSB.
